# EUROPÄISCHE PATENTSCHRIFT

(11) **EP 3 323 872 B1**
(45) Veröffentlichungstag und Bekanntmachung des Hinweises auf die Patenterteilung: **15.04.2020**
(21) Anmeldenummer: 17202476.2
(22) Anmeldetag: 20.11.2017
(51) Int. Cl.: C09K 19/04

(54) **VERBINDUNGEN ZUR HOMÖOTROPEN AUSRICHTUNG VON FLÜSSIGKRISTALLINEN MEDIEN**
COMPOUNDS FOR HOMOTROPIC ALIGNMENT OF LIQUID CRYSTAL MEDIA
COMPOSÉS D'ORIENTATION HOMÉOTROPE DES MILIEUX À CRISTAUX LIQUIDES

(30) Priorität: 21.11.2016 DE 102016013815
(43) Veröffentlichungstag der Anmeldung: 23.05.2018
(73) Patentinhaber: Merck Patent GmbH, 64293 Darmstadt (DE)
(72) Erfinder: Archetti, Graziano, 64289 DARMSTADT (DE); Plummer, Edward, 60314 FRANKFURT AM MAIN (DE); Haensel, Helmut, 64367 MUEHLTAL (DE); Fortte, Rocco, 65933 FRANKFURT AM MAIN (DE); Uebel, Timo, 64291 Darmstadt (DE)

(56) Entgegenhaltungen:
- EP-A2- 2 918 658
- WO-A1-2016/114093
- WO-A1-2017/041893
- CN-A- 105 733 557
- DE-A1-102015 008 172

## Beschreibung

Die vorliegende Erfindung betrifft flüssigkristalline Medien (FK-Medien) enthaltend eine niedermolekulare Komponente und eine polymerisierbare Komponente. Die polymerisierbare Komponente umfasst selbst-ausrichtende, polymerisierbare Mesogene (polymerisierbare Selbstorientierungsadditive), die eine homöotrope (vertikale) Ausrichtung der FK-Medien an einer Oberfläche oder den Zellwänden einer Flüssigkristallanzeige (FK-Anzeige) bewirken. Die Erfindung umfasst daher auch FK-Anzeigen mit homöotroper Ausrichtung des flüssigkristallinen Mediums (FK-Mediums) ohne Orientierungsschichten zur homöotropen Ausrichtung. Die Erfindung offenbart neue Strukturen für polymerisierbare Selbstorientierungsadditive.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned).

Anzeigen, die den ECB-Effekt verwenden, haben sich als sogenannte VAN-(Vertically Aligned Nematic) Anzeigen beispielsweise in den Bauformen MVA-(Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA- (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS- (In Plane Switching) (z.B.: Yeo, S.D., Vortrag 15.3: "A LC Display for the TV Application", SID 2004 International Symposium, Digest of Technical Papers, XXXV, Buch II, S. 758 & 759) und den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Mit der Erzeugung der VA-Displays mit zwei oder mehr Domänen unterschiedlicher Vorzugsrichtung ist ein beträchtlicher Aufwand verbunden. Ein Ziel dieser Erfindung ist es, die Herstellprozesse und die Anzeigevorrichtungen selbst zu vereinfachen, ohne die Vorteile der VA-Technik, wie relativ schnelle Schaltzeiten und gute Blickwinkelabhängigkeit, aufzugeben.

VA-Anzeigen die FK-Medien mit positiver dielektrischer Anisotropie enthalten, werden in S.H. Lee et al. Appl. Phys. Lett. (1997), 71, 2851-2853 beschrieben. Diese Anzeigen verwenden auf einer Substratoberfläche angeordnete Interdigitalelektroden (In-plane Ansteuerelektroden-Konfiguration kammförmiger Struktur), wie sie unter anderem bei den kommerziell erhältlichen IPS-(in-plane switching) Anzeigen zum Einsatz kommen (wie z.B. in DE 40 00 451 und EP 0 588 568 offenbart), und weisen eine homöotrope Anordnung des Flüssigkristallmediums auf, die zu einer planaren Anordnung beim Anlegen einer elektrischen Feldes wechselt.

Weiterentwicklungen der oben genannten Anzeige sind zum Beispiel in K.S. Hun et al. J. Appl. Phys. (2008), 104, 084515 (DSIPS: 'double-side in-plane switching' für Verbesserungen von Treiberspannung und Transmission), M. Jiao et al. App. Phys. Lett (2008), 92, 111101 (DFFS: 'dual fringe field switching' für verbesserte Schaltzeiten) und Y.T. Kim et al. Jap. J. App. Phys. (2009), 48, 110205 (VAS: 'viewing angle switchable' LCD) zu finden. Darüber hinaus sind VA-IPS-Anzeigen auch unter dem Namen Positiv-VA und HT-VA bekannt.

Bei allen solchen Anzeigen (hier nachfolgend allgemein als VA-IPS-Anzeigen bezeichnet) ist auf beiden Substratoberflächen eine Orientierungsschicht zur homöotropen Ausrichtung des FK-Mediums aufgebracht, deren Erzeugung bisher mit einem beträchtlichen Aufwand verbunden ist.

Ein Ziel dieser Erfindung ist es, die Herstellprozesse selbst zu vereinfachen, ohne die Vorteile der VA-IPS-Technik, wie relativ schnelle Schaltzeiten, gute Blickwinkelabhängigkeit und hohen Kontrast aufzugeben.

Für die technische Anwendung dieser Effekte in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft, den Materialien in den Substratoberflächen und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

VA- und VA-IPS-Anzeigen sollen im Allgemeinen einen sehr hohen spezifischen Widerstand bei gleichzeitig großem Arbeitstemperaturbereich, kurze Schaltzeiten und niedriger Schwellenspannung, mit deren Hilfe verschiedene Graustufen erzeugt werden können, besitzen.

In den herkömmlichen VA- und VA-IPS-Displays sorgt eine Polyimidschicht auf den Substratoberflächen für die homöotrope Orientierung des Flüssigkristalls. Die Herstellung einer geeigneten Orientierungsschicht im Display erfordert einen erheblichen Aufwand. Außerdem können Wechselwirkungen der Orientierungsschicht mit dem FK-Medium den elektrischen Widerstand der Anzeige verschlechtern. Wegen solcher möglichen Wechselwirkungen reduziert sich die Zahl der geeigneten Flüssigkristallkomponenten erheblich. Daher wäre es erstrebenswert die homöotrope Ausrichtung des FK-Mediums ohne Polyimid zu erreichen.

Der Nachteil der häufig verwendeten Aktivmatrix-TN-Anzeigen beruht in ihrem vergleichsweise niedrigen Kontrast, der relativ hohen Blickwinkel-abhängigkeit und der Schwierigkeit in diesen Anzeigen Graustufen zu erzeugen.

Wesentlich bessere Blickwinkelabhängigkeiten weisen VA-Displays auf und werden daher hauptsächlich für Fernseher und Monitore verwendet.

Eine Weiterentwicklung stellen die sogenannten PS-bzw. PSA-Anzeigen ("Polymer Sustained" bzw. "Polymer Sustained Alignment") dar, für die auch gelegentlich der Begriff "Polymer Stabilized" verwendet wird. Ohne nennenswerte Einbußen sonstiger Parameter, wie insbesondere der günstigen Blickwinkelabhängigkeit des Kontrastes, zeichnen sich die PSA-Anzeigen durch die Verkürzung der Schaltzeiten aus.

In diesen Anzeigen wird dem FK-Medium eine geringe Menge (zum Beispiel 0,3 Gew.-%, typischerweise <1 Gew.-%) einer oder mehrerer polymerisierbarer Verbindung(en) zugesetzt, welche nach Einfüllen in die FK-Zelle mit oder ohne angelegte elektrische Spannung zwischen den Elektroden *in situ* polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als reaktive Mesogene oder "RM"s bezeichnet, zur FK-Mischung erwiesen. Die PSA-Technik wird bisher hauptsächlich für FK-Medien mit negativer dielektrischer Anisotropie eingesetzt.

Nachfolgend wir der Begriff "PSA", falls nicht anders angegeben, stellvertretend für PS-Anzeigen und PSA-Anzeigen verwendet.

Mittlerweile wird das PSA-Prinzip in diversen klassischen FK-Anzeigen angewendet. So sind beispielsweise PSA-VA-, PSA-OCB-, PSA-IPS-, PSA-FFS- und PSA-TN-Anzeigen bekannt. Die Polymerisation der polymerisierbaren Verbindung(en) erfolgt bei PSA-VA- und PSA-OCB-Anzeigen vorzugsweise bei angelegter elektrischer Spannung, bei PSA-IPS-Anzeigen mit oder ohne angelegte elektrische Spannung. Wie man in Testzellen nachweisen kann, führt das PS(A)-Verfahren zu einem 'pretilt' in der Zelle. Bei PSA-OCB-Anzeigen beispielsweise kann man erreichen, dass die Bend-Struktur stabilisiert wird, so dass man ohne Offset-Spannung auskommt oder diese reduzieren kann. Im Falle von PSA-VA-Anzeigen wirkt sich der 'pretilt' positiv auf die Schaltzeiten aus. Für PSA-VA-Anzeigen kann ein Standard-MVA- bzw. -PVA Pixel- und Elektroden-Layout verwendet werden. Darüber hinaus kann man aber beispielsweise auch mit nur einer strukturierten Elektrodenseite und ohne 'Protrusions' auskommen, was die Herstellung wesentlich vereinfacht und gleichzeitig zu einem sehr guten Kontrast bei sehr guter Lichtdurchlässigkeit führt.

PSA-VA-Anzeigen sind beispielsweise in JP 10-036847 A, EP 1 170 626 A2, US 6,861,107, US 7,169,449, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. (2006), 45, 2702-2704 und S. H. Kim, L.-C- Chien, Jpn. J. Appl. Phys. (2004), 43, 7643-7647 beschrieben. PSA-IPS-Anzeigen sind zum Beispiel in US 6,177,972 und Appl. Phys. Lett. (1999), 75(21), 3264 beschrieben. PSA-TN-Anzeigen sind zum Beispiel in Optics Express (2004), 12(7), 1221 beschrieben. PSA-VA-IPS Anzeigen sind zum Beispiel in WO 2010/089092 A1 offenbart.

PSA-Anzeigen können ebenso wie die oben beschriebenen konventionellen FK-Anzeigen als Aktivmatrix- oder Passivmatrix-Anzeigen (PM) betrieben werden. Bei Aktivmatrix-Anzeigen erfolgt die Ansteuerung einzelner Bildpunkte üblicherweise durch integrierte, nicht-lineare aktive Elemente wie beispielsweise Transistoren (z.B. Dünnfilmtransistoren, engl. 'thin film transistor' bzw. "TFT"), bei Passivmatrix-Anzeigen üblicherweise nach dem Multiplex-Verfahren, wobei beide Verfahren aus dem Stand der Technik bekannt sind.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere bei PSA-VA-Anzeigen kann man ohne nennenswerte Einbußen sonstiger Parameter eine Verkürzung der Schaltzeiten erreichen, die mit einem in Testzellen messbaren 'pretilt' korrelieren.

Im Stand der Technik werden für PSA-VA beispielsweise polymerisierbare Verbindungen der folgenden Formel verwendet 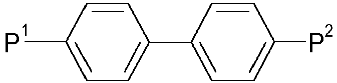 worin P eine polymerisierbare Gruppe, üblicherweise eine Acrylat- oder Methacrylatgruppe bedeutet, wie beispielsweise in US 7,169,449 beschrieben.

Der Aufwand für das Erzeugen einer Polyimidschicht, Behandlung der Schicht und Verbesserung mit Erhebungen oder Polymerschichten, ist relativ groß. Eine vereinfachende Technologie wäre daher wünschenswert, die einerseits die Produktionskosten verringert und andererseits die Bildqualität (Blickwinkelabhängigkeit, Kontrast, Schaltzeiten) zu optimieren hilft.

Die Druckschriften WO 2017/041893 A1, EP 2918658 A2, CN 105733557 A, WO 2016/114093 A1 und DE 102015008172 A1 beschreiben selbstausrichtende, polymerisierbare Mesogene mit einer Ankergruppe (z. B. OH, SH) und flüssigkristalline Medien enthaltend solche Additive. Die dort offenbarten Additive besitzen eine andere Struktur wie die erfindungsgemäßen Verbindungen.

Die bestehenden Ansätze um zu VA-Displayanwendungen ohne Polyimidschicht zu gelangen sind jedoch noch nicht vollständig zufrieden stellend.

Die vorliegende Erfindung betrifft Verbindungen der folgenden Formeln IA-3, IA-4, IB-1 bis I-4, IC-3 und IC-4, und offenbart werden Verbindungen der Formel I, sowie ein FK-Medium enthaltend eine niedermolekulare, nicht polymerisierbare, flüssigkristalline Komponente und eine polymerisierbare oder polymerisierte Komponente umfassend eine oder mehrere Verbindungen der Formeln, wobei die polymerisierte Komponente durch Polymerisieren der polymerisierbaren Komponente erhältlich ist, 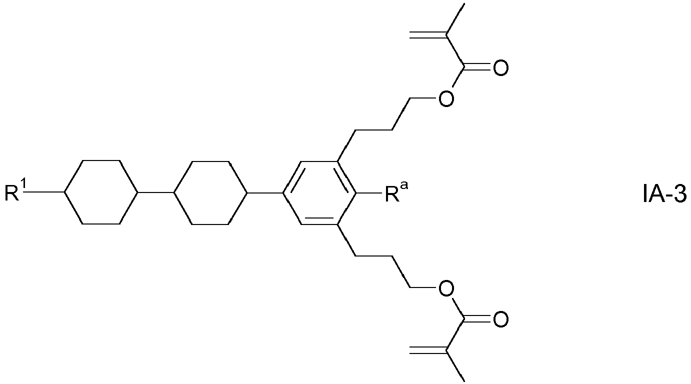 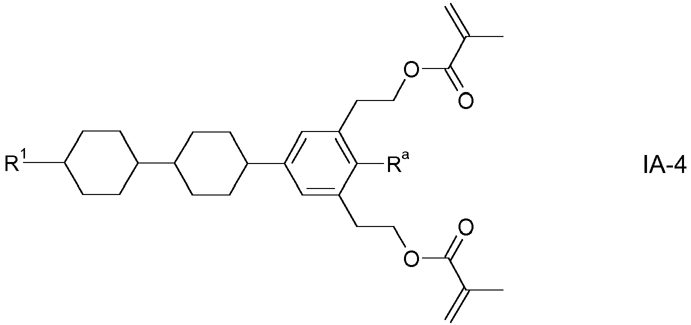 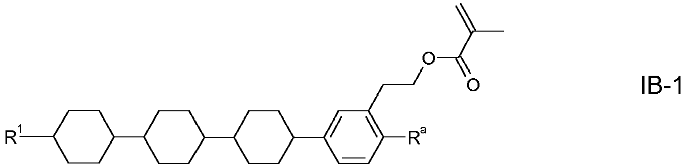 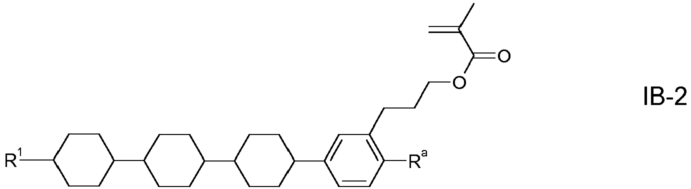 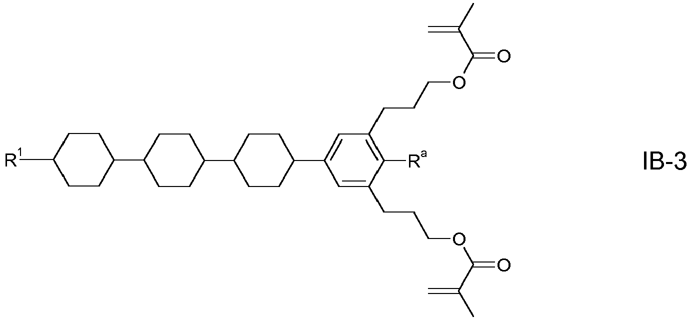 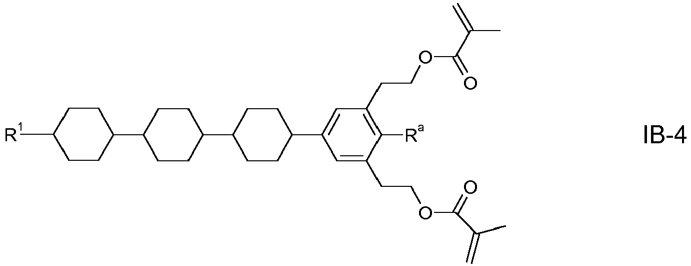 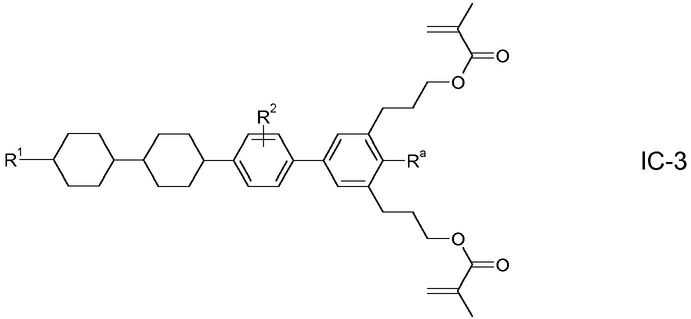 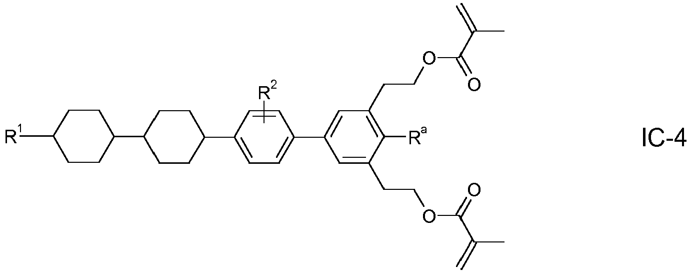 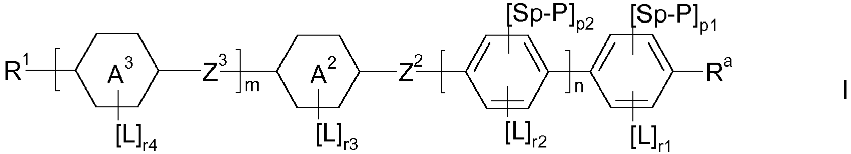 worin 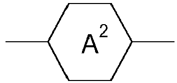 einen Ring der Formel 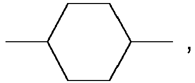 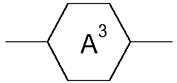 einen Ring der Formel 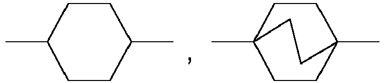 oder 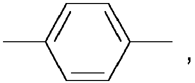
- L, R²: jeweils unabhängig voneinander geradkettiges oder verzweigtes Alkyl, Alkenyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können, F, Cl, Br, I, -CN, -NO₂, -NCO, -NCS, -OCN, -SCN, -C(=O)N(R⁰)₂, -C(=O)R⁰, optional substituiertes Aryl oder Cycloalkyl mit 3 bis 20 C-Atomen,
- P: eine polymerisierbare Gruppe,
- Sp: eine Abstandsgruppe (auch bezeichnet als Spacer oder Spacergruppe) oder eine Einfachbindung,
- R^{a}: eine Ankergruppe der Formel 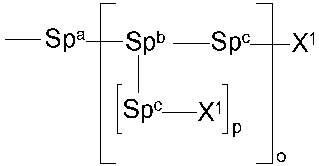
- p: 1 oder 2, bevorzugt 1,
- o: 0 oder 1, wobei für die Formeln IC-3 bis IC-4 o = 0 ist,
- X¹: unabhängig voneinander H, Alkyl, Fluoralkyl, -OH, -SH, -NH₂, -NHR¹¹, -NR¹¹₂, NHC(O)-R¹¹, -OR¹¹, -C(O)OH, -CHO, wobei mindestens eine Gruppe X¹ einen Rest ausgewählt aus -OH, -SH, -NH₂, -NHR¹¹, -C(O)OH und -CHO, bedeutet,
- R¹¹: Alkyl mit 1 bis 12 C-Atomen,
- Sp^{a}, Sp^{c}: jeweils unabhängig voneinander eine Abstandsgruppe oder eine Einfachbindung,
- Sp^{b}: eine tri- oder tetravalente Gruppe, bevorzugt CH, N oder C,
- R¹: unabhängig voneinander H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CH=CH-, -C≡C-, -CO-, -CO-O-, -O-CO-, -O-CO-O- so ersetzt sein können, dass O- und/oder S-Atome nicht direkt miteinander verknüpft sind und worin auch ein oder mehrere H-Atome durch F oder Cl, ersetzt sein können,
oder eine Gruppe -Sp-P,
- m: 1, 2 oder 3, bevorzugt 1 oder 2, besonders bevorzugt 2,
- n: 0 oder 1, mit der Maßgabe, dass n = 0 ist, für den Fall, dass o = 1 ist,
- p1, p2: unabhängig voneinander 0, 1 oder 2, wobei p1 + p2 = 1 oder 2,
- r1: 0, 1 oder 2, bevorzugt 0,
- r2: 0, 1 oder 2, bevorzugt 1,
- r3: 0 oder 1, bevorzugt 0,
- r4: jeweils unabhängig voneinander 0 oder 1, bevorzugt 0
- Z², Z³: jeweils unabhängig voneinander eine Einfachbindung, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH- oder -(CR⁰R⁰⁰)ₙ₁-,
- n1: 1, 2, 3 oder 4,
- R⁰: jeweils unabhängig voneinander Alkyl mit 1 bis 12 C-Atomen,
- R⁰⁰: jeweils unabhängig voneinander H oder Alkyl mit 1 bis 12 C-Atomen,
bedeuten.

Die polymerisierbare oder polymerisierte Komponente des FK-Medium enthält optional weitere polymerisierbare Verbindungen. Dabei kommen bevorzugt solche zum Einsatz, die für das PSA-Prinzip geeignet sind.

Eine Ausführungsform der Erfindung ist daher auch ein Polymer, das Monomere der Formel I umfasst, d.h. ein Polymer, das wenigstens teilweise aus entsprechendem Polymerisationsprodukt aufgebaut ist.

Die Erfindung betrifft weiter eine FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, sowie einer zwischen den Substraten befindlichen Schicht eines erfindungsgemäßen FK-Mediums. Die FK-Anzeige ist vorzugsweise eine des PSA-Typs.

Ein weiterer Gegenstand der Erfindung ist die Verwendung von Verbindungen der Formel I als Additiv für FK-Medien zur Herbeiführung einer homöotropen Orientierung gegenüber einer das FK-Medium begrenzenden Oberfläche.

Ein weiterer Aspekt der vorliegenden Erfindung ist ein Verfahren zur Herstellung eines erfindungsgemäßen FK-Medium, das dadurch gekennzeichnet ist, dass man eine oder mehrere polymerisierbare Selbstorientierungsadditive (Verbindungen der Formel I) mit einer niedermolekularen, flüssigkristallinen Komponente mischt und optional eine oder mehrere weitere polymerisierbare Verbindungen zugibt.

Ein weiterer Gegenstand der Erfindung ist ein Verfahren zu Herstellung einer FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, umfassend die Verfahrensschritte:
- Füllen der Zelle mit einem erfindungsgemäßen FK-Medium, wobei sich eine homöotrope (vertikale) Ausrichtung des FK-Mediums gegenüber den Substratoberflächen einstellt, und
- Polymerisieren der polymerisierbaren Komponente(n), optional unter Anlegen einer Spannung an die Zelle oder unter der Wirkung eines elektrischen Feldes, in einem oder mehreren Verfahrensschritten.

Die erfindungsgemäße Verwendung der Selbstorientierungsadditive als Additive von FK-Medien ist nicht an bestimmte FK-Medien gebunden. Das FK-Medium bzw. die darin enthaltene nicht-polymerisierbare Komponente kann positive oder negative dielektrische Anisotropie aufweisen. Das FK-Medium ist bevorzugt nematisch, da die meisten auf dem VA-Prinzip basierten Anzeigen nematische FK-Medien umfassen.

Das polymerisierbare Selbstorientierungsadditiv wird im FK-Medium als Additiv eingebracht. Es bewirkt eine homöotrope Ausrichtung des Flüssigkristalls gegenüber den Substratoberflächen (wie z.B. eine Oberfläche aus Glas oder mit ITO oder mit Polyimid beschichtet). Es scheint in Anbetracht der Untersuchungen zu dieser Erfindung so, dass die polare Ankergruppe in Wechselwirkung mit der Substratoberfläche tritt. Dadurch richten sich die Selbstorientierungsadditive auf der Substratoberfläche aus und induzieren eine homöotrope Orientierung des angrenzenden FK-Mediums. Die Ankergruppe sollte nach dieser Auffassung sterisch zugänglich sein, also nicht wie im Fall einer phenolischen (phenylsubstituierten) OH-Gruppe von ortho-ständigen tert-Butylgruppen umgeben sein, wie es in beispielsweise in 2,6-Di-tert-butylphenol der Fall ist. D.h. Verbindungen mit einer Kopfgruppe (entsprechend den Resten R^{a} oder -A¹--R^{a}) der Formel 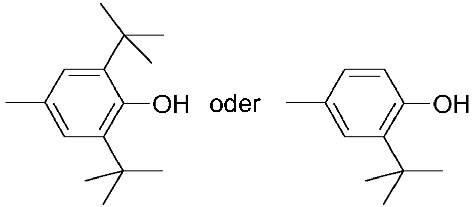 sind bevorzugt nicht in Formel I und den Unterformeln umfasst. Noch allgemeiner sind bevorzugt phenolische Kopfgruppen nicht umfasst, worin die Ankergruppe -OH bedeutet.

Die erfindungsgemäßen Selbstorientierungsadditive sind bei Raumtemperatur überwiegend kristalline Feststoffe, wodurch das Handling und die Lagerfähigkeit im Vergleich zu z.B. öligen Substanzen verbessert sind. Der Schmelzpunkt kann weiterhin über Variation der Seitenketten variiert werden.

Darüber hinaus verleihen die Verbindungen den LC-Medien vergleichsweise gute VHR-Werte unter Anwendungsbedingungen, d.h. nach dem UV-Bestrahlungsprozess der Displayherstellung. Dadurch lassen sich mit den erfindungsgemäßen Additiven nun auch Mischungskonzepte realisieren, die bisher zu Instabilitäten in Belastungstest geführt haben. Die anderen Parameter von VA-Anzeigen, wie z.B. die Schaltzeiten oder die Stabilität des Tiltwinkels in der Herstellung von PS-VA Anzeigen, werden durch die erfindungsgemäßen Additive nicht nachteilig beeinflusst.

Die FK-Zelle der erfindungsgemäße FK-Anzeige weist bevorzugt keine Orientierungsschicht auf, insbesondere keine Polyimidschicht zur homöotropen Ausrichtung des FK-Mediums. Als Orientierungsschicht ist hier eine Schicht gemeint, die schon vor dem Füllen der Zelle vorhanden ist. Die polymerisierte Komponente des FK-Mediums wird in diesem Zusammenhang nicht als Orientierungsschicht angesehen. Eine FK-Zelle kann dennoch eine Orientierungsschicht oder eine vergleichbare Schicht aufweisen, aber vorzugsweise ist diese Schicht nicht alleine für die homöotrope Orientierung ursächlich, sondern unterstützt oder modifiziert den Effekt des Selbstorientierungsadditivs. Das Reiben von z. B. Polyimidschichten ist erfindungsgemäß nicht erforderlich um eine homöotrope Orientierung des FK-Mediums gegenüber der Substratoberfläche zu erreichen. Die erfindungsgemäße FK-Anzeige ist vorzugsweise eine VA-Anzeige mit einem FK-Medium mit negativer dielektrischer Anisotropie und auf gegenüberliegenden Substraten angeordneten Elektroden. Alternativ handelt es sich um eine VA-IPS-Anzeige mit einem FK-Medium mit positiver dielektrischer Anisotropie und mindestens auf einem Substrat angeordneten Interdigital-Elektroden handelt.

Das polymerisierbare Selbstorientierungsadditiv der Formel I wird vorzugsweise in einer Konzentration von weniger als 10 Gew.-%, besonders bevorzugt ≤ 5 Gew.-% und ganz besonders ≤ 3 Gew.-% eingesetzt. Es wird bevorzugt in einer Konzentration von mindestens 0,05 Gew.-% eingesetzt, bevorzugt mindestens 0,2 Gew.-%. Der Einsatz von 0,1 bis 2,5 Gew.-% des Selbstorientierungsadditivs führt in der Regel schon zu vollständig homöotroper Orientierung der FK-Schicht bei den üblichen Zelldicken (3 bis 4 µm) mit den üblichen Substratmaterialien und unter den üblichen Bedingungen der Herstellungsprozesse einer FK-Anzeige. Durch die polymerisierbare Natur werden auch höhere Konzentrationen an Selbstorientierungsadditiven möglich, ohne das FK-Medium nachhaltig zu beeinflussen, da die polymerisierbare Substanz durch die Polymerisation wieder gebunden wird.

Ein bevorzugtes Selbstorientierungsadditiv der Formel I ist ein Additiv ausgewählt aus den Formeln IA, IB und IC: 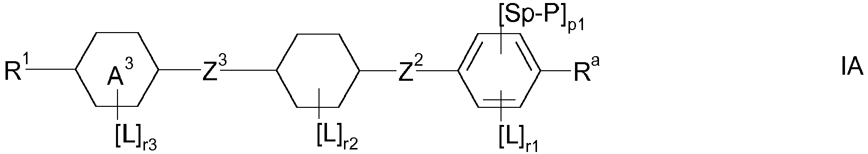 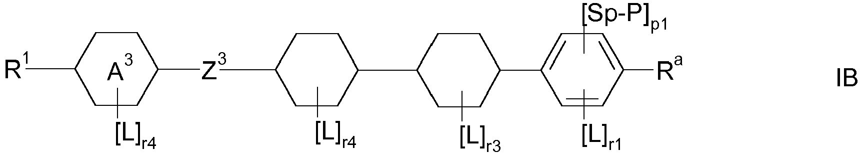 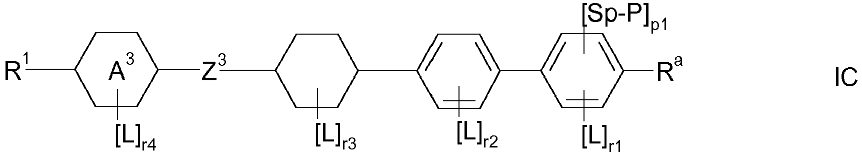 worin
R¹, Sp, P, p1, L, r1, r2, r3 und R^{a} wie für Formel I definiert sind, und 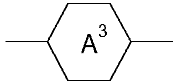 einen Ring der Formel 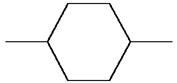 oder 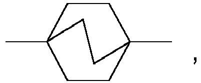 bevorzugt 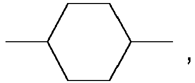 bedeutet.

Nachfolgend werden weitere bevorzugte und beispielhafte Ausführungsformen der erfindungsgemäßen Selbstorientierungsadditive offenbart.

Die Ankergruppe R^{a} enthält definitionsgemäß eine, zwei oder drei Gruppen X¹, die als Bindeglied zu einer Oberfläche dienen sollen.

Die Abstandsgruppen Sp^{a} bis Sp^{c} sollen eine flexible Bindung zwischen der mesogenen Gruppe mit Ringen und der Gruppe(n) X¹ herstellen. Die Struktur der Abstandsgruppen ist daher sehr variabel und im allgemeinsten Fall der Die Abstandsgruppen Sp^{a} bis Sp^{c} sollen eine flexible Bindung zwischen der mesogenen Gruppe mit Ringen und der Gruppe(n) X¹ herstellen. Die Struktur der Abstandsgruppen ist daher sehr variabel und im allgemeinsten Fall der Formel I nicht abschließend definiert. Der Fachmann wird erkennen, das dabei eine Vielzahl von möglichen Variationen von Ketten in Frage kommt.

Eine Ankergruppe der Formel 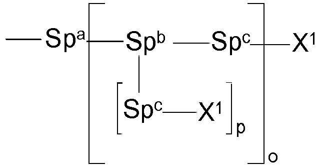 wie vor und nachstehend definiert,
steht bevorzugt für eine Ankergruppe ausgewählt aus den folgenden Formeln: 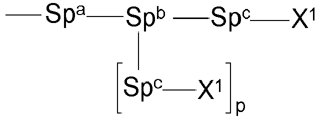 oder

-Sp^{a}-X¹,

worin jeweils unabhängig die Gruppen wie vor und nachstehend definiert sind, besonders bevorzugt für eine Gruppe der Formeln

-Sp^{a}-X¹

oder 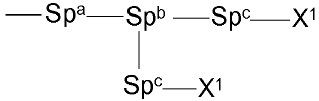 oder 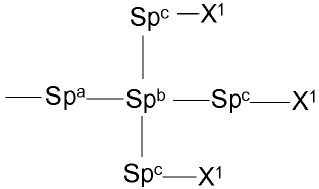 worin jeweils unabhängig die Gruppen wie vor- und nachstehend definiert sind.

Die Gruppe Sp^{b} bedeutet bevorzugt eine trivalente Gruppe der Formeln ausgewählt aus CH, C(R³) oder N (für p = 1),
oder die tetravalente Gruppe C (vierbindiges Kohlenstoffatom, für p = 2).

Besonders bevorzugt bedeutet
- Sp^{b}: -CH oder -CR³ (für p = 1) oder C (für p = 2), worin R³ wie unten definiert ist.

Die Gruppe R³ in Sp^{b} bedeutet einen Alkylrest mit 1 bis 10 C-Atomen, der linear oder verzweigt ist. Durch die Wahl des Restes R³ kann der Schmelzpunkt der erfindungsgemäßen Additive der Formel (I) in einem breiten Bereich eingestellt werden. Der Rest R³ kann auch Einfluss auf die homogene Verteilung der Additive auf der Substratoberfläche haben. In einer bevorzugten Ausführungsform ist Sp^{b} eine Gruppe -C(R³), worin R³ einen Rest mit 1 bis 8 C-Atomen bedeutet, z.B bevorzugt C(CH₂CH₂CH₃), C(CH₂CH₂CH₂CH₃), C(CH₂CH(CH₃)CH₃), C(CH₂CH₂C(CH₃)₃). Besonders bevorzugt ist R³ eine Gruppe mit 1 bis 8 C-Atomen, insbesondere n-Butyl oder 3,3-Dimethylbutyl. Bevorzugte Reste R³ sind auch in den expliziten Ankergruppen unten offenbart.

Die Gruppe Sp^{a} bedeutet bevorzugt keine Einfachbindung, bevorzugt eine geradkettige oder verzweigte Alkylenkette mit 1 bis 8 C-Atomen, worin eine oder mehrere CH₂-Gruppen durch -O- ersetzt sein können, und worin auch ein oder mehrere H-Atome durch F, Cl oder -OH ersetzt sein können, besonders bevorzugt eine Gruppe ausgewählt aus den Formeln: -CH₂-, -CH₂CH₂-, -OCH₂CH₂-, -CH₂CH₂CH₂-, -OCH₂CH₂CH₂-, -CH₂CH₂CH₂CH₂-, -OCH₂CH₂CH₂CH₂-, -CH₂CH₂OCH₂CH₂- und -OCH₂CH₂OCH₂CH₂-, besonders bevorzugt -CH₂CH₂-, -OCH₂CH₂-, -OCH₂CH₂CH₂-, -OCH₂CH₂CH₂CH₂- und -CH₂CH₂CH₂-.

Die Gruppe Sp^{c} bedeutet bevorzugt keine Einfachbindung, bevorzugt eine geradkettige oder verzweigte Alkylenkette mit 1 bis 8 C-Atomen, worin eine oder mehrere CH₂-Gruppen durch -O- ersetzt sein können, und worin auch ein oder mehrere H-Atome durch F, Cl oder -OH ersetzt sein können, bevorzugt eine Gruppe ausgewählt aus den Formeln -CH₂-, -CH₂CH₂-, -CH₂CH₂CH₂-, -CH₂CH₂CH₂CH₂-, -CH₂CH₂OCH₂CH₂-, besonders bevorzugt -CH₂-.

Die Ankergruppe R^{a} in den vorangehenden Formeln umfasst besonders bevorzugt eine, zwei oder drei OH-Gruppen.

Besonders bevorzugte Ankergruppen der Formel R^{a} sind ausgewählt aus den folgenden Teilformeln, wobei die Gruppe R^{a} über die gestrichelte Bindung an die jeweilige Formel angebunden ist:

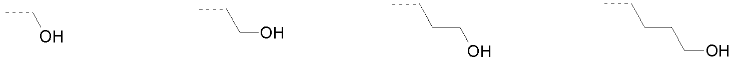

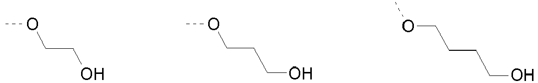

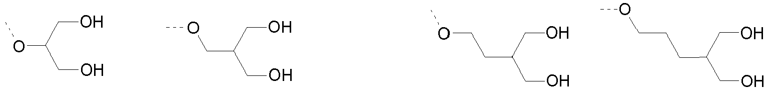

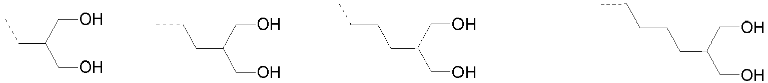

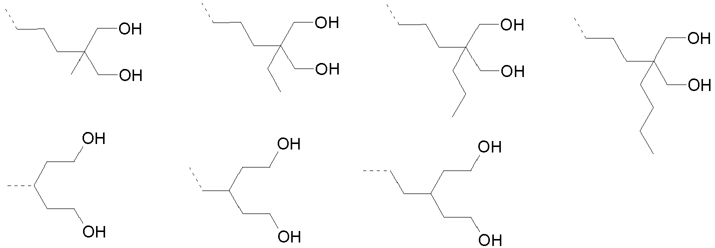

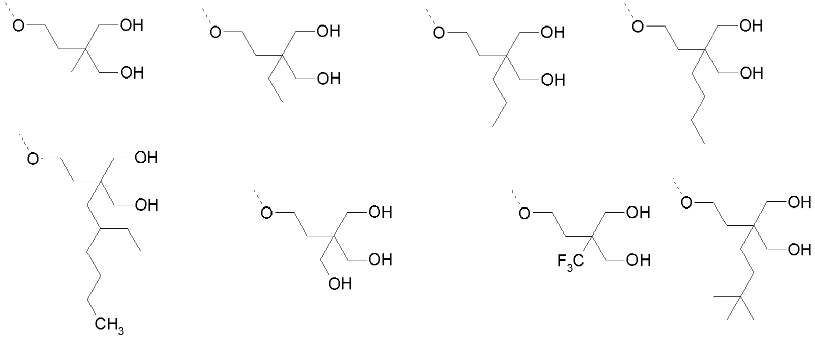

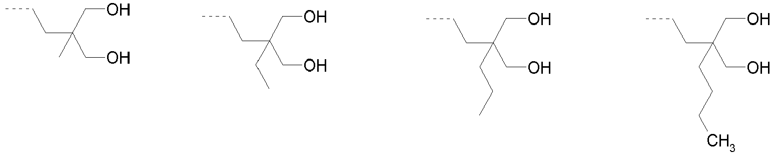

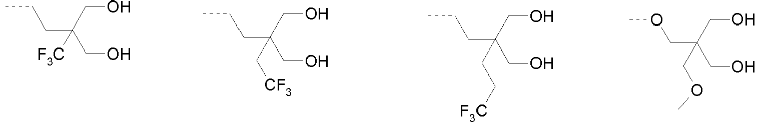

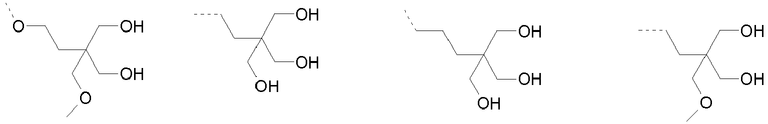

In der Formel I und ihren Unterformeln bedeuten die Variablen r3 und r4 bevorzugt beide 0. Die Variable r1 bedeutet bevorzugt 0 oder 1. Die Variable r2 bedeutet bevorzugt 0 oder 1.

Der Zähler m in der Formel I bedeutet bevorzugt 1 oder 2, bevorzugt 1. Der Zähler n bedeutet bevorzugt 0.

Die Anzahl der polymerisierbaren Gruppen P in den erfindungsgemäßen Additiven der Formel I wird durch die Zähler p1 und p2 wiedergegben. Der Zähler p1 in der Formel I bedeutet bevorzugt 1 oder 2, bevorzugt 1. Der Zähler p2 in der Formel I bedeutet bevorzugt 0 oder 1, bevorzugt 0. Die Verbindungen der Formel I haben eine Anzahl (n + m) von polymerisierbaren Gruppen P, wobei (n + m) bevorzugt 1 oder 2 ist.

Die Gruppe L bedeutet bevorzugt H, F, Cl, CH₃, Ethyl, Propyl, Cyclopropyl oder Isopropyl.

Die Brückengruppe Z² der Formel I und zugehöriger Unterformeln bedeutet bevorzugt eine Einfachbindung. Die Brückengruppe Z³ der Formel I und zugehöriger Unterformeln bedeutet bevorzugt eine Einfachbindung.

Die Endgruppe R¹ bedeutet bevorzugt unabhängig voneinander geradkettiges, verzweigtes oder cyclisches Alkyl mit 1 bis 25 C-Atomen, worin auch eine oder mehrere nicht benachbarte CH₂-Gruppen durch -O-, -S-, -CH=CH-, -C≡C-, -CO-, -CO-O-, -O-CO-, -O-CO-O- so ersetzt sein können, dass O- und/oder S-Atome nicht direkt miteinander verknüpft sind und worin auch ein oder mehrere H-Atome durch F oder Cl, ersetzt sein können, besonders bevorzugt geradkettiges Alkyl mit 1 bis 15 C-Atomen, insbesondere mit 2, 3, 4, 5, 6 oder 7 C-Atomen.

Beispielhaft für ganz besonders bevorzugte Selbstorientierungsadditive sind die folgenden Formeln:

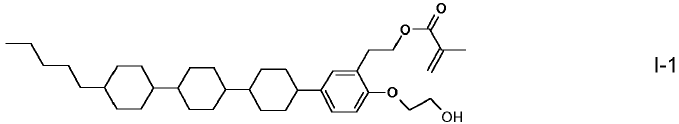

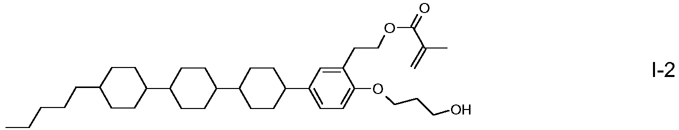

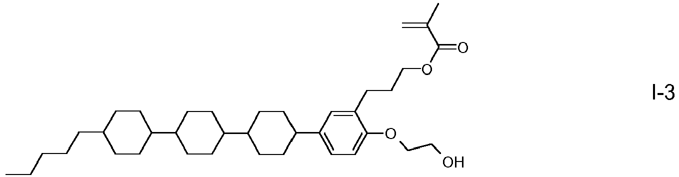

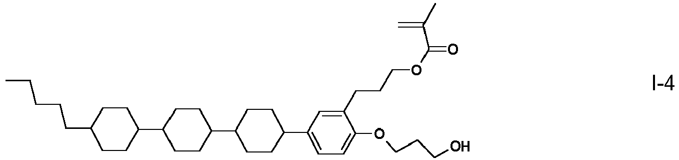

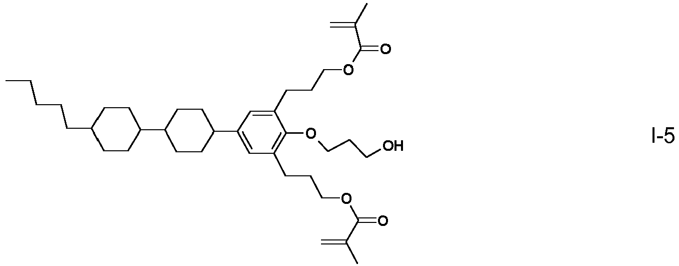

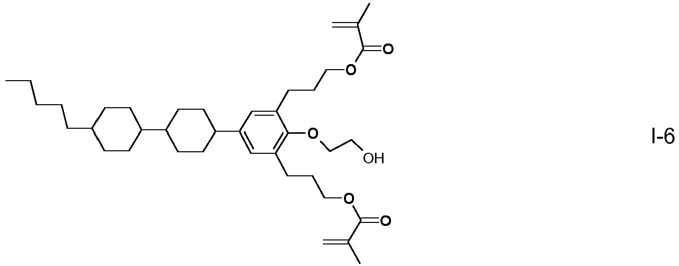

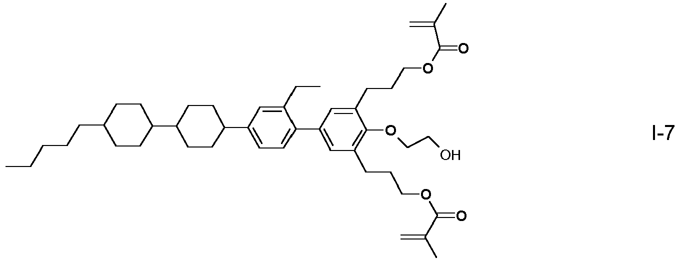

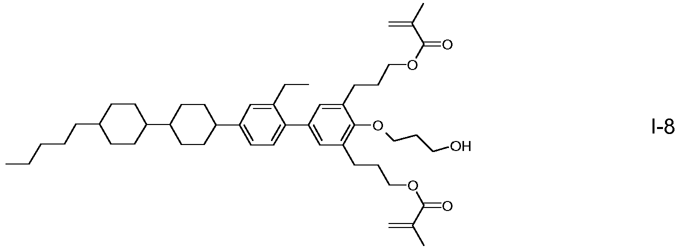

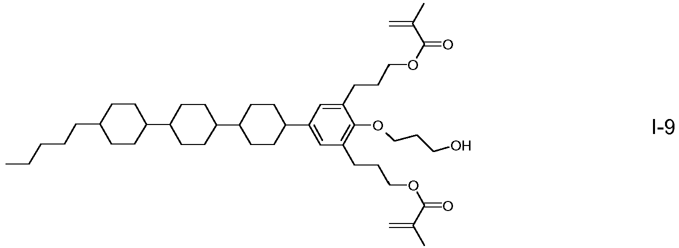

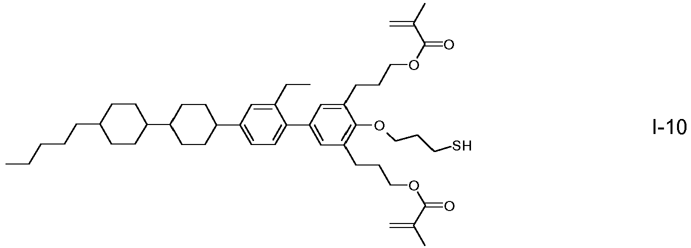

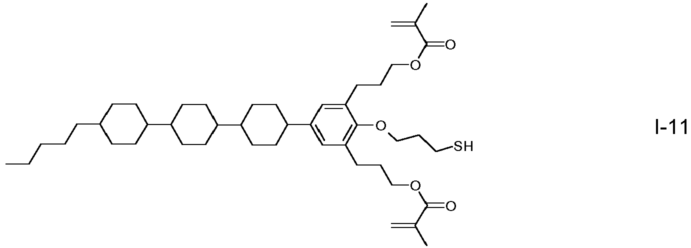

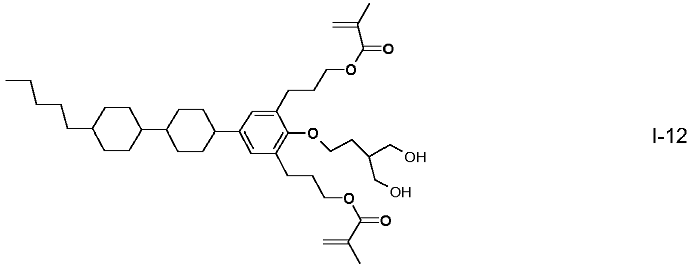

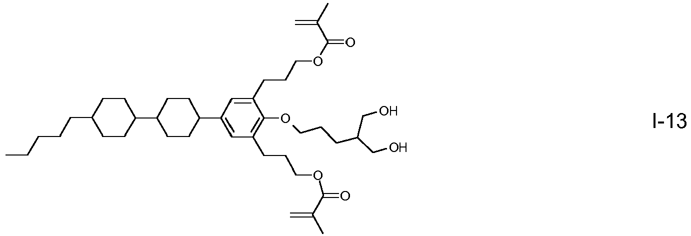

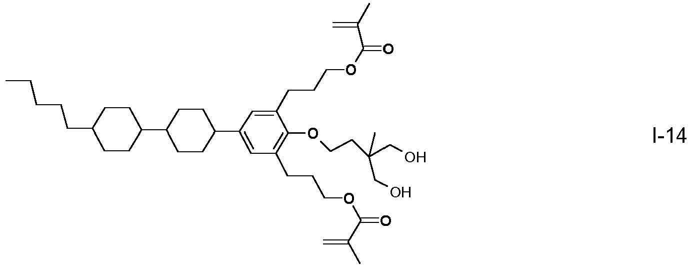

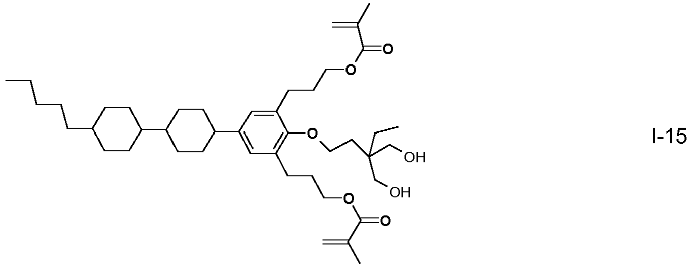

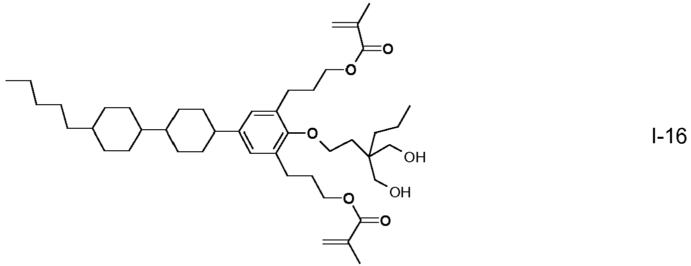

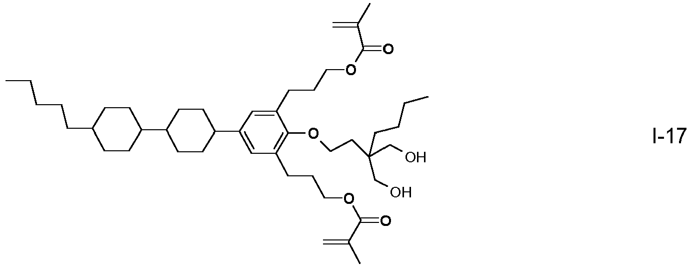

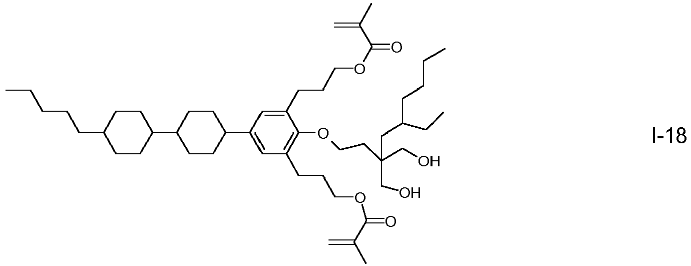

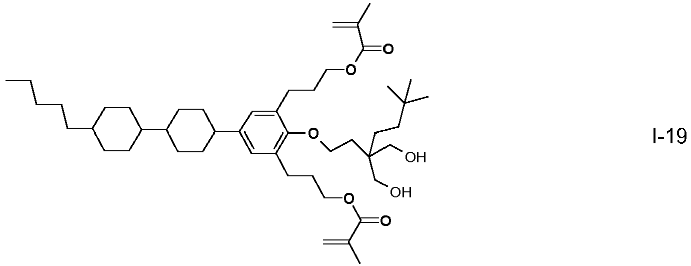

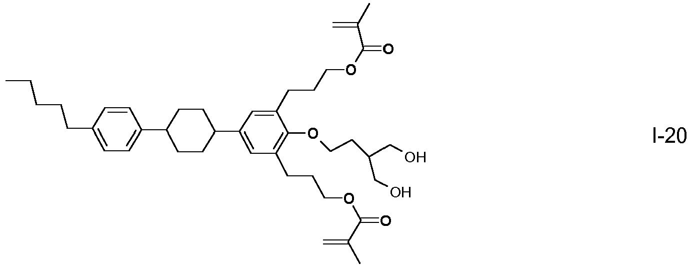

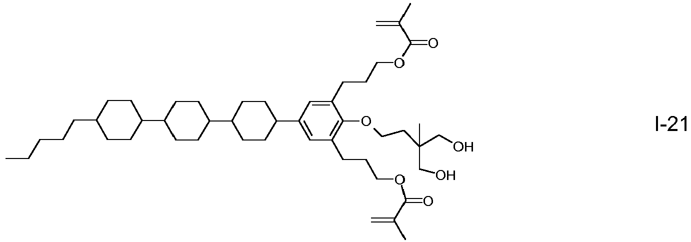

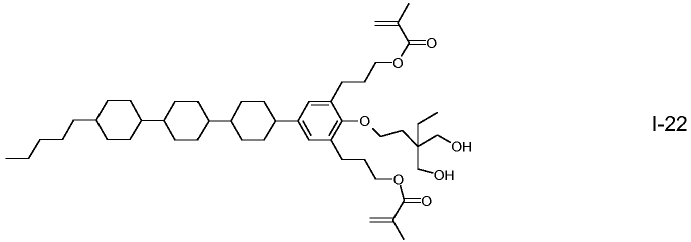

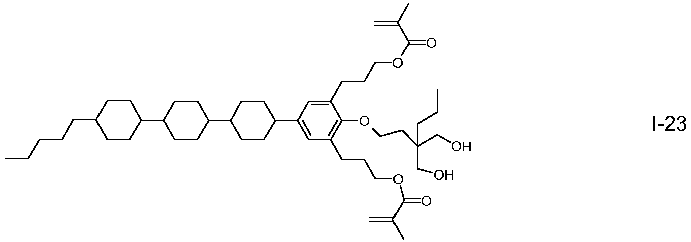

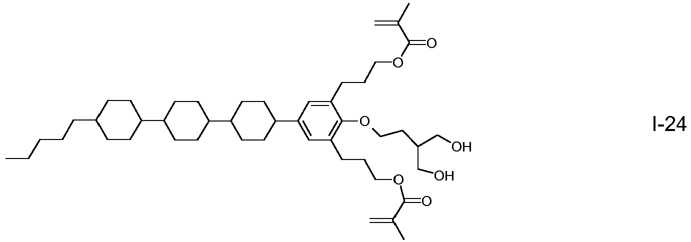

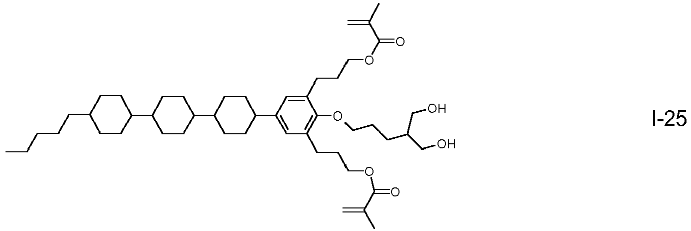

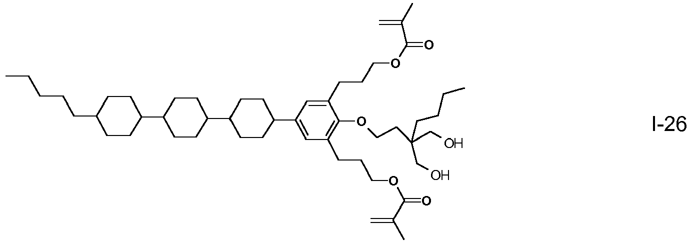

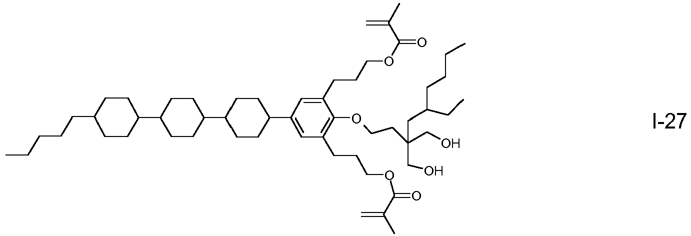

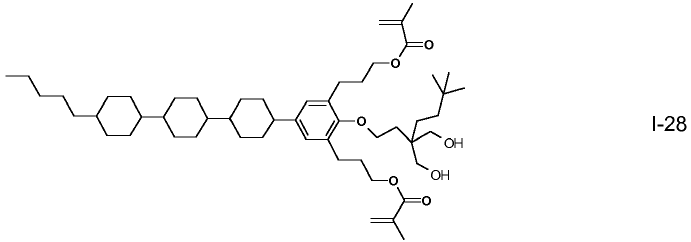

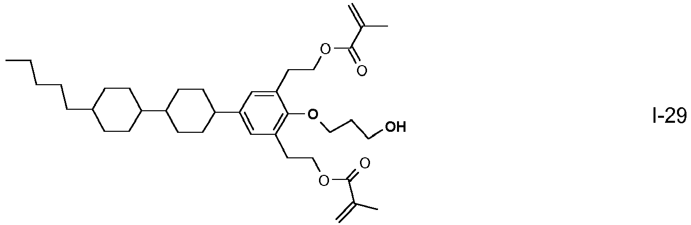

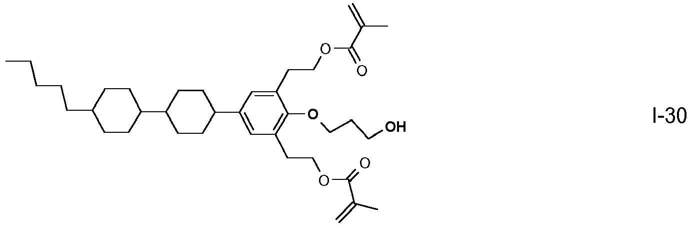

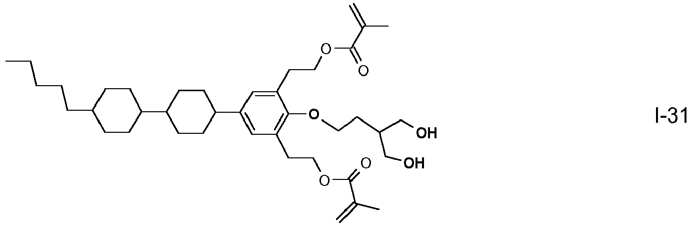

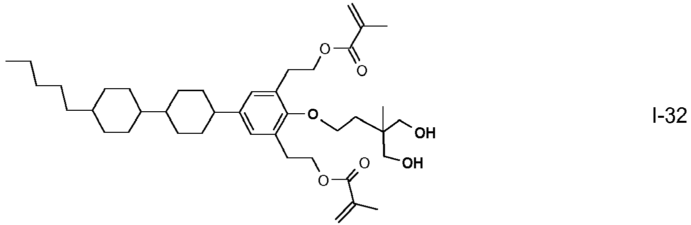

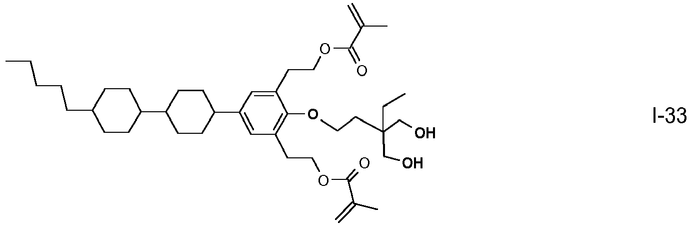

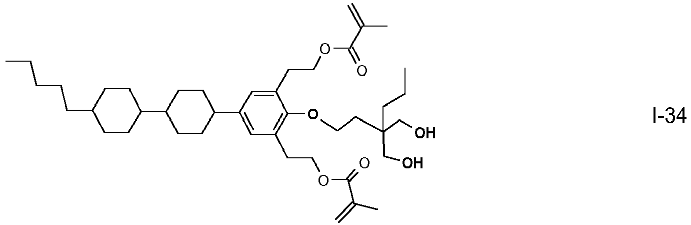

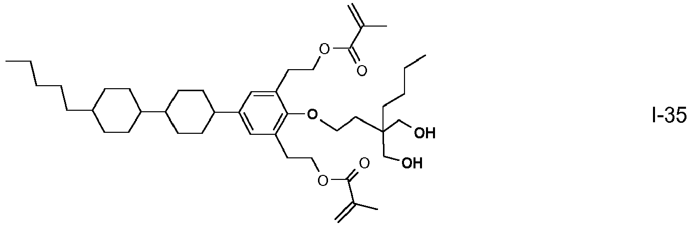

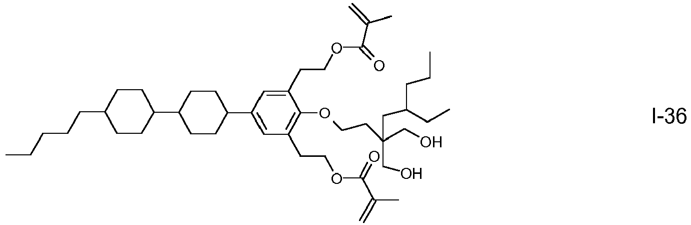

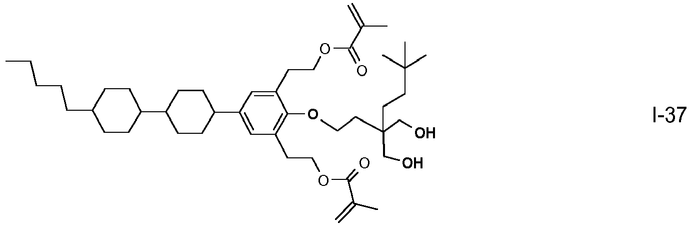

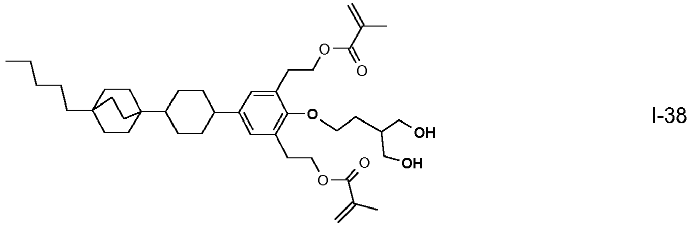

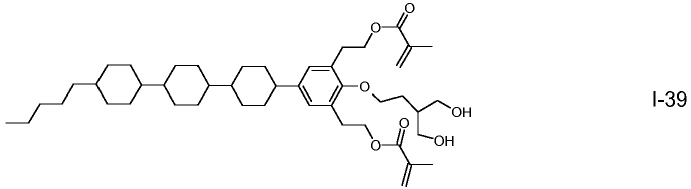

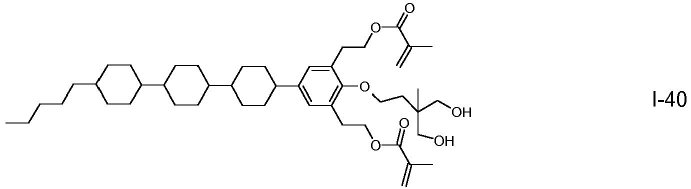

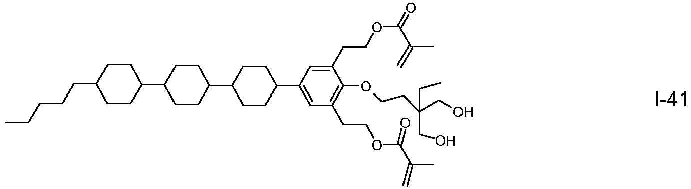

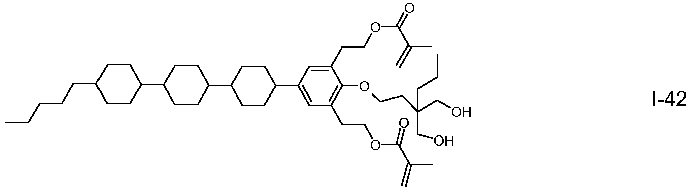

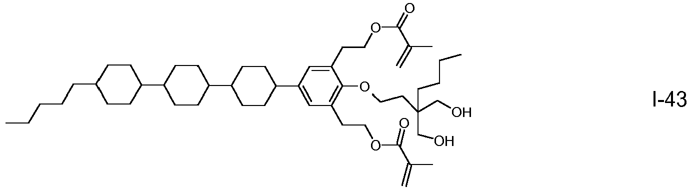

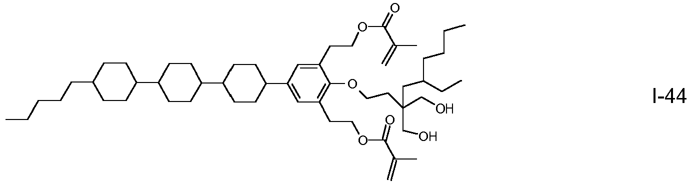

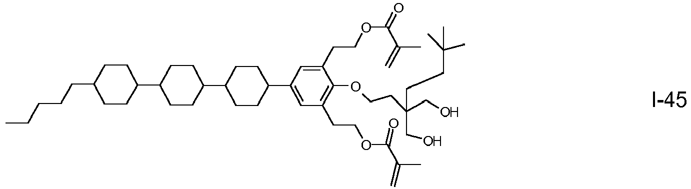

Das erfindungsgemäße FK-Medium kann neben den polymerisierbaren Selbstorientierungsadditiven auch weitere Selbstorientierungsadditive K enthalten, die nicht polymerisierbar oder von anderer Struktur sind.

Die Konzentration der polymerisierbaren Selbstorientierungsadditive und der weiteren (konventionellen) Selbstorientierungsadditive zusammen beträgt bevorzugt die oben angegebenen Werte, also beispielsweise 0,1 bis 2,5 Gew.-%.

Die weiteren, gegebenenfalls nicht-polymerisierbaren Selbstorientierungsadditive können eine Struktur der Formel K haben, wobei in Formel K Verbindungen der Formel I ausgeschlossen sind:

R¹-[A^{K2}-Z²]ₘ-A^{K1}-R^{a} K

worin die Gruppen R¹, Z² und R^{a} wie für Formel I voranstehend definiert sind, und
m 1, 2, 3 oder 4,
A^{K1}, A^{K2} jeweils unabhängig voneinander eine aromatische, heteroaromatische, alicyclische oder heterocyclische Gruppe, welche auch anellierte Ringe enthalten kann, und welche auch durch eine Gruppe L oder -Sp-P ein- oder mehrfach substituiert sein kann,
L jeweils unabhängig voneinander geradkettiges oder verzweigtes Alkyl, Alkenyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können, F, Cl, Br, I, -CN, -NO₂, -NCO, -NCS, -OCN, -SCN, -C(=O)N(R⁰)₂, -C(=O)R⁰, optional substituiertes Aryl oder Cycloalkyl mit 3 bis 20 C-Atomen,
P eine polymerisierbare Gruppe,
Sp eine Abstandsgruppe (auch bezeichnet als Spacer oder Spacergruppe) oder eine Einfachbindung,
R⁰ jeweils unabhängig voneinander Alkyl mit 1 bis 12 C-Atomen,
R⁰⁰ jeweils unabhängig voneinander H oder Alkyl mit 1 bis 12 C-Atomen,
und
R¹ unabhängig voneinander H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O-so ersetzt sein können, dass O- und/oder S-Atome nicht direkt miteinander verknüpft sind und worin auch ein oder mehrere H-Atome durch F oder Cl, ersetzt sein können,
bedeuten,
wobei Verbindungen der Formel I ausgeschlossen sind.

Die Formel K umfasst im Gegensatz zur Formel I auch nicht polymerisierbare Verbindungen und z.B. Terphenyl-Derivate. Die bevorzugten Ausführungsformen zur Ankergruppe R^{a}, den Elementen A², Z², R¹ und den Substituenten L und -Sp-P etc. sind auch auf die herkömmlichen Additive der Formel K anwendbar, sofern kein Widerspruch besteht.

Die Ringgruppen A^{K1} und A^{K2} bedeuten in der vorangehenden Formel K und deren Unterformeln jeweils unabhängig bevorzugt 1,4- oder 1,3-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 3,3'-Bicyclobutyliden, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, Perhydro-cyclopenta[a]phenanthren-3,17-diyl (insbesondere Gonan-3,17-diyl), wobei alle diese Gruppen unsubstituiert oder durch eine Gruppe L ein- oder mehrfach substituiert sein können.

Besonders bevorzugt bedeuten die Gruppen A^{K1}, A^{K2} jeweils unabhängig eine Gruppe ausgewählt aus
a) der Gruppe bestehend aus 1,4-Phenylen und 1,3-Phenylen, worin auch ein oder mehrere H-Atome durch L ersetzt sein können,
b) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch F oder L ersetzt sein können. Die Gruppen A^{K1} und A^{K2} bedeuten insbesondere bevorzugt eine Gruppe gemäß der vorangehenden Untergruppe a). Ganz besonders bevorzugt bedeuten A^{K1} und A^{K2} unabhängig 1,4-Phenylen oder Cyclohexan-1,4-diyl, welche jeweils durch eine Gruppe L ein- oder mehrfach substituiert sein kann.

Die Verbindungen der Formel K (konventionelle Selbstorientierungsadditive) umfassen beispielsweise Verbindungen der Formeln : 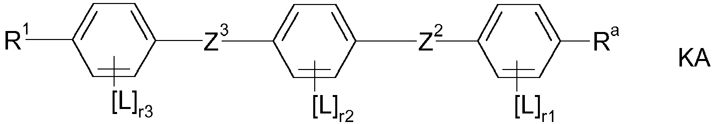 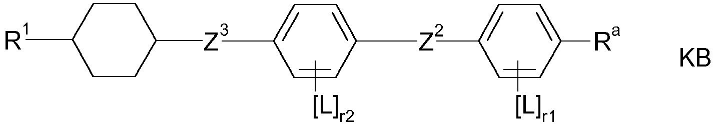 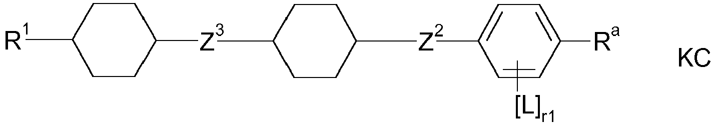 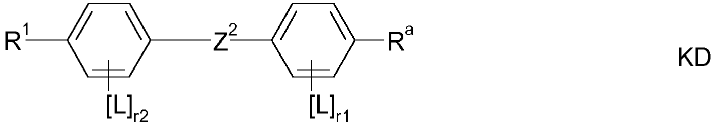 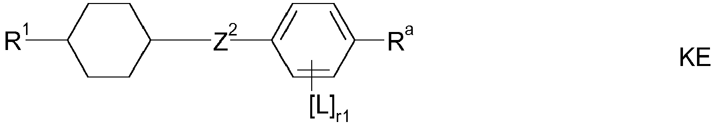 worin R¹, R^{a}, Z², Z³, L unabhängig wie für die vorangehende Formel K definiert sind, und
r1, r2, r3 unabhängig 0, 1, 2, 3 oder 4, bevorzugt 0, 1 oder 2, bedeuten.

Die Herstellung der konventionellen Selbstorientierungsadditive ist z. B. der Druckschrift WO 2012/038026 oder EP 2918658 A2 zu entnehmen.

Der Begriff "Aryl" bedeutet eine aromatische Kohlenstoffgruppe oder eine davon abgeleitete Gruppe.

Arylgruppen können einkernig oder mehrkernig sein, d.h. sie können einen Ring (wie z.B. Phenyl) oder zwei oder mehr anellierte Ringe aufweisen. Wenigstens einer der Ringe besitzt dabei eine aromatische Konjugation. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen. Ferner bevorzugt sind 5-, 6- oder 7-gliedrige Arylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Naphthyl, Anthracen, Phenanthren, Pyren, Dihydropyren, Chrysen, Perylen, Tetracen, Pentacen, Benzpyren, Fluoren, Inden, Indenofluoren, Spirobifluoren, etc.

Im Zusammenhang mit der vorliegenden Erfindung bedeutet der Ausdruck "Alkyl" einen geradkettigen oder verzweigten, gesättigten oder ungesättigten, bevorzugt gesättigten, aliphatischen Kohlenwasserstoffrest mit 1 bis 15 (d.h. 1, 2, 3, 4, 5, 6, 7, 8, 9, 10, 11, 12, 13, 14 oder 15) Kohlenstoffatomen.

Der Begriff "cyclisches Alkyl" umfasst Alkylgruppen, die wenigstens einen carbocyclischen Teil aufweisen, also beispielsweise auch Cycloalkylalkyl, Alkylcycloalkyl und Alkylcycloalkylalkyl. Die carbocyclischen Gruppen umfassen darin z. B. Cyclopropyl, Cyclobutyl, Cyclopentyl, Bicyclo[1.1.1]pentyl, Cyclohexyl, Spiro[3.3]bicycloheptyl, Cycloheptyl, Cyclooctyl, usw.

Im Zusammenhang mit der vorliegenden Erfindung bedeutet der Ausdruck "Fluoralkyl" einen geradkettigen oder verzweigten, gesättigten oder ungesättigten, bevorzugt gesättigten, aliphatischen Kohlenwasserstoffrest mit 1 bis 15 (d.h. 1, 2, 3, 4, 5, 6, 7, 8, 9, 10, 11, 12, 13, 14 oder 15) Kohlenstoffatomen, der durch ein oder mehrere Fluoratome substituiert ist. Bevorzugt ist der Rest perfluoriert.

"Halogen" steht im Zusammenhang der vorliegenden Erfindung für Fluor, Chlor, Brom beziehungsweise Iod, bevorzugt für Fluor oder Chlor.

Der Begriff "Abstandsgruppe oder "Spacer", hierin in der Regel mit "Sp" (bzw. Sp^{a/c/d/1/2/3}) bezeichnet, ist dem Fachmann bekannt und in der Literatur beschrieben, z.B. in Pure Appl. Chem. 73(5), 888 (2001) und C. Tschierske, G. Pelzl, S. Diele, Angew. Chem. (2004), 116, 6340-6368. In der vorliegenden Offenbarung bezeichnet der Begriff "Abstandsgruppe" oder "Spacer" eine verbindende Gruppe, beispielsweise eine Alkylengruppe, welche eine mesogene Gruppe mit einer polymerisierbaren Gruppe verbindet. Während die mesogene Gruppe in der Regel Ringe umfasst, ist die Abstandsgruppe in der Regel ohne Ringsysteme, also kettenförmig, wobei die Kette auch verzweigt sein kann. Als Kette wird beispielsweise eine Alkylengruppe aufgefasst. Substitutionen an und in der Kette, z.B durch -O- oder -COO-, sind im Allgemeinen mit umfasst.

Die oben stehenden bevorzugten Verbindungen der Formel I lassen sich prinzipiell nach folgenden exemplarischen Syntheserouten herstellen (Schema 1-3):

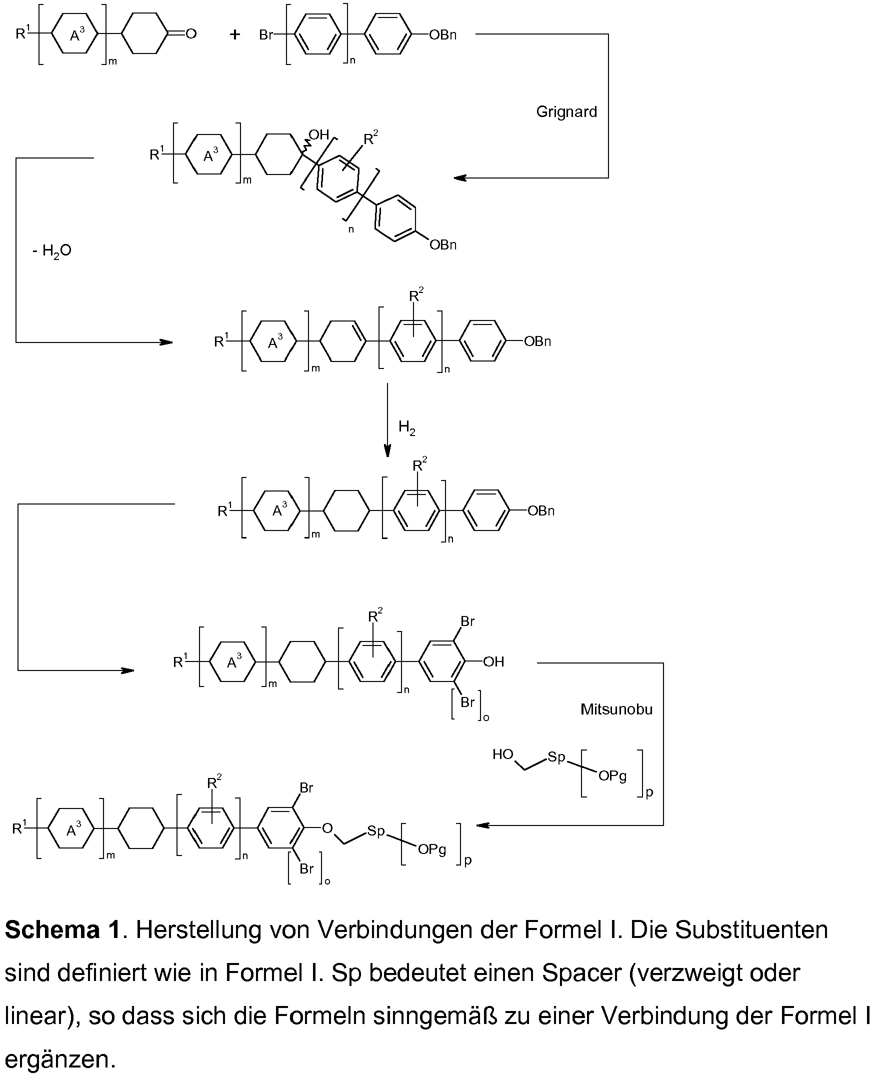

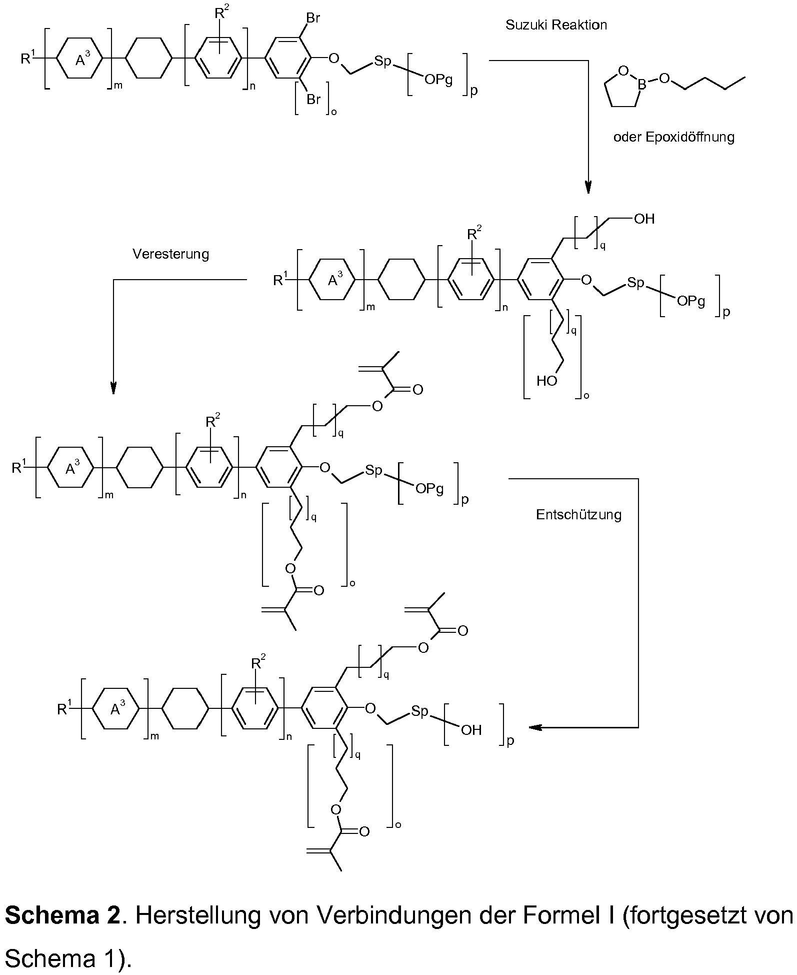

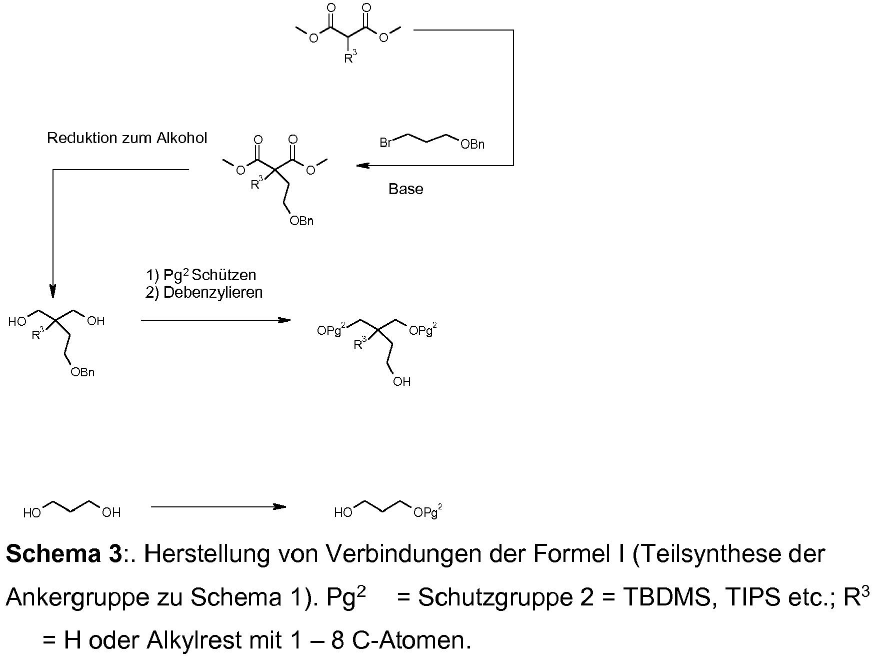

Die polymerisierbare Komponente des erfindungsgemäßen FK-Mediums umfasst vorzugsweise neben den Verbindungen der Formel I weitere polymerisierbare oder (teil-)polymerisierte Verbindungen. Dabei handelt es sich vorzugsweise um herkömmliche polymerisierbare Verbindungen ohne Ankergruppe, vorzugsweise mesogene Verbindungen, insbesondere solche die geeignet für die PSA-Technik sind. Dafür bevorzugte polymerisierbare Verbindungen sind die unten für Formel M und deren Unterformeln angegeben Strukturen. Das daraus gebildete Polymer kann die Ausrichtung des FK-Mediums stabilisieren, optional eine Passivierungsschicht ausbilden, und optional einen Pretilt erzeugen.

Die erfindungsgemäßen FK-Medien enthalten daher vorzugweise >0 bis <5 Gew.-%, besonders bevorzugt 0,05 bis 1 Gew.-% und ganz besonders bevorzugt 0,2 bis 1 Gew.-% an polymerisierbaren Verbindungen ohne Ankergruppe R^{a}, insbesondere Verbindungen der Formel M wie unten definiert und der darunter fallenden bevorzugten Formeln.

Die Polymerisation der polymerisierbaren Komponente(n) erfolgt zusammen oder in Teilschritten unter unterschiedlichen Polymerisationsbedingungen. Bevorzugt erfolgt die Polymerisation unter Einwirkung von UV-Licht. In der Regel wird die Polymerisation mit Hilfe eines Polymerisationsinitiators und UV-Licht eingeleitet. Bei den bevorzugten Acrylaten wird auf diese Weise eine praktisch vollständige Polymerisation erreicht. Bei der Polymerisation kann optional eine Spannung an die Elektroden der Zelle angelegt werden oder ein anderes elektrisches Feld angewendet werden, um die Ausrichtung des FK-Mediums zusätzlich zu beeinflussen.

Besonders bevorzugt sind erfindungsgemäße FK-Medien die neben den Verbindungen der Formel I weitere polymerisierbare oder (teil-) polymerisierte Verbindungen (ohne Ankergruppe) und weitere Selbstorientierungsadditive, die nicht polymerisierbar sind, enthalten. Diese weiteren, nicht polymerisierbaren Selbstorientierungsadditive sind vorzugsweise solche wie oben beschrieben, vgl. die Formeln K und KA bis KE.

Die optional enthaltenen weiteren Monomere der polymerisierbaren Komponente des FK-Mediums werden vorzugsweise durch die folgende Formel M beschrieben:

P¹-Sp¹-A²-(Z¹-A¹)ₙ-Sp²-P² M

worin die einzelnen Reste folgende Bedeutung besitzen:
- P¹, P²: jeweils unabhängig voneinander eine polymerisierbare Gruppe,
- Sp¹, Sp²: bei jedem Auftreten gleich oder verschieden eine Abstandsgruppe oder eine Einfachbindung,
- A¹, A²,: jeweils unabhängig voneinander einen Rest ausgewählt aus folgenden Gruppen
a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O-und/oder -S- ersetzt sein können und worin auch ein oder mehrere H-Atome durch eine Gruppe L ersetzt sein können, oder ein Rest der Formel 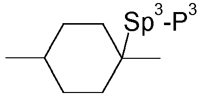
b) der Gruppe bestehend aus 1,4-Phenylen und 1,3-Phenylen, worin auch eine oder zwei CH-Gruppen durch N ersetzt sein können und worin auch ein oder mehrere H-Atome durch eine Gruppe L oder -Sp³-P ersetzt sein können,
c) der Gruppe bestehend aus Tetrahydropyran-2,5-diyl, 1,3-Dioxan-2,5-diyl, Tetrahydrofuran-2,5-diyl, Cyclobutan-1,3-diyl, Piperidin-1,4-diyl, Thiophen-2,5-diyl und Selenophen-2,5-diyl, welche auch ein oder mehrfach durch eine Gruppe L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1,1]pentan-1,3-diyl, Bicyclo[2.2.2]octan-1,4-diyl, Spiro[3.3]heptan-2,6-diyl, 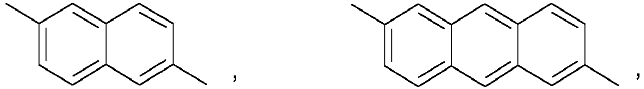 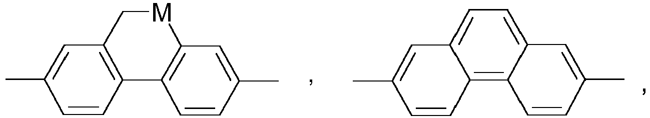 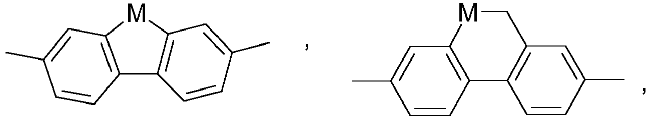 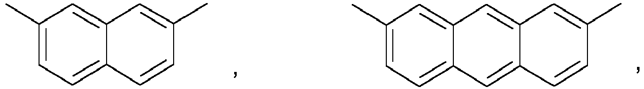 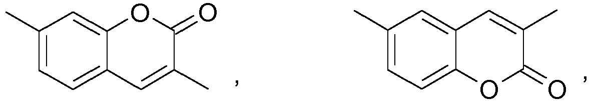 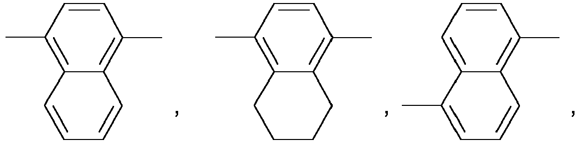 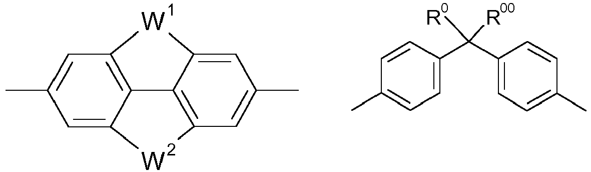 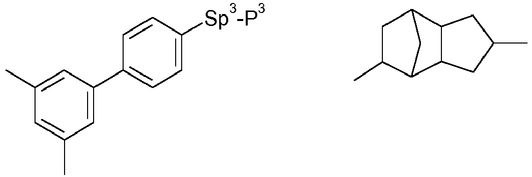 wobei in diesen Resten auch ein oder mehrere H- Atome durch eine Gruppe L oder -Sp³-P³ ersetzt sein können, und/oder eine oder mehrere Doppelbindungen durch Einfachbindungen ersetzt sein können, und/oder ein oder mehrere CH-Gruppen durch N ersetzt sein können,
- P³: eine polymerisierbare Gruppe,
- Sp³: eine Abstandsgruppe,
- n: 0, 1, 2 oder 3, bevorzugt 1 oder 2,
- Z¹: jeweils unabhängig voneinander -CO-O-, -O-CO-, -CH₂O-, -OCH₂-, -CF₂O-, -OCF₂-, oder -(CH₂)ₙ₂-, wobei n2 2, 3 oder 4 ist, -O-, -CO-, -C(R^{c}R^{d})-, -CH₂CF₂-, -CF₂CF₂-, oder eine Einfachbindung,
- L: bei jedem Auftreten gleich oder verschieden F, Cl, CN, SCN, SF₅ oder geradkettiges oder verzweigtes, jeweils optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen,
- R⁰, R⁰⁰: jeweils unabhängig voneinander H, F oder geradkettiges oder verzweigtes Alkyl mit 1 bis 12 C-Atomen, worin auch ein oder mehrere H-Atome durch F ersetzt sein können,
- M: -O-, -S-, -CH₂-, -CHY¹- oder -CY¹Y²-, und
- Y¹, und Y²: jeweils unabhängig voneinander eine der oben für R⁰ angegebenen Bedeutungen, Cl, -OCF₃ oder CN, und vorzugsweise H, F, Cl, CN, OCF₃ oder CF₃,
- W¹, W²: jeweils unabhängig voneinander -CH₂CH₂-, -CH=CH-, -CH₂-O-, -O-CH₂-, -C(R^{c}R^{d})- oder -O- bedeuten,
- R^{c} und R^{d}: jeweils unabhängig voneinander H oder Alkyl mit 1 bis 6 C-Atomen, vorzugsweise H, Methyl oder Ethyl, bedeuten,
wobei eine oder mehrere der Gruppen P¹-Sp¹-, -Sp²-P² und -Sp³-P³ einen Rest R^{aa} bedeuten können, mit der Maßgabe, dass mindestens eine der vorhandenen Gruppen P¹-Sp¹-, -Sp²-P² und -Sp³-P³ nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, wobei P¹-Sp¹- nicht ein weiteres R^{aa} bedeutet, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen), wobei die Gruppen -OH, -NH₂, -SH, -NHR, -C(O)OH und -CHO in R^{aa} nicht enthalten sind.

Die polymerisierbare Gruppe P, P¹, P² bzw. P³ in den vorangehenden und nachfolgenden Formeln ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen.

Bevorzugte Gruppen P/P¹/P²/P³ sind ausgewählt aus der Gruppe bestehend aus CH₂=CW¹-CO-O-, CH₂=CW¹-CO-, 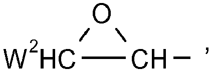 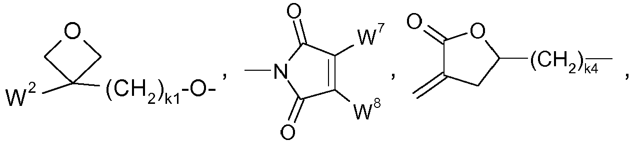 CH₂=CW²-(O)ₖ₃-, CW¹=CH-CO-(O)ₖ₃-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CH-(COO)ₖ₁-Phe-(O)ₖ₂-, CH₂=CH-(CO)ₖ₁-Phe-(O)ₖ₂-, Phe-CH=CH-, HOOC- und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einem oder mehreren, von P-Sp- verschiedenen Resten L wie oben definiert substituiert ist, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Besonders bevorzugte Gruppen P/P¹/P²/P³ sind ausgewählt aus der Gruppe bestehend aus CH₂=CW¹-CO-O-, CH₂=CW¹-CO-, 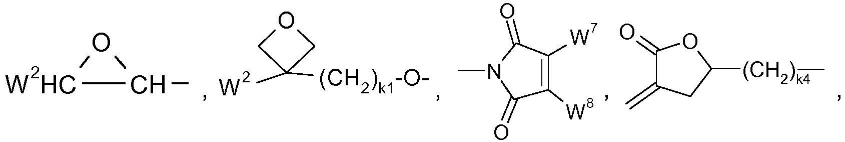 CH₂=CW²-O-, CW¹=CH-CO-(O)ₖ₃-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Ganz besonders bevorzugte Gruppen P/P¹/P²/P³ sind ausgewählt aus der Gruppe bestehend aus CH₂=CW¹-CO-O-, insbesondere CH₂=CH-CO-O-, CH₂=C(CH₃)-CO-O- und CH₂=CF-CO-O-, ferner CH₂=CH-O-, (CH₂=CH)₂CH-O-CO-, (CH₂=CH)₂CH-O-,

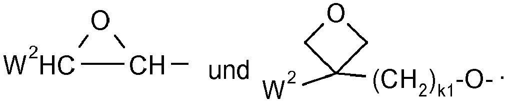

Ganz besonders bevorzugte Gruppen P/P¹/P²/P³ sind daher ausgewählt aus der Gruppe bestehend aus Acrylat-, Methacrylat-, Fluoracrylat-, ferner Vinyloxy-, Chloracrylat-, Oxetan- und Epoxygruppen, und unter diesen wiederum bevorzugt eine Acrylat- oder Methacrylatgruppe.

Bevorzugte Abstandsgruppen Sp, Sp¹, Sp² bzw. Sp³ sind eine Einfachbindung oder ausgewählt aus der Formel Sp"-X", so dass der Rest P^{1/2}-Sp^{1/2}- der Formel P^{1/2}-Sp"-X"- bzw. P-Sp"-X"- entspricht, wobei
- Sp": Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -Si(R⁰⁰R⁰⁰⁰)-, -CO-, -CO-O-, -O-CO-, -O-CO-O-, -S-CO-, -CO-S-, -N(R⁰⁰)-CO-O-, -O-CO-N(R⁰⁰)-, -N(R⁰⁰)-CO-N(R⁰⁰)-, -CH=CH- oder -C≡C- ersetzt sein können, dass O- und/oder S-Atome nicht direkt miteinander verknüpft sind,
- X": -O-, -S-, -CO-, -CO-O-, -O-CO-, -O-CO-O-, -CO-N(R⁰⁰)-, -N(R⁰⁰)-CO-, -N(R⁰⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- oder eine Einfachbindung bedeutet,
- R⁰⁰: jeweils unabhängig Alkyl mit 1 bis 12 C-Atomen bedeutet,
- R⁰⁰⁰: jeweils unabhängig H oder Alkyl mit 1 bis 12 C-Atomen bedeuten, und
- Y² und Y³: jeweils unabhängig voneinander H, F, Cl oder CN bedeuten.

X" ist vorzugsweise -O-, -S -CO-, -COO-, -OCO-, -O-COO-, oder eine Einfachbindung.

Typische Abstandsgruppen Sp" sind beispielsweise eine Einfachbindung, -(CH₂)ₚ₁-, -O-(CH₂)ₚ₁-, -(CH₂CH₂O)_{q1}-CH₂CH₂-, -CH₂CH₂-S-CH₂CH₂-, oder -(SiR⁰⁰R⁰⁰⁰-O)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -Sp"-X"- sind -(CH₂)ₚ₁-, -(CH₂)ₚ₁-O-, -(CH₂)ₚ₁-O-CO-, -(CH₂)ₚ₁-O-CO-O-, worin p1 und q1 die oben angegebene Bedeutung haben.

Besonders bevorzugte Gruppen Sp" sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

Die Substanzen der Formel M enthalten im Allgemeinen und bevorzugt keine Ankergruppe, also z. B. keine Gruppe -OH, -NH₂, -SH, -C(O)OH und -CHO.

Geeignete und bevorzugte (Co-)Monomere für die Verwendung in erfindungsgemäßen Anzeigen sind beispielsweise ausgewählt aus den folgenden Formeln: 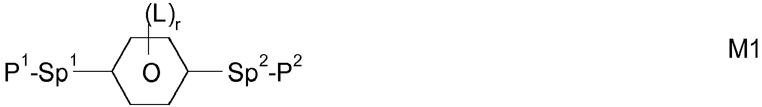 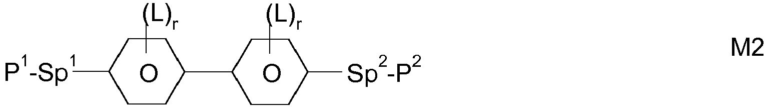 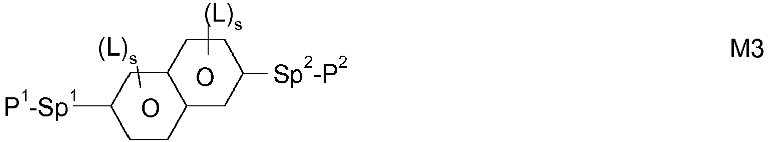 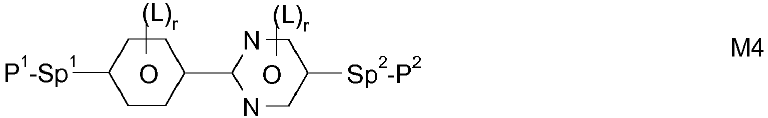 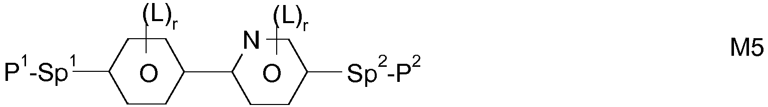 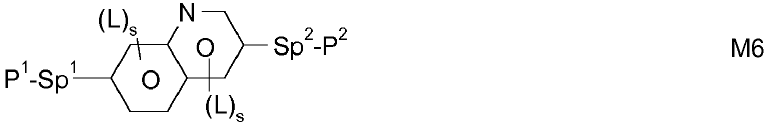 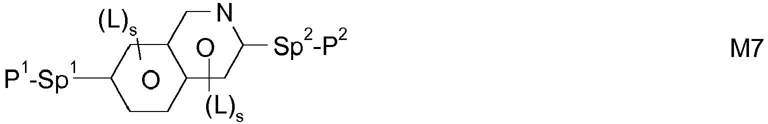 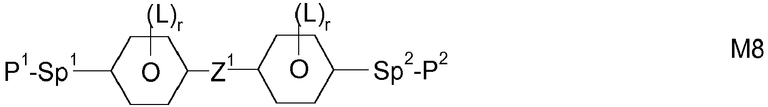 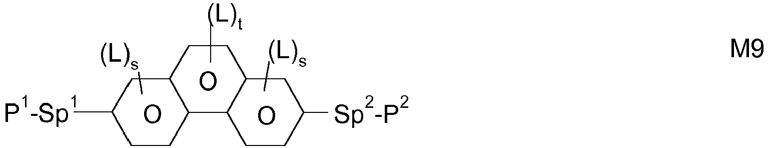 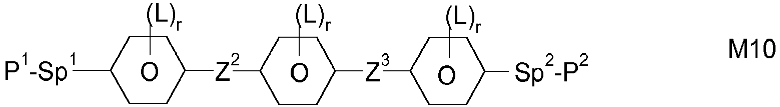 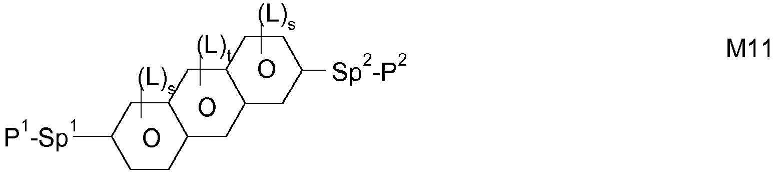 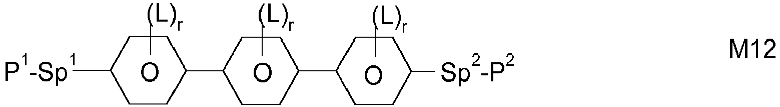 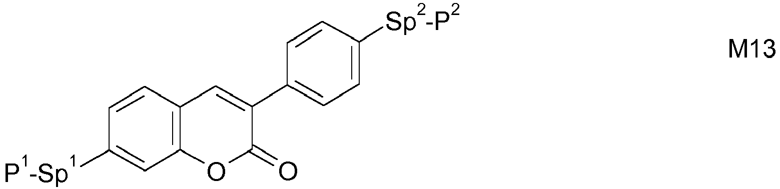 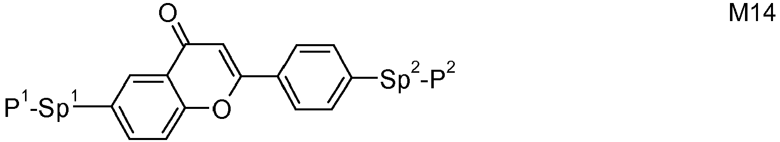 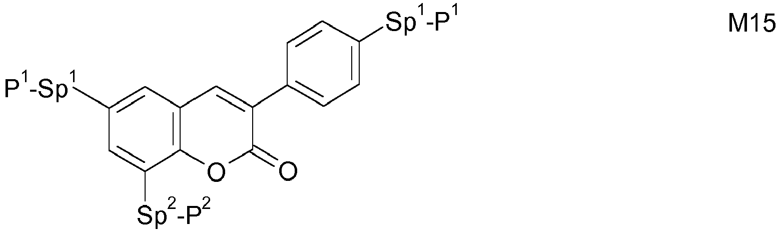 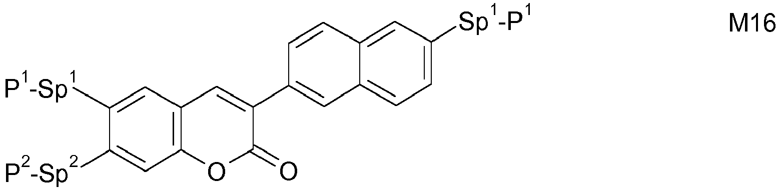 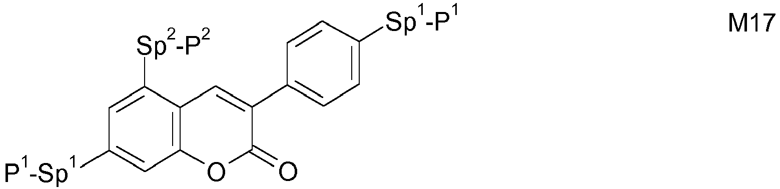 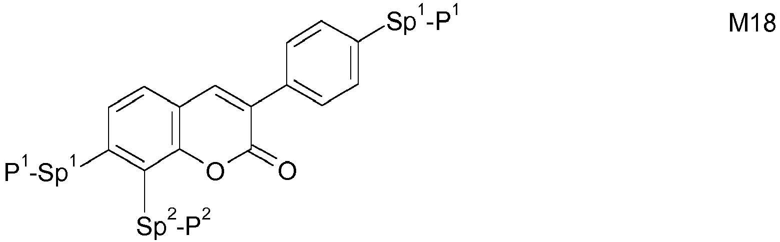 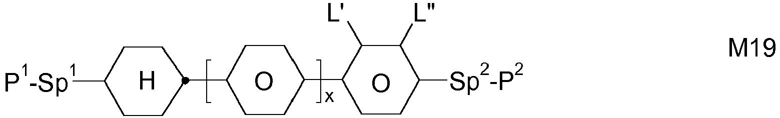 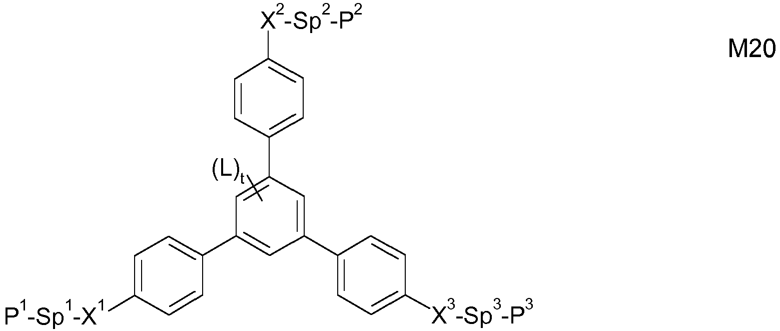 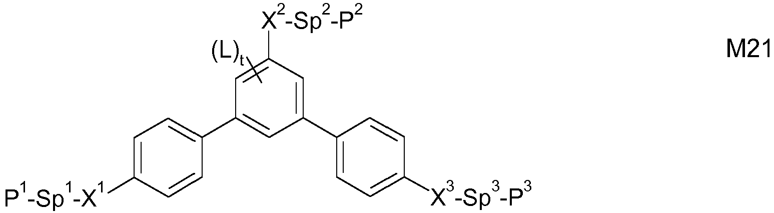 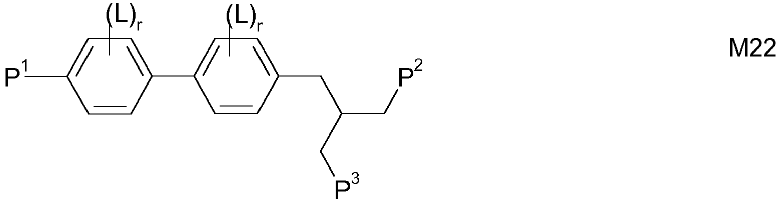 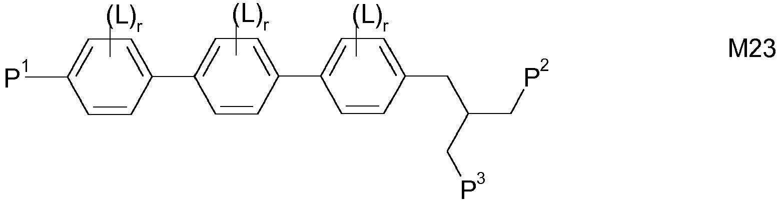 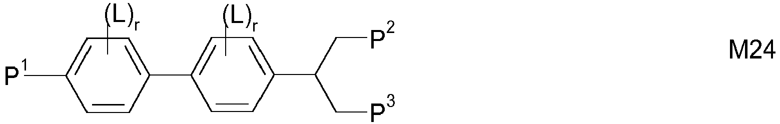 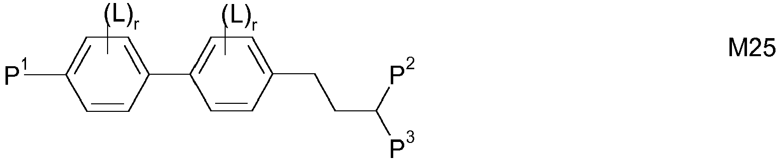 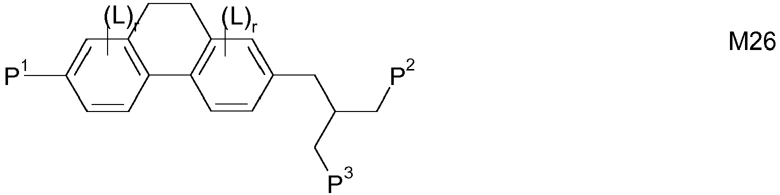 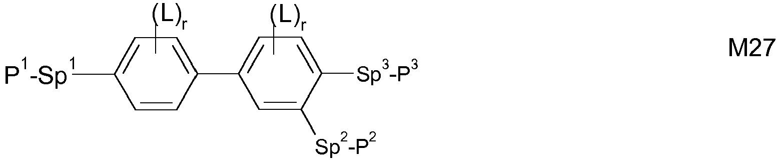 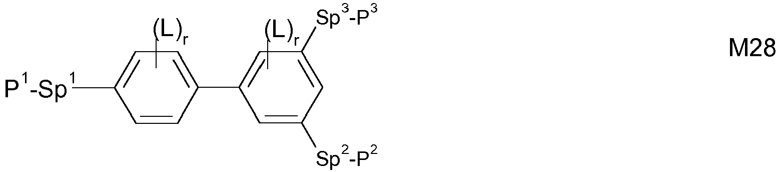 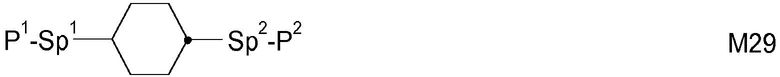 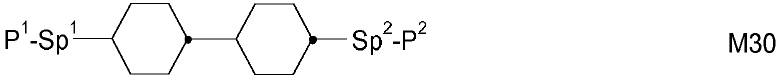 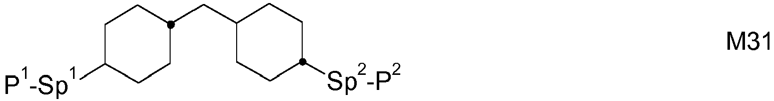 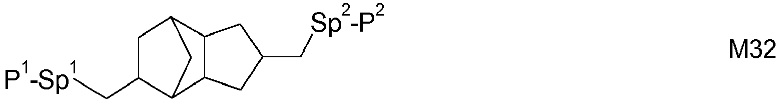 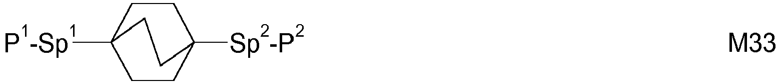 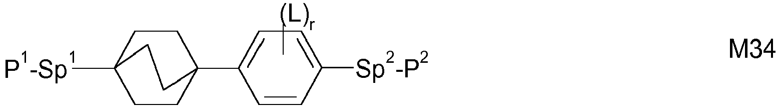 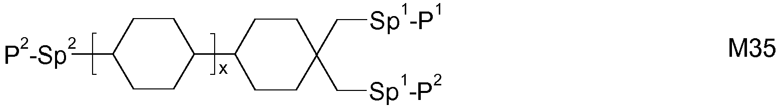 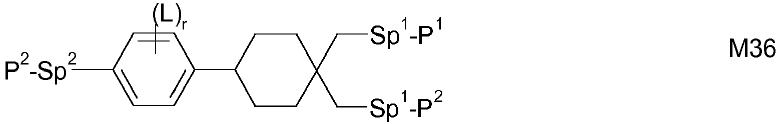 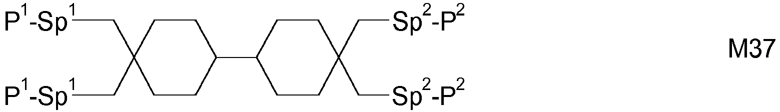 worin die einzelnen Reste folgende Bedeutung besitzen:
- P¹,P² und P³: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
- Sp¹, Sp² und Sp³: jeweils unabhängig voneinander eine Einfachbindung oder eine Abstandsgruppe, vorzugsweise mit einer der vor- und nachstehend für Formel M angegebenen Bedeutungen, und besonders bevorzugt -(CH₂)ₚ₁-, -(CH₂)ₚ₁-O-, -(CH₂)ₚ₁-CO-O- oder -(CH₂)ₚ₁-O-CO-O-, worin p1 eine ganze Zahl von 1 bis 12 ist, und wobei in den letztgenannten Gruppen die Anbindung zum benachbarten Ring über das O-Atom erfolgt,
wobei auch einer oder mehrere der Reste P¹-Sp¹-, P²-Sp²- und P³-Sp³- einen Rest R^{aa} bedeuten können, mit der Maßgabe dass mindestens einer der vorhandenen Reste P¹-Sp¹-, P²-Sp²- und P³-Sp³- nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -O-, -S-, -CO-, -CO-O-, -O-CO-, -O-CO-O-so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
wobei -OH, -NH₂, -SH, -NHR, -C(O)OH und -CHO in der Gruppe R^{aa} nicht enthalten sind,
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- X¹, X² und X³: jeweils unabhängig voneinander -CO-O-, O-CO- oder eine Einfachbindung,
- Z¹: -O-, -CO-, -C(R^{y}R^{z})-, oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen, vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2,
- x: 0 oder 1.

In den Verbindungen der Formeln M1 bis M42 bedeutet die Ringgruppe 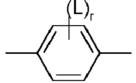 vorzugsweise 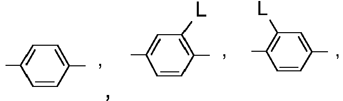 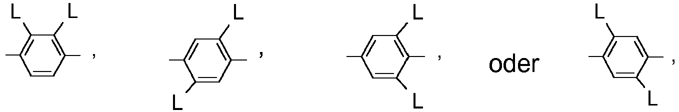 worin L, bei jedem Auftreten gleich oder verschieden, eine der vorstehenden Bedeutungen hat und vorzugsweise F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ oder P-Sp-, besonders bevorzugt F, Cl, CN, CH₃, C₂H₅, OCH₃, COCH₃, OCF₃ oder P-Sp-, ganz besonders bevorzugt F, Cl, CH₃, OCH₃, COCH₃ oder OCF₃, insbesondere F oder CH₃ bedeutet.

Vorzugsweise umfasst das FK-Medium oder die polymerisierbare Komponente eine oder mehrere Verbindungen ausgewählt aus der Gruppe der Formeln M1-M28, besonders bevorzugt der Formeln M2-M15, ganz besonders bevorzugt der Formeln M2, M3, M9, M14 und M15. Vorzugsweise umfasst das FK-Medium oder die polymerisierbare Komponente keine Verbindungen der Formel M10, worin Z² und Z³ -(CO)O- oder -O(CO)-bedeuten.

Zur Herstellung von PSA-Anzeigen werden die polymerisierbaren Verbindungen im FK-Medium zwischen den Substraten der FK-Anzeige, optional unter Anlegen einer Spannung, durch in-situ-Polymerisation polymerisiert oder vernetzt (falls eine polymerisierbare Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil vorzugsweise 0,001 bis 5 Gew.-%, besonders bevorzugt 0,001 bis 1 Gew.-%.

Die polymerisierbare Komponente oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente, vorzugsweise 10 - 10000 ppm, besonders bevorzugt 50 - 500 ppm.

Die FK-Medien zur Verwendung in den erfindungsgemäßen FK-Anzeigen enthalten, neben den oben beschriebenen Selbstorientierungsadditiven und den optionalen polymerisierbaren Verbindungen (M) eine FK-Mischung ("Host-Mischung") enthaltend eine oder mehr, vorzugsweise zwei oder mehr niedermolekulare (d.h. monomere bzw. unpolymerisierte) Verbindungen. Letztere sind stabil bzw. unreaktiv gegenüber einer Polymerisationsreaktion unter den zur Polymerisation der polymerisierbaren Verbindungen verwendeten Bedingungen. Prinzipiell eignet sich als Host-Mischung jede zur Verwendung in herkömmlichen VA- und VA-IPS-Anzeigen geeignete dielektrisch negative bzw. positive FK-Mischung. Der Anteil der Host-Mischung beträgt für Flüssigkristallanzeigen in der Regel 95 Gew.-% oder mehr, bevorzugt 97 Gew.-% oder mehr.

Geeignete FK-Mischungen sind dem Fachmann bekannt und in der Literatur beschrieben. FK-Medien für VA-Anzeigen mit negativer dielektrischer Anisotropie sind z. B. in EP 1 378 557 A1 oder WO 2013/004372 beschrieben.

Geeignete FK-Mischungen mit positiver dielektrischer Anisotropie, die sich für LCDs und speziell für IPS-Anzeigen eignen, sind z.B. aus JP 07-181 439 (A), EP 0 667 555, EP 0 673 986, DE 195 09 410, DE 195 28 106, DE 195 28 107, WO 96/23 851 und WO 96/28 521 bekannt.

Im Folgenden werden bevorzugte Ausführungsformen für das erfindungsgemäße flüssigkristalline Medium mit negativer dielektrischer Anisotropie angeführt:
Das FK-Medium enthält vorzugsweise zusätzlich eine oder mehrere Verbindungen ausgewählt aus der Gruppe der Verbindungen der Formeln A, B und C, 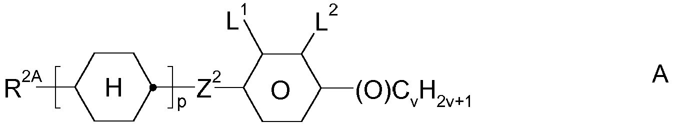 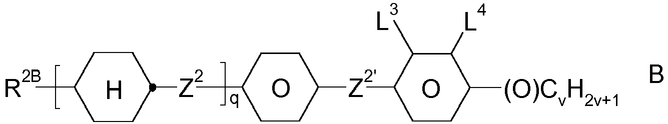 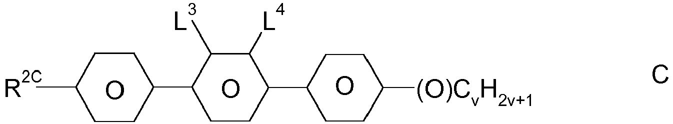 worin
- R^{2A}, R^{2B} und R^{2C}: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 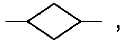 -C≡C-, -CH=CH-, -CF₂O-, -OCF₂-, -OC-O- oder -O-CO- so ersetzt sein können, dass O-Atome nicht direkt miteinander verknüpft sind,
- L¹⁻⁴: jeweils unabhängig voneinander F, Cl, CF₃ oder CHF₂,
- Z² und Z²: jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
- p: 1 oder 2, bevorzugt 1,
- q: 0 oder 1,
- (O): -O- oder eine Einfachbindung, und
- v: 1 bis 6
bedeuten.

In den Verbindungen der Formeln A und B können Z² gleiche oder unterschiedliche Bedeutungen haben. In den Verbindungen der Formel B können Z² und Z^{2'} gleiche oder verschiedene Bedeutungen aufweisen. In den Verbindungen der Formeln A, B und C bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.

In den Verbindungen der Formeln A und B bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln A und B vorzugsweise jeweils unabhängig voneinander eine Einfachbindung, ferner eine -C₂H₄-Brücke.

Sofern in der Formel B Z² = -C₂H₄- ist, ist Z^{2'} vorzugsweise eine Einfachbindung bzw. falls Z^{2'} = -C₂H₄- bedeutet, ist Z² vorzugsweise eine Einfachbindung. In den Verbindungen der Formeln A und B bedeutet (O)CᵥH₂ᵥ₊₁ vorzugsweise OCᵥH₂ᵥ₊₁, ferner CᵥH₂ᵥ₊₁. In den Verbindungen der Formel C bedeutet (O)CᵥH₂ᵥ₊₁ vorzugsweise CᵥH₂ᵥ₊₁. In den Verbindungen der Formel C bedeuten L³ und L⁴ vorzugsweise jeweils F.

Bevorzugte Verbindungen der Formeln A, B und C sind beispielsweise: 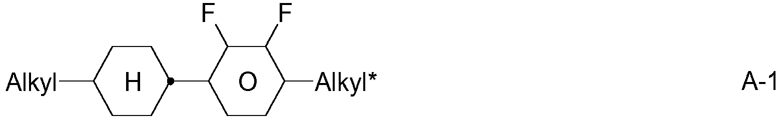 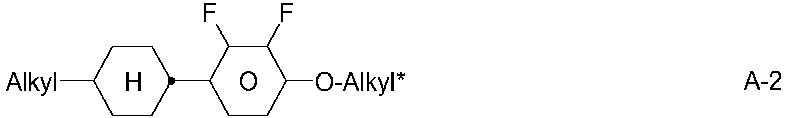 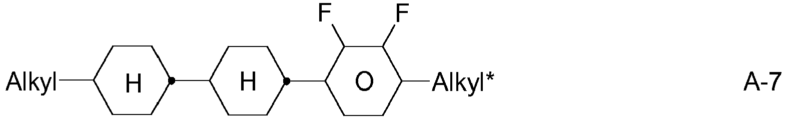 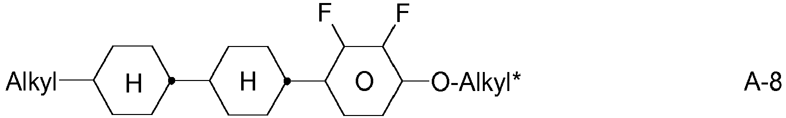 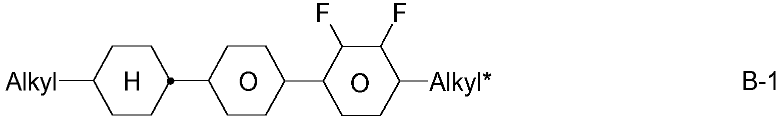 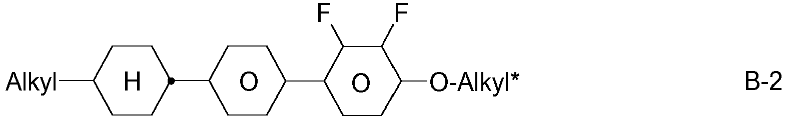 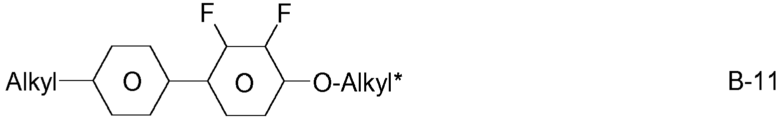 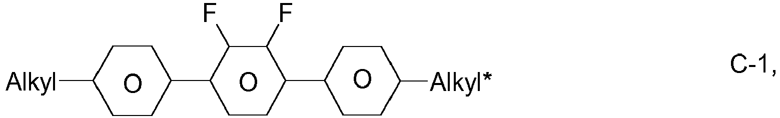 worin Alkyl und Alkyl* jeweils unabhängig voneinander einen geradkettigen Alkylrest mit 1-6 C-Atomen bedeuten.

Das FK-Medium enthält bevorzugt zusätzlich eine oder mehrere Verbindungen der Formel D, 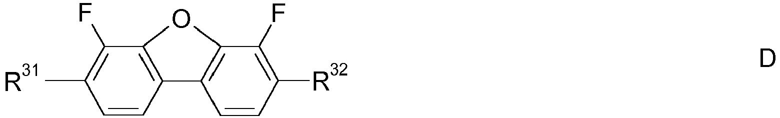 worin
- R³¹, R³²: unabhängig voneinander einen unsubstituierten Alkylrest mit 1 bis 7 C-Atomen, bevorzugt einen n-Alkylrest, besonders bevorzugt mit 2 bis 5 C-Atomen, oder einen unsubstituierten Alkoxyrest mit 2 bis 7 C-Atomen, besonders bevorzugt mit 2 bis 5 C-Atomen,
bedeuten,
wobei bevorzugt mindestens einer der Reste R³¹ und R³² Alkoxy bedeutet.

Das FK-Medium weist vorzugsweise ein Δε von -1,5 bis -8,0, insbesondere von -2,5 bis -6,0 auf.

In einer weiteren bevorzugten Ausführungsform enthält das Medium eine oder mehrere Verbindungen der Formeln D-1 bis D-3 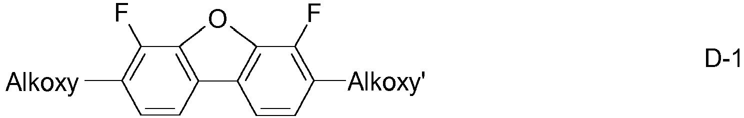 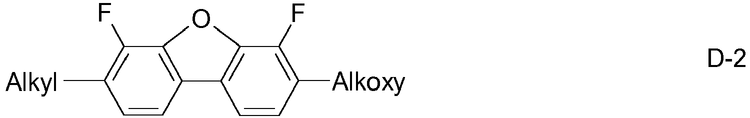 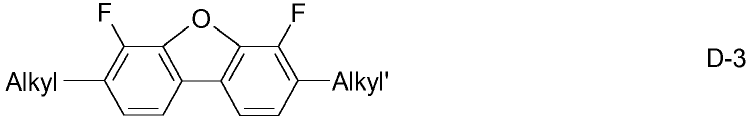 worin

Alkyl, Alkyl' Alkyl mit 1 bis 7 C-Atomen, bevorzugt mit 2-5 C-Atomen, und Alkoxy, Alkoxy' Alkoxy mit 1 bis 7 C-Atomen, bevorzugt mit 2 bis 5 C-Atomen, bedeuten.

Bevorzugt enthält das Medium eine oder mehrere Verbindungen der Formel E: 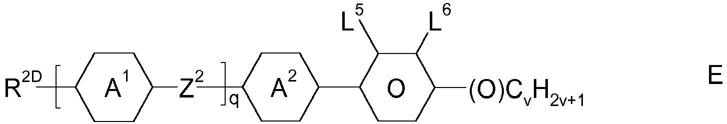 worin
- A¹, A²: unabhängig eine Ringgruppe ausgewählt aus den Formeln 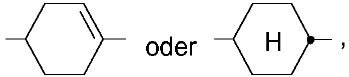 wobei Formel D mindestens eine Gruppe 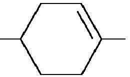 umfasst,
- R^{2D}: unabhängig H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 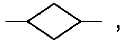 -C≡C-, -CF₂O-, -OCF₂-, -OC-O- oder -O-CO- so ersetzt sein können, dass O-Atome nicht direkt miteinander verknüpft sind,
- L⁵, L⁶: jeweils unabhängig voneinander F, Cl, CF₃ oder CHF₂,
- Z²: unabhängig eine Einfachbindung, -CH₂CH₂-, -CH=CH-, -CF₂O-, -OCF₂-, -CH₂O-, -OCH₂-, -COO-, -OCO-, -C₂F₄-, -CF=CF- oder -CH=CHCH₂O-,
- q: 0 oder 1,
- (O): -O- oder eine Einfachbindung, und
- v: 1 bis 6
bedeuten.

Die Werte der Doppelbrechung Δn in der Flüssigkristallmischung liegen in der Regel zwischen 0,07 und 0,16, vorzugsweise zwischen 0,08 und 0,12. Die Rotationsviskosität γ₁ bei 20 °C vor der Polymerisation ist vorzugsweise ≤ 165 mPa·s, insbesondere ≤ 140 mPa·s.

Im Folgenden werden bevorzugte Ausführungsformen für das erfindungsgemäße flüssigkristalline Medium mit negativer oder positiver dielektrischer Anisotropie angeführt:

LC-Medium, welches zusätzlich eine oder mehrere Verbindungen der Formel II und/oder III enthält: 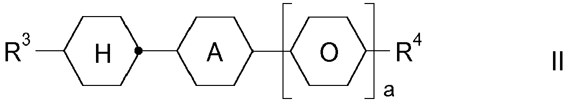 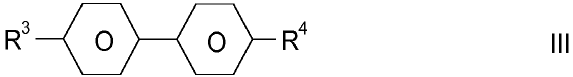 worin
- Ring A: 1,4-Phenylen oder trans-1,4-Cyclohexylen bedeutet,
- a: 0 oder 1 ist,
- R³: jeweils unabhängig voneinander Alkyl mit 1 bis 9 C-Atomen oder Alkenyl mit 2 bis 9 C-Atomen bedeutet, vorzugsweise Alkenyl mit 2 bis 9 C-Atomen, und
- R⁴: jeweils unabhängig voneinander einen unsubstituierten oder halogenierten Alkylrest mit 1 bis 12 C-Atomen, wobei auch eine oder zwei nicht benachbarte CH₂-Gruppen durch -O-, -CH=CH-, -CH=CF-, -(CO)-, -O(CO)- oder -(CO)O- so ersetzt sein können, dass O-Atome nicht direkt miteinander verknüpft sind, und vorzugsweise Alkyl mit 1 bis 12 C-Atomen oder Alkenyl mit 2 bis 9 C-Atomen bedeutet.

Die Verbindungen der Formel II sind vorzugsweise ausgewählt aus der Gruppe bestehend aus folgenden Formeln: 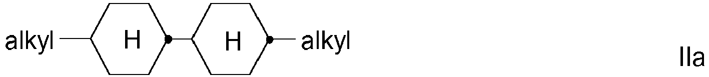 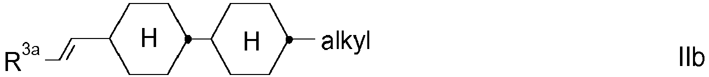 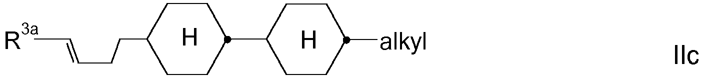 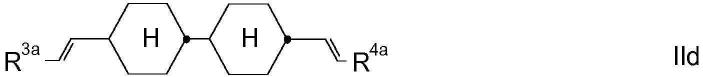 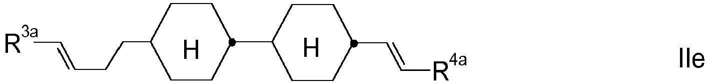 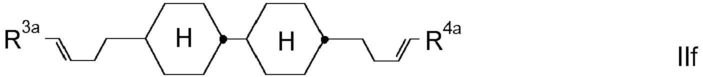 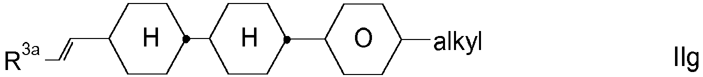 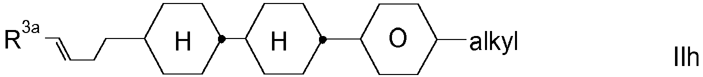 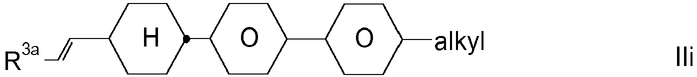 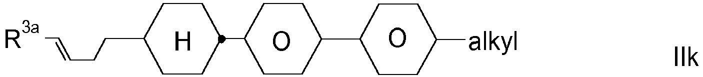 worin R^{3a} und R^{4a} jeweils unabhängig voneinander H, CH₃, C₂H₅ oder C₃H₇ bedeuten, und "alkyl" jeweils unabhängig eine geradkettige Alkylgruppe mit 1 bis 8, vorzugsweise 1, 2, 3, 4 oder 5 C-Atomen bedeutet. Besonders bevorzugt sind Verbindungen der Formel IIa, IIb und IIg, insbesondere solche, worin R^{3a} H oder CH₃, vorzugsweise H, bedeutet, und Verbindungen der Formel IId, insbesondere solche, worin R^{3a} und R^{4a} H, CH₃ oder C₂H₅ bedeuten.

Im Folgenden werden bevorzugte Ausführungsformen für das erfindungsgemäße flüssigkristalline Medium mit positiver dielektrischer Anisotropie angeführt:
Das FK-Medium enthält bevorzugt eine oder mehrere Verbindungen der Formeln IV und V: 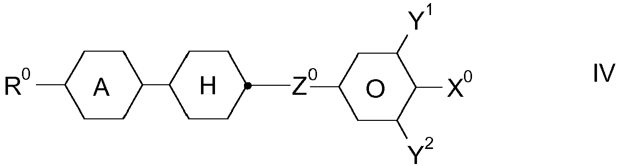 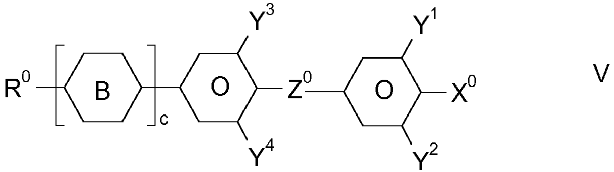 worin
- R⁰: Alkyl- or Alkoxyrest mit 1 to 15 C Atomen, worin optional zusätzlich eine oder mehrere CH₂ Gruppen in diesen Resten, unabhängig voneinander, durch -C≡C-, -CF₂O-, -CH=CH-, 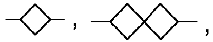 -O-, -(CO)O- or -O(CO)- so substituiert sind, dass O-Atome nicht direkt miteinander verknüpft sind, und in denen zusätzlich ein oder mehrere H-Atome optional durch Halogen ersetzt sein können,
- Ring A: 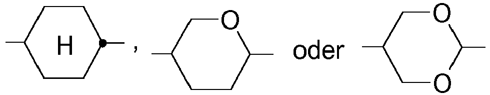
- Ring B: unabhängig voneinander 1,4-Phenylen, optional substituiert durch ein oder zwei F oder Cl, 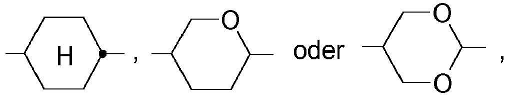
- X⁰: F, Cl, CN, SF₅, SCN, NCS, eine halogenierte Alkylgruppe, eine halogenierte Alkenylgruppe, eine halogenierte Alkoxygruppe oder eine halogenierte Alkenyloxygruppe, jeweils mit bis zu 6 C-Atomen,
- Y¹⁻⁴: jeweils unabhängig voneinander H or F,
- Z⁰: -CF₂O-, -(CO)O- oder eine Einfachgruppe, und
- c: 0, 1 oder 2, bevorzugt 1 oder 2. 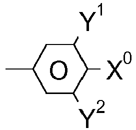 bedeutet bevorzugt

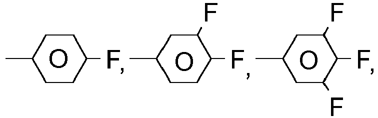

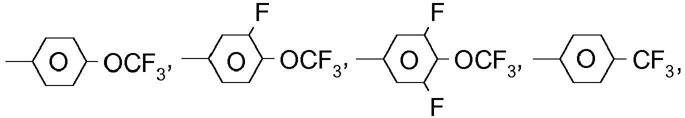

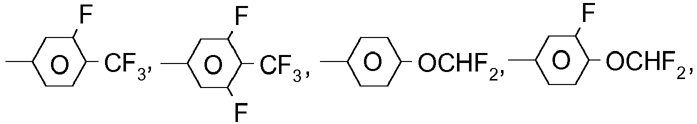

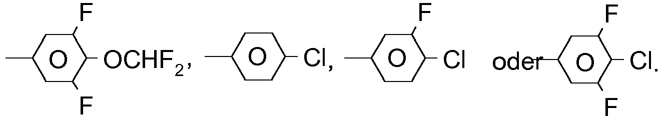

R⁰ bedeutet bevorzugt geradkettiges Alkyl oder Alkenyl mit 2 bis 7 C-Atomen; X⁰ bedeutet bevorzugt F, OCF₃, Cl oder CF₃, insbesondere F.

Die nematische Phase des dielektrisch negativen oder positiven FK-Mediums gemäß der Erfindung hat bevorzugt eine nematische Phasen in einem Temperaturbereich von 10 °C oder weniger bis 60 °C oder mehr, besonders bevorzugt von 0 oder weniger bis 70 °C oder mehr.

Im Rahmen der vorliegenden Anmeldung sind die beiden Formeln für substituierte Benzolringe 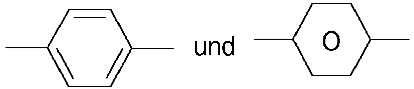 gleichbedeutend. 1,4-substituiertes Cyclohexan wir durch 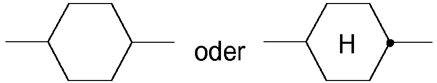 wiedergegeben, welches vorzugweise 1,4-trans-konfiguriert ist.
Ein durch die Gruppe L substituierter Phenylenring der Formel 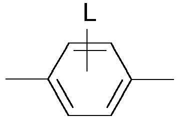 ist an genau einer beliebigen Stelle durch eine Gruppe L substituiert. (L)ᵣ steht entsprechend für Anzahl r der Substituenten L an verschiedenen freien Stellen.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen CₙH₂ₙ₊₁, CₘH₂ₘ₊₁ und CₗH₂ₗ₊₁ bzw. CₙH₂ₙ₋₁, CₘH₂ₘ₋₁ und CₗH₂ₗ₋₁ bedeuten geradkettiges Alkyl bzw. Alkenyl, vorzugsweise 1-*E*-Alkenyl, jeweils mit n, m bzw. I C-Atomen. In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 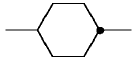 | **P** | 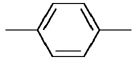 |
| **D** | 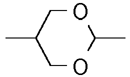 | **DI** | 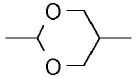 |
| **A** | 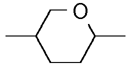 | **AI** | 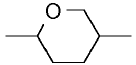 |
| **G** | 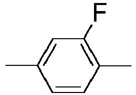 | **GI** | 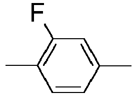 |
| **U** | 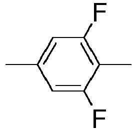 | **UI** | 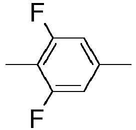 |
| **M** | 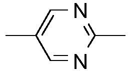 | **MI** | 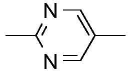 |
| **N** | 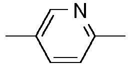 | **NI** | 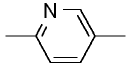 |
| **Y** | 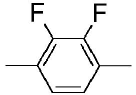 | | |
| **P(F, Cl)Y** | 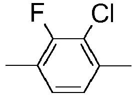 | **P(Cl,F)Y** | 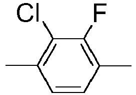 |
| **Np** | 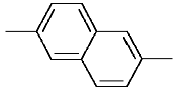 | **dH** | 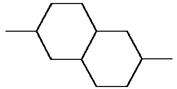 |
| **n3f** | 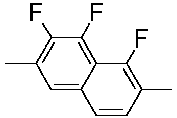 | **n3fI** | 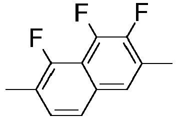 |
| **tH** | 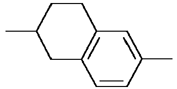 | **tHI** | 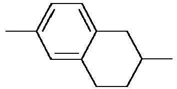 |
| **tH2f** | 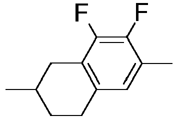 | **tH2fI** | 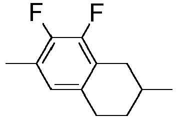 |
| **o2f** | 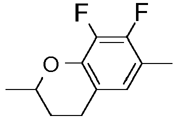 | **o2fI** | 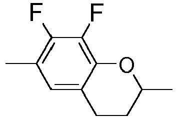 |
| **dh** | 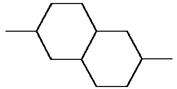 | **B** | 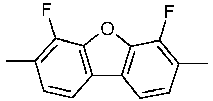 |
| **K** | 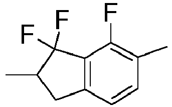 | **KI** | 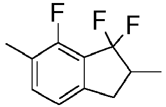 |
| **L** | 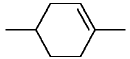 | **LI** | 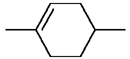 |
| **F** | 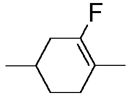 | **FI** | 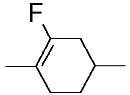 |
| Nf | 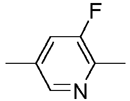 | NfI | 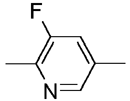 |

**Tabelle B: Brückenglieder**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Tabelle C: Endgruppen**

| **Links einzelstehend oder in Kombination** | | **Rechts einzelstehend oder in Kombination** | |
|---|---|---|---|
| **-n-** | CₙH₂ₙ₊₁- | **-n** | -CₙH₂ₙ₊₁ |
| **-nO-** | CₙH₂ₙ₊₁-O- | **-nO** | -O- CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O- | **-OT** | -OCF₃ |
| **-A-** | H-C=C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |
| | | **-OXF** | -O-CH=CF2 |

| **Links nur in Kombination** | | **Rechts nur in Kombination** | |
|---|---|---|---|
| **-...n...-** | -CₙH₂ₙ- | **-...n...** | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |
| | | **-...X...** | -CH=CF- |

worin n und m jeweils ganze Zahlen und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:
(n, m und z unabhängig voneinander jeweils eine ganze Zahl, bevorzugt 1 bis 6).

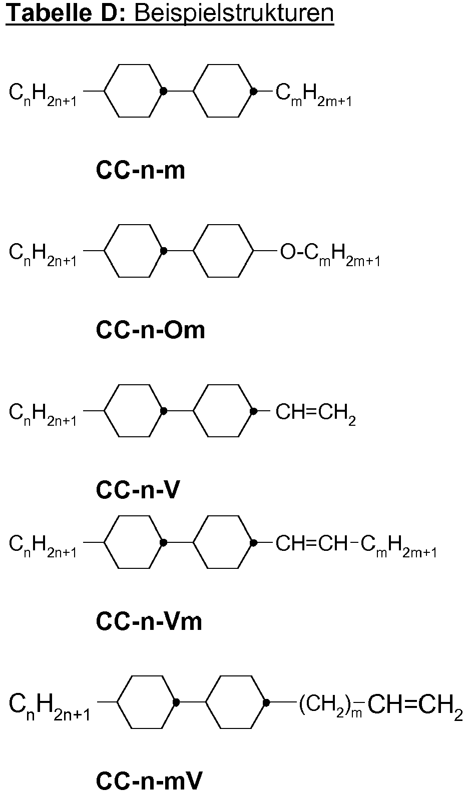

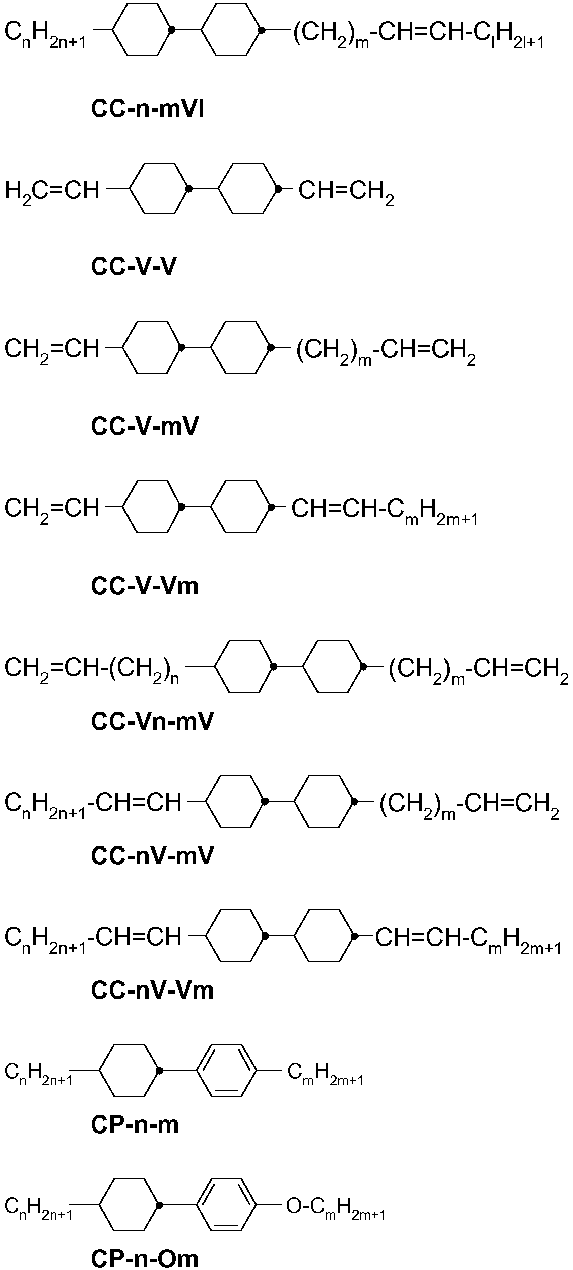

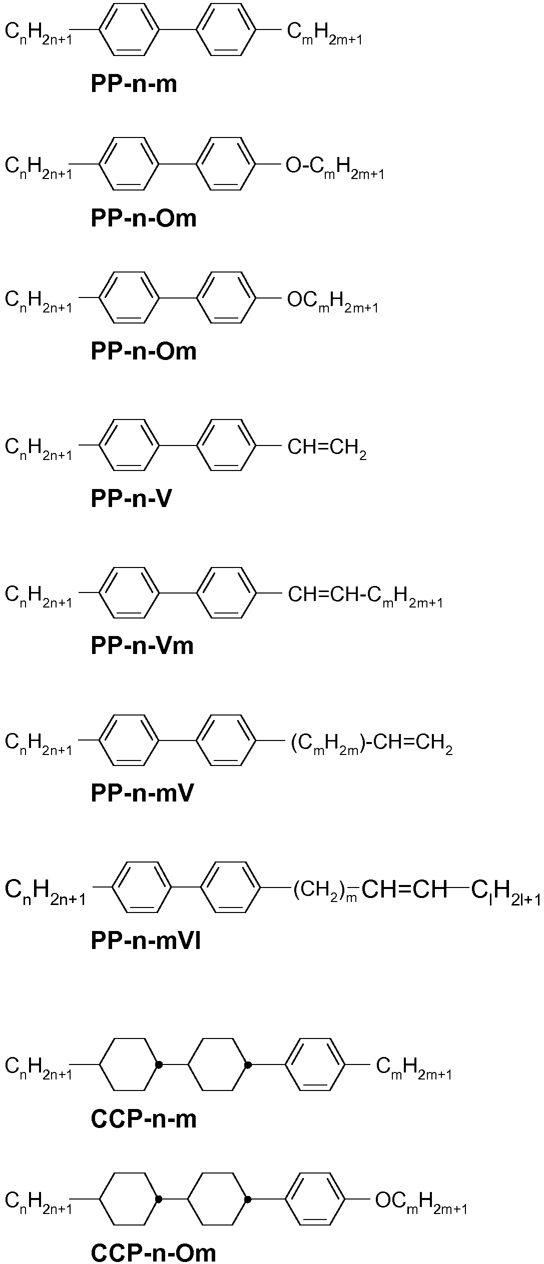

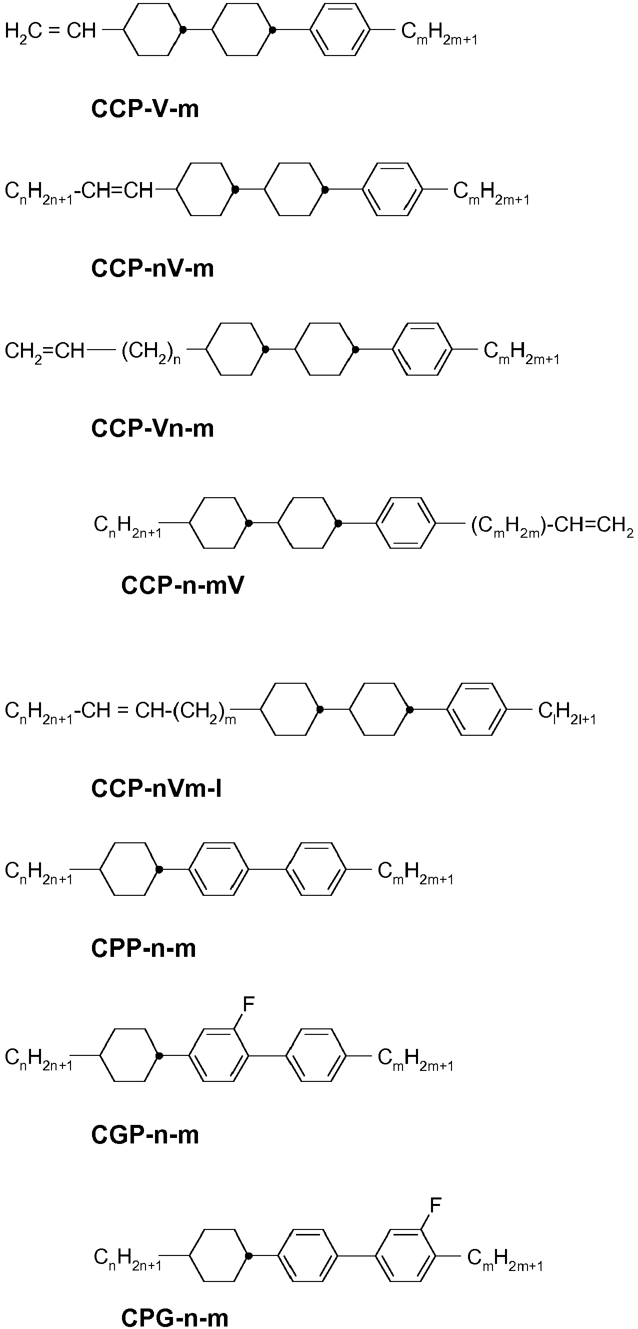

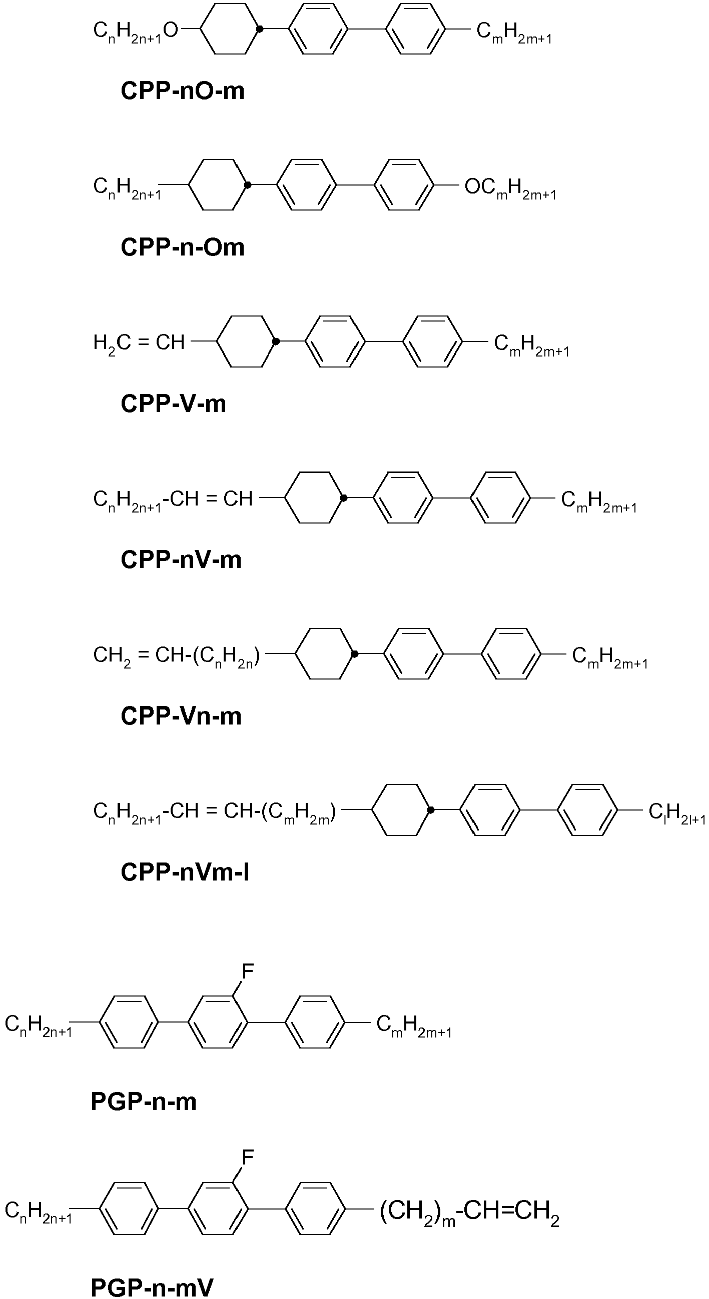

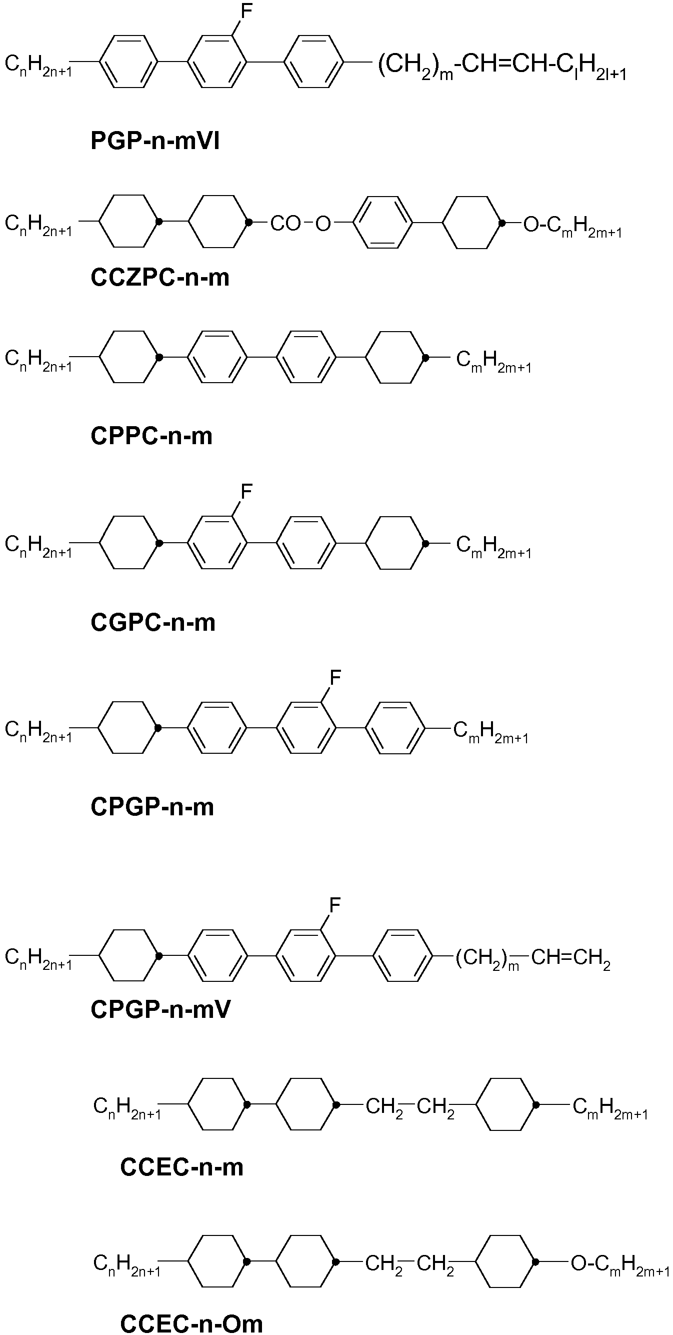

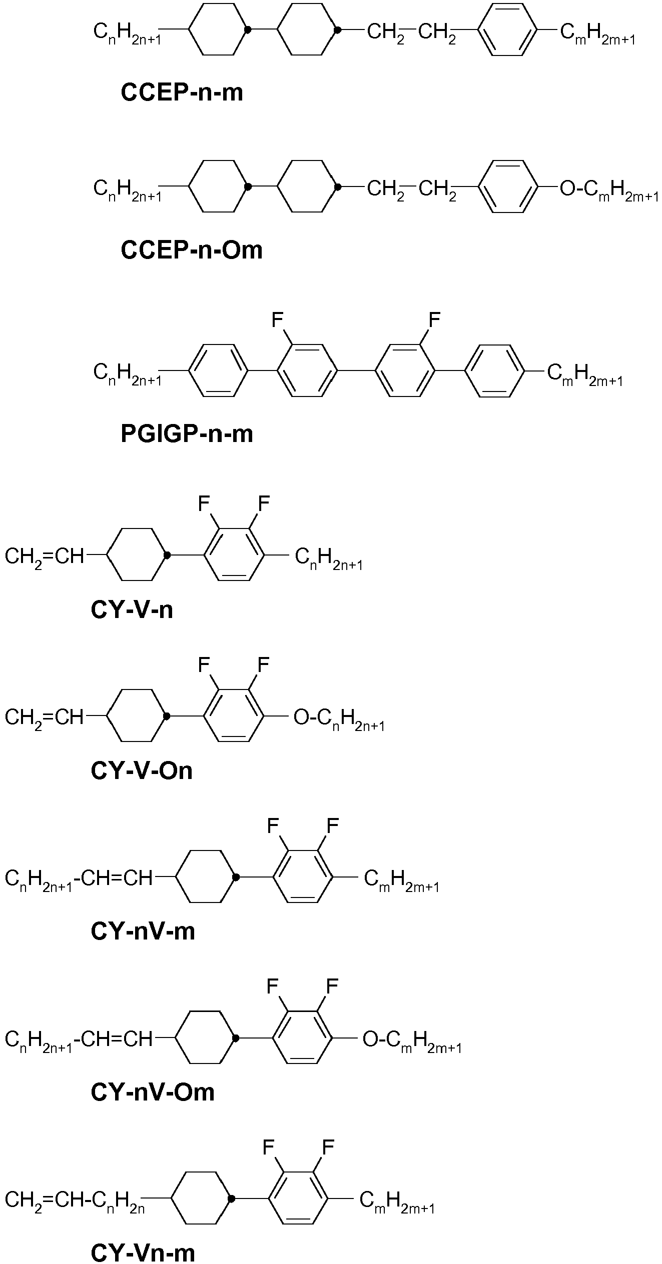

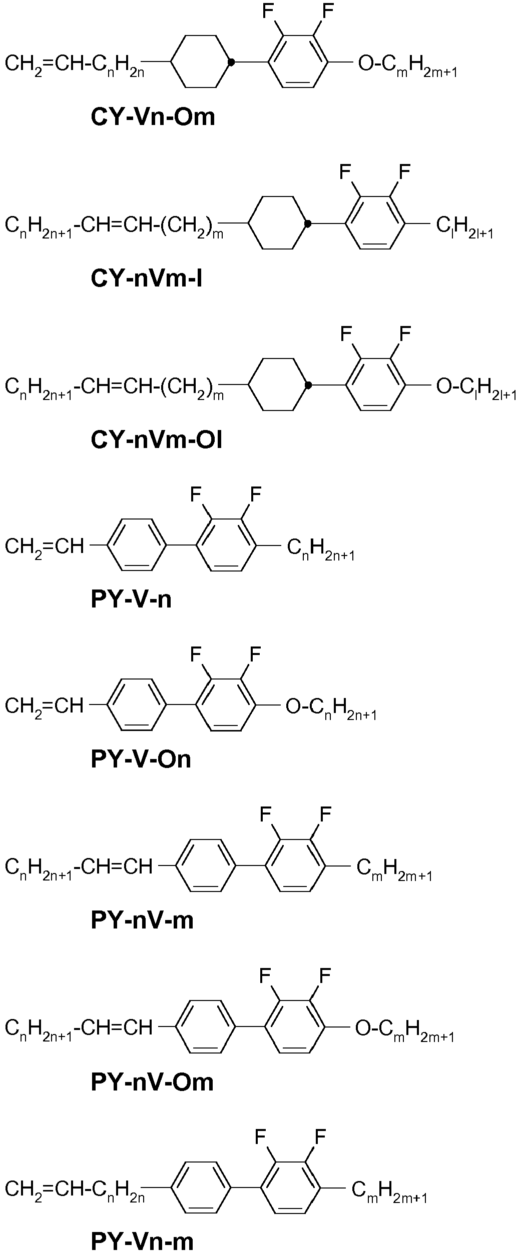

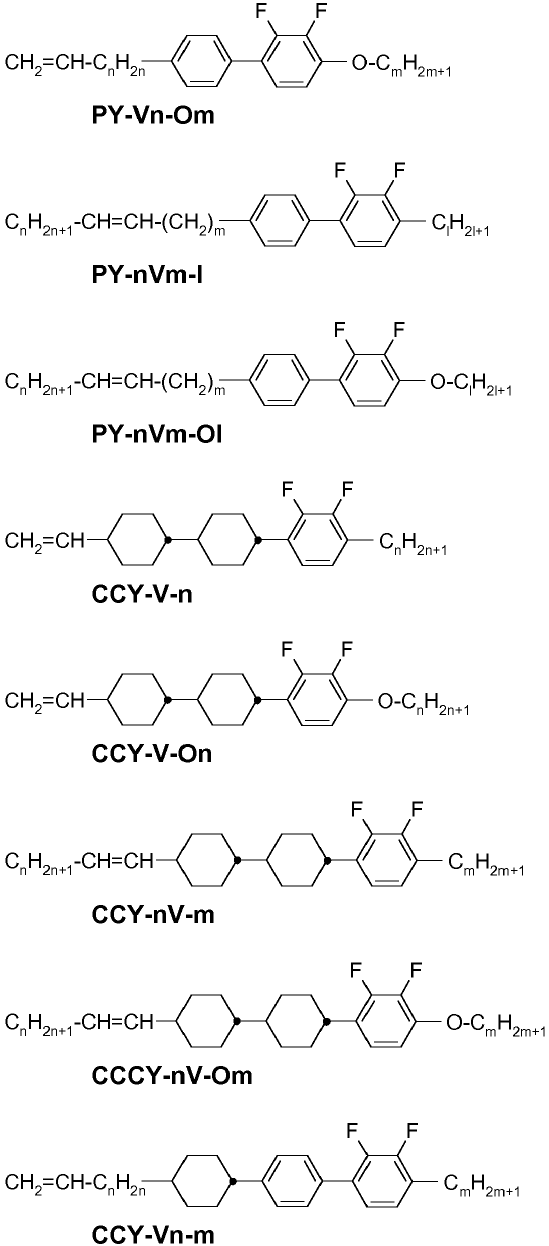

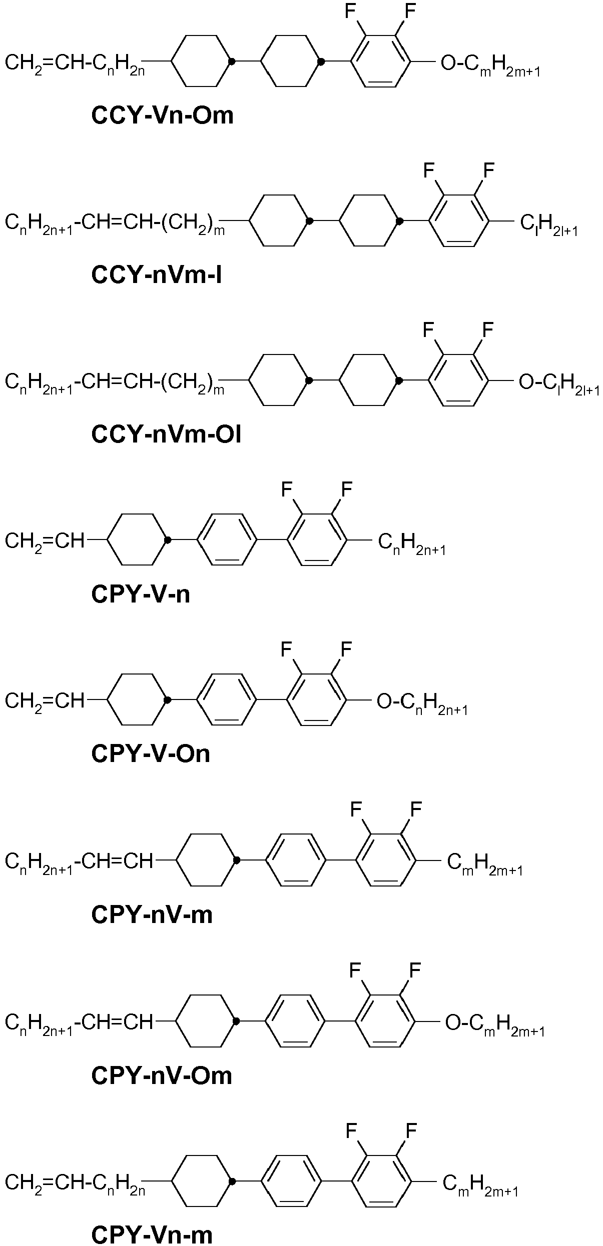

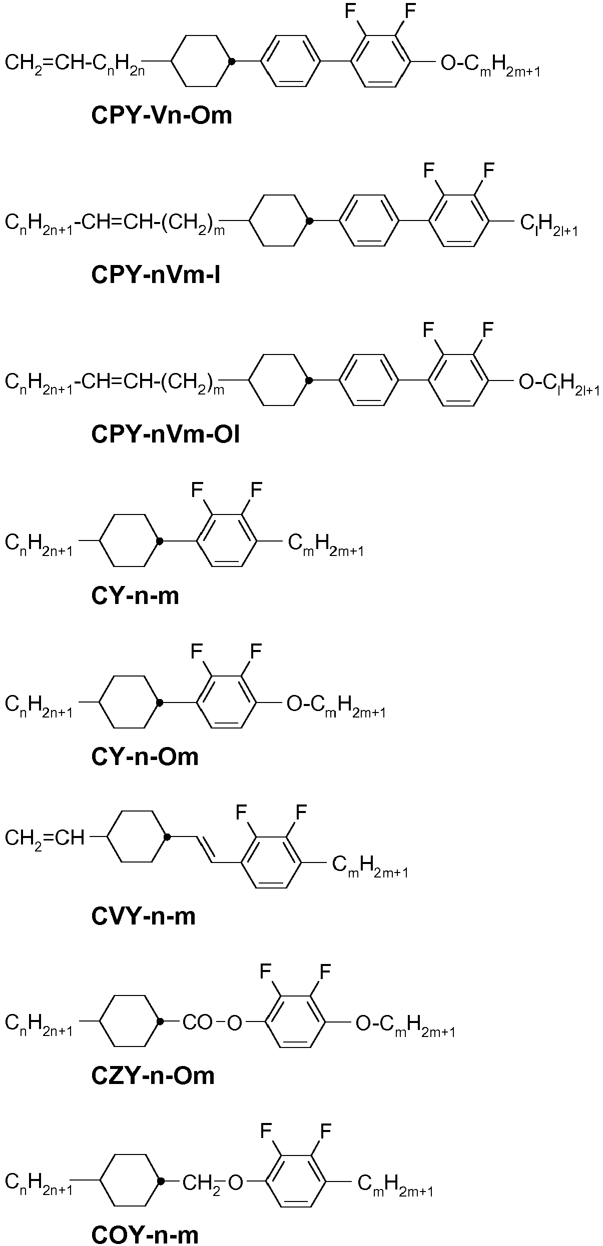

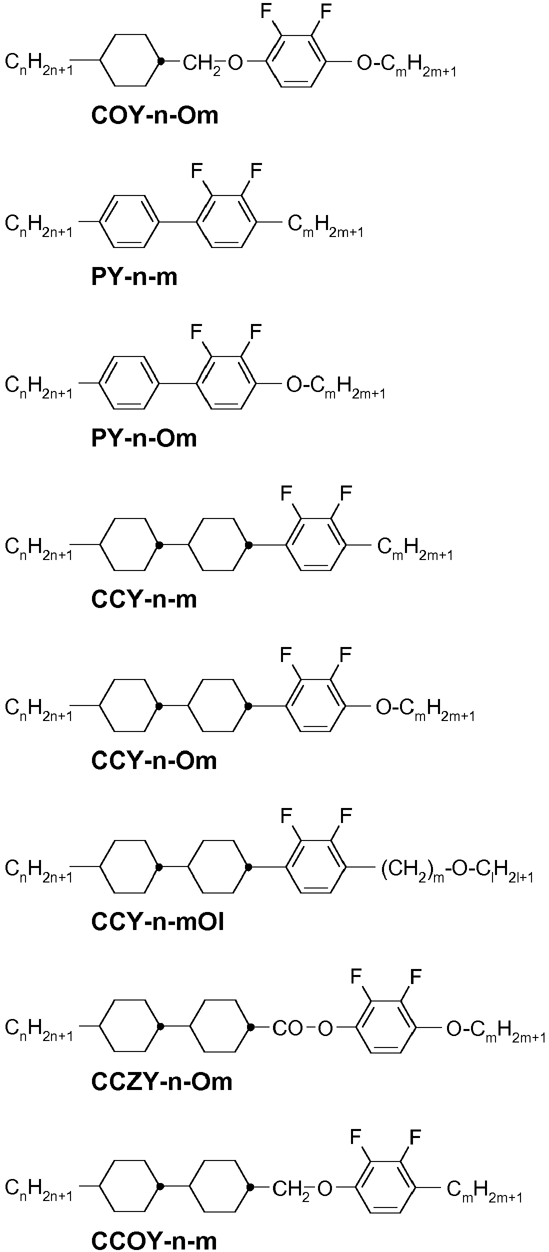

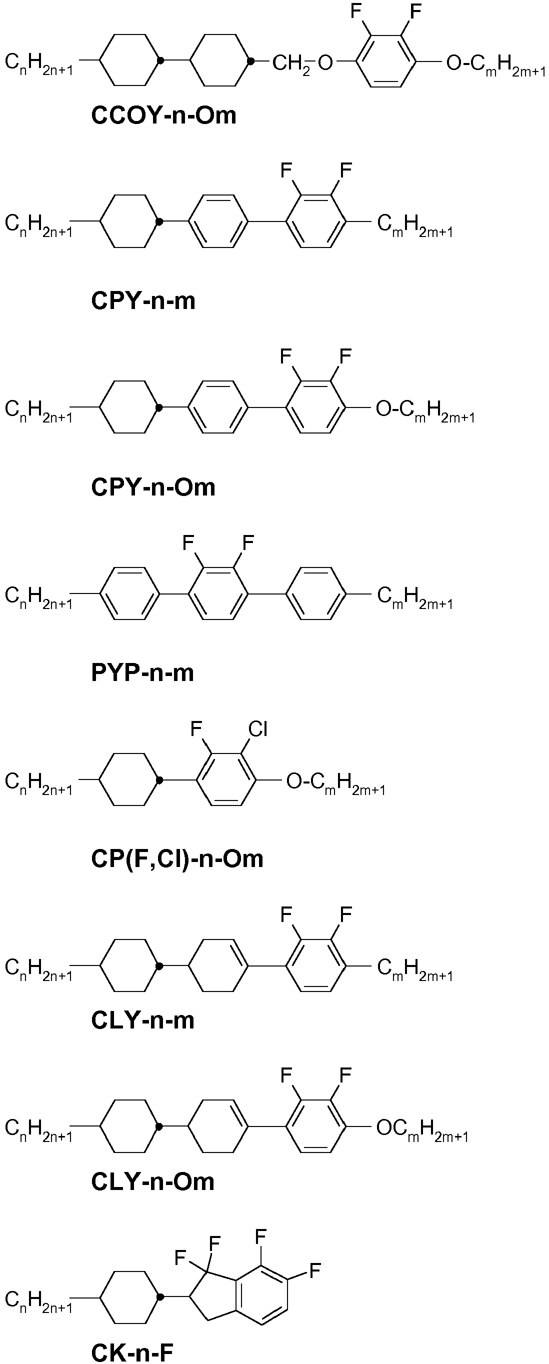

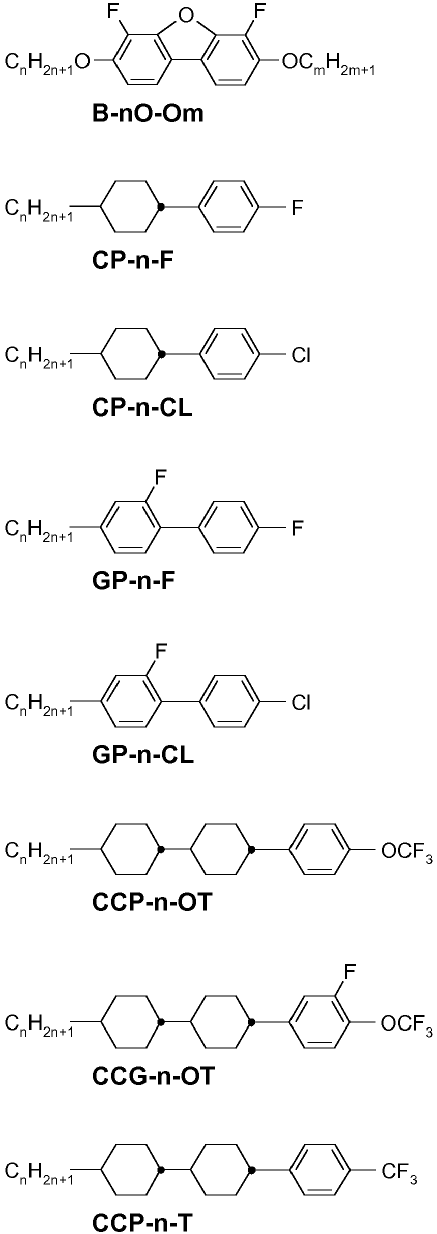

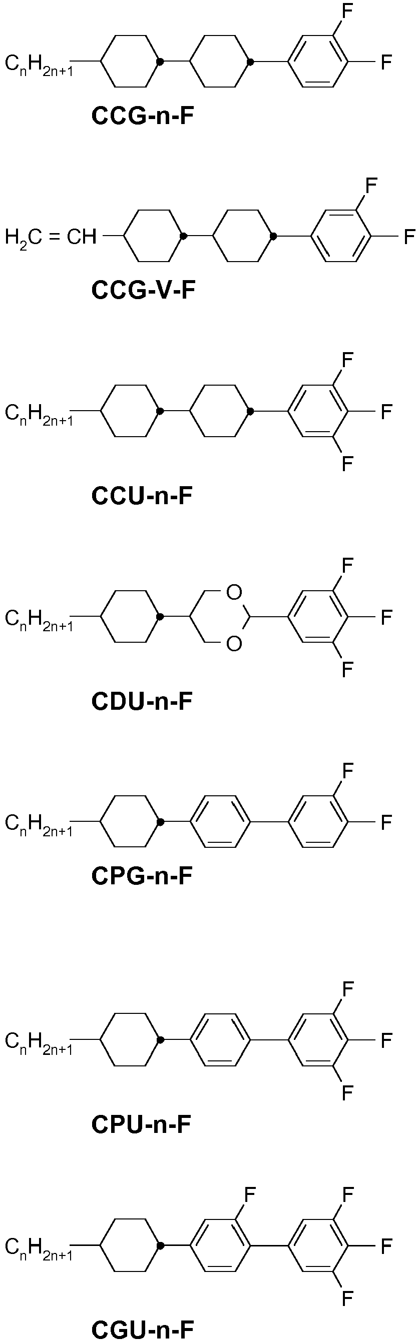

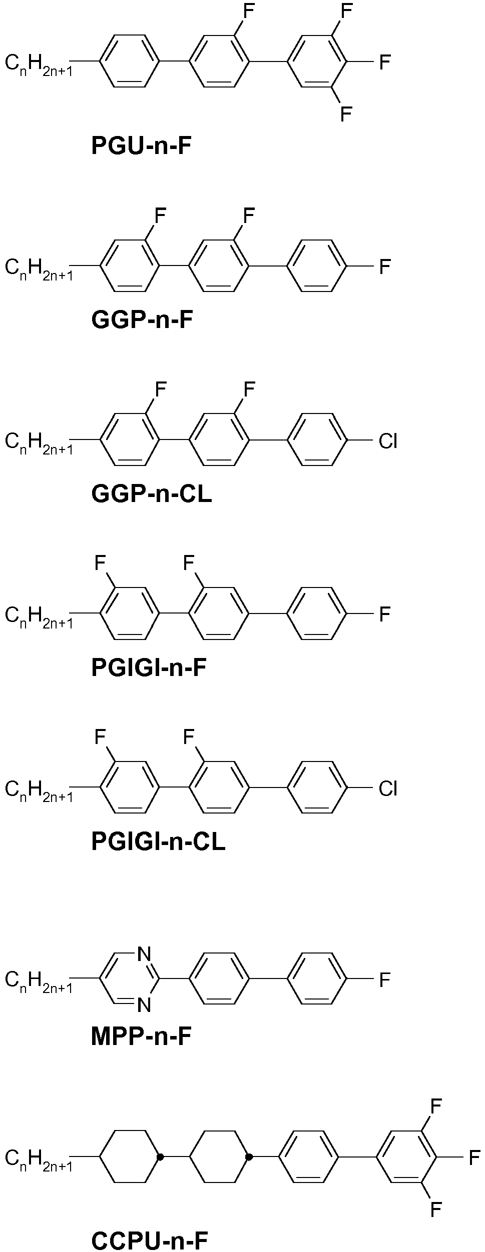

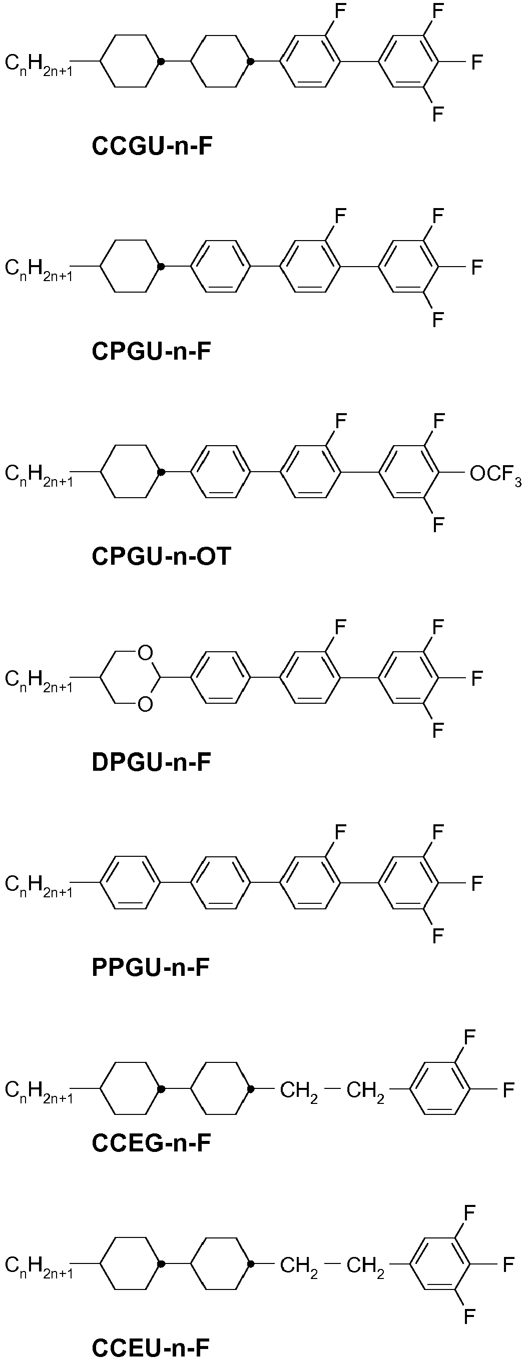

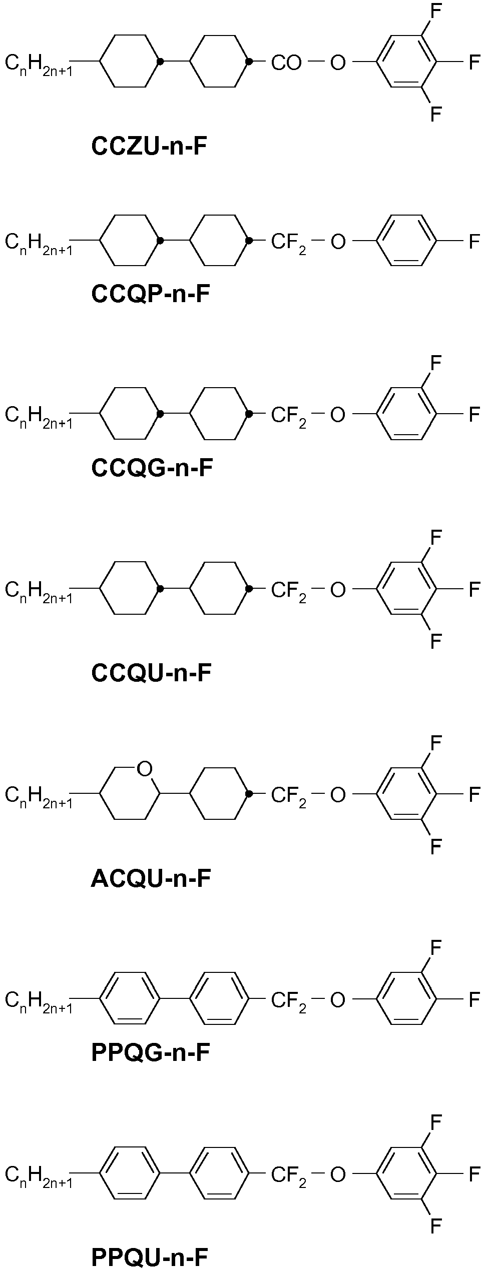

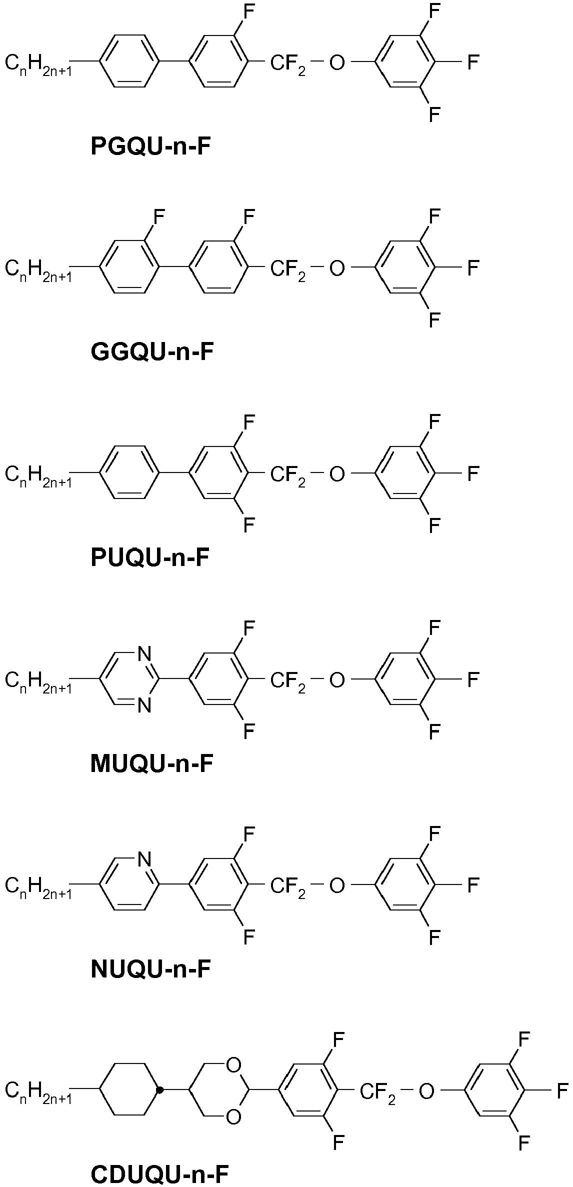

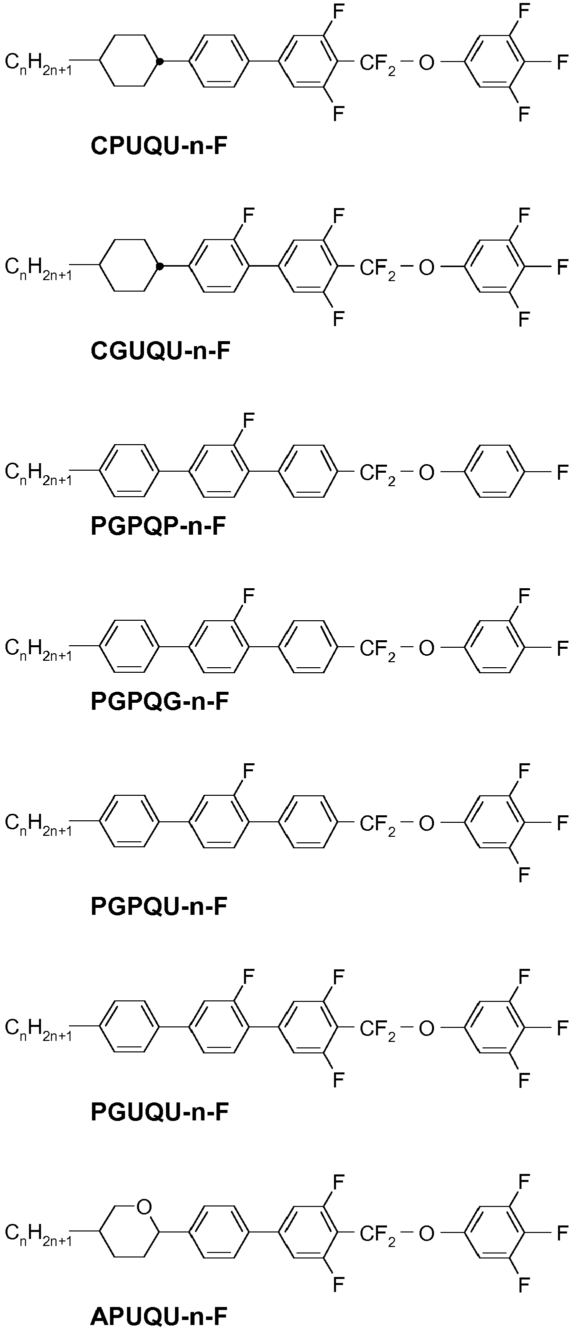

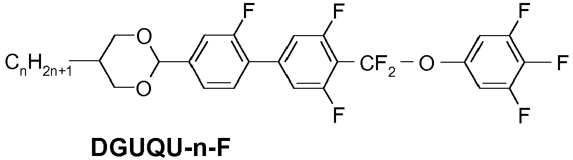

**Tabelle E**

| | |
|---|---|
| In der Tabelle E werden mögliche chirale Dotierstoffe angegeben, die den erfindungsgemäßen FK-Medien zugesetzt werden können. | |
| 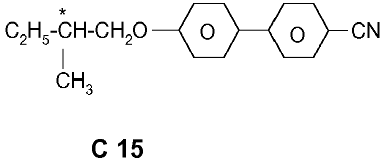 | 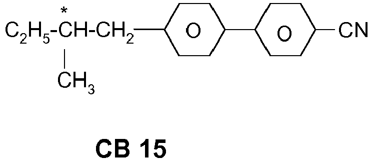 |
| 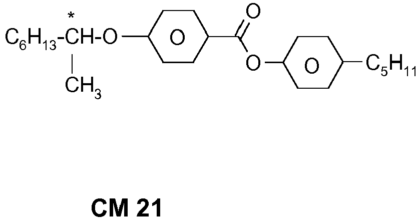 | 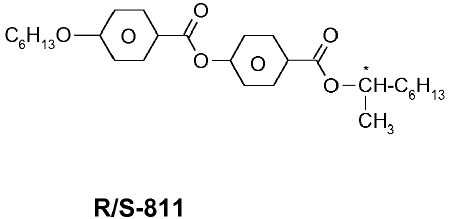 |
| 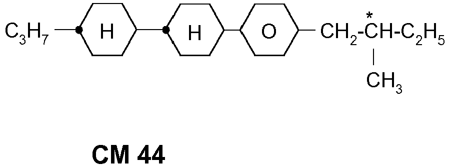 | 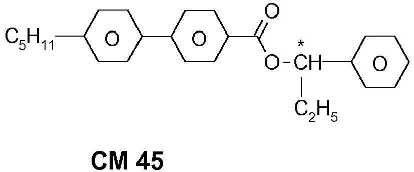 |
| 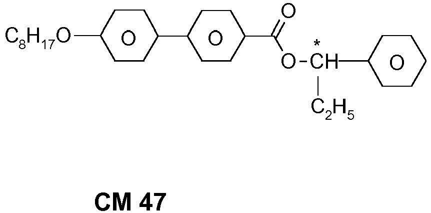 | 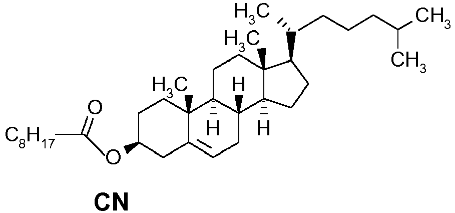 |
| 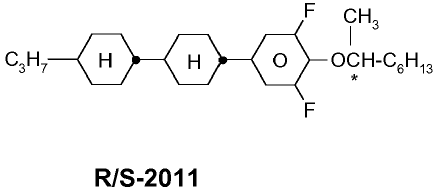 | 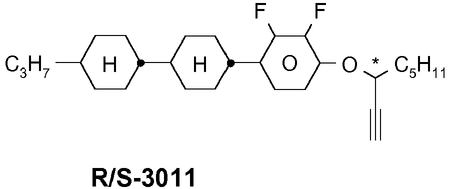 |
| 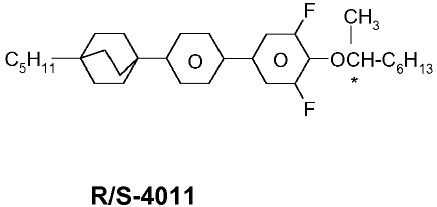 | 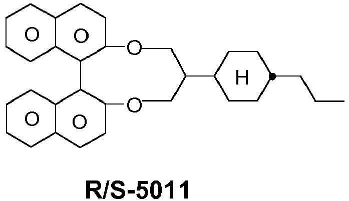 |
| 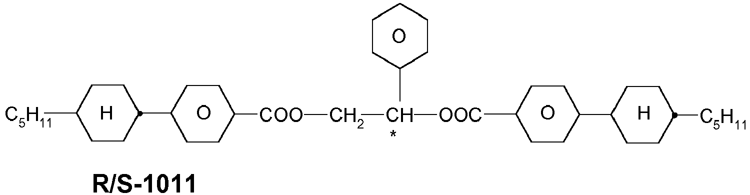 | |

Optional enthalten die FK-Medien 0 bis 10 Gew.-%, insbesondere 0,01 bis 5 Gew.-%, besonders bevorzugt 0,1 bis 3 Gew.-% an Dotierstoffen, vorzugsweise ausgewählt aus der Gruppe bestehend aus Verbindungen der Tabelle E.

**Tabelle F**

| | |
|---|---|
| In der Tabelle F werden mögliche Stabilisatoren angegeben, die den erfindungsgemäßen FK-Medien zugesetzt werden können. (n bedeutet hier eine ganze Zahl von 1 bis 12, vorzugsweise 1, 2, 3, 4, 5, 6, 7 oder 8, endständige Methylgruppen sind nicht gezeigt). | |
| 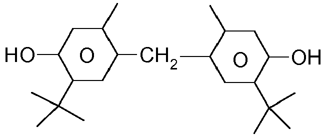 | 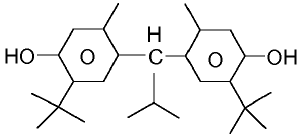 |
| 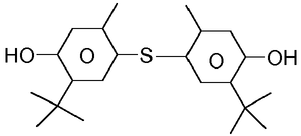 | 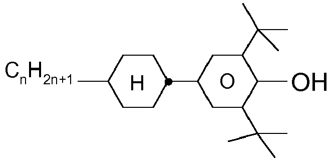 |
| 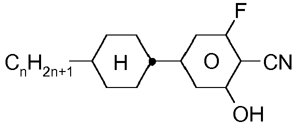 | 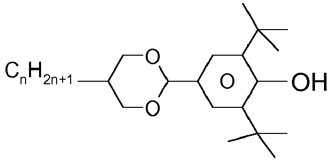 |
| 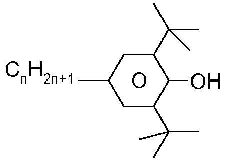 | 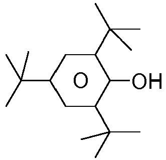 |
| 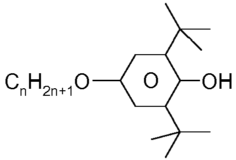 | 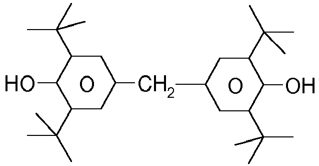 |
| 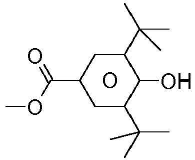 | 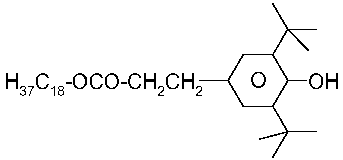 |
| 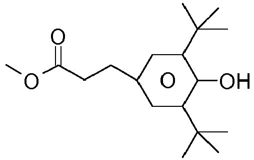 | 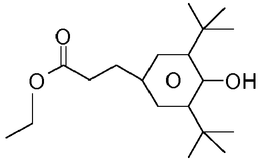 |
| 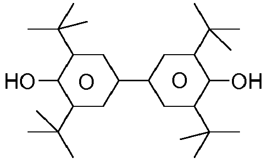 | 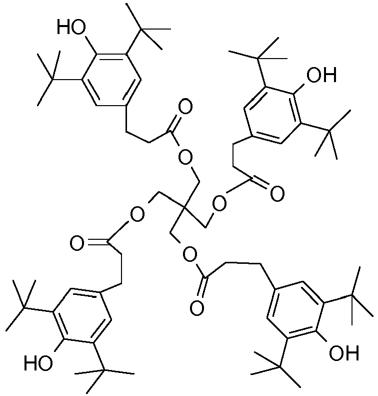 |
| 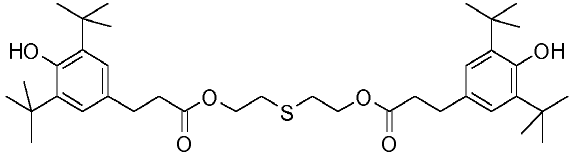 | |
| 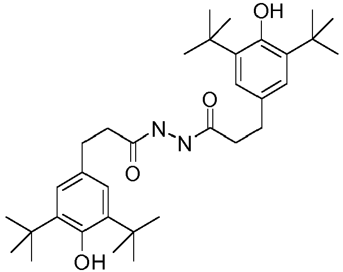 | 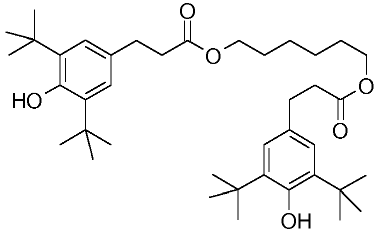 |
| 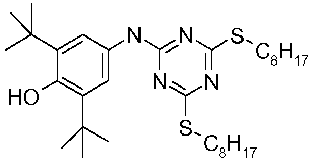 | 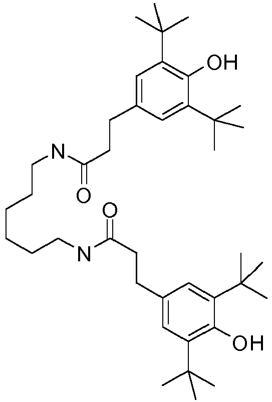 |
| 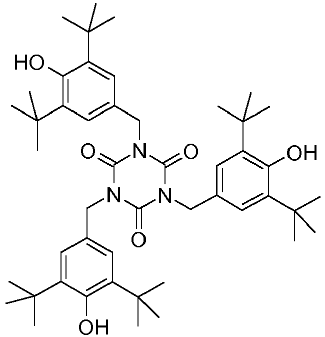 | 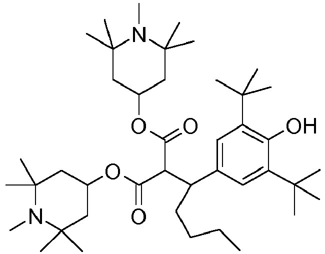 |
| 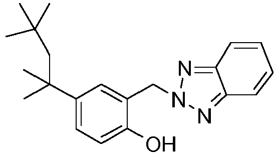 | 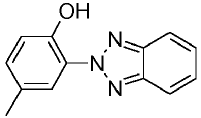 |
| 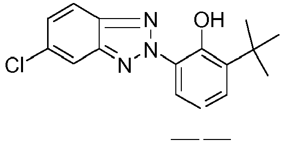 | 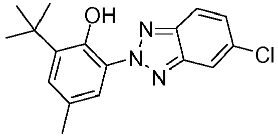 |
| 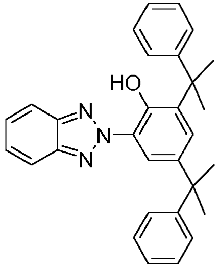 | 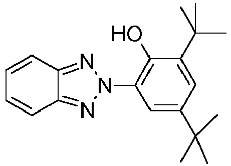 |
| 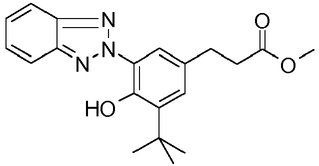 | 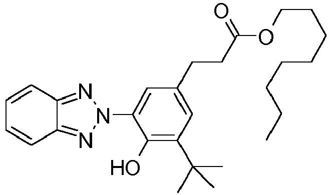 |
| 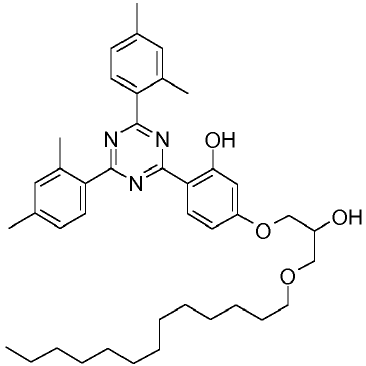 | 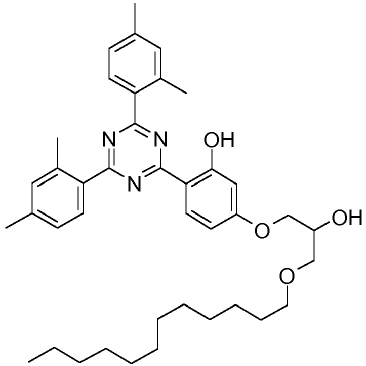 |
| 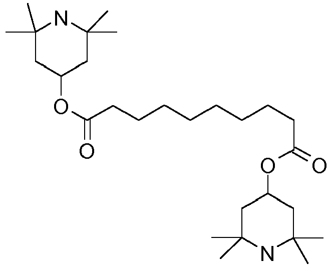 | 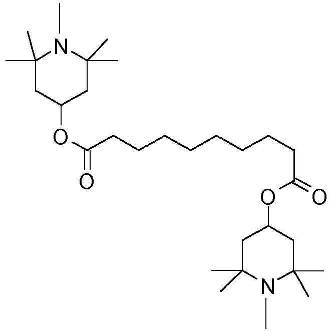 |

Vorzugsweise enthalten die FK-Medien 0 bis 10 Gew.-%, insbesondere 1 ppm bis 5 Gew.-%, besonders bevorzugt 1ppm bis 1 Gew.-% an Stabilisatoren. Vorzugsweise enthalten die FK-Medien einen oder mehrere Stabilisatoren ausgewählt aus der Gruppe bestehend aus Verbindungen der Tabelle F.

**Tabelle G**

| |
|---|
| In der Tabelle G sind Beispielverbindungen zusammengestellt, die in den FK-Medien gemäß der vorliegenden Erfindung vorzugsweise als polymerisierbare Verbindungen verwendet werden können. |
| 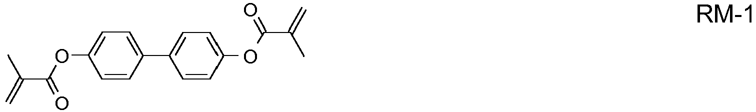 |
| 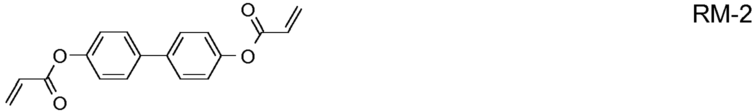 |
| 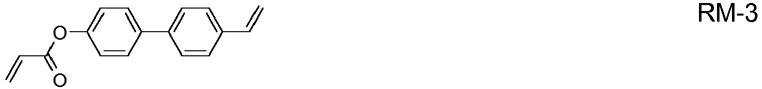 |
| 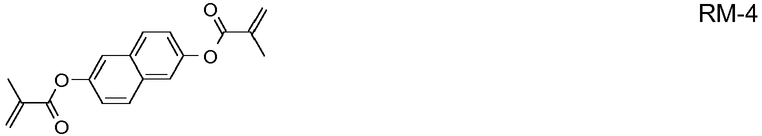 |
| 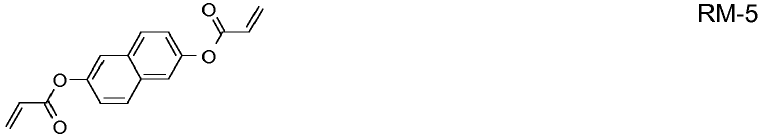 |
| 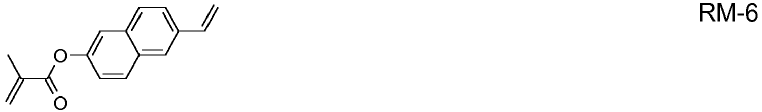 |
| 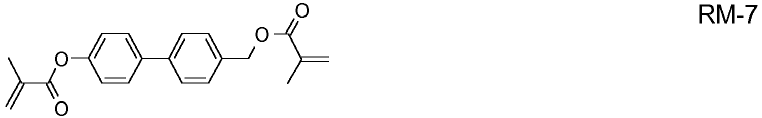 |
| 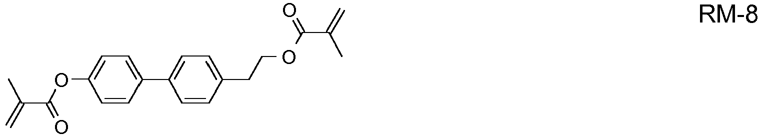 |
| 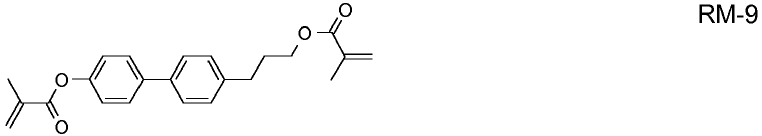 |
| 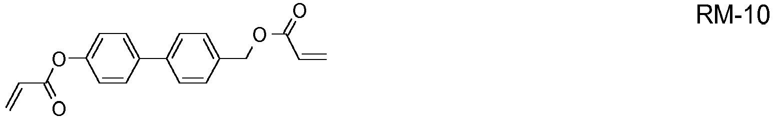 |
| 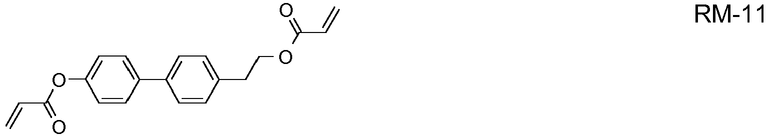 |
| 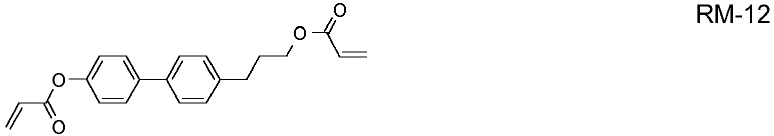 |
| 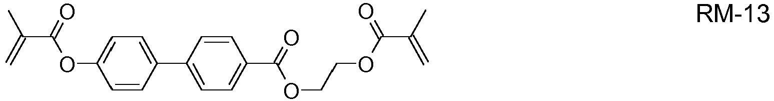 |
| 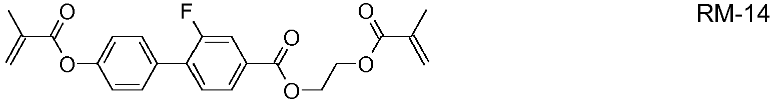 |
| 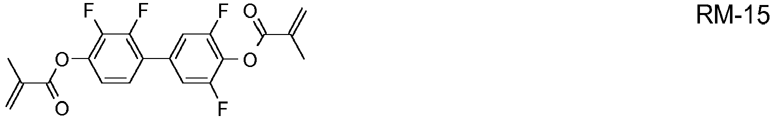 |
| 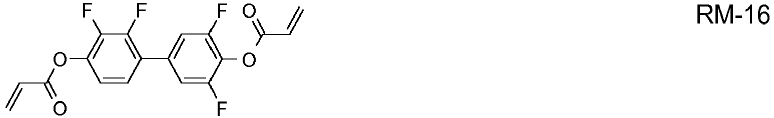 |
| 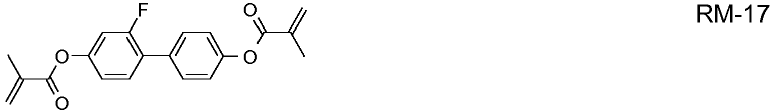 |
| 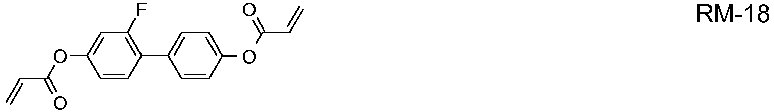 |
| 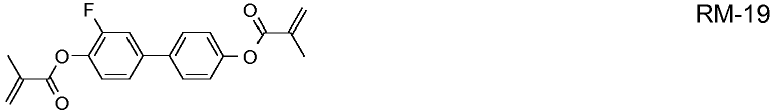 |
| 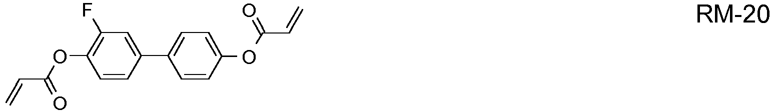 |
| 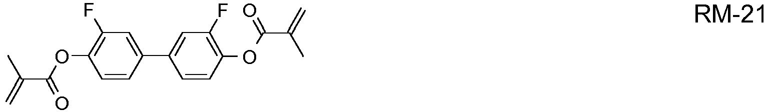 |
| 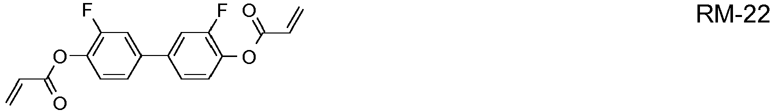 |
| 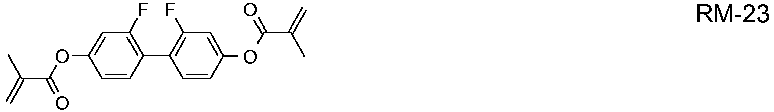 |
| 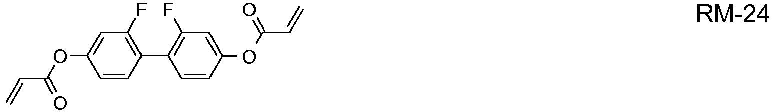 |
| 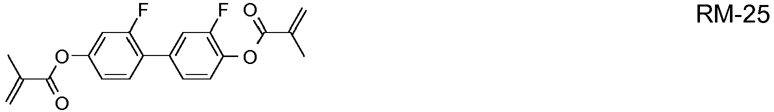 |
| 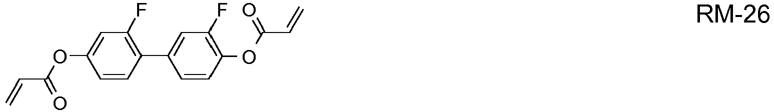 |
| 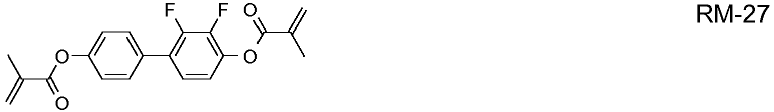 |
| 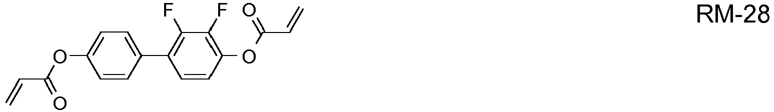 |
| 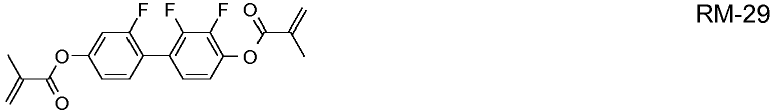 |
| 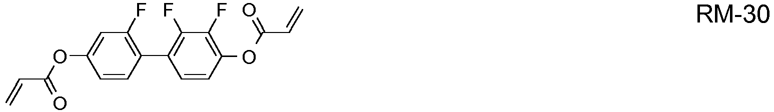 |
| 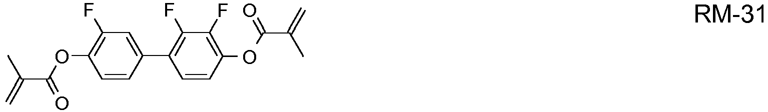 |
| 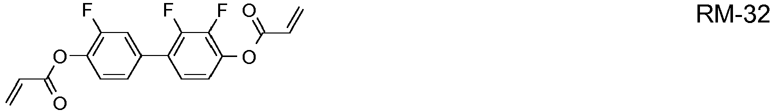 |
| 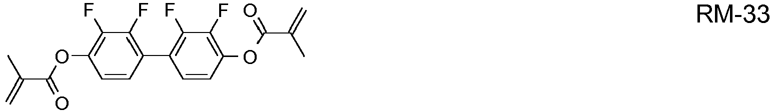 |
| 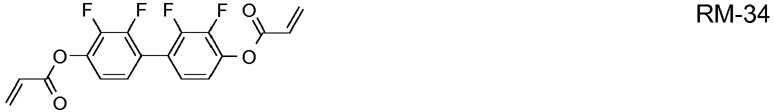 |
| 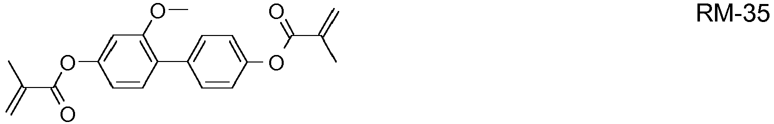 |
| 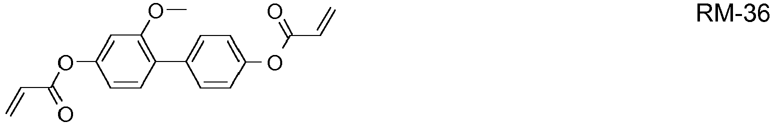 |
| 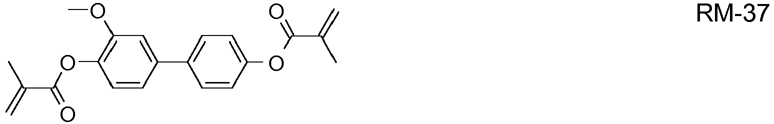 |
| 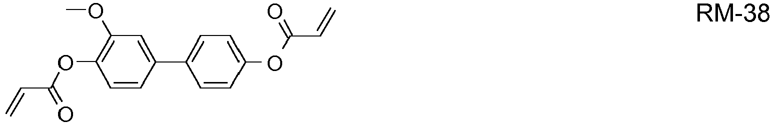 |
| 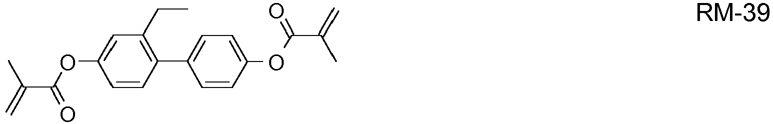 |
| 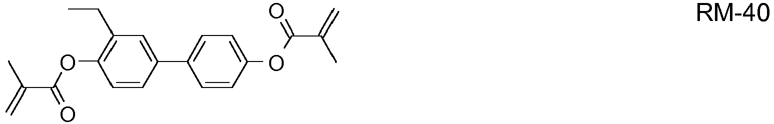 |
| 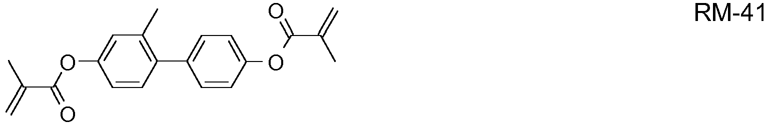 |
| 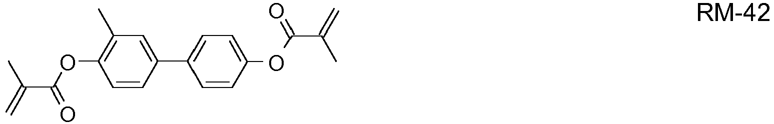 |
| 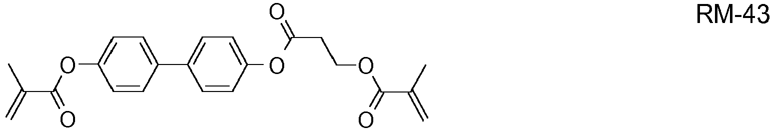 |
| 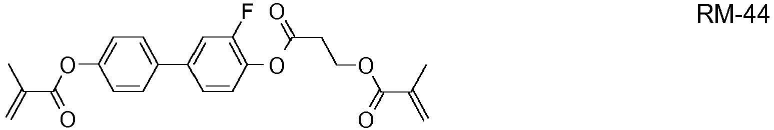 |
| 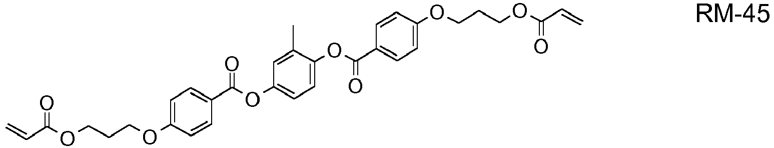 |
| 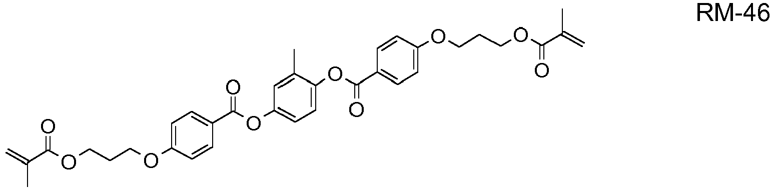 |
| 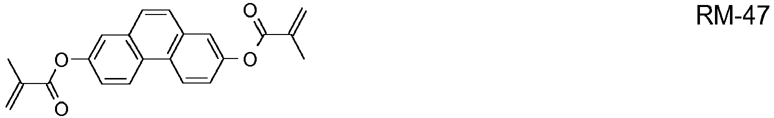 |
| 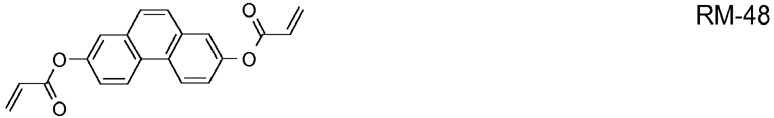 |
| 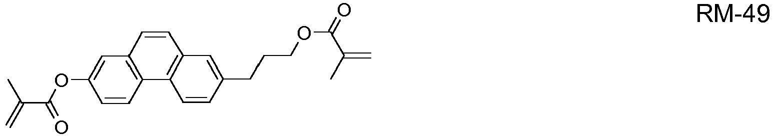 |
| 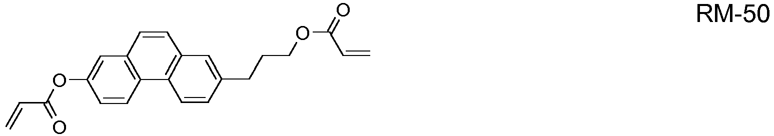 |
| 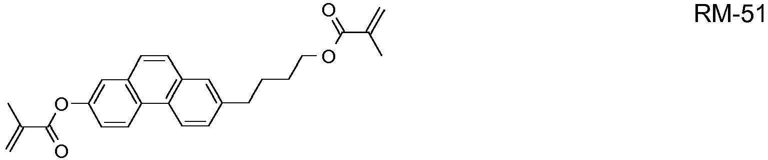 |
| 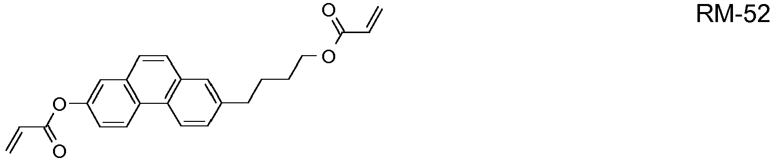 |
| 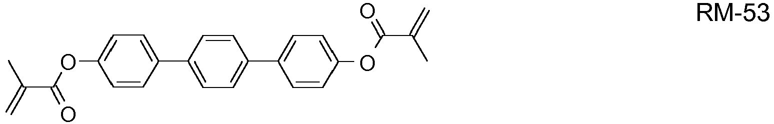 |
| 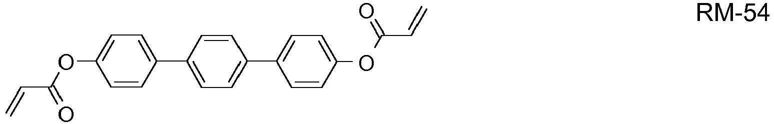 |
| 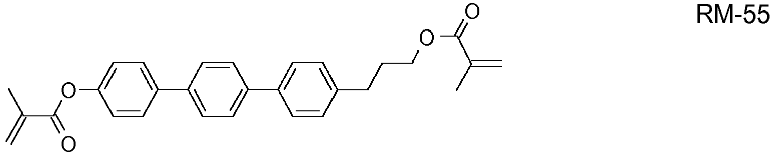 |
| 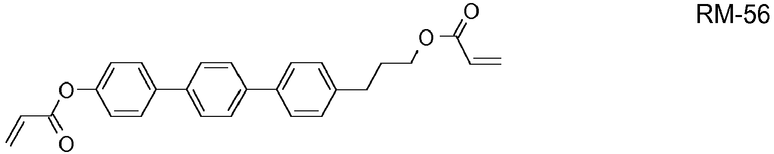 |
| 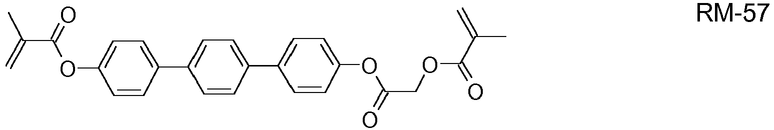 |
| 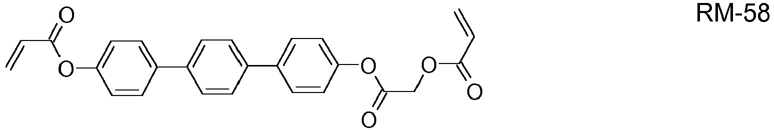 |
| 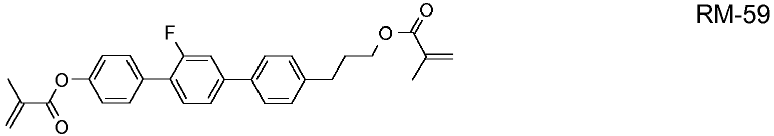 |
| 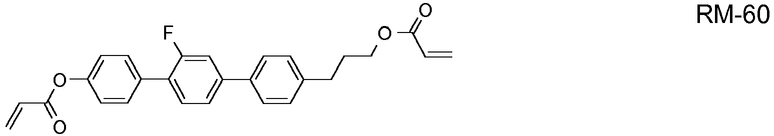 |
| 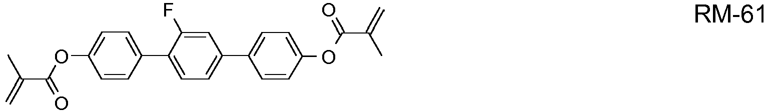 |
| 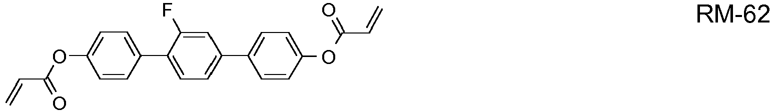 |
| 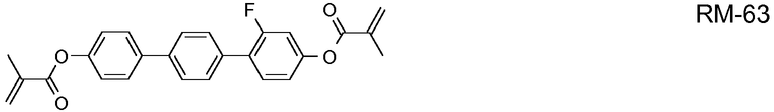 |
| 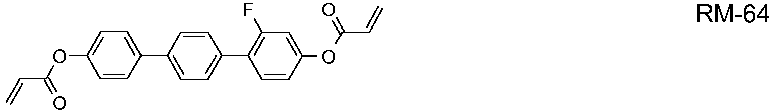 |
| 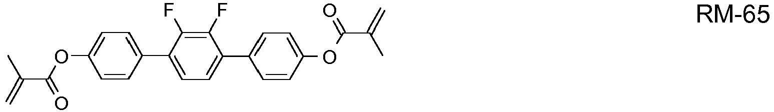 |
| 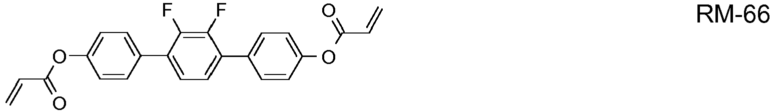 |
| 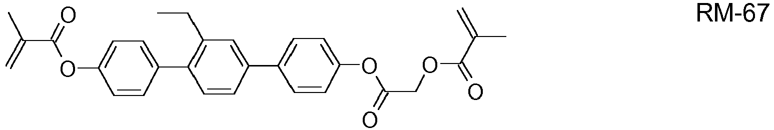 |
| 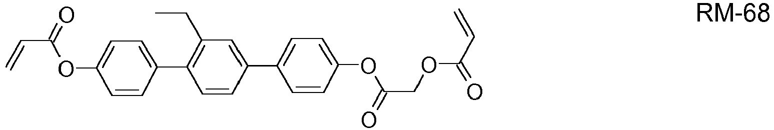 |
| 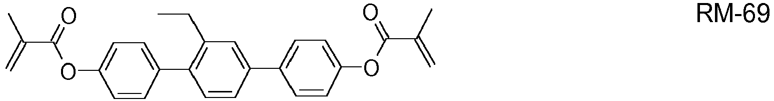 |
| 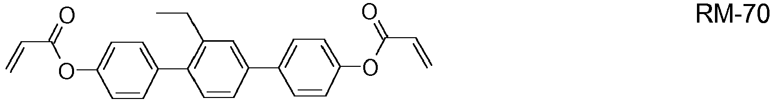 |
| 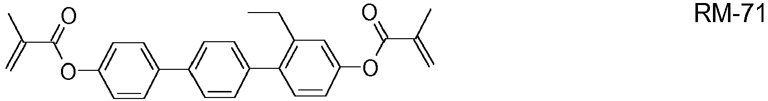 |
| 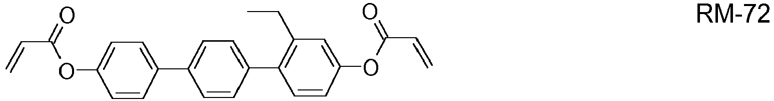 |
| 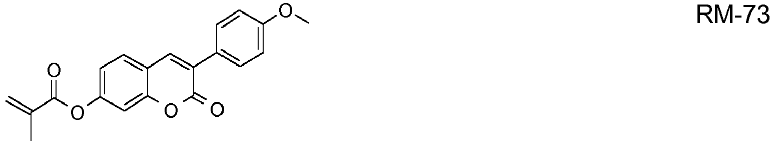 |
| 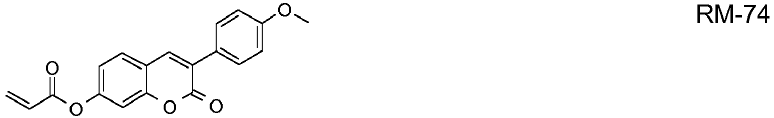 |
| 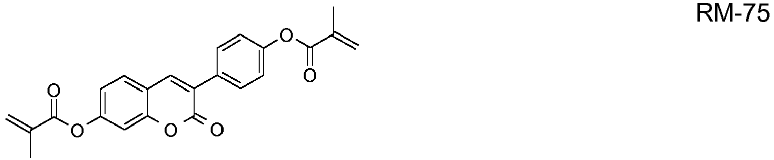 |
| 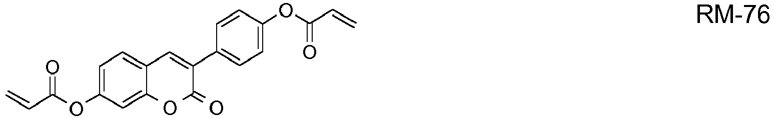 |
| 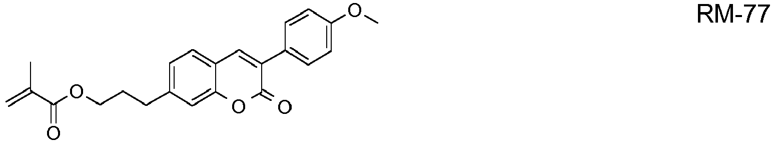 |
| 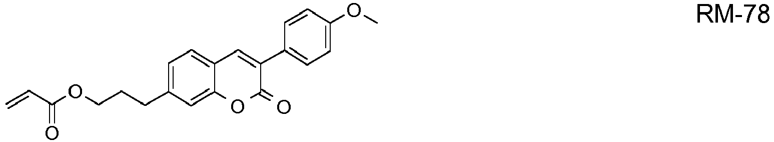 |
| 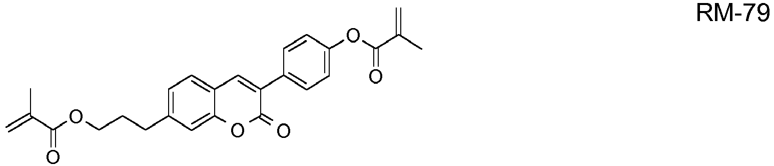 |
| 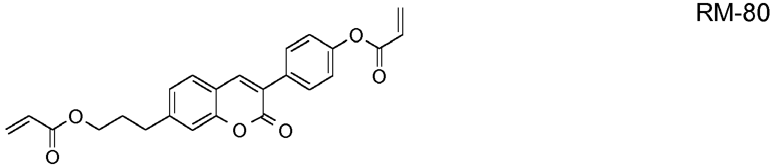 |
| 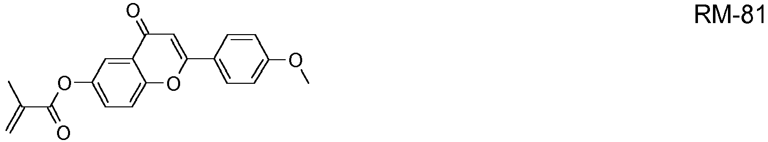 |
| 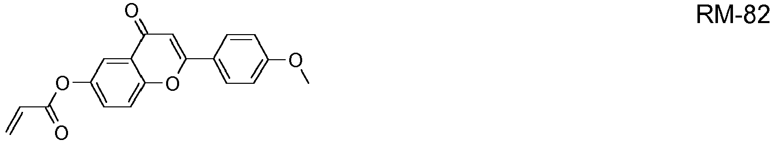 |
| 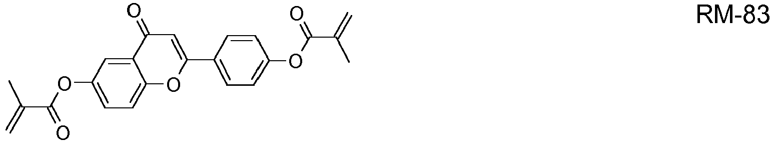 |
| 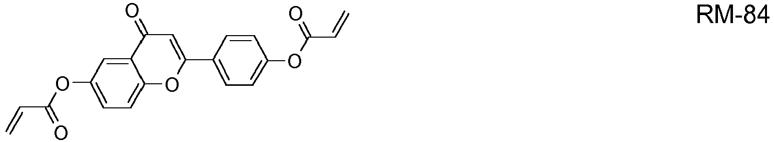 |
| 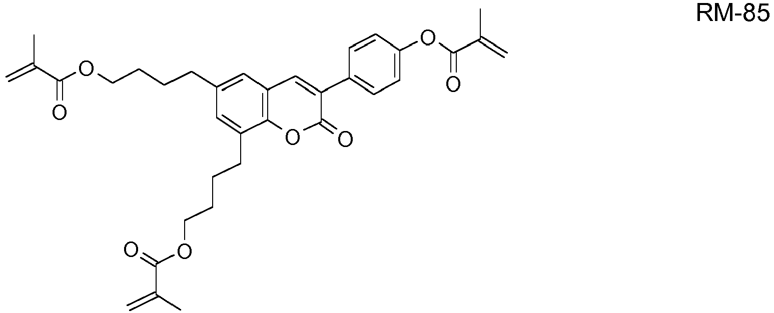 |
| 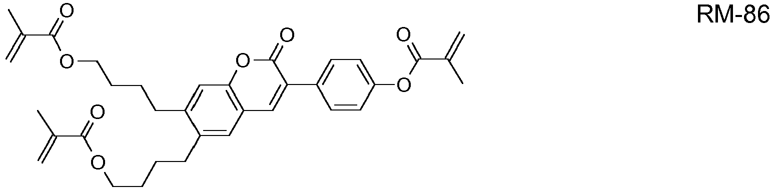 |
| 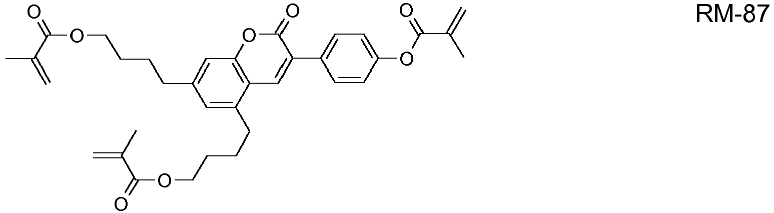 |
| 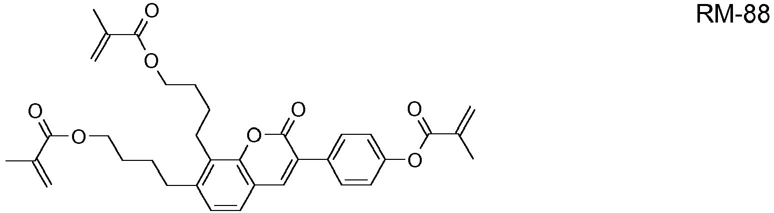 |
| 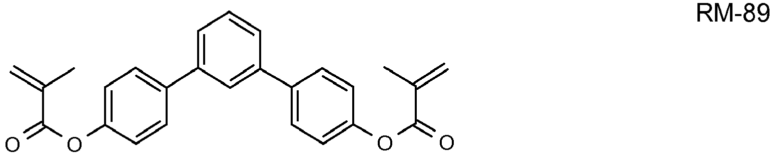 |
| 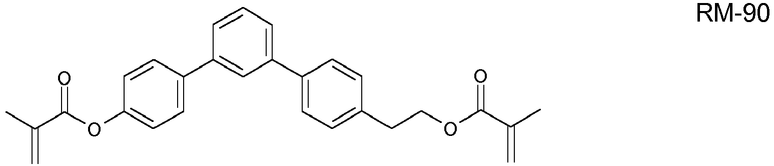 |
| 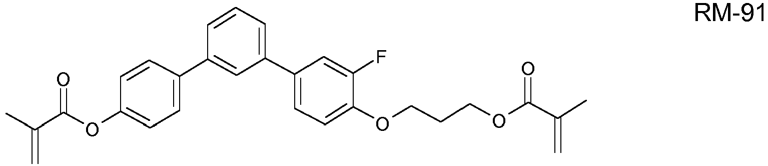 |
| 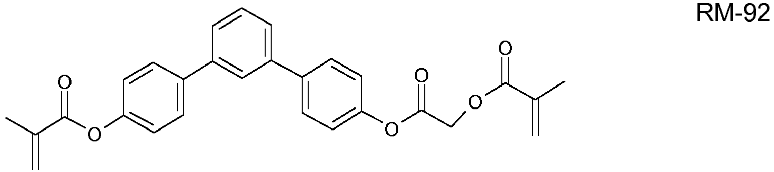 |
| 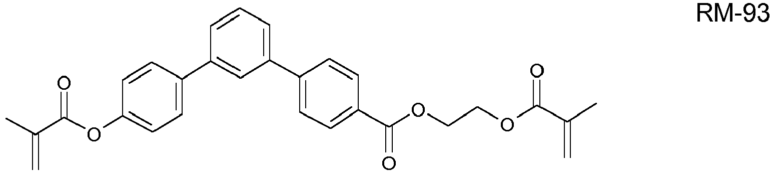 |
| 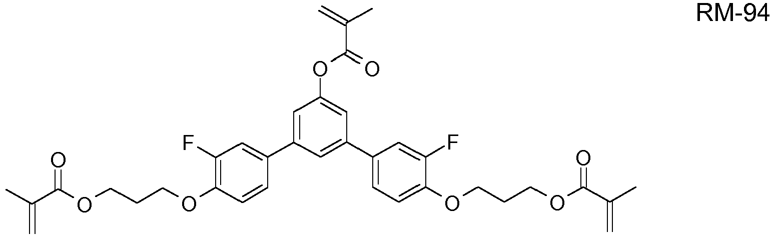 |
| 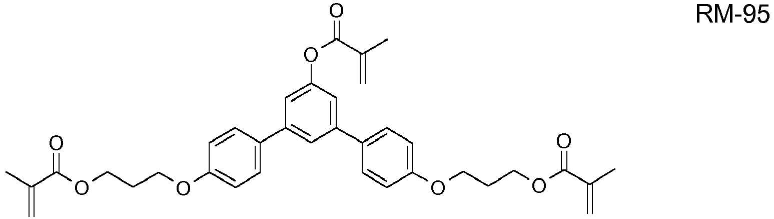 |
| 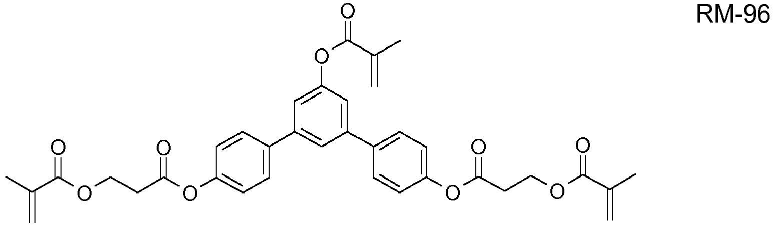 |
| 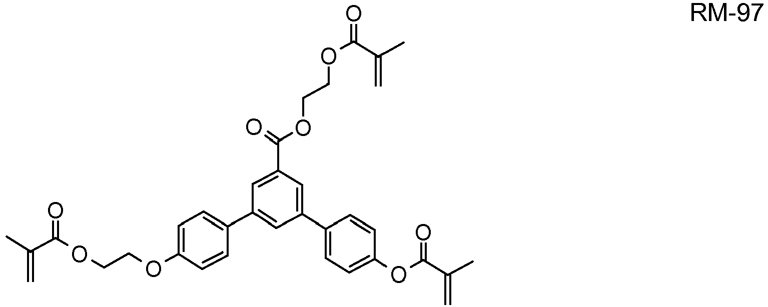 |
| 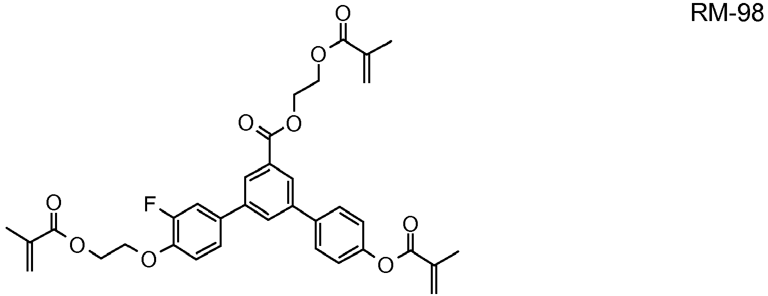 |
| 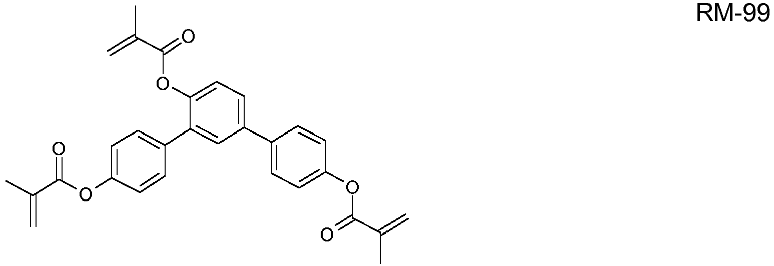 |
| 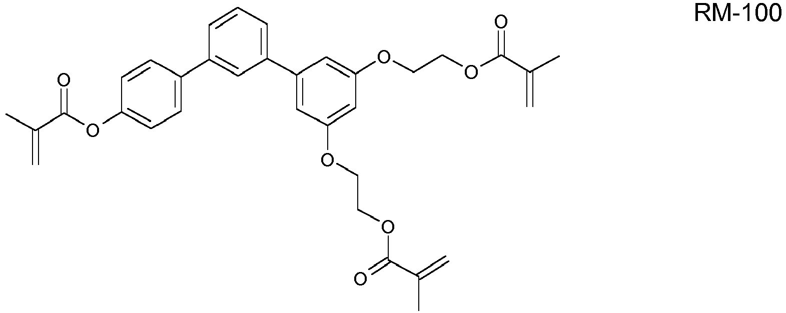 |
| 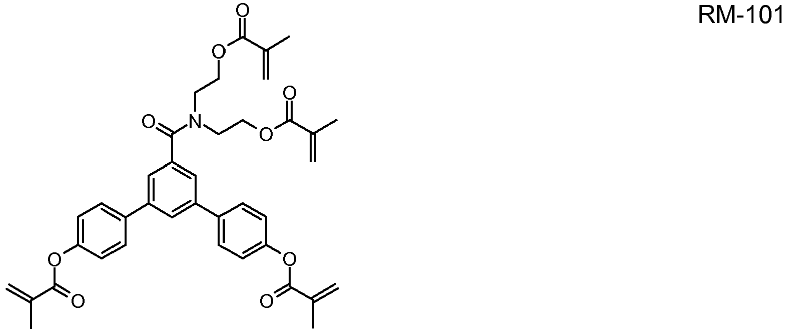 |
| 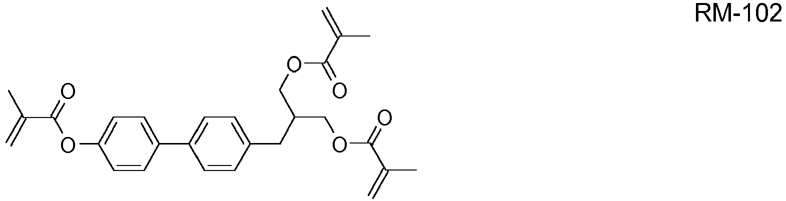 |
| 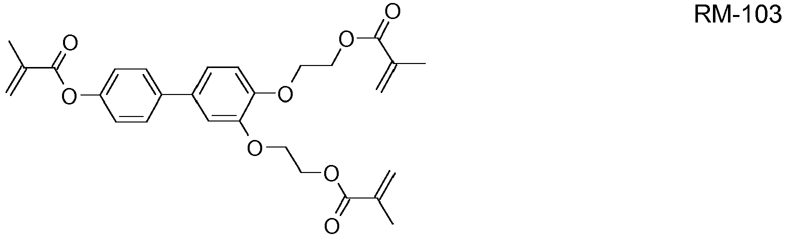 |
| 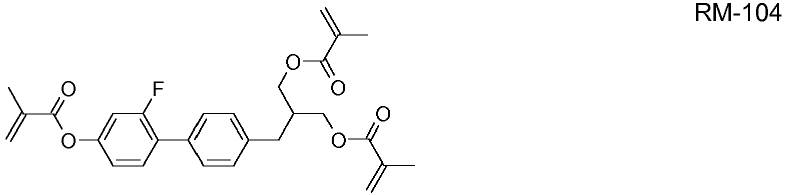 |
| 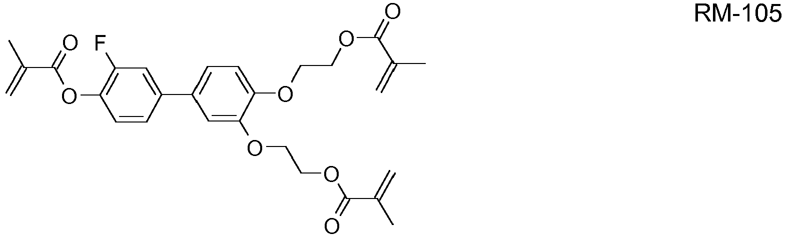 |
| 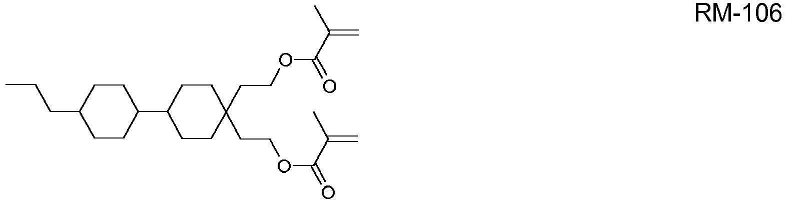 |
| 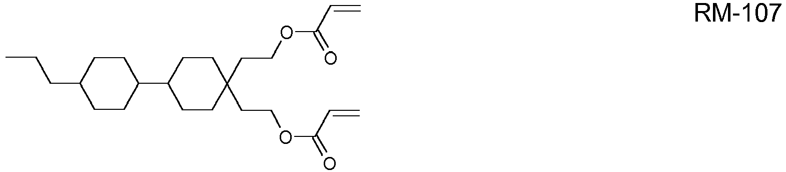 |
| 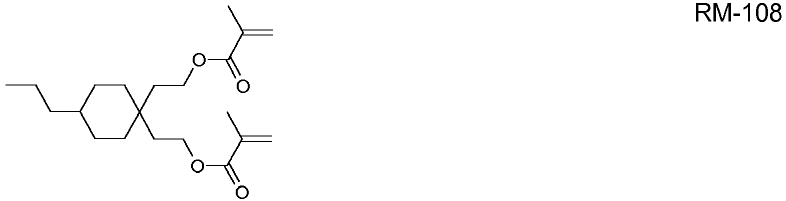 |
| 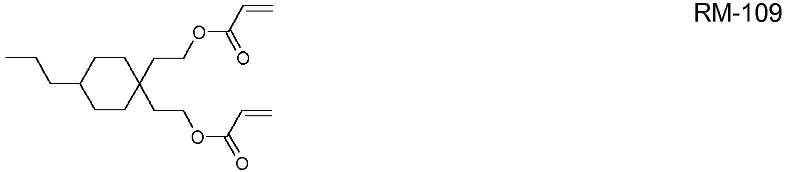 |
| 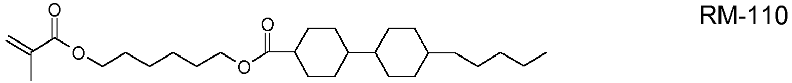 |
| 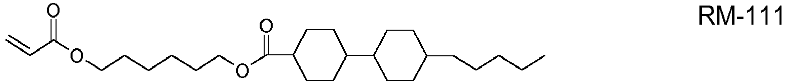 |
| 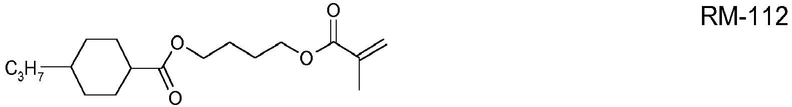 |
| 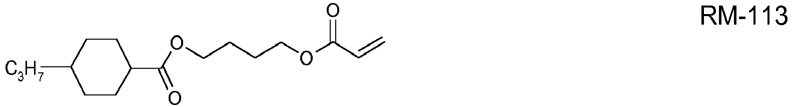 |
| 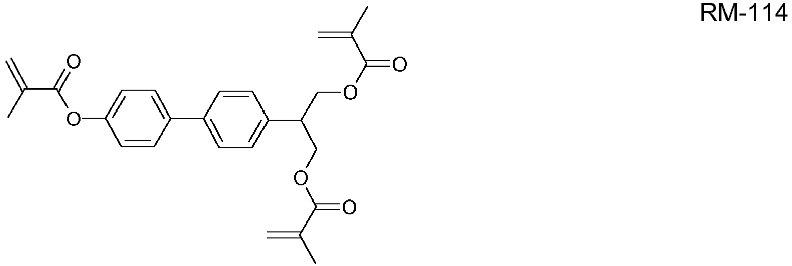 |
| 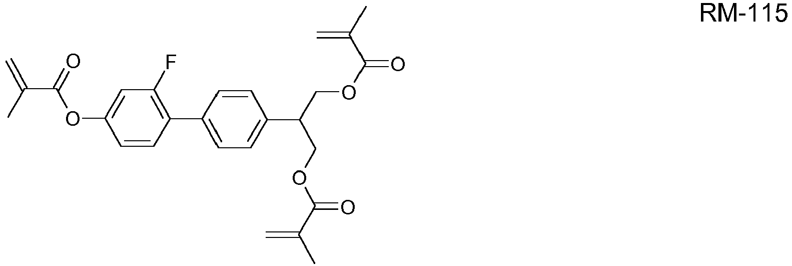 |
| 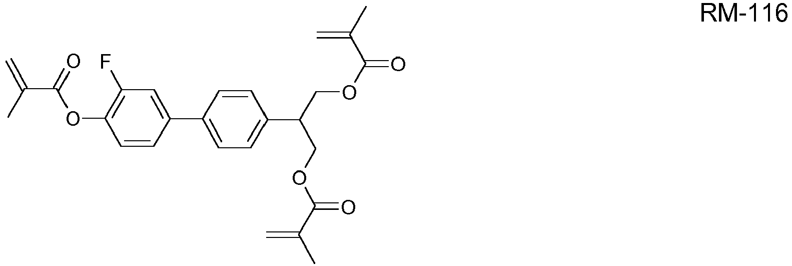 |
| 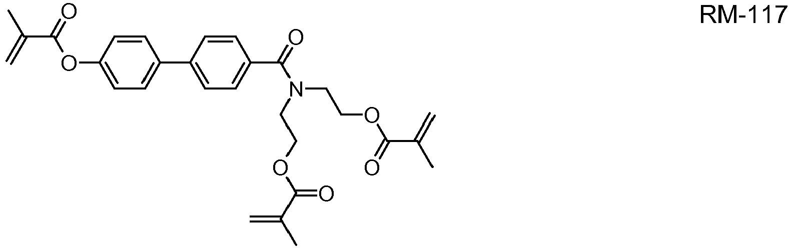 |
| 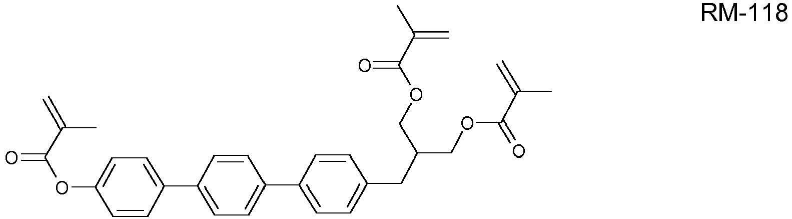 |
| 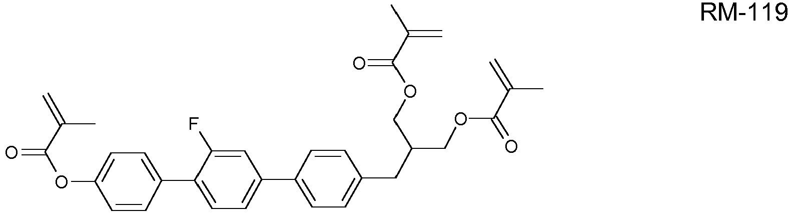 |
| 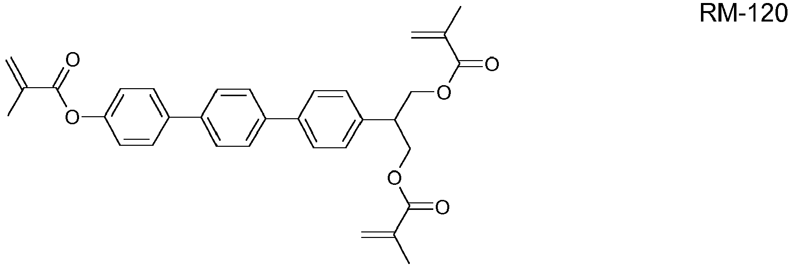 |
| 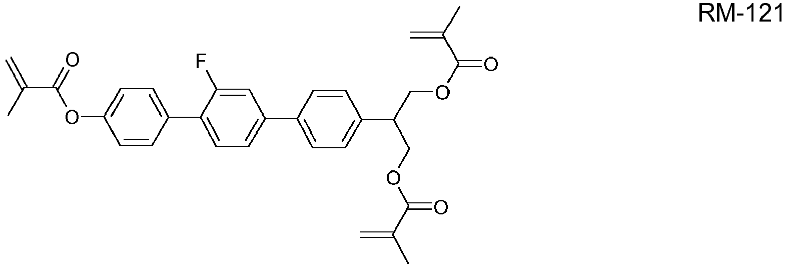 |
| 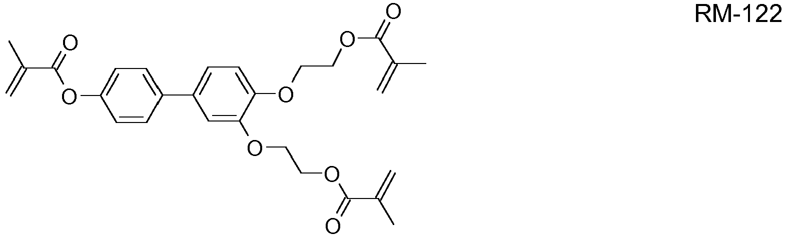 |
| 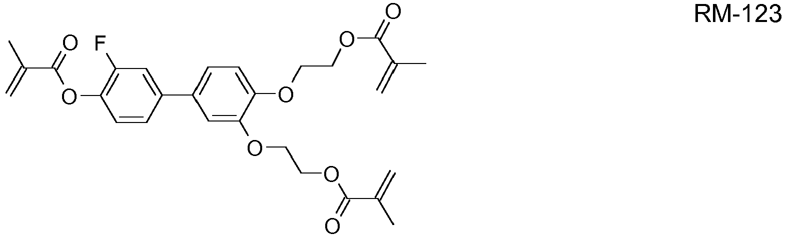 |
| 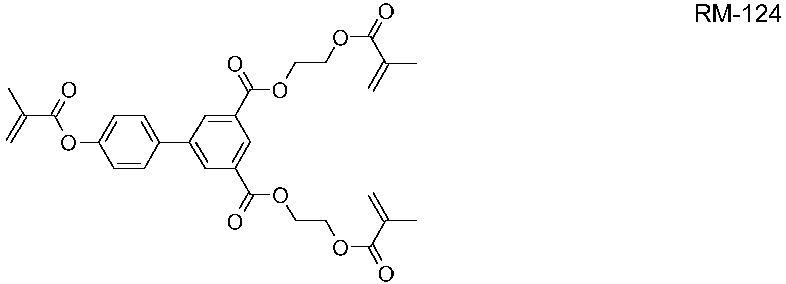 |
| 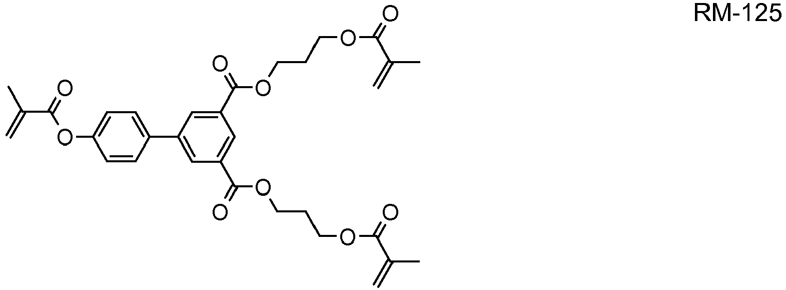 |
| 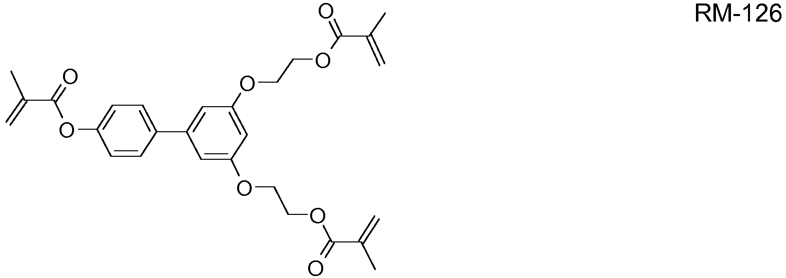 |
| 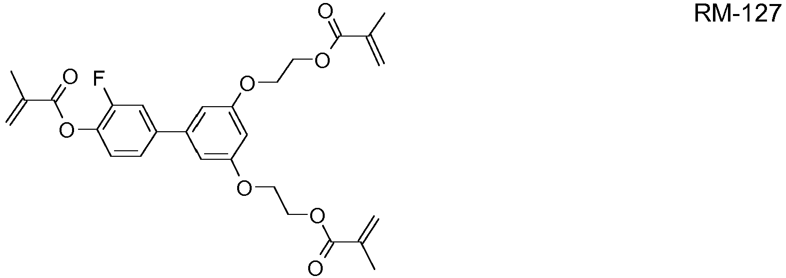 |
| 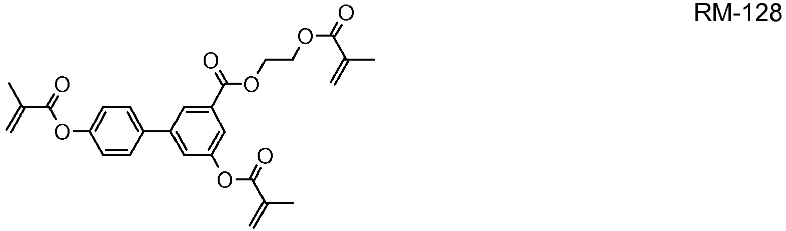 |
| 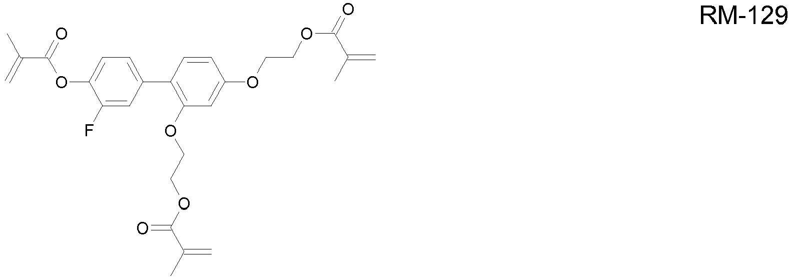 |
| 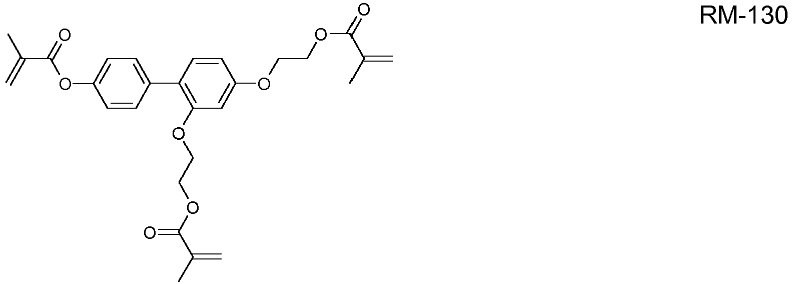 |
| 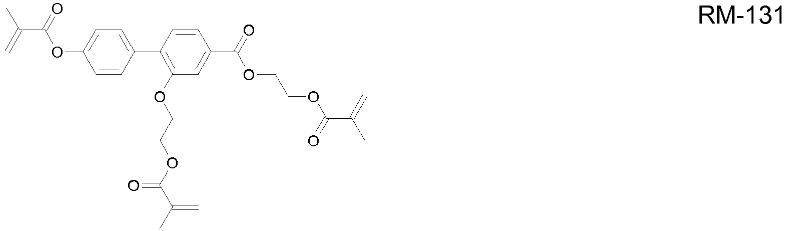 |
| 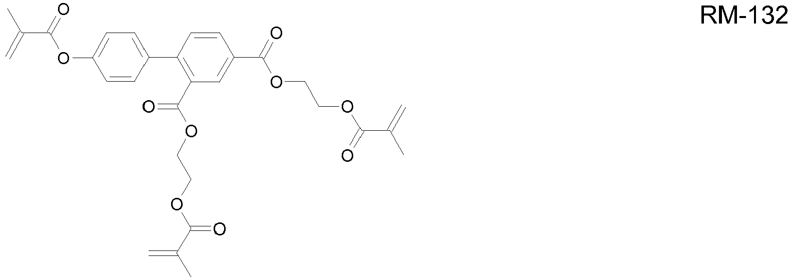 |
| 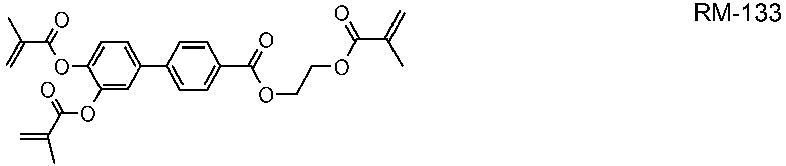 |
| 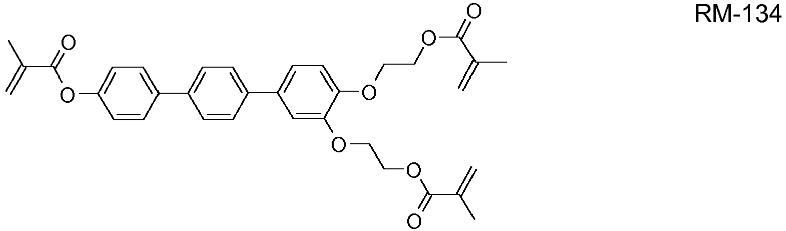 |
| 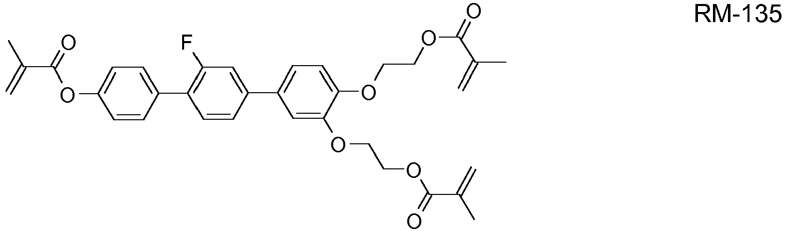 |
| 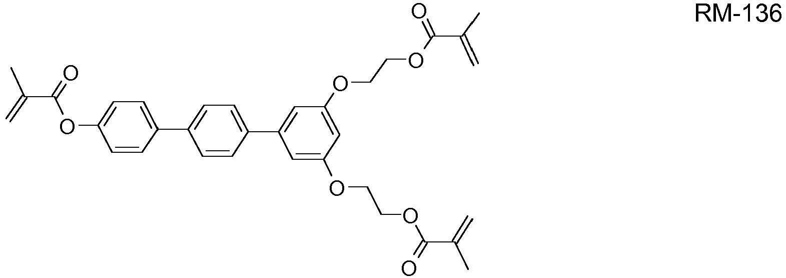 |
| 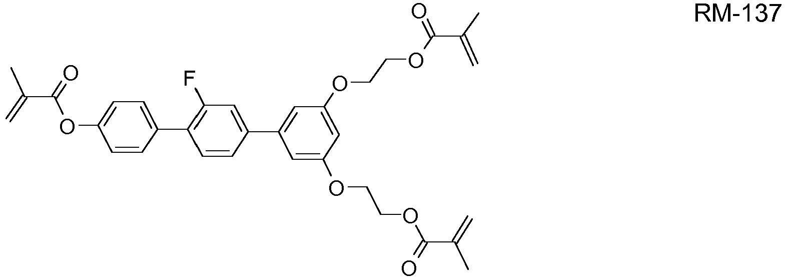 |
| 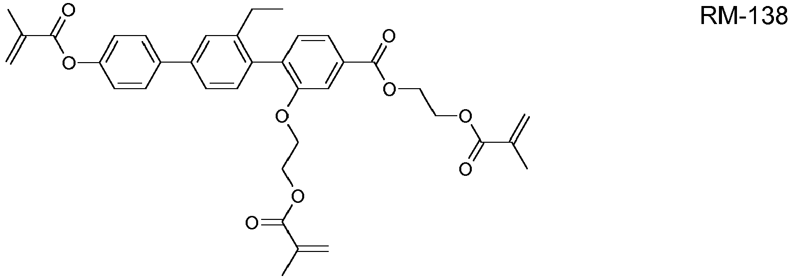 |

In einer bevorzugten Ausführungsform der vorliegenden Erfindung enthalten die mesogenen Medien eine oder mehrere Verbindungen ausgewählt aus der Gruppe der Verbindungen der Tabelle G.

**Tabelle H**

| |
|---|
| In der Tabelle H sind Beispielverbindungen zusammengestellt, die in den FK-Medien gemäß der vorliegenden Erfindung vorzugsweise als nicht polymerisierbare Selbstorientierungsadditive eingesetzt werden können. |
| 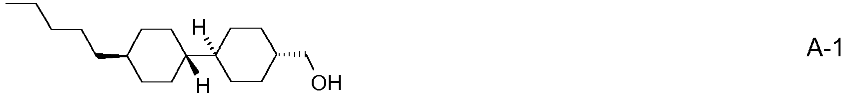 |
| 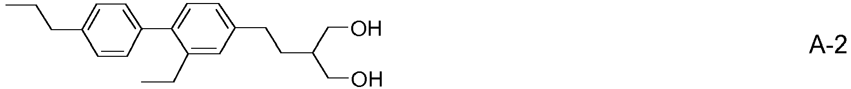 |
| 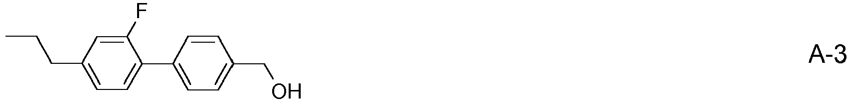 |
| 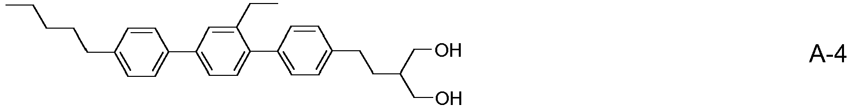 |
| 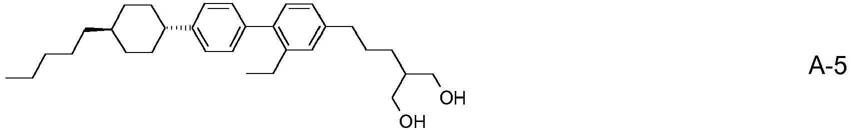 |
| 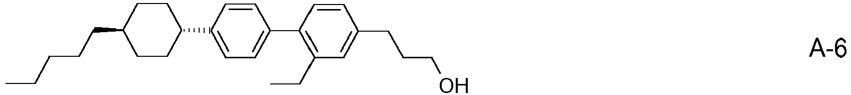 |
| 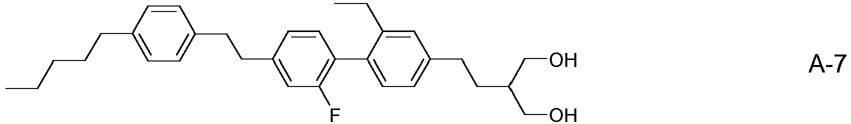 |
| 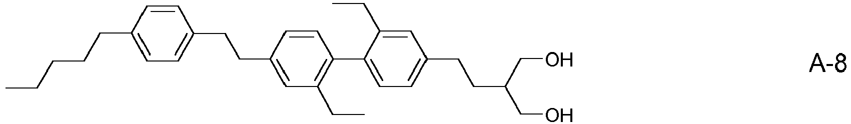 |

In der vorliegenden Anmeldung bedeutet der Begriff "Verbindungen", auch geschrieben als "Verbindung(en)", sofern nicht explizit anders angegeben, sowohl eine als auch mehrere Verbindungen. Umgekehrt schließt der Begriff "Verbindung" generell auch mehrere Verbindungen ein, sofern dies laut Definition möglich und nicht anders angegeben ist. Gleiches gilt für die Begriffe FK-Medien und FK-Medium. Der Begriff "Komponente" umfasst jeweils eine oder mehrere Stoffe, Verbindungen und/oder Teilchen.

Außerdem werden folgende Abkürzungen und Symbole verwendet:
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Permittivität senkrecht zum Direktor bei 20°C und 1 kHz,
- ε∥: dielektrische Permittivität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- V₀: Kapazitive Schwelle (Freedericks Schwelle) bei 20°C [V].

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder flüssigkristallinen Komponenten, ohne Lösungsmittel.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei optional gleichzeitig eine Spannung an die Anzeige angelegt wird (üblicherweise 10 bis 30 V Wechselstrom, 1 kHz). In den Beispielen wird, falls nicht anders angegeben, eine Quecksilberdampflampe mit 100 mW/cm² verwendet, die Intensität wird mit einem Standard-UV-Meter (Fabrikat Ushio UNI meter) gemessen, der mit einem Bandpassfilter bei 320 nm (optional 340 nm) ausgerüstet ist.

Die folgenden Beispiele erläutern die vorliegende Erfindung, ohne sie in irgendeiner Weise beschränken zu sollen. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Weitere Kombinationen der Ausführungsformen und Varianten der Erfindung gemäß der Beschreibung ergeben sich auch aus den Ansprüchen.

### Beispiele

Die eingesetzten Verbindungen, soweit nicht kommerziell erhältlich, werden nach Standard-Laborvorschriften synthetisiert. Die FK-Medien stammen von der Merck KGaA, Deutschland.

### A) Synthesebeispiele

### Beispiel 1. Synthese von 3-{2-[4-hydroxy-3-(hydroxymethyl)butoxy]-3-{3-[(2-Methylprop-2-enoyl)oxy]propyl}-5-[4-(4-pentylcyclohexyl)cyclohexyl]-phenyl}propyl 2-methylprop-2-enoat 1

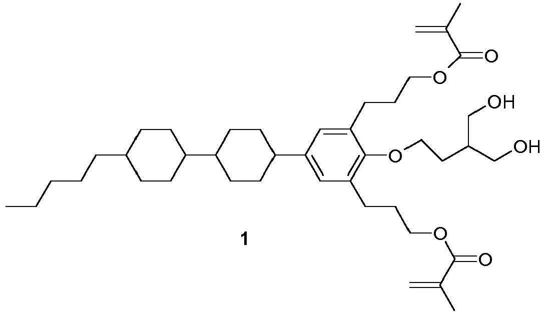

### 1.1. Synthese von 1-(Benzyloxy)-4-[4-(4-pentylcyclohexyl)cyclohex-1-en-1-yl]benzol (A)

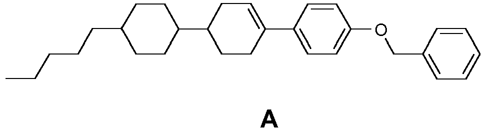

3,40 g (140 mmol) Magnesiumspäne werden in 10 ml Tetrahydrofuran (THF) vorgelegt, auf Siedetemperatur erwärmt und mit 10 ml einer Lösung aus 36,0 g (137 mmol) 1-(Benzyloxy)-4-bromobenzol in 90 ml THF versetzt und die Grignardreaktion damit gestartet. Die Heizquelle wird entfernt und die restliche Lösung wird langsam zum Reaktionsgemisch tropfenweise zugegeben so dass die Reaktionslösung am Rückfluss siedet. Das Reaktionsgemisch färbt sich dabei braun und nach vollständiger Zugabe wird für 1 h bei Siedetemperatur nachgerührt. Es wird nun mit einer Lösung aus 30,0 g (120 mmol) 4-(4-pentylcyclohexyl)cyclohexan-1-on in 200 ml THF bei Siedetemperatur tropfenweise versetzt und 1 h bei dieser Temperatur gerührt. Das Reaktionsgemisch wird auf Raumtemperatur abkühlen gelassen und vorsichtig mit Wasser und halbkonzentrierter Salzsäure sauer gestellt, mit Methyl-tert-butylether extrahiert und die Phasen getrennt. Die vereinigten organischen Phasen werden mit Wasser und gesättigter NaHCO₃-Lösung gewaschen, über Natriumsulfat getrocknet, filtriert und unter Vakuum eingeengt. Das erhaltene Zwischenprodukt wird nun in 700 ml Toluol gelöst, mit 1,29 g (6,97 mmol) Toluol-4-sulfonsäure- Monohydrat versetzt und für 7 h unter Rückfluss gerührt. Die Reaktionslösung verfärbt sich hierbei von gelborange nach dunkelbraun. Die Suspension wird mit gesättigter NaHCO₃-Lösung gewaschen, die wässrige Phase mit Toluol extrahiert und die vereinigten organischen Phasen mit gesättigter NaCl Lösung gewaschen, über Natriumsulfat getrocknet, filtriert und unter Vakuum eingeengt. Man erhält das Rohprodukt als braunen Feststoff, der an Kieselgel mit Heptan / Toluol (9:1 bis 2:1) via Säulenchromatographie gereinigt wird. Die Produktfraktionen werden unter Vakuum eingeengt und der erhaltene Feststoff aus Toluol mit etwas Heptan heiß ausgerührt und nach Abkühlen abgesaugt. Man erhält das Reaktionsprodukt als leicht gelben Feststoff.
¹H NMR (500 MHz, CDCl₃): δ = 0,91 ppm (t_{(überlagert)}, 7,23 Hz, 5 H, CH₃, CH₂), 1,03 (m_{c}, 2 H, CH₂), 1,18 (m_{c}, 4 H, CH₂), 1,23 - 1,46 (m, 8 H, CH₂), 1,75 - 1,89 (m, 4 H, CH₂), 1,96 (m_{c}, 2 H, CH₂), 2,56 (m_{c}, 1 H), 2,35 - 2,43 (m, 1 H), 2,45-2,52 (m, 1 H), 5,08 (s, 2 H, CH₂-O), 6,05 (m_{c}, 1 H), 6,94 (d, 8,86 Hz, 2 H), 7,34 (d_{(überlagert)}, J = 8,82 Hz, 3 H), 7,40 (t, 7,66 Hz, 2 H), 7,46 (d, 7,33 Hz, 2 H).

### 1.2. Synthese von 4-[4-(4-pentylcyclohexyl)cyclohexyl]phenol (B)

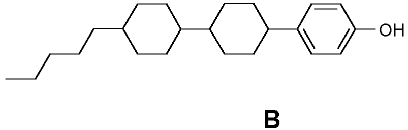

28,6 g (68,6 mmol) an Benzylether **A** werden in 280 ml THF gelöst und mit 7,5 g Palladium auf Kohle (54% Wasser, E101 R, Degussa) versetzt. Das Reaktionsgemisch wird nun unter Normaldruck bei Raumtemperatur unter Wasserstoffatmosphäre für 17,5 h gerührt. Die Reaktionslösung wird vom Katalysator abgetrennt und unter Vakuum eingeengt. Das erhaltene Rohprodukt wird aus Heptan kristallisiert und fällt als farbloser Feststoff an.
¹H NMR (500 MHz, CDCl₃): δ = 0,91 ppm (t_{(überlagert)}, 5 H, CH₃ CH₂), 1,03 (m_{c}, 3 H), 1.11 - 1,21 (m, 6 H), 1,22 - 1,47 (m, 8 H), 1,78 (m_{c}, 4 H), 1,85 (m_{c}, 2 H), 1,91 (d _{(breit)}, 12,03 Hz, 2 H), 2,41 (tt, J = 3,37, 12,14 Hz, 1 H, C*H*(CH₂)₂), 4,52 (s, 1 H, OH), 6,77 (d, J = 8,58, 2 H), 7,10 (d, J = 8,49, 2 H).

### 1.3 Synthese von 2,6-dibromo-4-[4-(4-pentylcyclohexyl)-cyclohexyl]phenol (C)

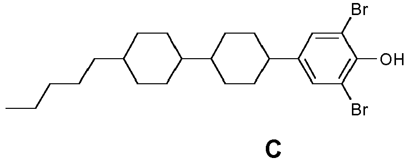

22,3 g (67,3 mmol) Phenol **B** werden in 400 ml Dichlormethan suspendiert und mit 2,00 ml (14,0 mmol) Diisopropylamin versetzt. 24,00 g (134,8 mmol) N-Bromsuccinimid werden in 200 ml Dichlormethan gelöst und bei Raumtemperatur tropfenweise zur Reaktionslösung zugegeben. Das Reaktionsgemisch wird für 16 h bei Raumtemperatur gerührt und anschließend mit Wasser versetzt, gerührt und die Phasen getrennt. Die Wasserphase wird mit Dichlormethan extrahiert und die vereinigten organischen Phasen werden mit gesättigter NaCl-Lösung gewaschen, über Natriumsulphat getrocknet, filtriert und unter Vakuum eingeengt. Man erhält einen gelben Feststoff, der aus Heptan (1:5) bei 5°C kristallisiert wird. Das Produkt fällt als leicht gelber Feststoff an.
¹H NMR (500 MHz, CDCl₃): δ = 0,91 ppm (t_{(überlagert)}, J = 7,22 Hz, 5 H, CH3 CH₂), 0,95 - 1,21(m, 9 H), 1,22 - 1,44 (m, 8 H), 1,76 (m_{c}, 4 H), 1,87 (m_{c}, 4 H), 2,40 (tt, J = 3,32, 12,15 Hz, 1 H, C*H*(CH₂)₂, 5,57 (s_{(breit)}, 1 H, OH), 7,30 (s, 2 H).

### 1.4 Synthese von 6-(2-{2,6-dibromo-4-[4-(4-pentylcyclohexyl)-cyclohexyl]phenoxy}ethyl)-2,2,3,3,9,9,10,10-octamethyl-4,8-dioxa-3,9-disilaundecan (E)

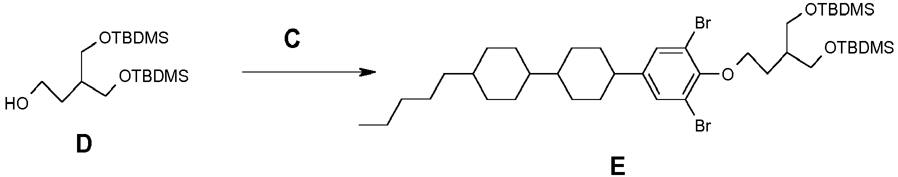

10,00 g (20,36 mmol) Dibromid **C**, 8,90 g (25,5 mmol) Alkohol **D** (Synthese vgl. EP 2918658 A2) und 6,70 g (25,55 mmol) Triphenylphosphin werden in 70,0 ml Tetrahydrofuran gelöst und tropfenweise mit 5,30 ml (27,00 mmol) Diisopropylazo-dicarboxylat versetzt. Die Reaktionslösung wird für 16 h bei Raumtemperatur gerührt und anschließend unter Vakuum eingeengt. Der erhaltene Feststoff wird mit Heptan und Heptan-Essigsäureethylester (9:1) über Kieselgel filtriert, die Produktfraktionen vereinigt und unter Vakuum eingeengt. Man erhält das Reaktionsprodukt als gelben Feststoff.

### 1.5 Synthese von 3-(2-{4-[(tert-butyldimethylsilyl)oxy]-3-{[(tert-butyldimethylsilyl)oxy]methyl}butoxy}-3-(3-hydroxypropyl)-5-[4-(4-pentylcyclohexyl)cyclohexyl]phenyl)propan-1-ol F

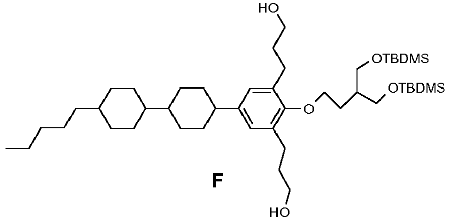

18,13 g (171,1 mmol) Natriumcarbonat werden in 96,4 ml Wasser gelöst. Es wird mit einer Lösung aus 31,2 g (38,0 mmol) Bromid **E** und 59,6 g (420,1 mmol) 2-butoxy-1,2-oxaborolan in 371,3 ml Tetrahydrofuran versetzt. Das Reaktionsgemisch wird mit 0,53 ml (3,81 mmol) Triethylamin, 0,80 g (4,58 mmol) Palladium(II)chlorid und 4,28 g (9,17 mmol) 2-Dicyclohexylphosphino-2',6'-diisopropoxy-1,1'-biphenyl versetzt. Das Reaktionsgemisch wird bei 80°C für 72 h gerührt, auf Raumtemperatur abkühlen gelassen, mit Wasser und Methyl-tert-butylether versetzt, gerührt und die Phasen getrennt. Die Wasserphase wird mit Methyl-tert-butylether extrahiert und die vereinigten organischen Phasen werden mit gesättigter NaCl-Lösung gewaschen, über Natriumsulfat getrocknet, filtriert und unter Vakuum eingeengt. Das erhaltene orange-gelbe Öl wird mit Heptan / Essigsäurethylester (8:2) über Kieselgel filtriert, die Produktfraktionen vereinigt und unter Vakuum eingeengt. Man erhält das Produkt als leicht-gelbes Öl.

### 1.6 Synthese von 3-{2-[4-hydroxy-3-(hydroxymethyl)butoxy]-3-{3-[(2-methylprop-2-enoyl)oxy]propyl}-5-[4-(4-pentylcyclohexyl)cyclohexyl]-phenyl}propyl 2-methylprop-2-enoate (G)

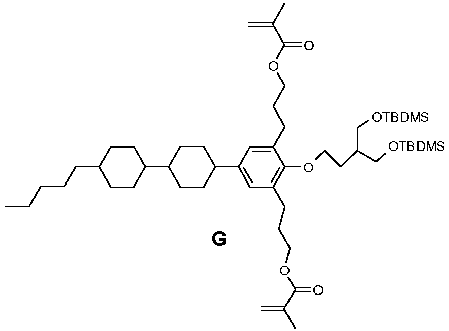

9,80 g (13,0 mmol) Bisalkohol **F** und 4,5 ml (53,1 mmol) Methacrylsäure werden in 60 ml Dichlormethan gelöst und auf 2°C gekühlt. Es wird nun eine Lösung aus 9,10 ml (52,8 mmol) 1-(3-Dimethylaminopropyl)-3-ethylcarbodiimid in 40 ml Dichlormethan tropfenweise zugegeben und für 16 h bei Raumtemperatur gerührt. Das Reaktionsgemisch wird unter Vakuum eingeengt und mit Dichlormethan und Dichlormethan-Methyl-tert-butylether (95:5) über Kieselgel mit einer oberen Schicht von Al₂O₃ (basisch) filtriert. Die Produktfraktionen werden vereinigt und unter Vakuum eingeengt. Man erhält das Reaktionsprodukt als farbloses Öl.
¹H NMR (500 MHz, CDCl₃): δ = 0,00 ppm (s, 12 H, Si(CH3)2), 0,85 (s_{(überlagert)}, 23 H, Si(C(CH₃)₃), CH₃, CH₂), 0,90 - 1,16 (m, 9 H), 1,16 - 1,14 (m, 8 H), 1,66-1,87 (m, 11 H), 1,91 (s, 6 H, CH₃), 1,96 (m_{c}, 4 H), 2,30 (tt, J = 3,17, 12,13 Hz, 1 H, C*H*(CH₂)₂), 2,65 (m_{c}, 4 H), 3,56 (m_{c}, 4 H), 3,76 (t, J = 6,68 Hz, 2 H), 4,13 (t, J = 6,56 Hz, 4 H), 5,51 (t, 1,6 Hz, 2 H), 6,06 (s, 2 H), 6,81 (s, 2 H).

### 1.7 Synthese von 3-{2-[4-hydroxy-3-(hydroxymethyl)butoxy]-3-{3-[(2-Methylprop-2-enoyl)oxy]propyl}-5-[4-(4-pentylcyclohexyl)cyclohexyl]-phenyl}propyl 2-methylprop-2-enoat 1

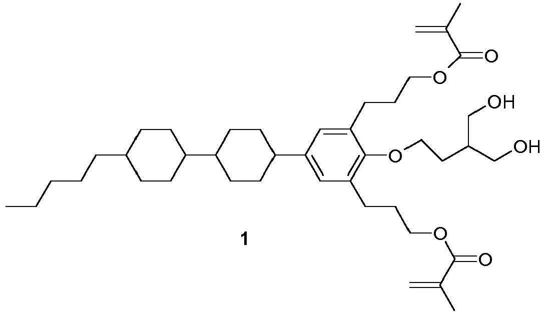

4,70 g (5,00 mmol) Verbindung **G** werden in 40 ml Tetrahydrofuran gelöst und auf 2°C gekühlt. Es wird nun tropfenweise mit 7,00 ml (14,0 mmol) Salzsäure (2 N) versetzt. Die Reaktionslösung wird nun 4 h bei Raumtemperatur gerührt. Nach vollständiger Entschützung wird mit gesättigter NaHCO₃-Lösung neutralisiert und das Reaktionsgemisch mit Methyl-tert-butylether versetzt und gerührt. Die Phasen werden getrennt, die Wasserphase mit Methyl-tert-butylether extrahiert, die vereinigten organischen Phasen mit Wasser und gesättigter NaCl-Lösung gewaschen, über Natriumsulfat getrocknet, filtriert und unter Vakuum bei einer Temperatur von maximal 40°C eingeengt. Das erhaltene Rohprodukt wird mit Heptan / Essigsäureethylester (1:1) über Kieselgel filtriert und die Produktfraktionen unter Vakuum eingeengt. Der erhaltene Feststoff wird aus Heptan / Methyl-tert-butylether (95:5) kristallisiert (60°C für die Lösung). Bei Raumtemperatur fällt das Reaktionsprodukt als farbloser Feststoff aus und kann abgesaugt werden.
Phasen: Tg -35°C, Schmelzpunkt 79°C
¹H NMR (500 MHz, CDCl₃): δ = 0,83- 0,94 ppm (t_{(überlagert)}, J = 7,21 Hz, 5 H), 0,96 - 1,21, 9 H), 1,22 - 1,45 (m, 8 H), 1,72 - 1,94 (m, 10 H), 1,97 (s_{(überlagert)}, 6 H, CH₃), 2,02 (m_{c}, 4 H), 2,10 (m_{c}, 1 H), 2,37 (tt_{(überlagert mit 2 OH)}, J = 3,14, 12,1 Hz, 3 H, C*H*(CH₂)₂), 2,69 (m_{c}, 4 H), 3,79 (dd, 6,7, 10,81 Hz, 2 H, C*H*₂OH), 3,86 (t, J = 6,31 Hz, 2 H), 3,90 (dd, 4,31, 10.80 Hz, 2 H, C*H*2OH), 4,24 (t, 6,7 Hz, 4 H), 5,56 (t, 1,59 Hz, 2 H, O(CO)C(CH₃)C*H*₂), 6,13 (s_{(breit)} 2 H, O(CO)C(CH₃)C*H*₂), 6,88 (s, 2 H).

Analog nach beschriebener Synthese lassen sich folgende Verbindungen herstellen:

### Beispiel 2.

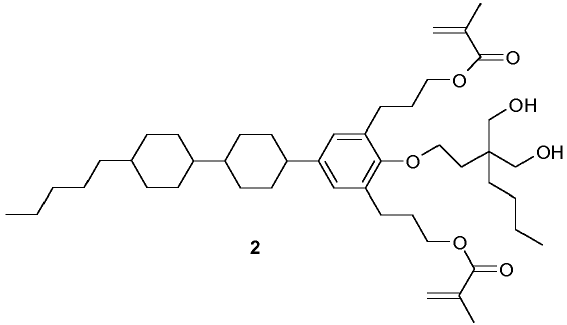

Farblose Kristalle.
Phasen: Tg -28°C, Schmelzpunkt 47°C.
¹H NMR (500 MHz, CDCl₃): δ = 0,91 ppm (m_{c}, 8 H, CH₃, CH₂), 1,03 (m_{c}, 3 H), 1,10 - 1,21 (m, 6 H), 1,22 - 1,50 (m, 14 H), 1,67 - 1,92 (m, 8 H), 1,97 (s_{(überlagert)}, 8 H, CH₃), 2,02 (m_{c}, 4 H), 2,37 (tt_{(überlagert mit 2 X OH}), 2,94, 9,18 Hz, 3 H, C*H*(CH₂)₂), 2,72 (m_{c} 4 H), 3,67 (2 X d_{(überlagert)}, J = 11,58 Hz, 4 H), 3,90 (t, J = 6,26 Hz, 2 H), 4,23 (t, J = 6,6 Hz, 4 H), 5,58 (t, J = 1,54 Hz, 2 H, O(CO)C(CH₃)C*H*₂), 6,13 (s_{(breit)}, 2 H, O(CO)C(CH₃)C*H*₂), 6,89 (s, 2 H).

### Beispiel 3.

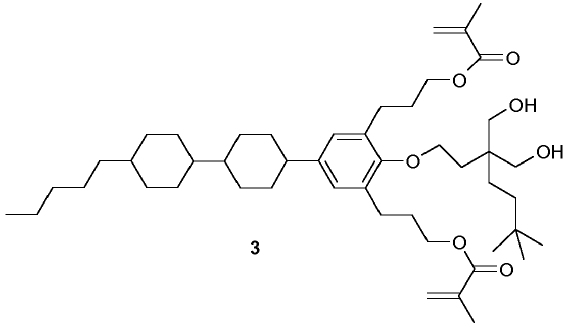

Farblose Kristalle.
Phasen: Tg -18°C, Schmelzpunkt 73°C.
¹H NMR (500 MHz, CDCl₃): δ = 0,82 - 0,94 ppm (s_{(überlagert)}, 14 H, *t*-Bu, CH₃, CH₂), 1,02 (m_{c}, 3 H),1,16 (m_{c}, 8 H), 1,30 (m_{c}, 8 H), 1,40 (m_{c}, 2 H), 1,70 - 1,92 (m, 8 H), 1,94 (t, J = 6,28 Hz, 2 H), 1,97 (s_{(überlagert)}, 6 H, CH₃), 2,02 (quint._{(breit)} J = 7,53 Hz, 4 H), 2,37 (tt, J = 2,92, 12,08 Hz, 1 H, C*H*(CH₂)₂), 2,50 (s_{(breit)}, 2 H, _{OH)}, 2,71 (m_{c}, 4 H), 3,65 (d, J = 11,13 Hz, 2 H, CH₂OH), 3,68 (d, J = 11,14 Hz, CH₂-OH), 3,89 (t, J = 6,23 H, 2 H), 4,23 (t, J = 6,61, 4 H), 5,59 (s_{(breit)}, 2 H, O(CO)C(CH₃)C*H*₂), 6,13 (s_{(breit)}, 2 H, O(CO)C(CH₃)C*H*₂), 6,89 (s, 2 H).

### Beispiel 4.

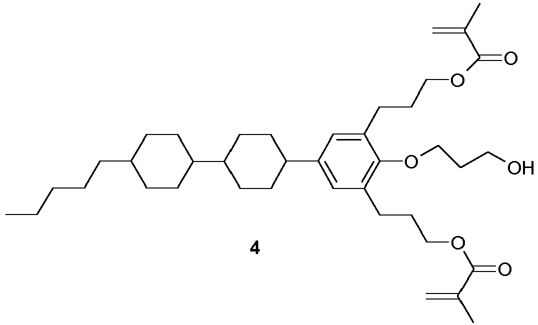

Farblose Kristalle.
Phasen: Tg -56°C, Schmelzpunkt 65°C.

### B) Mischungsbeispiele

Zur Herstellung von erfindungsgemäßen FK-Medien werden die folgenden flüssigkristallinen Mischungen bestehend aus niedermolekularen Komponenten in den angegebenen prozentualen Gewichtsanteilen verwendet (Akronyme vgl. Tabellen A - E oben).

**H1: Nematische Hostmischung (Δε < 0)**

| | | | |
|---|---|---|---|
| B-2O-O5 | 4.00 % | Klärpunkt [°C]: | 74.2 |
| CPP-3-2 | 8.00 % | Δn (589 nm, 20°C): | 0.109 |
| CC-3-V1 | 9.00 % | Δε (1 kHz, 20°C): | -3.1 |
| CC-3-O1 | 2.00 % | ε_{∥} (1 kHz, 20°C): | 3.6 |
| CC-3-4 | 8.00 % | ε_{⊥} (1 kHz, 20°C): | 6.7 |
| CC-3-5 | 7.00 % | K₁ (20°C) [pN]: | 14.5 |
| CCP-3-1 | 8.00 % | K₃ (20°C) [pN]: | 16.5 |
| CCP-V2-1 | 5.00 % | γ₁ (20°C) [mPa·s]: | 108 |
| CCY-3-O2 | 10.50 % | V₀ (20°C) [V]: | 2.41 |
| CLY-3-O2 | 1.00 % | | |
| CPY-3-O2 | 2.50 % | | |
| CY-3-O2 | 11.5 % | | |
| CP-3-O1 | 5.50 % | | |
| PY-3-O2 | 18.0 % | | |

**H2: Nematische Hostmischung (Δε < 0)**

| | | | |
|---|---|---|---|
| CPP-3-2 | 6.0 % | Klärpunkt [°C]: | 74.8 |
| CC-3-V1 | 6.0 % | Δn (589 nm, 20°C): | 0.107 |
| CC-3-4 | 9.0 % | Δε (1 kHz, 20°C): | -3.3 |
| CC-3-5 | 7.0 % | ε_{∥} (1 kHz, 20°C): | 3.6 |
| CCP-3-1 | 8.0 % | ε_{⊥} (1 kHz, 20°C): | 6.9 |
| CCP-3-3 | 3.0 % | K₁ (20°C) [pN]: | 14.2 |
| CCY-3-1 | 2.0 % | K₃ (20°C) [pN]: | 16.5 |
| CCY-3-O2 | 10.5 % | γ₁ (20°C) [mPa·s]: | 118 |
| CCY-4-O2 | 5.0 % | V₀ (20°C) [V]: | |
| CPY-3-O2 | 3.5 % | | |
| CY-3-O2 | 14 % | | |
| CP-3-O1 | 5.5 % | | |
| PY-1-O4 | 6.5 % | | |
| PY-3-O2 | 14 % | | |

**H3: Nematische Hostmischung (Δε < 0)**

| | | | |
|---|---|---|---|
| CY-3-O2 | 15.5 % | Klärpunkt [°C]: | 75.1 |
| CCY-3-O3 | 8.00 % | Δn (589 nm, 20°C): | 0.098 |
| CCY-4-O2 | 10.0 % | Δε (1 kHz, 20°C): | -3.0 |
| CPY-2-O2 | 5.50 % | ε_{∥} (1 kHz, 20°C): | 3.4 |
| CPY-3-O2 | 11.5 % | ε_{⊥} (1 kHz, 20°C): | 6.4 |
| CC-3-4 | 9.25 % | K₁ (20°C) [pN]: | 13.1 |
| CC-2-3 | 24.5 % | K₃ (20°C) [pN]: | 13.3 |
| PYP-2-3 | 8.75 % | γ₁ (20°C) [mPa·s]: | 113 |
| CP-3-O1 | 7.00 % | V₀ (20°C) [V]: | 2.22 |

**H4: Nematische Hostmischung (Δε < 0)**

| | | | |
|---|---|---|---|
| CY-3-O4 | 14.0 % | Klärpunkt [°C]: | 80.0 |
| CCY-3-O2 | 9.00 % | Δn (589 nm, 20°C): | 0.090 |
| CCY-3-O3 | 9.00 % | Δε (1 kHz, 20°C): | -3.3 |
| CPY-2-O2 | 10.0 % | ε_{∥} (1 kHz, 20°C): | 3.4 |
| CPY-3-O2 | 10.0 % | ε_{⊥} (1 kHz, 20°C): | 6.7 |
| CCY-3-1 | 8.00 % | K₁ (20°C) [pN]: | 15.1 |
| CC-3-4 | 9.00 % | K₃ (20°C) [pN]: | 14.6 |
| CC-3-5 | 6.00 % | γ₁ (20°C) [mPa·s]: | 140 |
| CP-5-3 | 10.0 % | V₀ (20°C) [V]: | 2.23 |
| CC-3-O1 | 6.00 % | | |
| CC-3-O3 | 9.00 % | | |

**H5: Nematische Hostmischung (Δε < 0)**

| | | | |
|---|---|---|---|
| CC-3-V1 | 9.00 % | Klärpunkt [°C]: | 74.7 |
| CC-2-3 | 18.0 % | Δn (589 nm, 20°C): | 0.098 |
| CC-3-4 | 3.00 % | Δε (1 kHz, 20°C): | -3.4 |
| CC-3-5 | 7.00 % | ε_{∥} (1 kHz, 20°C): | 3.5 |
| CCP-3-1 | 5.50 % | ε_{⊥} (1 kHz, 20°C): | 6.9 |
| CCY-3-O2 | 11.5 % | K₁ (20°C) [pN]: | 14.9 |
| CPY-2-O2 | 8.00 % | K₃ (20°C) [pN]: | 15.9 |
| CPY-3-O2 | 11.0 % | γ₁ (20°C) [mPa·s]: | 108 |
| CY-3-O2 | 15.5 % | V₀ (20°C) [V]: | 2.28 |
| PY-3-O2 | 11.5 % | | |

**H6: Nematische Hostmischung (Δε < 0)**

| | | | |
|---|---|---|---|
| CC-3-V | 37.5 % | Klärpunkt [°C]: | 74.8 |
| CC-3-V1 | 2.00 % | Δn (589 nm, 20°C): | 0.099 |
| CCY-4-O2 | 14.5 % | Δε (1 kHz, 20°C): | -2.9 |
| CPY-2-O2 | 10.5 % | ε_{∥} (1 kHz, 20°C): | 3.7 |
| CPY-3-O2 | 9.50 % | ε_{⊥} (1 kHz, 20°C): | 6.6 |
| CY-3-O2 | 15.0 % | K₁ (20°C) [pN]: | 12.2 |
| CY-3-O4 | 4.50 % | K₃ (20°C) [pN]: | 13.4 |
| PYP-2-4 | 5.50 % | γ₁ (20°C) [mPa·s]: | 92 |
| PPGU-3-F | 1.00 % | V₀ (20°C) [V]: | 2.28 |

**H7: Nematische Hostmischung (Δε < 0)**

| | | | |
|---|---|---|---|
| CC-2-3 | 20.0 % | Klärpunkt [°C]: | 74.8 |
| CC-3-O1 | 6.00 % | Δn (589 nm, 20°C): | 0.105 |
| CC-3-4 | 6.00 % | Δε (1 kHz, 20°C): | -3.2 |
| CCP-3-1 | 3.00 % | ε_{∥} (1 kHz, 20°C): | 3.5 |
| CCY-3-O2 | 11.0 % | ε_{⊥} (1 kHz, 20°C): | 6.8 |
| CPY-2-O2 | 12.0 % | K₁ (20°C) [pN]: | 12.7 |
| CPY-3-O2 | 11.0 % | K₃ (20°C) [pN]: | 13.6 |
| CY-3-O2 | 14.0 % | γ₁ (20°C) [mPa·s]: | 120 |
| CY-3-O4 | 4.00 % | V₀ (20°C) [V]: | 2.16 |
| CP-3-O1 | 4.00 % | | |
| PYP-2-3 | 9.00 % | | |

**H8: Nematische Hostmischung (Δε < 0)**

| | | | |
|---|---|---|---|
| CC-4-V | 17.0 % | Klärpunkt [°C]: | 106.1 |
| CCP-V-1 | 15.0 % | Δn (589 nm, 20°C): | 0.120 |
| CCEPC-3-3 | 2.50 % | Δε (1 kHz, 20°C): | -3.6 |
| CCY-3-O2 | 4.00 % | ε_{∥} (1 kHz, 20°C): | 3.5 |
| CCY-3-O3 | 5.00 % | ε_{⊥} (1 kHz, 20°C): | 7.0 |
| CCY-4-O2 | 5.00 % | K₁ (20°C) [pN]: | 16.8 |
| CLY-3-O2 | 3.50 % | K₃ (20°C) [pN]: | 17.3 |
| CLY-3-O3 | 2.00 % | γ₁ (20°C) [mPa·s]: | 207 |
| CPY-2-O2 | 8.00 % | V₀ (20°C) [V]: | 2.33 |
| CPY-3-O2 | 10.0 % | | |
| CY-3-O4 | 17.0 % | | |
| PYP-2-3 | 11.0 % | | |

**H9: Nematische Hostmischung (Δε < 0)**

| | | | |
|---|---|---|---|
| CY-3-O2 | 15.0 % | Klärpunkt [°C]: | 75.5 |
| CCY-4-O2 | 9.50 % | Δn (589 nm, 20°C): | 0.108 |
| CCY-5-O2 | 5.00 % | Δε (1 kHz, 20°C): | -3.0 |
| CPY-2-O2 | 9.00 % | ε_{∥} (1 kHz, 20°C): | 3.5 |
| CPY-3-O2 | 9.00 % | ε_{⊥} (1 kHz, 20°C): | 6.5 |
| CC-3-4 | 9.00 % | K₁ (20°C) [pN]: | 12.9 |
| CC-2-3 | 22.0 % | K₃ (20°C) [pN]: | 13.0 |
| PYP-2-3 | 7.00 % | γ₁ (20°C) [mPa·s]: | 115 |
| PYP-2-4 | 7.50 % | V₀ (20°C) [V]: | 2.20 |
| CP-3-O1 | 7.00 % | | |

**H10: Nematische Hostmischung (Δε < 0)**

| | | | |
|---|---|---|---|
| CY-3-O2 | 15.0 % | Klärpunkt [°C]: | 74.7 |
| CY-5-O2 | 6.50 % | Δn (589 nm, 20°C): | 0.108 |
| CCY-3-O2 | 11.0 % | Δε (1 kHz, 20°C): | -3.0 |
| CPY-2-O2 | 5.50 % | ε_{∥} (1 kHz, 20°C): | 3.6 |
| CPY-3-O2 | 10.5 % | ε_{⊥} (1 kHz, 20°C): | 6.6 |
| CC-3-V | 28.5 % | K₁ (20°C) [pN]: | 12.9 |
| CC-3-V1 | 10.0 % | K₃ (20°C) [pN]: | 15.7 |
| PYP-2-3 | 12.5 % | γ₁ (20°C) [mPa·s]: | 97 |
| PPGU-3-F | 0.50 % | V₀ (20°C) [V]: | 2.42 |

**H11: Nematische Hostmischung (Δε < 0)**

| | | | |
|---|---|---|---|
| CC-3-5 | 9.50 % | Klärpunkt [°C]: | 79.1 |
| CC-5-O1 | 5.00 % | Δn (589 nm, 20°C): | 0.091 |
| CCY-2-1 | 9.50 % | Δε (1 kHz, 20°C): | -3.6 |
| CCY-3-1 | 10.5 % | ε_{∥} (1 kHz, 20°C): | 3.5 |
| CCY-3-O2 | 10.5 % | ε_{⊥} (1 kHz, 20°C): | 7.1 |
| CCY-5-O2 | 9.50 % | K₁ (20°C) [pN]: | 14.6 |
| CPY-2-O2 | 12.0 % | K₃ (20°C) [pN]: | 14.5 |
| CY-3-O4 | 9.00 % | γ₁ (20°C) [mPa·s]: | 178 |
| CY-5-O4 | 11.0 % | V₀ (20°C) [V]: | 2.12 |
| CP-5-3 | 13.5 % | | |

**H12: Nematische Hostmischung (Δε < 0)**

| | | | |
|---|---|---|---|
| CPP-3-2 | 4.00 % | Klärpunkt [°C]: | 74.8 |
| CC-3-V1 | 8.00 % | Δn (589 nm, 20°C): | 0.106 |
| CC-2-3 | 13.0 % | Δε (1 kHz, 20°C): | -3.5 |
| CC-3-4 | 7.00 % | ε_{∥} (1 kHz, 20°C): | 3.6 |
| CC-3-5 | 7.00 % | ε_{⊥} (1 kHz, 20°C): | 7.1 |
| CCY-3-O2 | 13.0 % | K₁ (20°C) [pN]: | 14.8 |
| CPY-2-O2 | 7.00 % | K₃ (20°C) [pN]: | 15.8 |
| CPY-3-O2 | 12.0 % | γ₁ (20°C) [mPa·s]: | 115 |
| CY-3-O2 | 12.0 % | V₀ (20°C) [V]: | 2.23 |
| CP-3-O1 | 2.00 % | | |
| PY-3-O2 | 15.0 % | | |

**H13: Nematische Hostmischung (Δε < 0)**

| | | | |
|---|---|---|---|
| CY-3-O4 | 22.0 % | Klärpunkt [°C]: | 86.9 |
| CY-5-O4 | 12.0 % | Δn (589 nm, 20°C): | 0.111 |
| CCY-3-O2 | 6.00 % | Δε (1 kHz, 20°C): | -4.9 |
| CCY-3-O3 | 6.00 % | ε_{∥} (1 kHz, 20°C): | 3.8 |
| CCY-4-O2 | 6.00 % | ε_{⊥} (1 kHz, 20°C): | 8.7 |
| CPY-2-O2 | 10.0 % | K₁ (20°C) [pN]: | 14.9 |
| CPY-3-O2 | 10.0 % | K₃ (20°C) [pN]: | 15.9 |
| PYP-2-3 | 7.00 % | γ₁ (20°C) [mPa·s]: | 222 |
| CC-3-V1 | 7.00 % | V₀ (20°C) [V]: | 1.91 |
| CC-5-V | 10.0 % | | |
| CCEPC-3-3 | 2.00 % | | |
| CCEPC-3-5 | 2.00 % | | |

**H14: Nematische Hostmischung (Δε < 0)**

| | | | |
|---|---|---|---|
| CY-3-O4 | 12.0 % | Klärpunkt [°C]: | 86.0 |
| CY-5-O2 | 10.0 % | Δn (589 nm, 20°C): | 0.110 |
| CY-5-O4 | 8.00 % | Δε (1 kHz, 20°C): | -5.0 |
| CCY-3-O2 | 8.00 % | ε_{∥} (1 kHz, 20°C): | 3.8 |
| CCY-4-O2 | 7.00 % | ε_{⊥} (1 kHz, 20°C): | 8.8 |
| CCY-5-O2 | 6.00 % | K₁ (20°C) [pN]: | 14.7 |
| CCY-2-1 | 8.00 % | K₃ (20°C) [pN]: | 16.0 |
| CCY-3-1 | 7.00 % | γ₁ (20°C) [mPa·s]: | 250 |
| CPY-3-O2 | 9.00 % | V₀ (20°C) [V]: | 1.90 |
| CPY-3-O2 | 9.00 % | | |
| CPP-3-2 | 6.00 % | | |
| CP-5-3 | 10.0 % | | |

**H15: Nematische Hostmischung (Δε < 0)**

| | | | |
|---|---|---|---|
| CC-3-V1 | 10.25 % | Klärpunkt [°C]: | 74.7 |
| CC-2-3 | 18.5 % | Δn (589 nm, 20°C): | 0.103 |
| CC-3-5 | 6.75 % | Δε (1 kHz, 20°C): | -3.1 |
| CCP-3-1 | 6.00 % | ε_{∥} (1 kHz, 20°C): | 3.4 |
| CCY-3-1 | 2.50 % | ε_{⊥} (1 kHz, 20°C): | 6.4 |
| CCY-3-O2 | 12.0 % | K₁ (20°C) [pN]: | 15.4 |
| CPY-2-O2 | 6.00 % | K₃ (20°C) [pN]: | 16.8 |
| CPY-3-O2 | 9.75 % | γ₁ (20°C) [mPa·s]: | 104 |
| CY-3-O2 | 11.5 % | V₀ (20°C) [V]: | 2.46 |
| PP-1-2V1 | 3.75 % | | |
| PY-3-O2 | 13.0 % | | |

**H16: Nematische Hostmischung (Δε < 0)**

| | | | |
|---|---|---|---|
| CC-3-V | 27.5 % | Klärpunkt [°C]: | 74.7 |
| CC-3-V1 | 10.0 % | Δn (589 nm, 20°C): | 0.104 |
| CC-3-5 | 8.00 % | Δε (1 kHz, 20°C): | -3.0 |
| CCY-3-O2 | 9.25 % | ε_{∥} (1 kHz, 20°C): | 3.4 |
| CLY-3-O2 | 10.0 % | ε_{⊥} (1 kHz, 20°C): | 6.4 |
| CPY-3-O2 | 11.75 % | K₁ (20°C) [pN]: | 15.3 |
| PY-3-O2 | 14.0 % | K₃ (20°C) [pN]: | 16.2 |
| PY-4-O2 | 9.00 % | γ₁ (20°C) [mPa·s]: | 88 |
| PYP-2-4 | 0.50 % | V₀ (20°C) [V]: | 2.44 |

**H17: Nematische Hostmischung (Δε < 0)**

| | | | |
|---|---|---|---|
| CPP-3-2 | 6.50 % | Klärpunkt [°C]: | 74.7 |
| CC-3-V1 | 8.00 % | Δn (589 nm, 20°C): | 0.104 |
| CC-2-3 | 17.0 % | Δε (1 kHz, 20°C): | -3.0 |
| CC-3-4 | 6.50 % | ε_{∥} (1 kHz, 20°C): | 3.4 |
| CCY-3-O1 | 3.50 % | ε_{⊥} (1 kHz, 20°C): | 6.3 |
| CCY-3-O2 | 12.5 % | K₁ (20°C) [pN]: | 14.8 |
| CPY-2-O2 | 5.50 % | K₃ (20°C) [pN]: | 15.8 |
| CPY-3-O2 | 10.0 % | γ₁ (20°C) [mPa·s]: | 106 |
| CY-3-O2 | 15.5 % | | |
| CP-3-O1 | 4.50 % | | |
| PP-1-2V1 | 5.00 % | | |
| PY-3-O2 | 5.50 % | | |

**H18: Nematische Hostmischung (Δε < 0)**

| | | | | |
|---|---|---|---|---|
| CPP-3-2 | 10.5 | % | Klärpunkt [°C]: | 74.5 |
| CC-3-4 | 9.0 | % | Δn (589 nm, 20°C): | 0.104 |
| CC-3-5 | 9.0 | % | Δε (1 kHz, 20°C): | -3.4 |
| CCP-3-1 | 8.0 | % | ε_{∥} (1 kHz, 20°C): | 3.7 |
| CCY-3-O2 | 9.5 | % | ε_{⊥} (1 kHz, 20°C): | 7 |
| CCY-4-O2 | 5.5 | % | K₁ (20°C) [pN]: | 14 |
| CPY-3-O2 | 5.5 | % | K₃ (20°C) [pN]: | 15.7 |
| CY-3-O2 | 15 | % | γ₁ (20°C) [mPa·s]: | 128 |
| CY-5-O2 | 5.0 | % | | |
| CP-3-O1 | 7.0 | % | | |
| PY-3-O2 | 16 | % | | |

**H19: Nematische Hostmischung (Δε > 0)**

| | | | |
|---|---|---|---|
| CC-4-V | 10.0 % | Klärpunkt [°C]: | 77.0 |
| CC-5-V | 13.5 % | Δn (589 nm, 20°C): | 0.113 |
| PGU-3-F | 6.50 % | Δε (1 kHz, 20°C): | 19.2 |
| ACQU-2-F | 10.0 % | ε_{∥} (1 kHz, 20°C): | 23.8 |
| ACQU-3-F | 12.0 % | ε_{⊥} (1 kHz, 20°C): | 4.6 |
| PUQU-3-F | 11.0 % | K₁ (20°C) [pN]: | 11.5 |
| CCP-V-1 | 12.0 % | K₃ (20°C) [pN]: | 11.1 |
| APUQU-2-F | 6.00 % | γ₁ (20°C) [mPa·s]: | 122 |
| APUQU-3-F | 7.00 % | V₀ (20°C) [V]: | 0.81 |
| PGUQU-3-F | 8.00 % | | |
| CPGU-3-OT | 4.00 % | | |

**H20: Nematische Hostmischung (Δε > 0)**

| | | | |
|---|---|---|---|
| PGU-2-F | 3.50 % | Klärpunkt [°C]: | 77.0 |
| PGU-3-F | 7.00 % | Δn (589 nm, 20°C): | 0.105 |
| CC-3-V1 | 15.0 % | Δε (1 kHz, 20°C): | 7.2 |
| CC-4-V | 18.0 % | ε_{∥} (1 kHz, 20°C): | 10.3 |
| CC-5-V | 20.0 % | ε_{⊥} (1 kHz, 20°C): | 3.1 |
| CCP-V-1 | 6.00 % | K₁ (20°C) [pN]: | 15.3 |
| APUQU-3-F | 15.0 % | K₃ (20°C) [pN]: | 13.5 |
| PUQU-3-F | 5.50 % | γ₁ (20°C) [mPa·s]: | 63 |
| PGP-2-4 | 3.00 % | V₀ (20°C) [V]: | 1.53 |
| CPP-3-2 | 7.00 % | | |

**H21: Nematische Hostmischung (Δε > 0)**

| | | | |
|---|---|---|---|
| APUQU-2-F | 6.00 % | Klärpunkt [°C]: | 74.0 |
| APUQU-3-F | 12.0 % | Δn (589 nm, 20°C): | 0.120 |
| PUQU-3-F | 18.0 % | Δε (1 kHz, 20°C): | 17.4 |
| CPGU-3-OT | 9.00 % | ε_{∥} (1 kHz, 20°C): | 22.0 |
| CCGU-3-F | 3.00 % | ε_{⊥} (1 kHz, 20°C): | 4.5 |
| CPU-3-F | 14.0 % | K₁ (20°C) [pN]: | 10.1 |
| CCQU-3-F | 10.0 % | K₃ (20°C) [pN]: | 10.8 |
| CC-3-V | 25.0 % | γ₁ (20°C) [mPa·s]: | 111 |
| PGP-2-2V | 3.00 % | V₀ (20°C) [V]: | 0.80 |

**H22: Nematische Hostmischung (Δε > 0)**

| | | | |
|---|---|---|---|
| PUQU-3-F | 15.0 % | Klärpunkt [°C]: | 74.3 |
| APUQU-2-F | 5.00 % | Δn (589 nm, 20°C): | 0.120 |
| APUQU-3-F | 12.0 % | Δε (1 kHz, 20°C): | 14.9 |
| CCQU-3-F | 11.0 % | ε_{∥} (1 kHz, 20°C): | 19.1 |
| CCQU-5-F | 1.50 % | ε_{⊥} (1 kHz, 20°C): | 4.3 |
| CPGU-3-OT | 5.00 % | K₁ (20°C) [pN]: | 11.2 |
| CPP-3-OT | 4.50 % | K₃ (20°C) [pN]: | 10.8 |
| CGU-3-F | 10.0 % | γ₁ (20°C) [mPa·s]: | 98 |
| PGP-2-3 | 1.50 % | V₀ (20°C) [V]: | 0.91 |
| PGP-2-2V | 8.00 % | | |
| CC-3-V | 26.5 % | | |

**H23: Nematische Hostmischung (Δε > 0)**

| | | | |
|---|---|---|---|
| CCQU-3-F | 9.00 % | Klärpunkt [°C]: | 94.5 |
| CCQU-5-F | 9.00 % | Δn (589 nm, 20°C): | 0.121 |
| PUQU-3-F | 16.0 % | Δε (1 kHz, 20°C): | 20.4 |
| APUQU-2-F | 8.00 % | ε_{∥} (1 kHz, 20°C): | 24.7 |
| APUQU-3-F | 9.00 % | ε_{⊥} (1 kHz, 20°C): | 4.3 |
| PGUQU-3-F | 8.00 % | K₁ (20°C) [pN]: | 12.1 |
| CPGU-3-OT | 7.00 % | K₃ (20°C) [pN]: | 13.9 |
| CC-4-V | 18.0 % | γ₁ (20°C) [mPa·s]: | 163 |
| CC-5-V | 5.00 % | V₀ (20°C) [V]: | 0.81 |
| CCP-V-1 | 6.00 % | | |
| CCEPC-3-3 | 3.00 % | | |
| PPGU-3-F | 2.00 % | | |

**H24: Nematische Hostmischung (Δε > 0)**

| | | | |
|---|---|---|---|
| CC-3-V | 28.50 % | Klärpunkt [°C]: | 85.6 |
| CCP-V-1 | 3.00 % | Δn (589 nm, 20°C): | 0.121 |
| CCEPC-3-3 | 2.00 % | Δε (1 kHz, 20°C): | 19.5 |
| PGU-2-F | 4.00 % | ε_{∥} (1 kHz, 20°C): | 23.8 |
| CCQU-3-F | 8.00 % | ε_{⊥} (1 kHz, 20°C): | 4.3 |
| CCQU-5-F | 6.00 % | K₁ (20°C) [pN]: | 11.6 |
| CCGU-3-F | 3.00 % | K₃ (20°C) [pN]: | 12.7 |
| PUQU-2-F | 2.00 % | γ₁ (20°C) [mPa·s]: | 126 |
| PUQU-3-F | 10.0 % | V₀ (20°C) [V]: | 0.81 |
| APUQU-2-F | 6.00 % | | |
| APUQU-3-F | 9.00 % | | |
| PGUQU-3-F | 5.00 % | | |
| PGUQU-4-F | 5.00 % | | |
| PGUQU-5-F | 4.00 % | | |
| CPGU-3-OT | 4.00 % | | |
| PPGU-3-F | 0.50 % | | |

**H25: Nematische Hostmischung (Δε < 0)**

| | | | |
|---|---|---|---|
| CC-3-V1 | 9.00 % | Klärpunkt [°C]: | 74.6 |
| CC-3-O1 | 3.50 % | Δn (589 nm, 20°C): | 0.0984 |
| CC-3-4 | 8.00 % | Δε (1 kHz, 20°C): | -3.6 |
| CC-3-5 | 8.00 % | ε_{∥} (1 kHz, 20°C): | 3.6 |
| CCP-3-1 | 6.00 % | ε_{⊥} (1 kHz, 20°C): | 7.1 |
| CCY-3-O1 | 6.50 % | K₁ (20°C) [pN]: | 14.1 |
| CCY-3-O2 | 12.5 % | K₃ (20°C) [pN]: | 17 |
| CPY-3-O2 | 10.0 % | γ₁ (20°C) [mPa·s]: | 119 |
| CY-3-O2 | 15.5 % | V₀ (20°C) [V]: | 2.31 |
| CP-3-O1 | 8.5 % | | |
| PY-3-O2 | 12.5 % | | |

**H26: Nematische Hostmischung (Δε < 0)**

| | | | |
|---|---|---|---|
| CC-3-5 | 9.50 % | Klärpunkt [°C]: | 79.1 |
| CC-5-O1 | 5.00 % | Δn (589 nm, 20°C): | 0.0911 |
| CCY-2-1 | 9.50 % | Δε (1 kHz, 20°C): | -3.6 |
| CCY-3-1 | 10.5 % | ε_{∥} (1 kHz, 20°C): | 3.5 |
| CCY-3-O2 | 10.5 % | ε_{⊥} (1 kHz, 20°C): | 7.1 |
| CCY-5-O2 | 9.50 % | K₁ (20°C) [pN]: | 14.6 |
| CPY-2-O2 | 12.0 % | K₃ (20°C) [pN]: | 14.5 |
| CY-3-O4 | 9.00 % | γ₁ (20°C) [mPa·s]: | 178 |
| CY-5-O4 | 11.0 % | V₀ (20°C) [V]: | 2.12 |
| CP-5-3 | 13.5 % | | |

**H27: Nematische Hostmischung (Δε < 0)**

| | | | |
|---|---|---|---|
| CC-3-V | 37.5 % | Klärpunkt [°C]: | 74.8 |
| CC-3-V1 | 2.00 % | Δn (589 nm, 20°C): | 0.0987 |
| CCY-4-O2 | 14.5 % | Δε (1 kHz, 20°C): | -2.9 |
| CPY-2-O2 | 10.5 % | ε_{∥} (1 kHz, 20°C): | 3.7 |
| CPY-3-O2 | 9.5 % | ε_{⊥} (1 kHz, 20°C): | 6.6 |
| CY-3-O2 | 15.0 % | K₁ (20°C) [pN]: | 12.2 |
| CY-3-O4 | 4.50 % | K₃ (20°C) [pN]: | 13.4 |
| PYP-2-4 | 5.50 % | γ₁ (20°C) [mPa·s]: | 92 |
| PPGU-3-F | 1.00 % | V₀ (20°C) [V]: | 2.28 |

**H28: Nematische Hostmischung (Δε < 0)**

| | | | |
|---|---|---|---|
| CC-3-V | 37.5 % | Klärpunkt [°C]: | 75.4 |
| CC-5-O1 | 2.00 % | Δn (589 nm, 20°C): | 0.1034 |
| CCY-3-O2 | 12.0 % | Δε (1 kHz, 20°C): | -3.3 |
| CCY-3-O3 | 6.50 % | ε_{∥} (1 kHz, 20°C): | 3.6 |
| CPY-2-O2 | 12.0 % | ε_{⊥} (1 kHz, 20°C): | 6.9 |
| CPY-3-O2 | 10.0 % | K₁ (20°C) [pN]: | 13.4 |
| CY-3-O2 | 2.00 % | K₃ (20°C) [pN]: | 15 |
| PY-3-O2 | 16.0 % | γ₁ (20°C) [mPa·s]: | 95 |
| CP-3-O1 | 2.00 % | V₀ (20°C) [V]: | 2.24 |

**H29: Nematische Hostmischung (Δε < 0)**

| | | | |
|---|---|---|---|
| CC-3-V | 22.5 % | Klärpunkt [°C]: | 74.8 |
| CC-3-V1 | 9.75 % | Δn (589 nm, 20°C): | 0.1027 |
| CC-1-3 | 0.75 % | Δε (1 kHz, 20°C): | -3.2 |
| CC-3-4 | 5.5 % | ε_{∥} (1 kHz, 20°C): | 3.5 |
| CC-3-5 | 4.00 % | ε_{⊥} (1 kHz, 20°C): | 6.8 |
| CCY-3-O1 | 10 % | K₁ (20°C) [pN]: | 14.4 |
| CCY-3-O2 | 12 % | K₃ (20°C) [pN]: | 15.2 |
| CPY-2-O2 | 10 % | γ₁ (20°C) [mPa·s]: | |
| CPY-3-O2 | 2.0 % | V₀ (20°C) [V]: | 2.29 |
| CY-3-O2 | 0.5 % | | |
| PP-1-2V1 | 0.25 % | | |
| PY-1-O4 | 4.25 % | | |
| PY-3-O2 | 17 % | | |
| PYP-2-3 | 1.5 % | | |

**H30: Nematische Hostmischung (Δε < 0)**

| | | | |
|---|---|---|---|
| CPP-3-2 | 4.0 % | Klärpunkt [°C]: | 74.6 |
| CC-3-V | 10 % | Δn (589 nm, 20°C): | 0.099 |
| CC-3-V1 | 8.5 % | Δε (1 kHz, 20°C): | -3.4 |
| CC-3-4 | 4.5 % | ε_{∥} (1 kHz, 20°C): | 3.6 |
| CC-3-5 | 8.0 % | ε_{⊥} (1 kHz, 20°C): | 7 |
| CCP-3-1 | 4.25 % | K₁ (20°C) [pN]: | 14.2 |
| CCY-3-O1 | 6.5 % | K₃ (20°C) [pN]: | 15.9 |
| CCY-3-O2 | 12.75 % | γ₁ (20°C) [mPa·s]: | 108 |
| CCY-4-O2 | 6.0 % | V₀ (20°C) [V]: | 2.28 |
| CY-3-O2 | 15.5 % | | |
| CP-3-O1 | 2.0 % | | |
| PY-3-O2 | 16 % | | |
| PYP-2-3 | 2.0 % | | |

**H31: Nematische Hostmischung (Δε < 0)**

| | | | |
|---|---|---|---|
| CC-3-V | 15 % | Klärpunkt [°C]: | 74.4 |
| CC-3-V1 | 9.0 % | Δn (589 nm, 20°C): | 0.1086 |
| CC-2-3 | 8.0 % | Δε (1 kHz, 20°C): | -3.2 |
| CC-3-4 | 7.5 % | ε_{∥} (1 kHz, 20°C): | 3.5 |
| CCY-3-O2 | 10 % | ε_{⊥} (1 kHz, 20°C): | 6.7 |
| CCY-5-O2 | 8.0 % | K₁ (20°C) [pN]: | 14.3 |
| CPY-2-O2 | 3.0 % | K₃ (20°C) [pN]: | 15.7 |
| CPY-3-O2 | 8.5 % | γ₁ (20°C) [mPa·s]: | 102 |
| CY-3-O2 | 7.0 % | V₀ (20°C) [V]: | 2.33 |
| PY-3-O2 | 16 % | | |
| PYP-2-3 | 8.0 % | | |

**H32: Nematische Hostmischung (Δε < 0)**

| | | | |
|---|---|---|---|
| CPP-3-2 | 6.0 % | Klärpunkt [°C]: | 75.2 |
| CC-3-O1 | 4.0 % | Δn (589 nm, 20°C): | 0.1095 |
| CC-3-4 | 9.0 % | Δε (1 kHz, 20°C): | -3.1 |
| CC-3-5 | 9.0 % | ε_{∥} (1 kHz, 20°C): | 3.6 |
| CCP-3-1 | 8.0 % | ε_{⊥} (1 kHz, 20°C): | 6.7 |
| CCP-3-3 | 1.0 % | K₁ (20°C) [pN]: | 13.8 |
| CCY-3-O2 | 12 % | K₃ (20°C) [pN]: | 16.5 |
| CLY-3-O2 | 1.0 % | γ₁ (20°C) [mPa·s]: | 119 |
| CPY-3-O2 | 11 % | V₀ (20°C) [V]: | 2.41 |
| CY-3-O2 | 9.5 % | | |
| CP-3-O1 | 11.5 % | | |
| PY-3-O2 | 18 % | | |

**H33: Nematische Hostmischung (Δε < 0)**

| | | | |
|---|---|---|---|
| CPP-3-2 | 3.0 % | Klärpunkt [°C]: | 75.2 |
| CC-3-V1 | 9.0 % | Δn (589 nm, 20°C): | 0.1098 |
| CC-3-O1 | 2.5 % | Δε (1 kHz, 20°C): | -3.1 |
| CC-3-4 | 9.0 % | ε_{∥} (1 kHz, 20°C): | 3.6 |
| CC-3-5 | 9.0 % | ε_{⊥} (1 kHz, 20°C): | 6.7 |
| CCP-3-1 | 7.5 % | K₁ (20°C) [pN]: | 14.6 |
| CCP-V2-1 | 5.0 % | K₃ (20°C) [pN]: | 16.6 |
| CCY-3-O2 | 4.0 % | γ₁ (20°C) [mPa·s]: | 114 |
| CPY-2-O2 | 5.5 % | V₀ (20°C) [V]: | 2.43 |
| CPY-3-O2 | 10.5 % | | |
| CY-3-O2 | 15 % | | |
| CP-3-O1 | 1.5 % | | |
| PY-3-O2 | 18 % | | |
| PPGU-3-F | 0.5 % | | |

**H34: Nematische Hostmischung (Δε < 0)**

| | | | |
|---|---|---|---|
| CPP-3-2 | 8.5 % | Klärpunkt [°C]: | 74.7 |
| CC-3-V1 | 9.0 % | Δn (589 nm, 20°C): | 0.1097 |
| CC-3-O1 | 2.0 % | Δε (1 kHz, 20°C): | -3.1 |
| CC-3-4 | 9.0 % | ε_{∥} (1 kHz, 20°C): | 3.5 |
| CC-3-5 | 9.0 % | ε_{⊥} (1 kHz, 20°C): | 6.6 |
| CCP-3-1 | 2.5 % | K₁ (20°C) [pN]: | 14.2 |
| CCP-V2-1 | 5.0 % | K₃ (20°C) [pN]: | 16.6 |
| CCY-3-O2 | 7.5 % | γ₁ (20°C) [mPa·s]: | 112 |
| CLY-3-O2 | 1.0 % | V₀ (20°C) [V]: | 2.44 |
| CPY-3-O2 | 10.5 % | | |
| CY-3-O2 | 15 % | | |
| CP-3-O1 | 3.0 % | | |
| PY-3-O2 | 18 % | | |

**H35: Nematische Hostmischung (Δε < 0)**

| | | | |
|---|---|---|---|
| B-2O-O5 | 4.0 % | Klärpunkt [°C]: | 75 |
| CPP-3-2 | 2.0 % | Δn (589 nm, 20°C): | 0.1094 |
| CC-3-O1 | 5.0 % | Δε (1 kHz, 20°C): | -3.1 |
| CC-3-4 | 9.0 % | ε_{∥} (1 kHz, 20°C): | 3.6 |
| CC-3-5 | 9.0 % | ε_{⊥} (1 kHz, 20°C): | 6.7 |
| CCP-3-1 | 8.0 % | K₁ (20°C) [pN]: | 13.9 |
| CCP-3-3 | 5.0 % | K₃ (20°C) [pN]: | 16.4 |
| CCY-3-O2 | 11.5 % | γ₁ (20°C) [mPa·s]: | 117 |
| CLY-3-O2 | 1.0 % | V₀ (20°C) [V]: | 2.42 |
| CPY-3-O2 | 10.5 % | | |
| CY-3-O2 | 2.0 % | | |
| CP-3-O1 | 15 % | | |
| PY-3-O2 | 18 % | | |

**H36: Nematische Hostmischung (Δε < 0)**

| | | | |
|---|---|---|---|
| CPP-3-2 | 7.5 % | Klärpunkt [°C]: | 74.8 |
| CC-3-V1 | 9.0 % | Δn (589 nm, 20°C): | 0.1098 |
| CC-3-O1 | 1.5 % | Δε (1 kHz, 20°C): | -3.1 |
| CC-3-4 | 9.0 % | ε_{∥} (1 kHz, 20°C): | 3.5 |
| CC-3-5 | 9.0 % | ε_{⊥} (1 kHz, 20°C): | 6.6 |
| CCP-3-1 | 4.0 % | K₁ (20°C) [pN]: | 14.4 |
| CCP-V2-1 | 5.0 % | K₃ (20°C) [pN]: | 16.6 |
| CCY-3-O2 | 7.0 % | γ₁ (20°C) [mPa·s]: | 112 |
| CPY-2-O2 | 2.0 % | V₀ (20°C) [V]: | 2.44 |
| CPY-3-O2 | 10 % | | |
| CY-3-O2 | 15 % | | |
| CP-3-O1 | 3.0 % | | |
| PY-3-O2 | 18 % | | |

**H37: Nematische Hostmischung (Δε < 0)**

| | | | |
|---|---|---|---|
| CY-3-O2 | 10 % | Klärpunkt [°C]: | 100 |
| CY-3-O4 | 20 % | Δn (589 nm, 20°C): | 0.0865 |
| CY-5-O4 | 20 % | Δε (1 kHz, 20°C): | -5.4 |
| CCY-3-O2 | 6.0 % | ε_{∥} (1 kHz, 20°C): | 3.9 |
| CCY-3-O3 | 6.0 % | ε_{⊥} (1 kHz, 20°C): | 9.3 |
| CCY-4-O2 | 6.0 % | K₁ (20°C) [pN]: | 15.6 |
| CCY-5-O2 | 6.0 % | K₃ (20°C) [pN]: | 16.6 |
| CCZC-3-3 | 3.0 % | γ₁ (20°C) [mPa·s]: | 347 |
| CCZC-3-5 | 3.5 % | V₀ (20°C) [V]: | 1.84 |
| CCZC-4-3 | 3.5 % | | |
| CCZC-4-5 | 3.5 % | | |
| CCEPC-3-3 | 4.0 % | | |
| CCEPC-3-4 | 4.5 % | | |
| CCEPC-3-5 | 4.0 % | | |

**H38: Nematische Hostmischung (Δε < 0)**

| | | | |
|---|---|---|---|
| Y-4O-O4 | 12.5 % | Klärpunkt [°C]: | 105 |
| CY-3-O4 | 5.0 % | Δn (589 nm, 20°C): | 0.0868 |
| CY-5-O4 | 18 % | Δε (1 kHz, 20°C): | -5.4 |
| CCY-3-O1 | 4.0 % | ε_{∥} (1 kHz, 20°C): | 4.2 |
| CCY-3-O2 | 6.0 % | ε_{⊥} (1 kHz, 20°C): | 9.6 |
| CCY-3-O3 | 6.0 % | K₁ (20°C) [pN]: | 16.7 |
| CCY-4-O2 | 6.0 % | K₃ (20°C) [pN]: | 16.5 |
| CCY-5-O2 | 6.0 % | γ₁ (20°C) [mPa·s]: | |
| CPY-3-O2 | 4.5 % | V₀ (20°C) [V]: | 1.85 |
| CCZC-3-3 | 4.0 % | | |
| CCZC-3-5 | 4.0 % | | |
| CCZC-4-3 | 4.0 % | | |
| CCZC-4-5 | 4.0 % | | |
| CCOC-3-3 | 2.0 % | | |
| CCOC-4-3 | 2.0 % | | |
| CCEPC-3-3 | 4.0 % | | |
| CCEPC-3-4 | 4.0 % | | |
| CCEPC-3-5 | 4.0 % | | |

**H39: Nematische Hostmischung (Δε < 0)**

| | | | |
|---|---|---|---|
| Y-4O-O4 | 3.0 % | Klärpunkt [°C]: | 108 |
| CY-3-O4 | 8.0. % | Δn (589 nm, 20°C): | 0.1096 |
| CCY-3-O1 | 4.0 % | Δε (1 kHz, 20°C): | -2.4 |
| CCY-3-O2 | 6.0 % | ε_{∥} (1 kHz, 20°C): | 3.2 |
| CCY-3-O3 | 6.0 % | ε_{⊥} (1 kHz, 20°C): | 5.6 |
| CPY-2-O2 | 8.0 % | K₁ (20°C) [pN]: | 16.3 |
| CPY-3-O2 | 8.0 % | K₃ (20°C) [pN]: | 18.9 |
| CP-3-O1 | 5.5 % | γ₁ (20°C) [mPa·s]: | |
| CC-4-V | 15 % | V₀ (20°C) [V]: | 2.99 |
| CC-3-V1 | 5.5 % | | |
| CCP-V-1 | 13 % | | |
| CCP-V2-1 | 13 % | | |
| CPTP-3-O1 | 5.0 % | | |

**H40: Nematische Hostmischung (Δε < 0)**

| | | | |
|---|---|---|---|
| CY-3-O4 | 16 % | Klärpunkt [°C]: | 109 |
| CCY-3-O1 | 4.0 % | Δn (589 nm, 20°C): | 0.0854 |
| CCY-3-O2 | 6.0 % | Δε (1 kHz, 20°C): | -2.3 |
| CCY-3-O3 | 6.0 % | ε_{∥} (1 kHz, 20°C): | 3.1 |
| CCY-4-O2 | 6.0 % | ε_{⊥} (1 kHz, 20°C): | 5.4 |
| CCY-5-O2 | 5.0 % | K₁ (20°C) [pN]: | 16.3 |
| CC-3-O1 | 6.0 % | K₃ (20°C) [pN]: | 19.4 |
| CC-4-V | 15 % | γ₁ (20°C) [mPa·s]: | |
| CC-3-V1 | 6.0 % | V₀ (20°C) [V]: | 3.08 |
| CCP-V-1 | 13 % | | |
| CCP-V2-1 | 13 % | | |
| CCEPC-3-3 | 4.0 % | | |

**H41: Nematische Hostmischung (Δε < 0)**

| | | | |
|---|---|---|---|
| Y-4O-O4 | 10 % | Klärpunkt [°C]: | 107 |
| CY-3-O2 | 7.0 % | Δn (589 nm, 20°C): | 0.1104 |
| CY-3-O4 | 15 % | Δε (1 kHz, 20°C): | -6 |
| CCY-3-O1 | 4.0 % | ε_{∥} (1 kHz, 20°C): | 4.3 |
| CCY-3-O2 | 6.0 % | ε_{⊥} (1 kHz, 20°C): | 10.3 |
| CCY-3-O3 | 6.0 % | K₁ (20°C) [pN]: | 15.7 |
| CCY-4-O2 | 6.0 % | K₃ (20°C) [pN]: | 19.1 |
| CCY-5-O2 | 6.0 % | γ₁ (20°C) [mPa·s]: | |
| CPY-2-O2 | 9.0 % | V₀ (20°C) [V]: | 1.88 |
| CPY-3-O2 | 9.0 % | | |
| CCP-V-1 | 8.5 % | | |
| CCEPC-3-3 | 4.0 % | | |
| CCEPC-3-4 | 4.0 % | | |
| CCEPC-3-5 | 3.5 % | | |
| CGPC-3-3 | 2.0 % | | |

**H42: Nematische Hostmischung (Δε < 0)**

| | | | |
|---|---|---|---|
| Y-4O-O4 | 10 % | Klärpunkt [°C]: | 108 |
| CY-3-O2 | 4.0 % | Δn (589 nm, 20°C): | 0.1403 |
| CY-3-O4 | 15 % | Δε (1 kHz, 20°C): | -6.4 |
| CCY-3-O1 | 4.0 % | ε_{∥} (1 kHz, 20°C): | 4.3 |
| CCY-3-O2 | 6.0 % | ε_{⊥} (1 kHz, 20°C): | 10.7 |
| CCY-3-O3 | 6.0 % | K₁ (20°C) [pN]: | 16.8 |
| CCY-4-O2 | 6.0 % | K₃ (20°C) [pN]: | 20.5 |
| CLY-3-O2 | 5.0 % | γ₁ (20°C) [mPa·s]: | |
| CPY-2-O2 | 5.0 % | V₀ (20°C) [V]: | 1.89 |
| CPY-3-O2 | 5.0 % | | |
| PTY-3-O2 | 10 % | | |
| PTY-5-O2 | 10 % | | |
| CCP-V-1 | 7.0 % | | |
| CCP-V2-1 | 7.0 % | | |

**H43: Nematische Hostmischung (Δε < 0)**

| | | | |
|---|---|---|---|
| Y-4O-O4 | 10 % | Klärpunkt [°C]: | 109 |
| CCY-3-O1 | 5.0 % | Δn (589 nm, 20°C): | 0.1405 |
| PTY-3-O2 | 3.0 % | Δε (1 kHz, 20°C): | -2 |
| PTY-3-O2 | 10 % | ε_{∥} (1 kHz, 20°C): | 3.4 |
| PTY-5-O2 | 10 % | ε_{⊥} (1 kHz, 20°C): | 5.4 |
| CP-3-O1 | 4.0 % | K₁ (20°C) [pN]: | 16.5 |
| CC-4-V | 15 % | K₃ (20°C) [pN]: | 19.9 |
| CC-3-V1 | 8.0 % | γ₁ (20°C) [mPa·s]: | |
| CCP-V-1 | 13 % | V₀ (20°C) [V]: | 3.34 |
| CCP-V2-1 | 13 % | | |
| CPTP-3-1 | 4.5 % | | |
| CPTP-3-2 | 4.5 % | | |

**H44: Nematische Hostmischung (Δε < 0)**

| | | | |
|---|---|---|---|
| CY-3-O4 | 13 % | Klärpunkt [°C]: | 107 |
| CCY-3-O1 | 4.0 % | Δn (589 nm, 20°C): | 0.082 |
| CCY-3-O2 | 5.0 % | Δε (1 kHz, 20°C): | -2 |
| CCY-3-O3 | 5.0 % | ε_{∥} (1 kHz, 20°C): | 3 |
| CCY-4-O2 | 5.0 % | ε_{⊥} (1 kHz, 20°C): | 5 |
| CCY-5-O2 | 5.0 % | K₁ (20°C) [pN]: | 16.3 |
| CC-3-O1 | 13 % | K₃ (20°C) [pN]: | 19.2 |
| CC-4-V | 12 % | γ₁ (20°C) [mPa·s]: | |
| CC-3-V1 | 6.0 % | V₀ (20°C) [V]: | 3.29 |
| CCP-V-1 | 13 % | | |
| CCP-V2-1 | 13 % | | |
| CCZC-3-3 | 3.0 % | | |
| CCEPC-3-3 | 3.0 % | | |

**H45: Nematische Hostmischung (Δε < 0)**

| | | | |
|---|---|---|---|
| Y-4O-O4 | 5.0 % | Klärpunkt [°C]: | 107 |
| CY-3-O4 | 15 % | Δn (589 nm, 20°C): | 0.0821 |
| CY-5-O4 | 14.5 % | Δε (1 kHz, 20°C): | -4.5 |
| CCY-3-O1 | 5.0 % | ε_{∥} (1 kHz, 20°C): | 3.7 |
| CCY-3-O2 | 6.0 % | ε_{⊥} (1 kHz, 20°C): | 8.2 |
| CCY-3-O3 | 6.0 % | K₁ (20°C) [pN]: | 16 |
| CCY-4-O2 | 6.0 % | K₃ (20°C) [pN]: | 17 |
| CCY-5-O2 | 6.0 % | γ₁ (20°C) [mPa·s]: | |
| CC-4-V | 8.5 % | V₀ (20°C) [V]: | 2.04 |
| CCZC-3-3 | 3.0 % | | |
| CCZC-3-5 | 3.0 % | | |
| CCZC-4-3 | 3.0 % | | |
| CCZC-4-5 | 3.0 % | | |
| CCOC-3-3 | 4.0 % | | |
| CCEPC-3-3 | 4.0 % | | |
| CCEPC-3-4 | 4.0 % | | |
| CCEPC-3-5 | 4.0 % | | |

**H46: Nematische Hostmischung (Δε < 0)**

| | | | |
|---|---|---|---|
| B-2O-O5 | 4.0 % | Klärpunkt [°C]: | 75 |
| CPP-3-2 | 4.5 % | Δn (589 nm, 20°C): | 0.1095 |
| CC-3-V1 | 9.0 % | Δε (1 kHz, 20°C): | -3.1 |
| CC-3-O1 | 3.0 % | ε_{∥} (1 kHz, 20°C): | 3.6 |
| CC-3-4 | 9.0 % | ε_{⊥} (1 kHz, 20°C): | 6.7 |
| CC-3-5 | 9.0 % | K₁ (20°C) [pN]: | 14.5 |
| CCP-3-1 | 8.0 % | K₃ (20°C) [pN]: | 16.7 |
| CCP-V2-1 | 5.0 % | γ₁ (20°C) [mPa·s]: | 109 |
| CCY-3-O2 | 6.0 % | V₀ (20°C) [V]: | 2.43 |
| CPY-3-O2 | 10.5 % | | |
| CY-3-O2 | 9.5 % | | |
| CP-3-O1 | 4.5 % | | |
| PY-3-O2 | 18 % | | |

**H47: Nematische Hostmischung (Δε < 0)**

| | | | |
|---|---|---|---|
| B-2O-O5 | 4.0 % | Klärpunkt [°C]: | 75.2 |
| CPP-3-2 | 12 % | Δn (589 nm, 20°C): | 0.1101 |
| CC-3-V1 | 9.0 % | Δε (1 kHz, 20°C): | -3.1 |
| CC-3-5 | 5.5 % | ε_{∥} (1 kHz, 20°C): | 3.6 |
| CCP-3-1 | 5.5 % | ε_{⊥} (1 kHz, 20°C): | 6.7 |
| CCP-V2-1 | 5.0 % | K₁ (20°C) [pN]: | 13 |
| CCY-3-O2 | 4.0 % | K₃ (20°C) [pN]: | 16.3 |
| CLY-3-O2 | 1.0 % | γ₁ (20°C) [mPa·s]: | 121 |
| CPY-2-O2 | 2.5 % | V₀ (20°C) [V]: | 2.39 |
| CPY-3-O2 | 10.5 % | | |
| CY-3-O2 | 15 % | | |
| CY-3-O4 | 11 % | | |
| CP-3-O1 | 15 % | | |

Die folgenden polymerisierbaren Selbstorientierungsadditive (PSOA) werden verwendet:

| PSOA Nr. | Struktur |
|---|---|
| **1** | 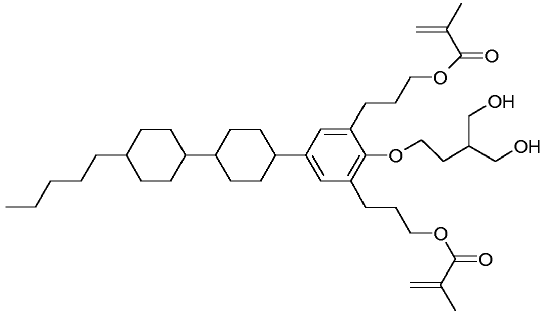 |
| **V1** | 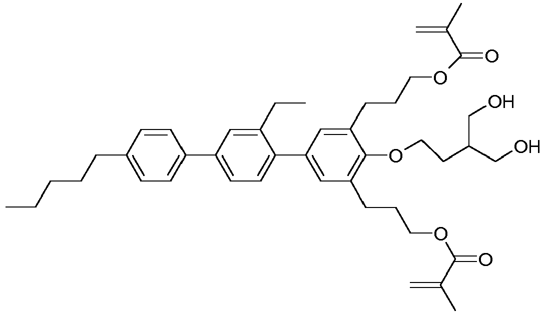 |
| **2** | 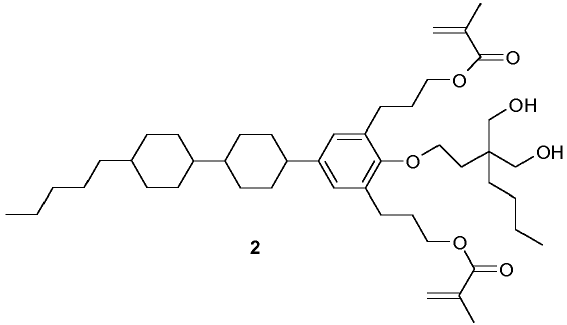 |
| **3** | 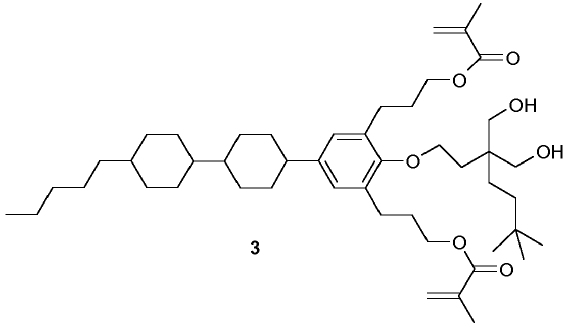 |
| **4** | 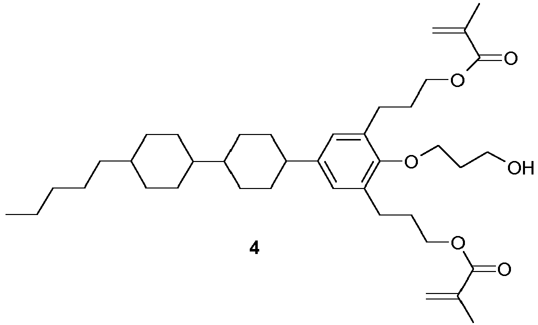 |
| **V2** | 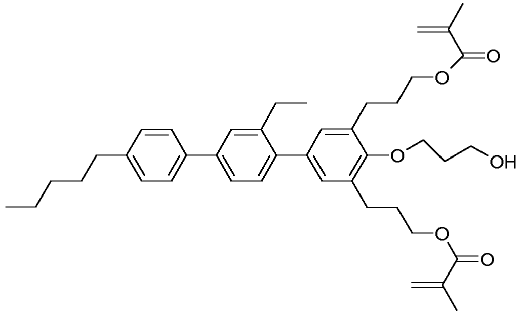 |

Die folgende polymerisierbare Verbindung wird verwendet:

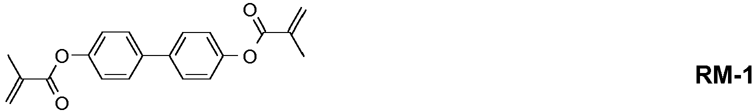

### Mischungsbeispiel 1

Zu einem nematischen FK-Medium **H0** des VA-Typs (Δε < 0) werden eine polymerisierbare Verbindung **RM-1** (0,3 Gew.%) und das polymerisierbare Selbstorientierungsadditiv **1** (0,6 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4,0 µm, beidseitige ITO-Beschichtung, ohne Passivierungsschicht). Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

### Polymerstabilisierung der Zelle:

Unter Anlegen einer Spannung größer als die optische Schwellenspannung (z.B. 14 Vpp) wird die VA-Zelle mit UV-Licht der Intensität 100 mW/cm² bei 20°C bzw. 40°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht. Die erhaltene PSA-VA-Zelle lässt sich in einem breiten Temperaturbereich (bis zum Klärpunkt) unter Anlegen einer Spannung reversibel schalten. Die Schaltzeiten sind, im Vergleich zu der nicht polymerisierten Zelle, verkürzt.

VA-Orientierungsschichten (z.B. Polyimid), die für VA, PM-VA, PVA, MVA und analoge Technologien zum Einsatz kommen, sind mit der Anwendung von Additiven wie dem polymerisierbaren Selbstorientierungsadditiv **1** nicht mehr notwendig.

Die Polymerisation kann prinzipiell auch ohne Anlegen einer Spannung durchgeführt werden. Die homöotrope Orientierung wird auch ohne angelegte Spannung stabilisiert.

### Mischungsbeispiel V1 (zum Vergleich)

Zu einem nematischen FK-Medium **H1** des VA-Typs (Δε < 0) werden eine polymerisierbare Verbindung **RM-1** (0,3 Gew.%) und das auf einer Terphenylstruktur basierende polymerisierbare Selbstorientierungsadditiv **V1** (0,6 Gew.%) zugesetzt und homogenisiert.

### Mischungsbeispiele 2 und 3

Die polymerisierbaren Selbstorientierungsadditive **2** (0,6 Gew.%) bzw. **3** (0,6 Gew.%) und eine polymerisierbare Verbindung **RM-1** (0,3 Gew.%) werden je einzeln analog Mischungsbeispiel 1 zu einem nematischen FK-Medium **H1** (Δε < 0) zugesetzt und homogenisiert. Die entstandenen Mischungen werden in Testzellen ohne Vororientierungsschicht gefüllt und wie oben getestet.

Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

### Charakterisierung der Mischungen in der Zelle (Anzeigevorrichtung)

### VHR-Messung: Effekt des Selbstorientierungsadditivs

Die VHR-Werte (voltage holding ratio) der Testzellen werden vor und nach dem Polymerisationsvorgang (PSA-Stabilisierung), der durch UV-Bestrahlung eingeleitet wird, gemessen (Tabelle 1).

**Tabelle 1: Vergleich VHR-Werte (60°C, 60 Hz/3 Hz) in Testzellen mit Hostmischung H1.**

| **VHR** [%] | **Mischungsbeispiel** | | | |
|---|---|---|---|---|
| | **1** | **V1** | **2** | **3** |
| vor UV, 60 Hz | 76,19 | 94,69 | 97,03 | 93,32 |
| **nach UV, 60 Hz** | **97,72** | **96,69** | **97,42** | **97,14** |
| vor UV, 3 Hz | 22,51 | 50,40 | 63,13 | 45,11 |
| **nach UV, 3 Hz** | **91,60** | **88,17** | **92,90** | **91,47** |

Die VHR-Werte liegen nach dem Polymerisationsvorgang für die erfindungsgemäße Mischung über denen einer herkömmlichen Mischung.

**Tiltstabilität:** Die Tiltstabilität unter elektrischem Stress von 60 Vₚₚ, 200 Hz, 25°C für 60 h zeigt keinen signifikanten Unterschied zwischen den Mischungsbeispielen **1, 2, 3** und **V1**.

### Mischungsbeispiel 4

Zu einem nematischen FK-Medium **H2** des VA-Typs (Δε < 0) werden eine polymerisierbare Verbindung **RM-1** (0,3 Gew.%) und das polymerisierbare Selbstorientierungsadditiv **1** (0,6 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4,0 µm, beidseitige ITO-Beschichtung, ohne Passivierungsschicht). Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

### Polymerstabilisierung der Zelle:

Unter Anlegen einer Spannung größer als die optische Schwellenspannung (z.B. 14 Vpp) wird die VA-Zelle mit UV-Licht der Intensität 100 mW/cm² bei 20°C bzw. 40°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht. Die erhaltene PSA-VA-Zelle lässt sich in einem breiten Temperaturbereich (bis zum Klärpunkt) unter Anlegen einer Spannung reversibel schalten. Die Schaltzeiten sind, im Vergleich zu der nicht polymerisierten Zelle, verkürzt.

VA-Orientierungsschichten (z.B. Polyimid), die für VA, PM-VA, PVA, MVA und analoge Technologien zum Einsatz kommen, sind mit der Anwendung von Additiven wie dem polymerisierbaren Selbstorientierungsadditiv **1** nicht mehr notwendig.

Die Polymerisation kann prinzipiell auch ohne Anlegen einer Spannung durchgeführt werden. Die homöotrope Orientierung wird auch ohne angelegte Spannung stabilisiert.

### Mischungsbeispiel V2 (zum Vergleich)

Zu einem nematischen FK-Medium **H2** des VA-Typs (Δε < 0) werden eine polymerisierbare Verbindung **RM-1** (0,25 Gew.%) und das auf einer Terphenylstruktur basierende polymerisierbare Selbstorientierungsadditiv **V1** (0,6 Gew.%) zugesetzt und homogenisiert.

### Mischungsbeispiele 5 und 6

Die polymerisierbaren Selbstorientierungsadditive **2** (0,6 Gew.%) bzw. **3** (0,6 Gew.%) und eine polymerisierbare Verbindung **RM-1** (0,25 Gew.%) werden je einzeln analog Mischungsbeispiel 1 zu einem nematischen FK-Medium **H2** (Δε < 0) zugesetzt und homogenisiert. Die entstandenen Mischungen werden in Testzellen ohne Vororientierungsschicht gefüllt und wie oben getestet.

Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

### Charakterisierung der Mischungen in der Zelle (Anzeigevorrichtung)

### VHR-Messung: Effekt des Selbstorientierungsadditivs

Die VHR-Werte (voltage holding ratio) der Testzellen werden vor und nach dem Polymerisationsvorgang (PSA-Stabilisierung), der durch UV-Bestrahlung eingeleitet wird, gemessen (Tabelle 2).

**Tabelle 2: Vergleich VHR-Werte (60°C, 60 Hz/3 Hz) in Testzellen mit Hostmischung H2.**

| **VHR** [%] | **Mischungsbeispiel** | | | |
|---|---|---|---|---|
| | **4** | **V2** | **5** | **6** |
| vor UV, 60 Hz | 90,64 | 94,25 | 97,93 | 96,93 |
| **nach UV, 60 Hz** | **98,08** | **94,91** | **97,92** | **97,21** |
| vor UV, 3 Hz | 42,22 | 57,71 | 80,87 | 73,48 |
| **nach UV, 3 Hz** | **93,34** | **82,85** | **94,44** | **92,81** |

Die VHR-Werte liegen nach dem Polymerisationsvorgang für die erfindungsgemäße Mischung über denen einer herkömmlichen Mischung.

**Tiltstabilität:** Die Tiltstabilität unter elektrischem Stress von 60 Vₚₚ, 200 Hz, 25°C für 60 h zeigt keinen signifikanten Unterschied zwischen den Mischungsbeispielen **4, 5, 6** und **V2**.

### Mischungsbeispiel 7

Zu einem nematischen FK-Medium **H15** des VA-Typs (Δε < 0) werden eine polymerisierbare Verbindung **RM-1** (0,3 Gew.%) und das polymerisierbare Selbstorientierungsadditiv **1** (0,3 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4,0 µm, beidseitige ITO-Beschichtung, ohne Passivierungsschicht). Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

### Polymerstabilisierung der Zelle:

Unter Anlegen einer Spannung größer als die optische Schwellenspannung (z.B. 14 Vpp) wird die VA-Zelle mit UV-Licht der Intensität 100 mW/cm² bei 20°C bzw. 40°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht. Die erhaltene PSA-VA-Zelle lässt sich in einem breiten Temperaturbereich (bis zum Klärpunkt) unter Anlegen einer Spannung reversibel schalten. Die Schaltzeiten sind, im Vergleich zu der nicht polymerisierten Zelle, verkürzt.

VA-Orientierungsschichten (z.B. Polyimid), die für VA, PM-VA, PVA, MVA und analoge Technologien zum Einsatz kommen, sind mit der Anwendung von Additiven wie dem polymerisierbaren Selbstorientierungsadditiv 1 nicht mehr notwendig.

### Mischungsbeispiel V3 (zum Vergleich)

Zu einem nematischen FK-Medium **H15** des VA-Typs (Δε < 0) werden eine polymerisierbare Verbindung **RM-1** (0,3 Gew.%) und das auf einer Terphenylstruktur basierende polymerisierbare Selbstorientierungsadditiv der Formel **V1** (0,3 Gew.%) zugesetzt und homogenisiert.

### Mischungsbeispiele 8 und 9

Die polymerisierbaren Selbstorientierungsadditive **2** (0,7 Gew.%) bzw. **3** (0,7 Gew.%) und eine polymerisierbare Verbindung **RM-1** (0,25 Gew.%) werden je einzeln analog Mischungsbeispiel 1 zu einem nematischen FK-Medium **H15** (Δε < 0) zugesetzt und homogenisiert. Die entstandenen Mischungen werden in Testzellen ohne Vororientierungsschicht gefüllt und wie oben getestet.

Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

### Charakterisierung der Mischungen in der Zelle (Anzeigevorrichtung)

### VHR-Messung: Effekt des Selbstorientierungsadditivs

Die VHR-Werte (voltage holding ratio) der Testzellen werden vor und nach dem Polymerisationsvorgang (PSA-Stabilisierung), der durch UV-Bestrahlung eingeleitet wird, gemessen (Tabelle 3).

**Tabelle 3: Vergleich VHR-Werte (60°C, 60 Hz/0.6 Hz) in Testzellen mit Hostmischun H15.**

| **VHR** [%] | **Mischungsbeispiel** | | | |
|---|---|---|---|---|
| | **7** | **V3** | **8** | **9** |
| Additive | **1** | **V1** | **2** | **3** |
| vor UV, 60 Hz | 83,14 | 93,62 | 95,33 | 97,2 |
| **nach UV, 60 Hz** | **99,02** | **96,89** | **98,86** | **98,98** |
| vor UV, 0.6 Hz | 35,6 | 10,52 | 15,68 | 27,7 |
| **nach UV, 0.6 Hz** | **92,09** | **84,32** | **92,91** | **92,01** |

Die VHR-Werte liegen nach dem Polymerisationsvorgang für die erfindungsgemäße Mischung über denen einer herkömmlichen Mischung.

### Mischungsbeispiel 10

Zu einem nematischen FK-Medium **H15** des VA-Typs (Δε < 0) werden eine polymerisierbare Verbindung **RM-1** (0,3 Gew.%) und das polymerisierbare Selbstorientierungsadditiv **4** (1,5 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4,0 µm, beidseitige ITO-Beschichtung, ohne Passivierungsschicht). Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

### Polymerstabilisierung der Zelle:

Unter Anlegen einer Spannung größer als die optische Schwellenspannung (z.B. 14 Vpp) wird die VA-Zelle mit UV-Licht der Intensität 100 mW/cm² bei 20°C bzw. 40°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht. Die erhaltene PSA-VA-Zelle lässt sich in einem breiten Temperaturbereich (bis zum Klärpunkt) unter Anlegen einer Spannung reversibel schalten. Die Schaltzeiten sind, im Vergleich zu der nicht polymerisierten Zelle, verkürzt.

VA-Orientierungsschichten (z.B. Polyimid), die für VA, PM-VA, PVA, MVA und analoge Technologien zum Einsatz kommen, sind mit der Anwendung von Additiven wie dem polymerisierbaren Selbstorientierungsadditiv 1 nicht mehr notwendig.

### Mischungsbeispiel V4 (zum Vergleich)

Zu einem nematischen FK-Medium **H15** des VA-Typs (Δε < 0) werden eine polymerisierbare Verbindung **RM-1** (0,3 Gew.%) und das auf einer Terphenylstruktur basierende polymerisierbare Selbstorientierungsadditiv der Formel **V2** (1,5 Gew.%) zugesetzt und homogenisiert.

### Charakterisierung der Mischungen in der Zelle (Anzeigevorrichtung)

### VHR-Messung: Effekt des Selbstorientierungsadditivs

Die VHR-Werte (voltage holding ratio) der Testzellen werden vor und nach dem Polymerisationsvorgang (PSA-Stabilisierung), der durch UV-Bestrahlung eingeleitet wird, gemessen (Tabelle 4).

**Tabelle 4: Vergleich VHR-Werte (60°C, 60 Hz/0,6 Hz) in Testzellen mit Hostmischung H15.**

| **VHR** [%] | **Mischungsbeispiel** | | | |
|---|---|---|---|---|
| | **10** | **V4** | | |
| Additiv Nr. | 4 | V2 | | |
| vor UV, 60 Hz | - | - | | |
| **nach UV, 60 Hz** | - | - | | |
| vor UV, 0,6 Hz | 71,04 | 38,77 | | |
| **nach UV, 0,6 Hz** | **91,94** | **83,09** | | |

Die VHR-Werte liegen nach dem Polymerisationsvorgang für die erfindungsgemäße Mischung über denen einer herkömmlichen Mischung.

### Mischungsbeispiel 11 (positives Δε)

Zu einem nematischen FK-Medium (Hostmischung) **H19** des VA-IPS-Typs (Δε > 0) werden eine polymerisierbare Verbindung **RM-1** (0,3 Gew.%) und das polymerisierbare Selbstorientierungsadditiv **1** (1,0 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4 µm, auf einer Substratoberfläche angeordnete ITO-Interdigitalelektroden, Glas auf der gegenüberliegenden Substratoberfläche, ohne Passivierungsschicht). Das FK-Medium weist eine spontane homöotrope (vertikale) Orientierung zu den Substratoberflächen auf. Diese Orientierung bleibt bis zum Klärpunkt stabil und die entstandene VA-IPS-Zelle lässt sich durch Anlegen einer Spannung reversibel schalten.

Das FK-Medium weist jeweils eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

## Patentansprüche

1. Verbindungen
ausgewählt aus den folgenden Formeln: 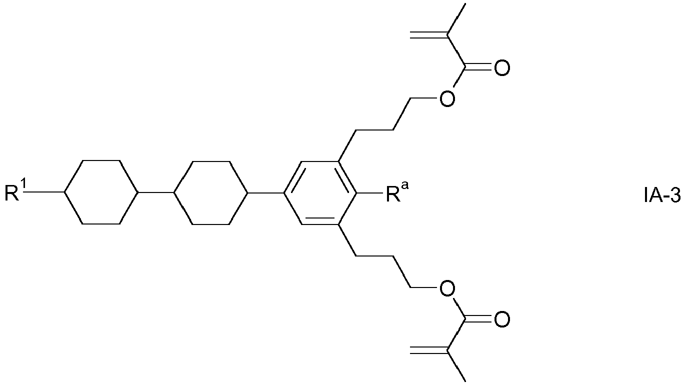 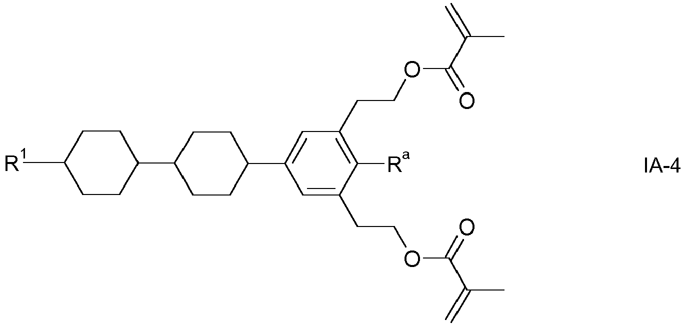 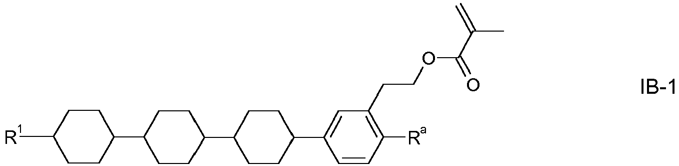 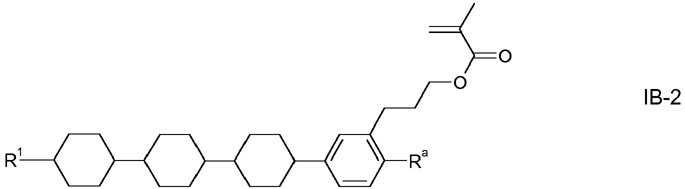 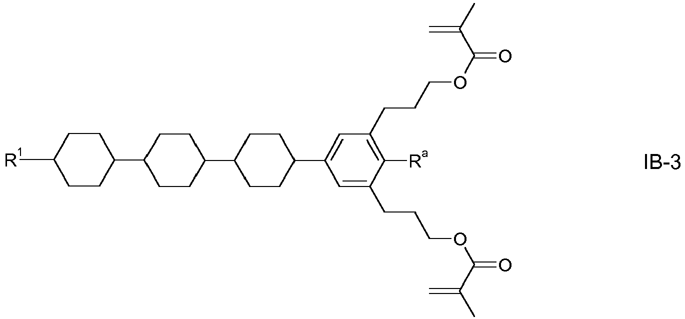 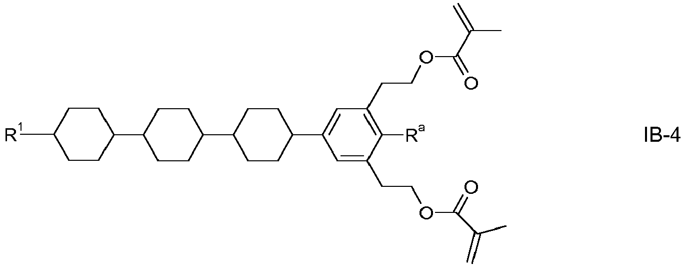 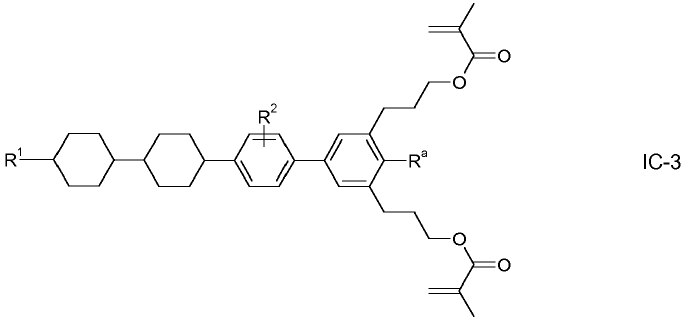 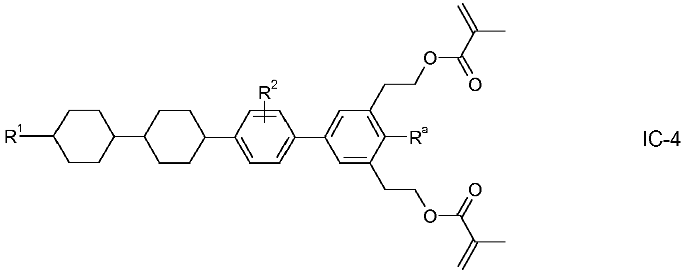 worin
R^{a} eine Ankergruppe der Formel 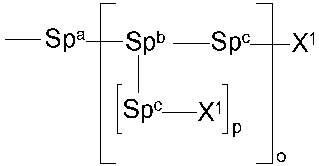
p 1 oder 2,
o 0 oder 1, wobei für die Formeln IC-3 bis IC-4 o = 0 ist,
X¹ unabhängig voneinander H, Alkyl, Fluoralkyl, -OH, -SH, -NH₂, -NHR¹¹, -NR¹¹₂, NHC(O)-R¹¹, -OR¹¹, -C(O)OH, -CHO, wobei mindestens eine Gruppe X¹ einen Rest ausgewählt aus -OH, -SH, -NH₂, -NHR¹¹, -C(O)OH und -CHO, bedeutet,
R¹¹ Alkyl mit 1 bis 12 C-Atomen,
Sp^{a}, Sp^{c} jeweils unabhängig voneinander eine Abstandsgruppe oder eine Einfachbindung,
Sp^{b} eine tri- oder tetravalente Gruppe,
R¹ unabhängig voneinander H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CH=CH-, -C≡C-, -CO-, -CO-O-, -O-CO-, -O-CO-O- so ersetzt sein können, dass O- und/oder S-Atome nicht direkt miteinander verknüpft sind und worin auch ein oder mehrere H-Atome durch F oder Cl, ersetzt sein können,
oder eine Gruppe -Sp-P,
P eine polymerisierbare Gruppe,
Sp eine Abstandsgruppe oder eine Einfachbindung,
R² jeweils unabhängig voneinander geradkettiges oder verzweigtes Alkyl, Alkenyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können, F, Cl, Br, I, -CN, -NO₂, -NCO, -NCS, -OCN, -SCN, -C(=O)N(R⁰)₂, -C(=O)R⁰, optional substituiertes Aryl oder Cycloalkyl mit 3 bis 20 C-Atomen,
R⁰ jeweils unabhängig voneinander Alkyl mit 1 bis 12 C-Atomen,
R⁰⁰ jeweils unabhängig voneinander H oder Alkyl mit 1 bis 12 C-Atomen,
bedeuten.

2. Verbindungen nach Anspruch 1, **dadurch gekennzeichnet, dass** für die Formeln IA-1 bis IC-4
Sp^{a} -CH₂-, -CH₂CH₂-, -OCH₂CH₂-, -CH₂CH₂CH₂-, -OCH₂CH₂CH₂-, -CH₂CH₂CH₂CH₂-, -OCH₂CH₂CH₂CH₂-, -CH₂CH₂OCH₂CH₂- und -OCH₂CH₂OCH₂CH₂-
und
Sp^{c} unabhängig -CH₂-, -CH₂CH₂-, -CH₂CH₂CH₂-, -CH₂CH₂CH₂CH₂-, -CH₂CH₂OCH₂CH₂-,
bedeuten.

3. Verbindungen nach Anspruch 1 oder 2, **dadurch gekennzeichnet, dass** es Verbindungen der Formeln IA-3 bis 4 oder IB-1 bis IB-4 sind.

4. Verbindungen nach einem oder mehreren der Ansprüche 1 bis 3, **dadurch gekennzeichnet, dass** es Verbindungen der Formeln IB-1 bis IB-4 sind.

5. Verbindungen nach einem oder mehreren der Ansprüche 1 bis 8, **dadurch gekennzeichnet, dass**
R¹ einen geradkettigen oder verzweigten, gesättigten oder ungesättigten, aliphatischen Kohlenwasserstoffrest mit 1 bis 15 Kohlenstoffatomen bedeutet.

6. Verbindungen nach einem oder mehreren der Ansprüche 1 bis 5, **dadurch gekennzeichnet, dass** die Gruppe R^{a} eine oder zwei OH-Gruppen umfasst.

7. Verbindungen nach einem oder mehreren der Ansprüche 1 bis 6, **dadurch gekennzeichnet, dass** die Gruppe R^{a} eine Gruppe ausgewählt aus 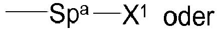 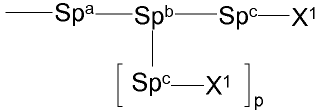 bedeutet,
worin Sp^{a}, Sp^{b}, Sp^{c}, p und X¹ die Bedeutung wie in Anspruch 1 haben.

8. Verbindungen nach einem oder mehreren der Ansprüche 1 bis 7, **dadurch gekennzeichnet, dass** die Gruppe R^{a} eine Gruppe ausgewählt aus den Teilformeln 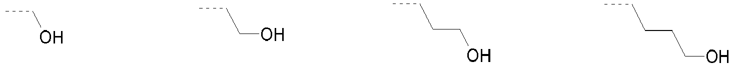 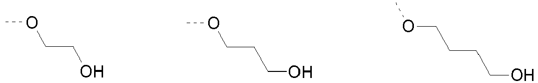 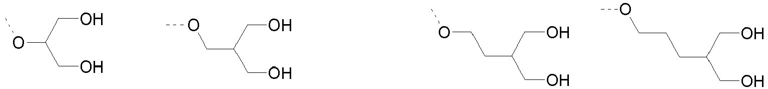 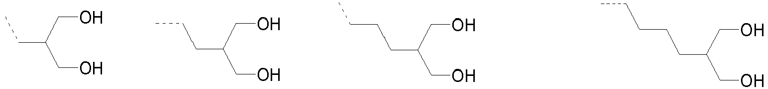 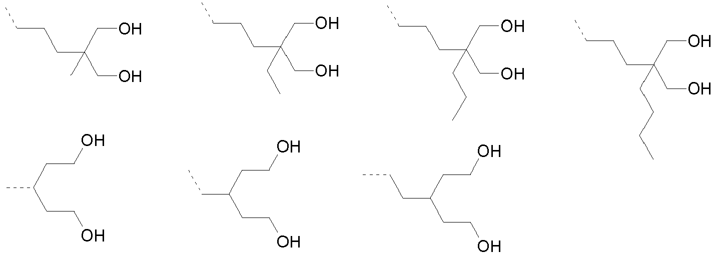 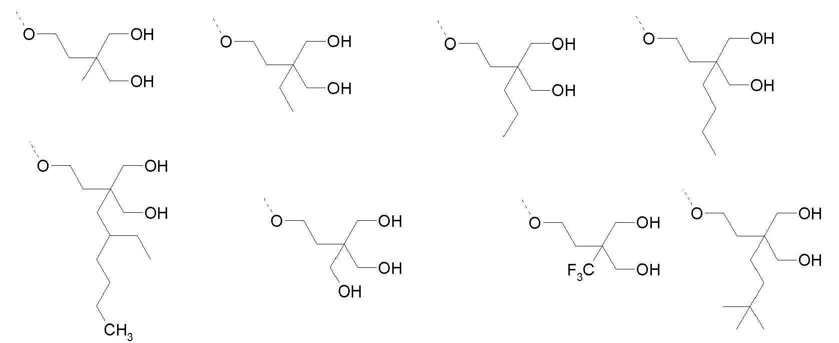 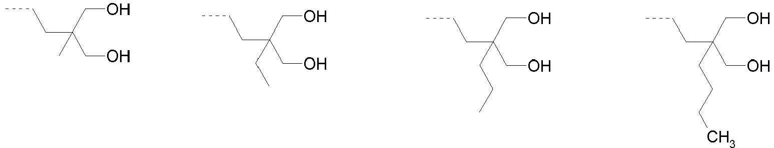 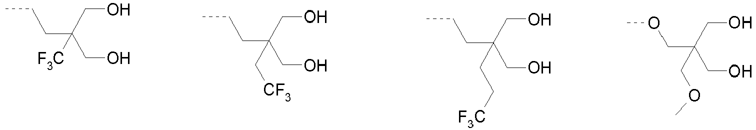 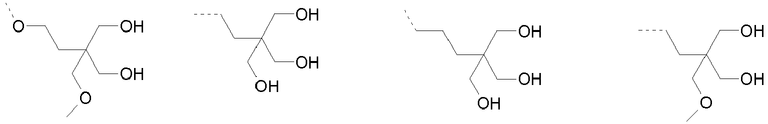 bedeutet.

9. Verbindungen nach einem oder mehreren der Ansprüche 1 bis 7, **dadurch gekennzeichnet, dass**
Sp^{b} eine Gruppe -C(R³) ist, worin R³ einen Rest mit 1 bis 8 C-Atomen bedeutet.

10. Verwendung von Verbindungen der Formel A-3 bis IC-4 nach einem oder mehreren der Ansprüche 1 bis 9 als Additiv für FK-Medien zur Herbeiführung einer homöotropen Orientierung gegenüber einer das FK-Medium begrenzenden Oberfläche, wobei die Verbindungen nach Herbeiführung der homöotropen Orientierung optional polymerisiert werden.

11. FK-Medium enthaltend eine niedermolekulare, nicht polymerisierbare, flüssigkristalline Komponente und eine polymerisierbare oder polymerisierte Komponente umfassend eine oder mehrere polymerisierbare Verbindungen der Formel I nach einem der Ansprüche 1 bis 8, wobei die polymerisierte Komponente durch Polymerisieren der polymerisierbaren Komponente erhältlich ist,

12. FK-Medium nach Anspruch 11, **dadurch gekennzeichnet, dass** es die Verbindungen der Formel A-3 bis IC-4 in einer Konzentration von weniger als 10 Gew.-% enthält.

13. FK-Medium nach Anspruch 11 oder 12, **dadurch gekennzeichnet, dass** es eine oder mehrere polymerisierbare Verbindungen der Formel M oder ein (Co-)Polymer umfassend Verbindungen der Formel M enthält:
P¹-Sp¹-A²-(Z¹-A¹)ₙ-Sp²-P² M
worin die einzelnen Reste folgende Bedeutung besitzen:
P¹, P² jeweils unabhängig eine polymerisierbare Gruppe,
Sp¹, Sp² jeweils unabhängig eine Abstandsgruppe,
A¹, A², jeweils unabhängig voneinander einen Rest ausgewählt aus folgenden Gruppen
a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch eine Gruppe L ersetzt sein können, oder ausgewählt aus 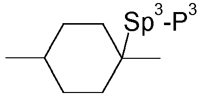
b) der Gruppe bestehend aus 1,4-Phenylen und 1,3-Phenylen, worin auch eine oder zwei CH-Gruppen durch N ersetzt sein können und worin auch ein oder mehrere H-Atome durch eine Gruppe L oder -Sp³-P ersetzt sein können,
c) der Gruppe bestehend aus Tetrahydropyran-2,5-diyl, 1,3-Dioxan-2,5-diyl, Tetrahydrofuran-2,5-diyl, Cyclobutan-1,3-diyl, Piperidin-1,4-diyl, Thiophen-2,5-diyl und Selenophen-2,5-diyl, welche auch ein oder mehrfach durch eine Gruppe L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 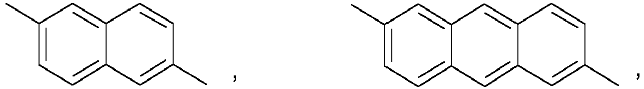 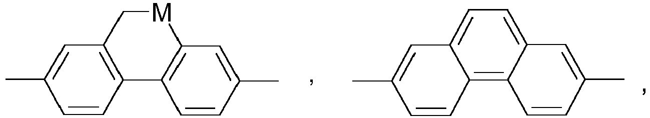 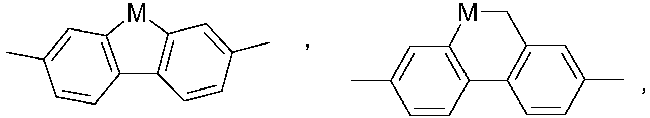 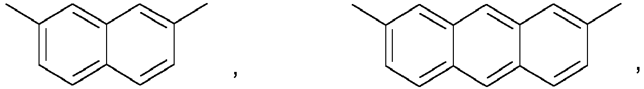 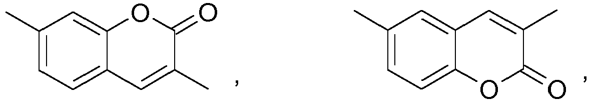 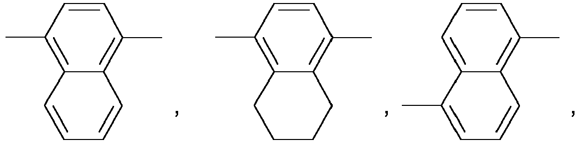 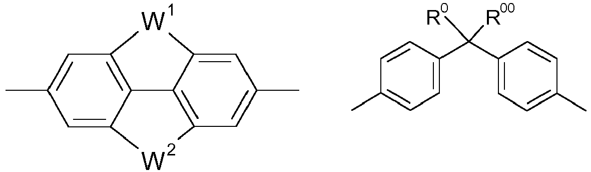 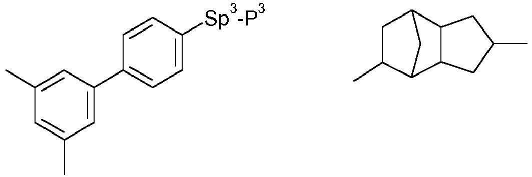 wobei in diesen Resten auch ein oder mehrere H- Atome durch eine Gruppe L oder -Sp³-P³ ersetzt sein können, und/oder eine oder mehrere Doppelbindungen durch Einfachbindungen ersetzt sein können, und/oder ein oder mehrere CH-Gruppen durch N ersetzt sein können,
P³ eine polymerisierbare Gruppe,
Sp³ eine Abstandsgruppe,
n 0, 1, 2 oder 3,
Z¹ jeweils unabhängig voneinander -CO-O-, -O-CO-, -CH₂O-, -OCH₂-, -CF₂O-, -OCF₂-, oder -(CH₂)ₙ₂-, wobei n2 2, 3 oder 4 ist, -O-, -CO-, -C(R^{c}R^{d})-, -CH₂CF₂-, -CF₂CF₂-, oder eine Einfachbindung,
L bei jedem Auftreten gleich oder verschieden F, Cl, CN, SCN, SF₅ oder geradkettiges oder verzweigtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
R⁰, R⁰⁰ jeweils unabhängig voneinander H, F oder geradkettiges oder verzweigtes Alkyl mit 1 bis 12 C-Atomen, worin auch ein oder mehrere H-Atome durch F ersetzt sein können,
M -O-, -S-, -CH₂-, -CHY¹- oder -CY¹Y²-,
Y¹, und Y² jeweils unabhängig voneinander eine der oben für R⁰ angegebenen Bedeutungen, Cl, -OCF₃ oder CN, und vorzugsweise H, F, Cl, CN, OCF₃ oder CF₃,
W¹, W² jeweils unabhängig voneinander -CH₂CH₂-, -CH=CH-, -CH₂-O-, -O-CH₂-, -C(R^{c}R^{d})- oder -O- bedeuten, und
R^{c} und R^{d} jeweils unabhängig voneinander H oder Alkyl mit 1 bis 6 C-Atomen, vorzugsweise H, Methyl oder Ethyl, bedeuten.
wobei eine oder mehrere der Gruppen P¹-Sp¹-, -Sp²-P² und -Sp³-P³ einen Rest R^{aa} bedeuten können, mit der Maßgabe, dass mindestens eine der vorhandenen Gruppen P¹-Sp¹-, -Sp²-P² und -Sp³-P³ nicht R^{aa} bedeutet,
R^{aa} H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, wobei P¹-Sp¹- nicht ein weiteres R^{aa} bedeutet, und wobei die Gruppen -OH, -NH₂, -SH, -NHR, -C(O)OH und -CHO in R^{aa} nicht enthalten sind.

14. FK-Medium nach einem oder mehreren der Ansprüche 11 bis 13, **dadurch gekennzeichnet, dass** es eine oder mehrere Verbindungen ausgewählt aus der Gruppe der Verbindungen der Formeln A, B und C enthält: 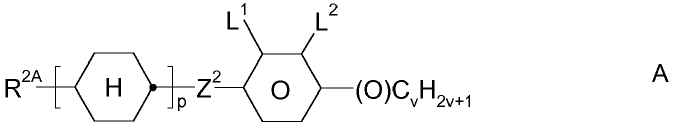 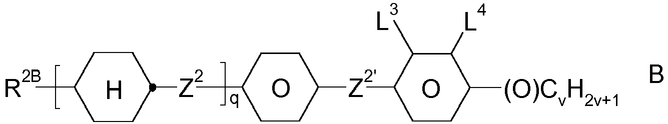 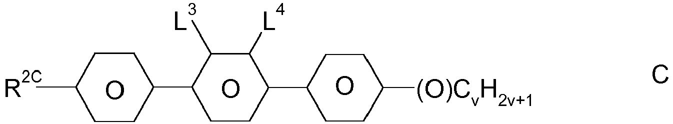 worin
R^{2A}, R^{2B} und R^{2C} jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 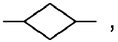 -C≡C-, -CH=CH-, -CF₂O-, -OCF₂-, -OC-O- oder -O-CO- so ersetzt sein können, dass O-Atome nicht direkt miteinander verknüpft sind,
L¹⁻⁴ jeweils unabhängig voneinander F, Cl, CF₃ oder CHF₂,
Z² und Z^{2'} jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF- oder -CH=CHCH₂O-,
p 1 oder 2, bevorzugt 1,
q 0 oder 1,
(O) -O- oder eine Einfachbindung, und
v 1 bis 6
bedeuten.

15. FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, sowie mit einer zwischen den Substraten befindlichen Schicht eines FK-Mediums nach einem oder mehreren der Ansprüche 11 bis 14,
wobei die Verbindung der Formel I geeignet ist, eine homöotrope Ausrichtung des FK-Mediums gegenüber den Substratoberflächen herbeizuführen.

16. FK-Anzeige nach Anspruch 15, **dadurch gekennzeichnet, dass** eines oder beide der Substrate keine Orientierungsschichten zur homöotropen Ausrichtung aufweisen.

17. FK-Anzeige nach Anspruch 15 oder 16 **dadurch gekennzeichnet, dass** es sich um eine VA-Anzeige mit einem FK-Medium mit negativer dielektrischer Anisotropie und auf gegenüberliegenden Substraten angeordneten Elektroden handelt.

18. Verfahren zu Herstellung eines FK-Mediums, **dadurch gekennzeichnet, dass** man eine oder mehrere Verbindungen der Formel A-1 bis IC-4 nach einem der Ansprüche 1 bis 9 mit einer niedermolekularen flüssigkristallinen Komponente mischt und optional eine oder mehrere polymerisierbare Verbindungen und/oder beliebige Additive zugibt.

19. Verfahren zu Herstellung einer FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, umfassend die Verfahrensschritte:
- Füllen der Zelle mit einem FK-Medium nach einem der Ansprüche 11 bis 14, wobei sich eine homöotrope Ausrichtung des FK-Mediums gegenüber den Substratoberflächen einstellt, und
- Polymerisieren der polymerisierbaren Komponente(n), optional unter Anlegen einer Spannung an die Zelle oder unter der Wirkung eines elektrischen Feldes, in einem oder mehreren Verfahrensschritten.

## Claims

1. Compounds selected from the following formulae: 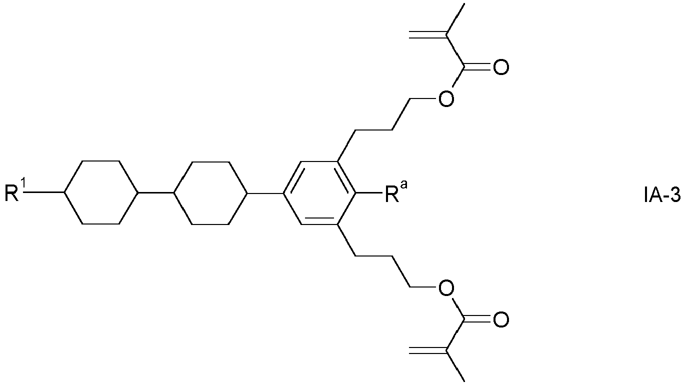 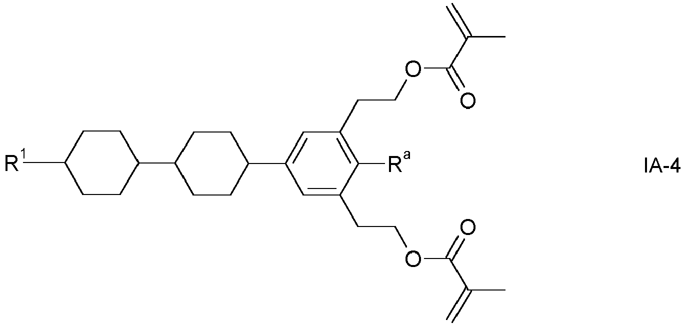 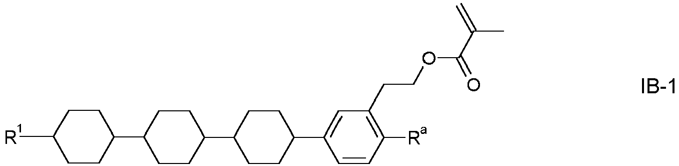 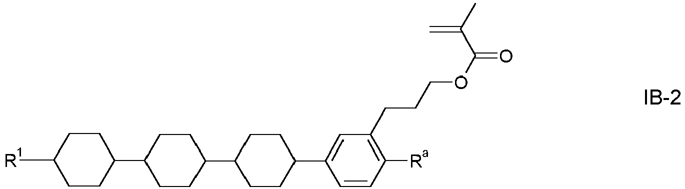 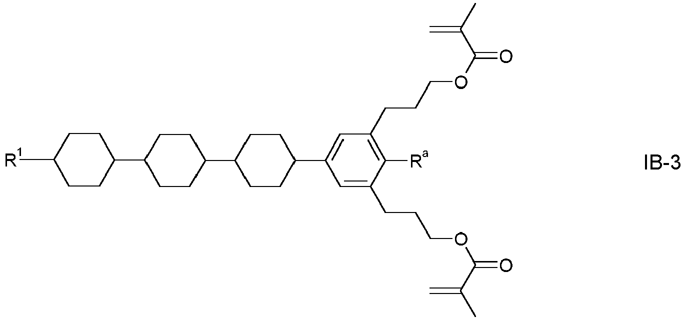 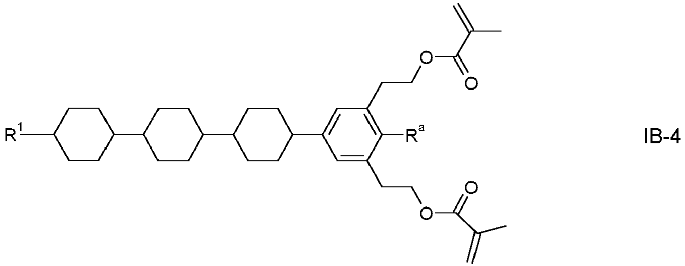 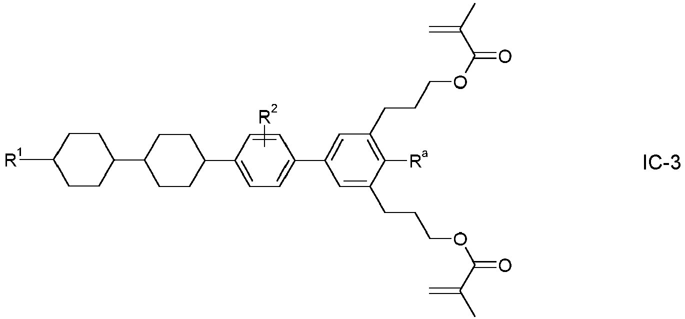 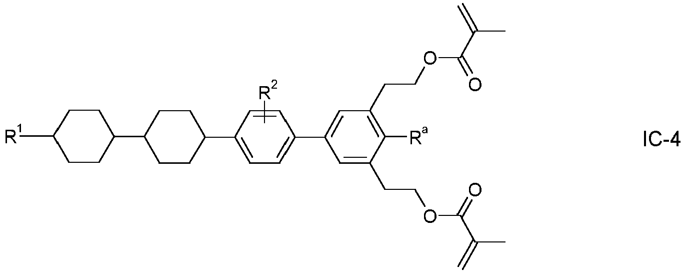 in which
R^{a} denotes an anchor group of the formula 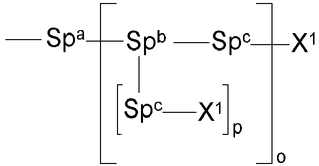
p denotes 1 or 2,
o denotes 0 or 1, where o = 0 for the formulae IC-3 to IC-4,
X¹, independently of one another, denotes H, alkyl, fluoroalkyl, -OH, -SH, -NH₂, -NHR¹¹, -NR¹¹₂, NHC(O)-R¹¹, -OR¹¹, -C(O)OH or -CHO, where at least one group X¹ denotes a radical selected from -OH, -SH, -NH₂, -NHR¹¹, -C(O)OH and -CHO,
R¹¹ denotes alkyl having 1 to 12 C atoms,
Sp^{a}, Sp^{c} in each case, independently of one another, denote a spacer group or a single bond,
Sp^{b} denotes a tri- or tetravalent group,
R¹, independently of one another, denotes H, halogen, straightchain, branched or cyclic alkyl having 1 to 25 C atoms, in which, in addition, one or more non-adjacent CH₂ groups may be replaced by -O-, -S-, -CH=CH-, -C≡C-, -CO-, -CO-O-, -O-CO- or -O-CO-O- in such a way that O and/or S atoms are not linked directly to one another and in which, in addition, one or more H atoms may be replaced by F or Cl, or a group -Sp-P,
P denotes a polymerisable group,
Sp denotes a spacer group or a single bond,
R² in each case, independently of one another, denotes straightchain or branched alkyl, alkenyl, alkoxy, alkylcarbonyl, alkoxycarbonyl, alkylcarbonyloxy or alkoxycarbonyloxy having 1 to 25 C atoms, in which, in addition, one or more H atoms may be replaced by F or Cl, or denotes F, Cl, Br, I, -CN, -NO₂, -NCO, -NCS, -OCN, -SCN, -C(=O)N(R⁰)₂, -C(=O)R⁰, optionally substituted aryl or cycloalkyl having 3 to 20 C atoms,
R⁰ in each case, independently of one another, denotes alkyl having 1 to 12 C atoms,
R⁰⁰ in each case, independently of one another, denotes H or alkyl having 1 to 12 C atoms.

2. Compounds according to Claim 1, **characterised in that**, for the formulae IA-3 to IC-4,
Sp^{a} denotes -CH₂-, -CH₂CH₂-, -OCH₂CH₂-, -CH₂CH₂CH₂-, -OCH₂CH₂CH₂-, -CH₂CH₂CH₂CH₂-, -OCH₂CH₂CH₂CH₂-, -CH₂CH₂OCH₂CH₂- and -OCH₂CH₂OCH₂CH₂-,
and
Sp^{c} independently denotes -CH₂-, -CH₂CH₂-, -CH₂CH₂CH₂-, -CH₂CH₂CH₂CH₂- or -CH₂CH₂OCH₂CH₂-.

3. Compounds according to Claim 1 or 2, **characterised in that** they are compounds of the formulae IA-3 to IA-4 or IB-1 to IB-4.

4. Compounds according to one or more of Claims 1 to 3, **characterised in that** they are compounds of the formulae IB-1 to IB-4.

5. Compounds according to one or more of Claims 1 to 4, **characterised in that**
R¹ denotes a straight-chain or branched, saturated or unsaturated, aliphatic hydrocarbon radical having 1 to 15 carbon atoms.

6. Compounds according to one or more of Claims 1 to 5, **characterised in that** the group R^{a} contains one or two OH groups.

7. Compounds according to one or more of Claims 1 to 6, **characterised in that** the group R^{a} denotes a group selected from
-Sp^{a}-X¹
or 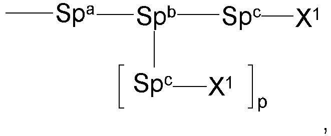 in which Sp^{a}, Sp^{b}, Sp^{c}, p and X¹ have the meaning as in Claim 1.

8. Compounds according to one or more of Claims 1 to 7, **characterised in that** the group R^{a} denotes a group selected from the sub-formulae

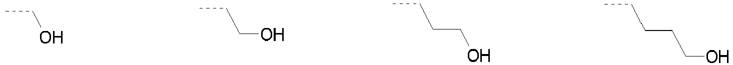

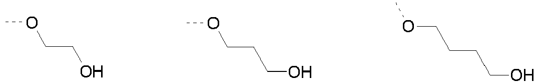

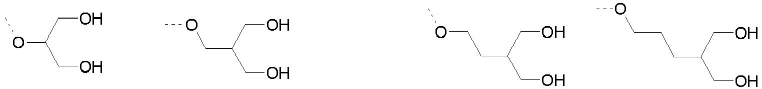

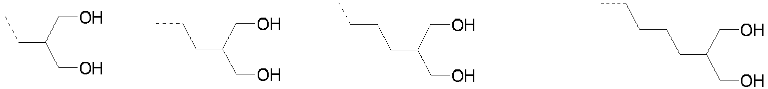

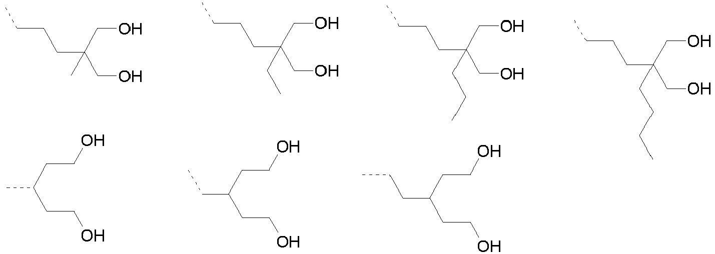

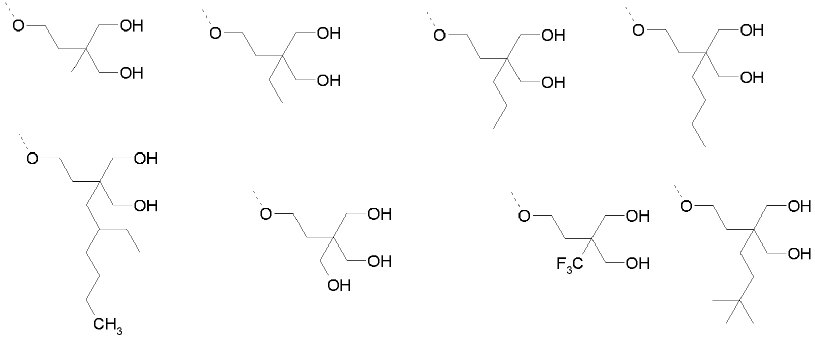

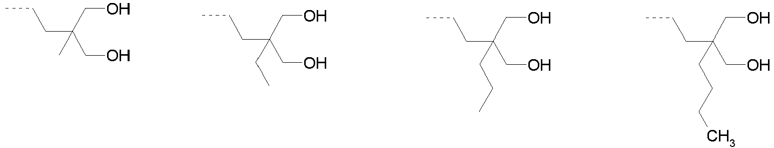

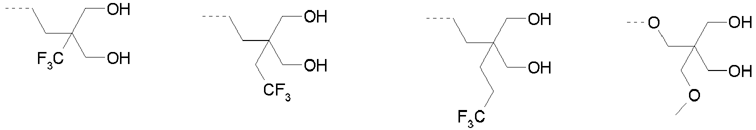

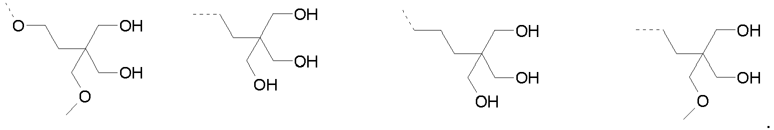

9. Compounds according to one or more of Claims 1 to 7, **characterised in that**
Sp^{b} is a group -C(R³), in which R³ denotes a radical having 1 to 8 C atoms

10. Use of compounds of the formulae IA-3 to IC-4 according to one or more of Claims 1 to 9 as additive for LC media for effecting a homeotropic alignment with respect to a surface delimiting the LC medium, where the compounds are optionally polymerised after effecting the homeotropic alignment.

11. LC medium comprising a low-molecular-weight, unpolymerisable, liquid-crystalline component and a polymerisable or polymerised component comprising one or more polymerisable compounds of the formulae IA-3 to IC-4 according to one of Claims 1 to 8, where the polymerised component is obtainable by polymerisation of the polymerisable component.

12. LC medium according to Claim 11, **characterised in that** it comprises the compounds of the formulae IA-3 to IC-4 in a concentration of less than 10% by weight.

13. LC medium according to Claim 11 or 12, **characterised in that** it comprises one or more polymerisable compounds of the formula M or a (co)-polymer comprising compounds of the formula M:
P¹-Sp¹-A²-(Z¹-A¹)ₙ-Sp²-P² M
in which the individual radicals have the following meanings:
P¹, P² in each case independently denote a polymerisable group,
Sp¹, Sp² in each case independently denote a spacer group,
A¹, A² in each case, independently of one another, denote a radical selected from the following groups:
a) the group consisting of trans-1,4-cyclohexylene, 1,4-cyclohexenylene and 4,4'-bicyclohexylene, in which, in addition, one or more non-adjacent CH₂ groups may be replaced by -O- and/or -S- and in which, in addition, one or more H atoms may be replaced by a group L, or selected from 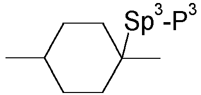
b) the group consisting of 1,4-phenylene and 1,3-phenylene, in which, in addition, one or two CH groups may be replaced by N and in which, in addition, one or more H atoms may be replaced by a group L or -Sp³-P³,
c) the group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, which may also be mono- or polysubstituted by a group L,
d) the group consisting of saturated, partially unsaturated or fully unsaturated, and optionally substituted, polycyclic radicals having 5 to 20 cyclic C atoms, one or more of which may, in addition, be replaced by heteroatoms, preferably selected from the group consisting of bicyclo[1.1.1]pentane-1,3-diyl, bicyclo[2.2.2]octane-1,4-diyl, spiro[3.3]heptane-2,6-diyl, 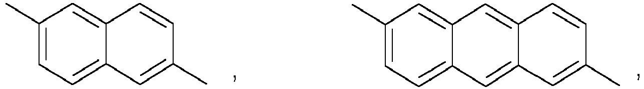 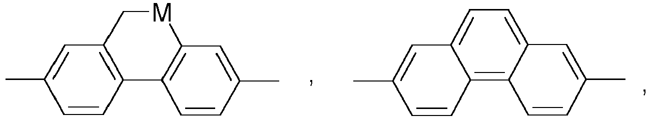 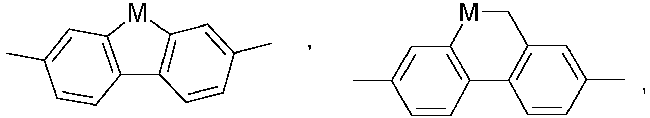 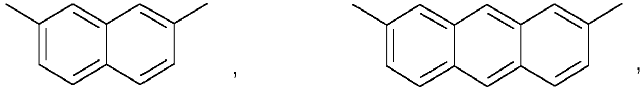 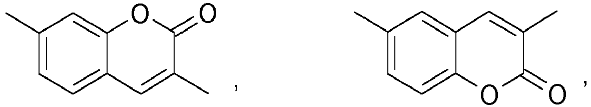 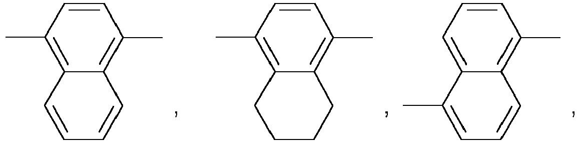 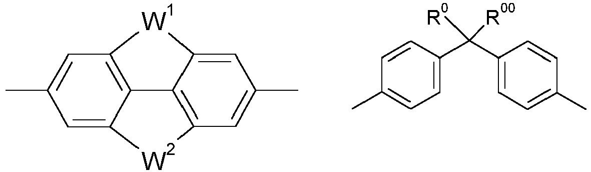 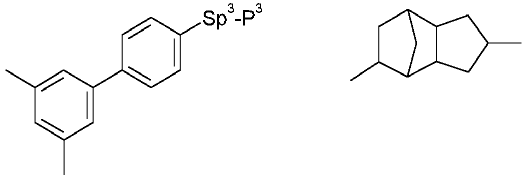 where, in addition, one or more H atoms in these radicals may be replaced by a group L or -Sp³-P³, and/or one or more double bonds may be replaced by single bonds, and/or one or more CH groups may be replaced by N,
P³ denotes a polymerisable group,
Sp³ denotes a spacer group,
n denotes 0, 1, 2 or 3,
Z¹ in each case, independently of one another, denotes -CO-O-, -O-CO-, -CH₂O-, -OCH₂-, -CF₂O-, -OCF₂-, or -(CH₂)ₙ-, where n2 is 2, 3 or 4, -O-, -CO-, -C(R^{c}R^{d})-, -CH₂CF₂-, -CF₂CF₂- or a single bond,
L on each occurrence, identically or differently, denotes F, Cl, CN, SCN, SF₅ or straight-chain or branched, in each case optionally fluorinated alkyl, alkoxy, alkylcarbonyl, alkoxycarbonyl, alkylcarbonyloxy or alkoxycarbonyloxy having 1 to 12 C atoms,
R⁰, R⁰⁰ in each case, independently of one another, denote H, F or straight-chain or branched alkyl having 1 to 12 C atoms, in which, in addition, one or more H atoms may be replaced by F,
M denotes -O-, -S-, -CH₂-, -CHY¹- or -CY¹Y²-,
Y¹ and Y² in each case, independently of one another, have one of the meanings indicated above for R⁰ or denote Cl, -OCF₃ or CN, preferably H, F, Cl, CN, OCF₃ or CF₃,
W¹, W² in each case, independently of one another, denote -CH₂CH₂-, -CH=CH-, -CH₂-O-, -O-CH₂-, -C(R^{c}R^{d})- or -O-, and
R^{c} and R^{d} in each case, independently of one another, denote H or alkyl having 1 to 6 C atoms, preferably H, methyl or ethyl,
where one or more of the groups P¹-Sp¹-, -Sp²-P² and -Sp³-P³ may denote a radical R^{aa}, with the proviso that at least one of the groups P¹-Sp¹-, -Sp²-P² and -Sp³-P³ present does not denote R^{aa},
R^{aa} denotes H, F, Cl, CN or straight-chain or branched alkyl having 1 to 25 C atoms, in which, in addition, one or more non-adjacent CH₂ groups may in each case be replaced, independently of one another, by C(R⁰)=C(R⁰⁰)-, -C≡C-, -O-, -S-, -CO-, -CO-O-, -O-CO- or -O-CO-O- in such a way that O and/or S atoms are not linked directly to one another, and in which, in addition, one or more H atoms may be replaced by F, Cl, CN or P¹-Sp¹-, where P¹-Sp¹- dfoes not denotre a further R^{aa}, and where the groups -OH, -NH₂, -SH, -NHR, -C(O)OH and -CHO are not present in R^{aa}.

14. LC medium according to one or more of Claims 11 to 13, **characterised in that** it comprises one or more compounds selected from the group of the compounds of the formulae A, B and C: 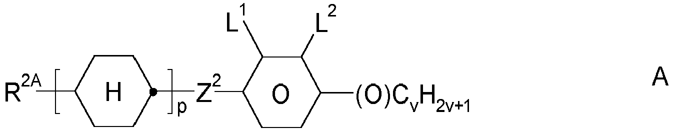 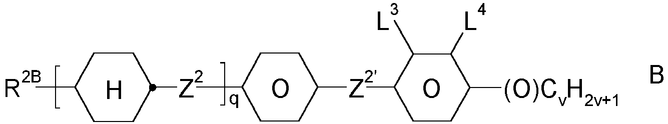 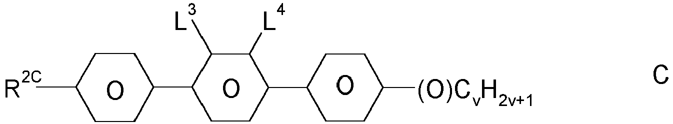 in which
R^{2A}, R^{2B} and R^{2C} in each case, independently of one another, denote H, an alkyl radical having up to 15 C atoms which is unsubstituted, monosubstituted by CN or CF₃ or at least monosubstituted by halogen, where, in addition, one or more CH₂ groups in these radicals may be replaced by -O-, -S-, 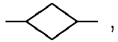 -C≡C-, -CH=CH-, -CF₂O-, -OCF₂-, -OC-O- or -O-CO- in such a way that O atoms are not linked directly to one another,
L¹⁻⁴ in each case, independently of one another, denote F, Cl, CF₃ or CHF₂,
Z² and Z^{2'} in each case, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF- or -CH=CHCH₂O-,
p denotes 1 or 2, preferably 1,
q denotes 0 or 1,
(O) denotes -O- or a single bond, and
v denotes 1 to 6.

15. LC display comprising an LC cell having two substrates and at least two electrodes, where at least one substrate is transparent to light and at least one substrate has one or two electrodes, and having a layer of an LC medium according to one or more of Claims 11 to 14 located between the substrates,
where the compound of the formulae IA-3 to IC-4 is suitable for effecting homeotropic alignment of the LC medium with respect to the substrate surfaces.

16. LC display according to Claim 15, **characterised in that** one or both of the substrates have no alignment layers for homeotropic alignment.

17. LC display according to Claim 15 or 16, **characterised in that** it is a VA display containing an LC medium having negative dielectric anisotropy and electrodes arranged on opposite substrates.

18. Process for the preparation of an LC medium, **characterised in that** one or more compounds of the formulae IA-3 to IC-4 according to one or more of Claims 1 to 9 are mixed with a low-molecular-weight liquid-crystalline component, and one or more polymerisable compounds and/or any desired additives are optionally added.

19. Process for the production of an LC display comprising an LC cell having two substrates and at least two electrodes, where at least one substrate is transparent to light and at least one substrate has one or two electrodes, comprising the process steps:
- filling of the cell with an LC medium according to one of Claims 11 to 14, where a homeotropic alignment of the LC medium with respect to the substrate surfaces is established, and
- polymerisation of the polymerisable component(s), optionally with application of a voltage to the cell or under the action of an electric field, in one or more process steps.

## Revendications

1. Composés sélectionnés parmi les formules qui suivent : 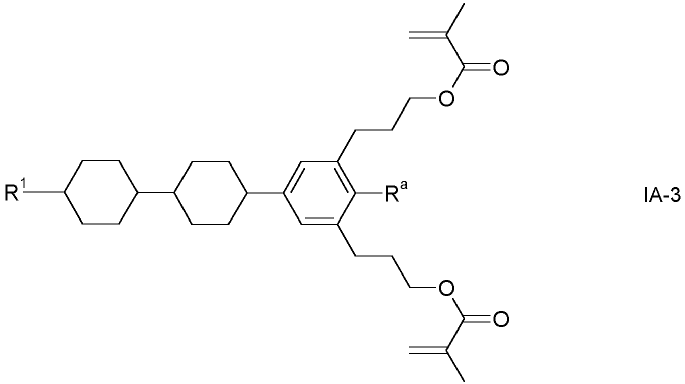 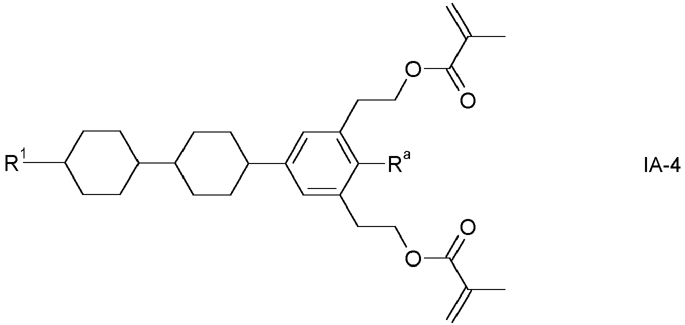 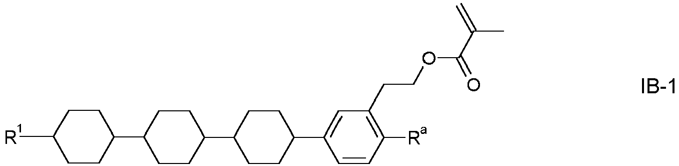 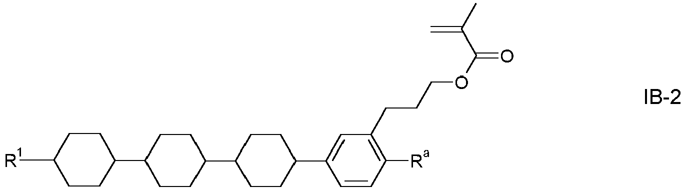 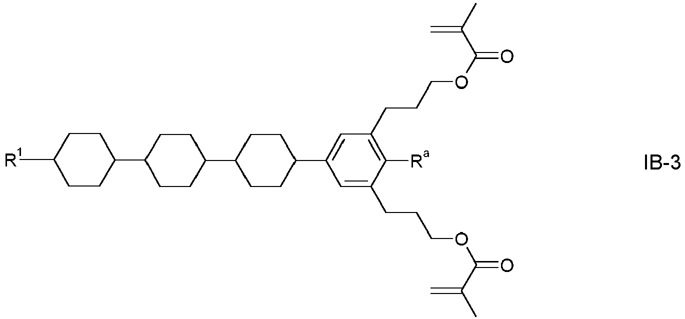 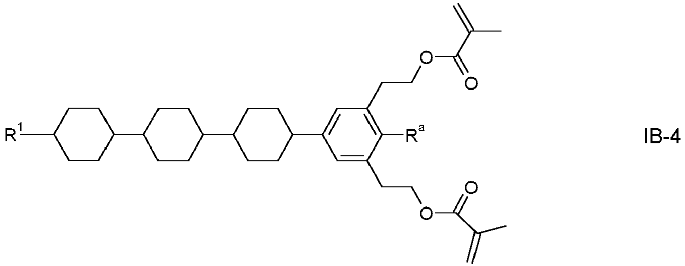 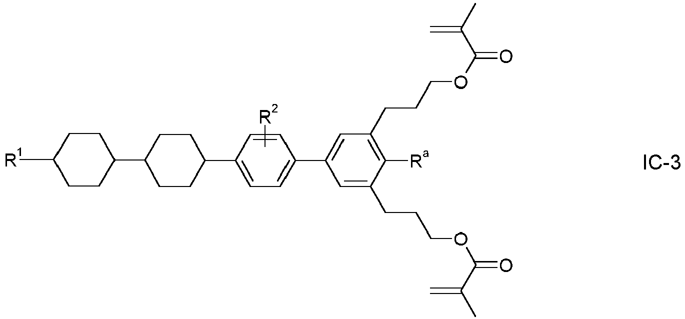 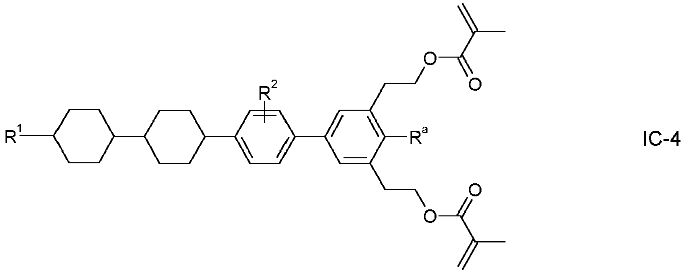 dans lesquelles
R^{a} représente un groupe d'ancrage de la formule 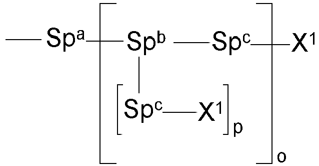
p représente 1 ou 2,
o représente 0 ou 1, où o = 0 pour les formules IC-3 à IC-4,
X¹ représente, de manière indépendante les uns des autres, H, alkyle, fluoroalkyle, -OH, -SH, -NH₂, -NHR¹¹, -NR¹¹₂, NHC(O)-R¹¹, -OR¹¹, -C(O)OH ou -CHO, où au moins un groupe X¹ représente un radical qui est sélectionné parmi -OH, -SH, -NH₂, -NHR¹¹, -C(O)OH et -CHO,
R¹¹ représente alkyle qui comporte de 1 à 12 atome(s) de C,
Sp^{a}, Sp^{c} représentent dans chaque cas, de manière indépendante les uns des autres, un groupe d'espaceur ou une liaison simple,
Sp^{b} représente un groupe tri- ou tétravalent,
R¹ représente, de manière indépendante les uns des autres, H, halogène, alkyle en chaîne droite, ramifié ou cyclique qui comporte de 1 à 25 atome(s) de C, où, en outre, un ou plusieurs groupe(s) CH₂ non adjacents peut/peuvent être remplacé(s) par -O-, -S-, -CH=CH-, -C≡C-, -CO-, -CO-O-, -O-CO- ou -O-CO-O- de telle sorte que des atomes de O et/ou de S ne soient pas liés directement les uns aux autres et où, en outre, un ou plusieurs atome(s) de H peut/peuvent être remplacé(s) par F ou par Cl, ou un groupe -Sp-P,
P représente un groupe polymérisable,
Sp représente un groupe d'espaceur ou une liaison simple,
R² représente dans chaque cas, de manière indépendante les uns des autres, alkyle, alkényle, alcoxy, alkylcarbonyle, alcoxycarbonyle, alkylcarbonyloxy ou alcoxycarbonyloxy en chaîne droite ou ramifié qui comporte de 1 à 25 atome(s) de C, où, en outre, un ou plusieurs atome(s) de H peut/peuvent être remplacé(s) par F ou par Cl, ou représente F, Cl, Br, I, -CN, -NO₂, -NCO, -NCS, -OCN, -SCN, -C(=O)N(R⁰)₂, -C(=O)R⁰, aryle ou cycloalkyle en option substitué qui comporte de 3 à 20 atomes de C,
R⁰ représente dans chaque cas, de manière indépendante les uns des autres, alkyle qui comporte de 1 à 12 atome(s) de C,
R⁰⁰ représente dans chaque cas, de manière indépendante les uns des autres, H ou alkyle qui comporte de 1 à 12 atome(s) de C.

2. Composés selon la revendication 1, **caractérisés en ce que**, pour les formules IA-3 à IC-4,
Sp^{a} représente -CH₂-, -CH₂CH₂-, -OCH₂CH₂-, -CH₂CH₂CH₂-, -OCH₂CH₂CH₂-, -CH₂CH₂CH₂CH₂-, -OCH₂CH₂CH₂CH₂-, -CH₂CH₂OCH₂CH₂- et -OCH₂CH₂OCH₂CH₂-,
et
sp^{c} représente de manière indépendante -CH₂-, -CH₂CH₂-, -CH₂CH₂CH₂-, -CH₂CH₂CH₂CH₂- ou -CH₂CH₂OCH₂CH₂-.

3. Composés selon la revendication 1 ou 2, **caractérisés en ce que** ce sont les composés des formules IA-3 à IA-4 ou IB-1 à IB-4.

4. Composés selon une ou plusieurs des revendications 1 à 3, **caractérisés en ce que** ce sont les composés des formules IB-1 à IB-4.

5. Composés selon une ou plusieurs des revendications 1 à 4, **caractérisés en ce que**
R¹ représente un radical hydrocarbone aliphatique en chaîne droite ou ramifié, saturé ou non saturé qui comporte de 1 à 15 atome(s) de carbone.

6. Composés selon une ou plusieurs des revendications 1 à 5, **caractérisés en ce que** le groupe R^{a} contient un ou deux groupe(s) OH.

7. Composés selon une ou plusieurs des revendications 1 à 6, **caractérisés en ce que** le groupe R^{a} représente un groupe qui est sélectionné parmi
- Sp^{a}-X¹
ou 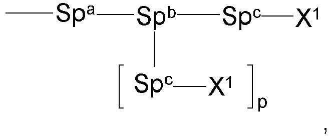 où Sp^{a}, Sp^{b}, Sp^{c}, p et X¹ présentent la signification telle que mentionnée selon la revendication 1.

8. Composés selon une ou plusieurs des revendications 1 à 7, **caractérisés en ce que** le groupe R^{a} représente un groupe qui est sélectionné parmi les sous-formules

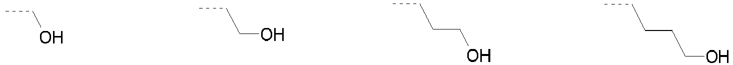

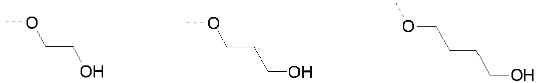

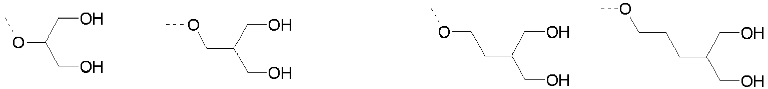

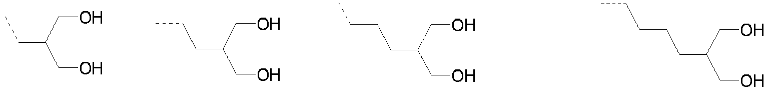

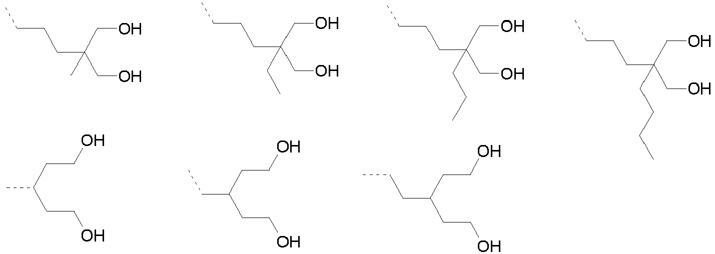

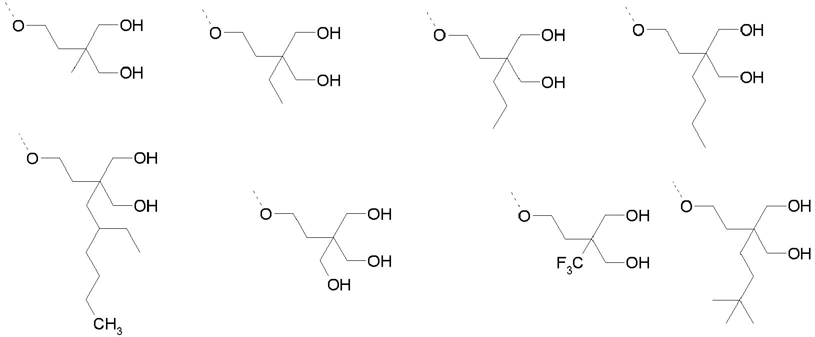

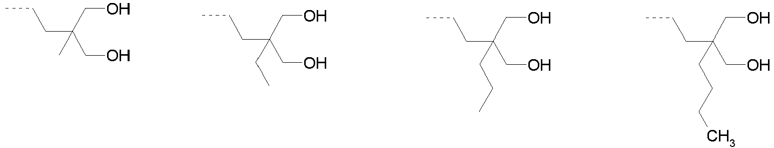

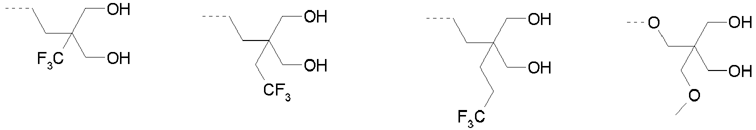

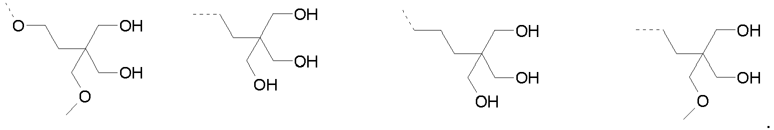

9. Composés selon une ou plusieurs des revendications 1 à 7, **caractérisés en ce que**
Sp^{b} est un groupe -C(R³), où R³ représente un radical qui comporte de 1 à 8 atome(s) de C

10. Utilisation de composés des formules IA-3 à IC-4 selon une ou plusieurs des revendications 1 à 9 en tant qu'additif pour les milieux LC pour réaliser un alignement homéotrope par rapport à une surface qui délimite le milieu LC, où les composés sont en option polymérisés après la réalisation de l'alignement homéotrope.

11. Milieu LC comprenant un composant cristallin liquide non polymérisable de poids moléculaire faible et un composant polymérisable ou polymérisé qui comprend un ou plusieurs composé(s) polymérisable(s) des formules IA-3 à IC-4 selon l'une des revendications 1 à 8, où le composant polymérisé peut être obtenu par polymérisation du composant polymérisable.

12. Milieu LC selon la revendication 11, **caractérisé en ce qu'**il comprend les composés des formules IA-3 à IC-4 selon une concentration qui est inférieure à 10 % en poids.

13. Milieu LC selon la revendication 11 ou 12, **caractérisé en ce qu'**il comprend un ou plusieurs composé(s) polymérisable(s) de la formule M ou un (co)polymère qui comprend des composés de la formule M :
P¹-Sp¹-A²-(Z¹-A¹)ₙ-Sp²-P² M
dans laquelle les radicaux individuels présentent les significations qui suivent :
P¹, P² représentent dans chaque cas, de manière indépendante les uns des autres, un groupe polymérisable,
Sp¹, Sp² représentent dans chaque cas, de manière indépendante les uns des autres, un groupe d'espaceur,
A¹, A² représentent dans chaque cas, de manière indépendante les uns des autres, un radical qui est sélectionné parmi les groupes qui suivent :
a) le groupe qui est constitué par trans-1,4-cyclohexylène, 1,4-cyclohexénylène et 4,4'-bicyclohexylène, où, en outre, un ou plusieurs groupe(s) CH₂ non adjacents peut/peuvent être remplacé(s) par -O- et/ou par -S- et où, en outre, un ou plusieurs atome(s) de H peut/peuvent être remplacé(s) par un groupe L, ou qui est sélectionné parmi 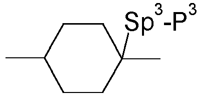
b) le groupe qui est constitué par 1,4-phénylène et 1,3-phénylène, où, en outre, un ou deux groupe(s) CH peut/peuvent être remplacé(s) par N et où, en outre, un ou plusieurs atome(s) de H peut/peuvent être remplacé(s) par un groupe L ou par -Sp³-P³,
c) le groupe qui est constitué par tétrahydropyran-2,5-diyle, 1,3-dioxane-2,5-diyle, tétrahydrofuran-2,5-diyle, cyclobutane-1,3-diyle, pipéridine-1,4-diyle, thiophène-2,5-diyle et sélénophène-2,5-diyle, lequel peut également être mono- ou polysubstitué par un groupe L,
d) le groupe qui est constitué par des radicaux polycycliques saturés, partiellement non saturés ou complètement non saturés, et en option substitués qui comportent de 5 à 20 atomes de C cycliques, dont un ou plusieurs peut/peuvent, en outre, être remplacé(s) par des hétéroatomes, de préférence qui sont sélectionnés parmi le groupe qui est constitué par bicyclo[1.1.1]pentane-1,3-diyle, bicyclo[2.2.2]octane-1,4-diyle, spiro[3.3]heptane-2,6-diyle, 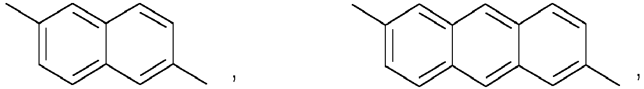 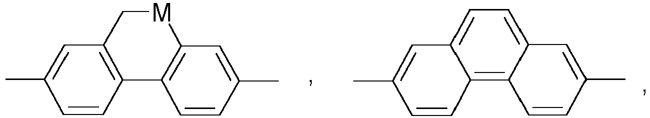 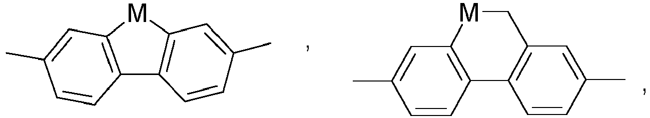 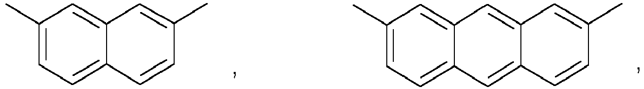 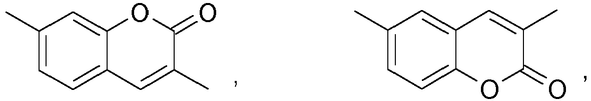 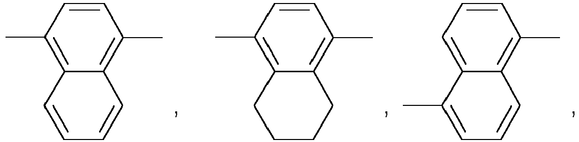 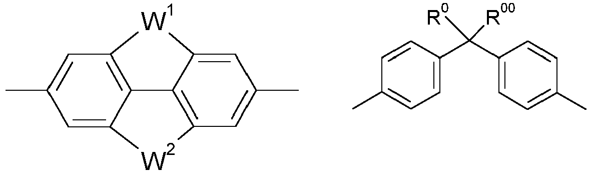 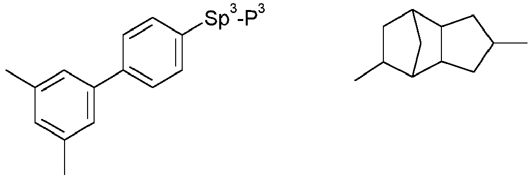 où, en outre, un ou plusieurs atome(s) de H dans ces radicaux peut/peuvent être remplacé(s) par un groupe L ou par -Sp³-P³, et/ou une ou plusieurs liaison(s) double(s) peut/ peuvent être remplacée(s) par des liaisons simples, et/ou un ou plusieurs groupe(s) CH peut/peuvent être remplacé(s) par N,
P³ représente un groupe polymérisable,
Sp³ représente un groupe d'espaceur,
n représente 0, 1, 2 ou 3,
Z¹ représente dans chaque cas, de manière indépendante les uns des autres, -CO-O-, -O-CO-, -CH₂O-, -OCH₂-, -CF₂O-, -OCF₂-, ou -(CH₂)ₙ-, où n2 est 2, 3 ou 4, -O-, -CO-, -C(R^{c}R^{d})-, -CH₂CF₂-, -CF₂CF₂- ou une liaison simple,
L représente pour chaque occurrence, de manière identique ou différente, F, Cl, CN, SCN, SF₅ ou alkyle, alcoxy, alkylcarbonyle, alcoxycarbonyle, alkylcarbonyloxy ou alcoxycarbonyloxy en chaîne droite ou ramifié, dans chaque cas en option fluoré, qui comporte de 1 à 12 atome(s) de C,
R⁰, R⁰⁰ représentent dans chaque cas, de manière indépendante les uns des autres, H, F ou alkyle en chaîne droite ou ramifié qui comporte de 1 à 12 atome(s) de C, où, en outre, un ou plusieurs atome(s) de H peut/peuvent être remplacé(s) par F,
M représente -O-, -S-, -CH₂-, -CHY¹- ou -CY¹Y²-,
Y¹ et Y² présentent dans chaque cas, de manière indépendante les uns des autres, l'une des significations qui ont été indiquées ci-avant pour R⁰ ou représentent Cl, -OCF₃ ou CN, de préférence H, F, Cl, CN, OCF₃ ou CF₃,
W¹, W² représentent dans chaque cas, de manière indépendante les uns des autres, -CH₂CH₂-, -CH=CH-, -CH₂-O-, -O-CH₂-, -C(R^{c}R^{d})- ou -O-, et
R^{c} et R^{d} représentent dans chaque cas, de manière indépendante les uns des autres, H ou alkyle qui comporte de 1 à 6 atome(s) de C, de préférence H, méthyle ou éthyle,
où un ou plusieurs des groupes P¹-Sp¹-, -Sp²-P² et -Sp³-P³ peut/peuvent représenter un radical R^{aa}, étant entendu qu'au moins l'un des groupes P¹-Sp¹-, -Sp²-P² et -Sp³-P³ qui est/sont présent(s) ne représente pas R^{aa},
R^{aa} représente H, F, Cl, CN ou alkyle en chaîne droite ou ramifié qui comporte de 1 à 25 atome(s) de C, où, en outre, un ou plusieurs groupe(s) CH₂ non adjacents peut/peuvent dans chaque cas être remplacé(s), de manière indépendante les uns des autres, par C(R⁰)=C(R⁰⁰)-, -C≡C-, -O-, -S-, -CO-, -CO-O-, -O-CO- ou -O-CO-O- de telle sorte que des atomes de O et/ou de S ne soient pas liés directement les uns aux autres, et où, en outre, un ou plusieurs atome(s) de H peut/ peuvent être remplacé(s) par F, Cl, CN ou P¹-Sp¹-, où P¹-Sp¹-ne représente pas un autre R^{aa}, et où les groupes -OH, -NH₂, -SH, -NHR, -C(O)OH et -CHO ne sont pas présents dans R^{aa}.

14. Milieu LC selon une ou plusieurs des revendications 11 à 13, **caractérisé en ce qu'**il comprend un ou plusieurs composé(s) qui est/sont sélectionné(s) parmi le groupe des composés des formules A, B et C : 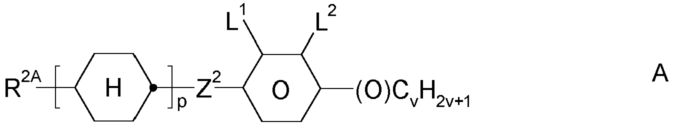 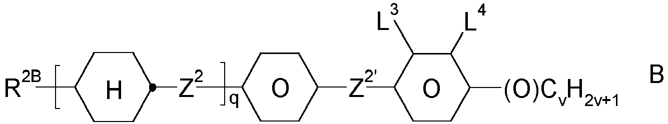 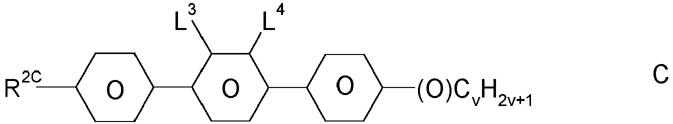 dans lesquelles
R^{2A}, R^{2B} et R^{2C} représentent dans chaque cas, de manière indépendante les uns des autres, H, un radical alkyle qui comporte jusqu'à 15 atomes de C, lequel est non substitué, monosubstitué par CN ou par CF₃ ou au moins monosubstitué par halogène, où, en outre, un ou plusieurs groupe(s) CH₂ dans ces radicaux peut/peuvent être remplacé(s) par -O-, -S-, 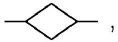 -C≡C-, -CH=CH-, -CF₂O-, -OCF₂-, -OC-O- ou -O-CO- de telle sorte que des atomes de O ne soient pas liés directement les uns aux autres,
L¹⁻⁴ représentent dans chaque cas, de manière indépendante les uns des autres, F, Cl, CF₃ ou CHF₂,
Z² et Z^{2'} représentent dans chaque cas, de manière indépendante les uns des autres, une liaison simple, -CH₂CH₂-, -CH=CH-, -CF₂O-, -OCF₂-, -CH₂O-, -OCH₂-, -COO-, -OCO-, -C₂F₄-, -CF=CF- ou -CH=CHCH₂O-,
p représente 1 ou 2, de préférence 1,
q représente 0 ou 1,
(O) représente -O- ou une liaison simple, et
v représente 1 à 6.

15. Affichage LC comprenant une cellule LC qui comporte deux substrats et au moins deux électrodes, où au moins un substrat est transparent vis-à-vis de la lumière et au moins un substrat comporte une ou deux électrode(s), et qui comporte une couche qui est constituée par un milieu LC selon une ou plusieurs des revendications 11 à 14, laquelle couche est localisée entre les substrats,
où le composé des formules IA-3 à IC-4 est approprié pour réaliser un alignement homéotrope du milieu LC par rapport aux surfaces de substrat.

16. Affichage LC selon la revendication 15, **caractérisé en ce qu'**un substrat ou les deux substrats ne comporte(nt) pas de couches d'alignement pour un alignement homéotrope.

17. Affichage LC selon la revendication 15 ou 16, **caractérisé en ce qu'**il s'agit d'un affichage VA qui contient un milieu LC qui présente une anisotropie diélectrique négative et qui comporte des électrodes qui sont agencées sur des substrats opposés.

18. Procédé pour la préparation d'un milieu LC, **caractérisé en ce qu'**un ou plusieurs composé(s) des formules IA-3 à IC-4 selon une ou plusieurs des revendications 1 à 9 est/sont mélangé(s) avec un composant cristallin liquide de poids moléculaire faible, et un ou plusieurs composé(s) polymérisable(s) et/ou de quelconques additifs souhaités sont en option ajoutés.

19. Procédé pour la fabrication d'un affichage LC qui comprend une cellule LC qui comporte deux substrats et au moins deux électrodes, où au moins un substrat est transparent vis-à-vis de la lumière et au moins un substrat comporte une ou deux électrode(s), comprenant les étapes de procédé qui suivent :
- le remplissage de la cellule avec un milieu LC selon l'une des revendications 11 à 14, étape au niveau de laquelle un alignement homéotrope du milieu LC par rapport aux surfaces de substrat est effectué, et
- la polymérisation du/des composant(s) polymérisable(s), en option avec l'application d'une tension sur la cellule ou sous l'action d'un champ électrique, selon une ou plusieurs étape(s) de procédé.
